(19) Europäisches Patentamt
European Patent Office
Office européen des brevets

(11) **EP 4 354 929 A1**

(12) **EUROPEAN PATENT APPLICATION**
published in accordance with Art. 153(4) EPC


(43) Date of publication:
**17.04.2024 Bulletin 2024/16**

(21) Application number: **22819829.7**

(22) Date of filing: **28.02.2022**

(51) International Patent Classification (IPC):
***H04W 16/14*** *(2009.01)* ***H04W 16/28*** *(2009.01)*
***H04W 72/08*** *(2009.01)* ***H04B 7/022*** *(2017.01)*
***H04W 48/20*** *(2009.01)* ***H04W 84/12*** *(2009.01)*

(52) Cooperative Patent Classification (CPC):
**H04B 7/022; H04W 16/14; H04W 16/28; H04W 48/20; H04W 84/12**

(86) International application number:
**PCT/JP2022/008150**

(87) International publication number:
**WO 2022/259639 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.06.2021 JP 2021097517**



(71) Applicant: **Panasonic Intellectual Property Corporation of America**
**Torrance, CA 90504 (US)**

(72) Inventor: **MURAKAMI, Yutaka**
**Kadoma-shi, Osaka 571-0057 (JP)**

(74) Representative: **Grünecker Patent- und Rechtsanwälte**
**PartG mbB**
**Leopoldstraße 4**
**80802 München (DE)**


(54) **TERMINAL, WIRELESS SYSTEM, AND COMMUNICATION METHOD**


(57) A terminal comprising: a communication unit for performing wireless communication with a plurality of transmission/reception points on the basis of a first communication scheme; and a control unit for determining, on the basis of detection of a wireless communication signal based on a second communication scheme, a transmission/reception point for performing wireless communication among the plurality of transmission/reception points.

TRP #1
3902_1
TRP #2
3902_2
5102
AP
5101
UE
3901
NR−UE

FIG. 51B

EP 4 354 929 A1

## Description

### Technical Field

The present disclosure relates to a terminal, a radio system, and a communication method.

### Background Art

An exemplary system using a frequency equal to or higher than 52.6 GHz is a communication system using a 60 GHz band.

A scheme disclosed in Patent Literature 1 is one of a communication method for extending a communication distance. FIG. 92 illustrates an exemplary communication state of radio communication devices disclosed in Patent Literature 1.

For example, radio communication device 001 transmits a sector sweep signal. After that, radio communication device 051 transmits a sector sweep signal. Then, radio communication device 051 transmits a signal including feedback information on the sector sweep to radio communication device 001.

Following this procedure, radio communication device 001 determines a method of "transmit beamforming and/or receive beamforming", and radio communication device 051 also determines a method of "transmit beamforming and/or receive beamforming". This extends the communication distance between radio communication device 001 and radio communication device 051.

### Citation List

### Patent Literature

PTL 1

Japanese Unexamined Patent Application Publication (Translation of PCT Application) No. 2018-518855

### Summary of Invention

In some cases, radio systems using different radio communication schemes, such as 5th Generation (5G) (cellular system) and Institute of Electrical and Electronics Engineers (IEEE) 802.11ad/ay, share "a licensed band and/or an unlicensed band", for example. Although the communication distance can be extended by beamforming according to PTL 1, challenges remain in developing a mechanism that allows this communication system and "apparatuses using other radio communication standards" to coexist.

One non-limiting and exemplary embodiment of the present disclosure facilitates providing a technique for realizing suitable radio communication between a transmission/reception point based on the first communication scheme and a terminal in a situation where the first communication scheme and the second communication scheme coexist.

A terminal according to an embodiment of the present disclosure includes: a communicator that performs radio communication with a plurality of transmission/reception points based on a first communication scheme; and a controller that determines a transmission/reception point to perform radio communication with among the plurality of transmission/reception points based on detection of a signal of radio communication in accordance with a second communication scheme.

A radio system according to an embodiment of the present disclosure in which a first transmission/reception point and a second transmission/reception point are associated to perform radio communication with a terminal, wherein, the first transmission/reception point and the second transmission/reception point each include: a communicator that performs radio communication with the terminal based on a first communication scheme; and a controller that determines radio communication with the terminal based on detection of a signal of radio communication in accordance with a second communication scheme.

A communication method according to an embodiment of the present disclosure includes: performing, by a terminal, radio communication with a plurality of transmission/reception points based on a first communication scheme; and determining, by the terminal, a transmission/reception point to perform radio communication with among the plurality of transmission/reception points based on detection of a signal of radio communication in accordance with a second communication scheme.

A communication method of a radio system according to an embodiment of the present disclosure in which a first transmission/reception point and a second transmission/reception point are associated to perform radio communication with a terminal includes: performing, by each of the first transmission/reception point and the second transmission/reception point, radio communication with the terminal based on a first communication scheme; and determining, by each of the first transmission/reception point and the second transmission/reception point, radio communication with the terminal based on detection of a signal of radio communication in accordance with a second communication scheme.

It should be noted that general or specific embodiments may be implemented as a system, an apparatus, a method, an integrated circuit, a computer program, a storage medium, or any selective combination thereof.

According to an exemplary embodiment of the present disclosure, it is possible to realize suitable radio communication between a transmission/reception point based on the first communication scheme and a terminal in a situation where the first communication scheme and the second communication scheme coexist.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1A illustrates an exemplary configuration of a communication apparatus in Embodiment 1;
FIG. 1B illustrates an exemplary configuration of the communication apparatus different from the configuration in FIG. 1A in Embodiment 1;
FIG. 1C illustrates an exemplary configuration of the communication apparatus different from the configurations in FIGS. 1A and 1B in Embodiment 1;
FIG. 2 illustrates an exemplary configuration of an i-th transmitter;
FIG. 3 illustrates an exemplary configuration of transmission panel antenna i in FIGS. 1A, 1B, and 1C;
FIG. 4 illustrates an exemplary configuration of reception panel antenna i in FIGS. 1A, 1B, and 1C;
FIG. 5 illustrates an exemplary configuration of a transmission apparatus in a case of using an OFDM scheme;
FIG. 6 illustrates an exemplary configuration of a reception apparatus in a case of using an OFDM scheme;
FIG. 7 illustrates an exemplary configuration of the reception apparatus in a case of using a single-carrier scheme based on DFT;
FIG. 8 illustrates an exemplary configuration of the reception apparatus in a case of using a single-carrier scheme based on time domain;
FIG. 9 illustrates an exemplary communication state in Embodiment 1;
FIG. 10 illustrates an exemplary modulation signal transmitted by base station #1 in FIG. 9;
FIG. 11 illustrates exemplary sector sweep reference signals in FIG. 10 transmitted by base station #1 in FIG. 9 with the configuration in FIG. 1A, 1B, or 1C;
FIG. 12 illustrates an exemplary configuration of a "sector sweep reference signal in transmission panel antenna i for frequency ♭p" in FIG. 11;
FIG. 13 illustrates an exemplary operation in the time period from time t1 to t2, which is a terminal response period;
FIG. 14 illustrates exemplary occupation by terminals in terminal "sector sweep reference signal" transmission periods illustrated in FIG. 13;
FIG. 15A illustrates an exemplary configuration of a terminal #i "sector sweep reference signal";
FIG. 15B illustrates an exemplary configuration of a "sector sweep reference signal in terminal #i transmission panel antenna xi" in FIG. 15A;
FIG. 16A illustrates an exemplary configuration of a feedback signal that is present in the time period from t2 to t3 in FIG. 10 and transmitted by base station #1;
FIG. 16B illustrates exemplary specific feedback signal assignment for the feedback signal illustrated in FIG. 16A;
FIG. 17A illustrates an exemplary configuration of a data-symbol-included frame that is present in the time period from t4 to t5 in FIG. 10 and transmitted by base station #1;
FIG. 17B illustrates exemplary specific modulation signal (slot) assignment for the data-symbol-included frame illustrated in FIG. 17A;
FIG. 18 illustrates an exemplary state where base station #1 and "terminal #1 to terminal #6" communicate with each other;
FIG. 19 illustrates an exemplary modulation signal transmission state of base station #1 and an exemplary modulation signal transmission state of a terminal such as "terminal #1 to terminal #6" after the state in FIG. 18;
FIG. 20A illustrates an exemplary configuration of a "data-symbol-included frame" transmitted by terminal #1;
FIG. 20B illustrates an exemplary configuration of a "data-symbol-included frame" transmitted by terminal #2;
FIG. 20C illustrates an exemplary configuration of a "data-symbol-included frame" transmitted by terminal #3;
FIG. 20D illustrates an exemplary configuration of a "data-symbol-included frame" transmitted by terminal #4;
FIG. 20E illustrates an exemplary configuration of a "data-symbol-included frame" transmitted by terminal #5;
FIG. 20F illustrates an exemplary configuration of a "data-symbol-included frame" transmitted by terminal #6;
FIG. 21 illustrates an exemplary configuration of a terminal response period in the time period from time t1 to t2 in FIG. 10;
FIG. 22A illustrates an exemplary configuration, in time and frequency, of a terminal "sector sweep reference signal";
FIG. 22B illustrates an exemplary configuration, in time and frequency, of a terminal "sector sweep reference signal";
FIG. 23A illustrates an exemplary configuration of a feedback signal that is present in the time period from t2 to t3 in FIG. 10 and transmitted by base station #1;
FIG. 23B illustrates exemplary specific feedback signal assignment for the feedback signal illustrated in FIG. 23A;
FIG. 24A illustrates an exemplary configuration of a data-symbol-included frame that is present in the time period from t4 to t5 in FIG. 10 and transmitted by base station #1;

FIG. 24B illustrates exemplary assignment of modulation signals (slots) for frequency for the data-symbol-included frame illustrated in FIG. 24A;

FIG. 25A illustrates an exemplary configuration of a data-symbol-included frame transmitted by a terminal;

FIG. 25B illustrates an exemplary configuration of a data-symbol-included frame transmitted by a terminal;

FIG. 25C illustrates an exemplary configuration of a data-symbol-included frame transmitted by a terminal;

FIG. 25D illustrates an exemplary configuration of a data-symbol-included frame transmitted by a terminal;

FIG. 25E illustrates an exemplary configuration of a data-symbol-included frame transmitted by a terminal;

FIG. 25F illustrates an exemplary configuration of a data-symbol-included frame transmitted by a terminal;

FIG. 26 illustrates an exemplary communication state according to Embodiment 5;

FIG. 27 illustrates exemplary sector sweep reference signals in FIG. 10 transmitted by base station #1 in FIG. 26;

FIG. 28 illustrates an exemplary configuration of a "sector sweep reference signal in transmission panel antenna i" in FIG. 27;

FIG. 29 illustrates exemplary occupation of the terminal "sector sweep reference signal" transmission periods illustrated in FIG. 13;

FIG. 30 illustrates an exemplary configuration of a "sector sweep reference signal in a transmission panel antenna" in FIG. 27;

FIG. 31 illustrates an exemplary configuration of the feedback signal that is present in the time period from t2 to t3 in FIG. 10 and transmitted by base station #1;

FIG. 32 illustrates an exemplary configuration of the data-symbol-included frame that is present in the time period from t4 to t5 in FIG. 10 and transmitted by base station #1;

FIG. 33 illustrates an exemplary configuration of the "data-symbol-included frame" transmitted by the terminal;

FIG. 34 illustrates an exemplary configuration for the sector sweep reference signals;

FIG. 35 illustrates an exemplary configuration of the "sector sweep reference signal in frequency ♭p" in FIG. 34;

FIG. 36 illustrates an exemplary configuration of the terminal #i "sector sweep reference signal" in FIG. 14;

FIG. 37 illustrates an exemplary configuration of the sector sweep reference signal in FIG. 29;

FIG. 38 illustrates an exemplary radio system according to Embodiment 5;

FIG. 39A illustrates an exemplary system configuration of multiple TRP;

FIG. 39B illustrates an exemplary system configuration of multiple TRP;

FIG. 39C illustrates an exemplary system configuration of multiple TRP;

FIG. 40 is a diagram describing SDM or FDM of modulation signals transmitted to TRPs by NR-UE;

FIG. 41 is a diagram describing SDM or FDM of modulation signals transmitted to TRPs by NR-UE;

FIG. 42 is a diagram describing SDM or FDM of modulation signals transmitted to TRPs by NR-UE;

FIG. 43 is a diagram describing SDM or FDM of modulation signals transmitted to TRPs by NR-UE;

FIG. 44 is a diagram describing SDM or FDM of modulation signals transmitted to TRPs by NR-UE;

FIG. 45 is a diagram describing SDM or FDM of modulation signals transmitted to TRPs by NR-UE;

FIG. 46 illustrates an exemplary configuration of gNB and NR-UE;

FIG. 47 illustrates an exemplary configuration of gNB and NR-UE;

FIG. 48 is a flowchart describing an exemplary operation of gNB in omni-directional LBT;

FIG. 49 is a flowchart describing an exemplary operation of gNB in directional LBT;

FIG. 50 is a flowchart describing an exemplary operation of gNB in directional LBT;

FIG. 51A illustrates an exemplary communication state of TRPs and NR-UE;

FIG. 51B illustrates an exemplary communication state of TRPs and NR-UE;

FIG. 52 illustrates an exemplary sector sweep-related communication period;

FIG. 53 illustrates exemplary LBT implementation period and modulation signal transmission period;

FIG. 54 illustrates exemplary LBT implementation period and modulation signal transmission period;

FIG. 55 illustrates an exemplary communication state of TRPs and NR-UE;

FIG. 56A illustrates an exemplary operation during transition from FIG. 5 1Ato FIG.55;

FIG. 56B illustrates an exemplary operation during transition from FIG. 51A to FIG. 55;

FIG. 57A illustrates an exemplary frequency band where NR-UE performs LBT;

FIG. 57B illustrates an exemplary frequency band where NR-UE performs LBT;

FIG. 58A illustrates exemplary frequency bands where NR-UE performs LBT;

FIG. 58B illustrates an exemplary frequency band where NR-UE performs LBT;

FIG. 59A illustrates exemplary frequency bands where NR-UE performs LBT;

FIG. 59B illustrates exemplary frequency bands where NR-UE performs LBT;
FIG. 60A illustrates exemplary frequency bands where NR-UE performs LBT;
FIG. 60B illustrates exemplary frequency bands where NR-UE performs LBT;
FIG. 61A illustrates exemplary frequency bands where NR-UE performs LBT;
FIG. 61B illustrates exemplary frequency bands where NR-UE performs LBT;
FIG. 62 illustrates an exemplary communication state of TRPs and NR-UE;
FIG. 63A illustrates an exemplary operation during transition from FIG. 51Ato FIG.62;
FIG. 63B illustrates an exemplary operation during transition from FIG. 51A to FIG. 62;
FIG. 64 illustrates an exemplary communication state of TRPs and NR-UE;
FIG. 65A illustrates an exemplary operation during transition from FIG. 62 to FIG. 64;
FIG. 65B illustrates an exemplary operation during transition from FIG. 62 to FIG. 64;
FIG. 66 illustrates an exemplary communication state of TRPs and NR-UE;
FIG. 67A illustrates an exemplary operation during transition from FIG. 51 to FIG. 66;
FIG. 67B illustrates an exemplary operation during transition from FIG. 51 to FIG. 66;
FIG. 68 illustrates exemplary capability/capabilities information;
FIG. 69 illustrates exemplary relationships between a frequency band of the first standard and frequency bands of the second standard;
FIG. 70A illustrates an exemplary communication state of gNBs and NR-UE;
FIG. 70B illustrates an exemplary communication state of gNBs and NR-UE;
FIG. 71 illustrates an exemplary communication state of gNBs and NR-UE and an exemplary communication state of AP and UE;
FIG. 72.1 illustrates exemplary frequency usage;
FIG. 72.2 illustrates exemplary frequency usage;
FIG. 72.3 illustrates exemplary frequency usage;
FIG. 72.4 illustrates exemplary frequency usage;
FIG. 72.5 illustrates exemplary frequency usage;
FIG. 72.6 illustrates exemplary frequency usage;
FIG. 72.7 illustrates exemplary frequency usage;
FIG. 72.8 illustrates exemplary frequency usage;
FIG. 72.9 illustrates exemplary frequency usage;

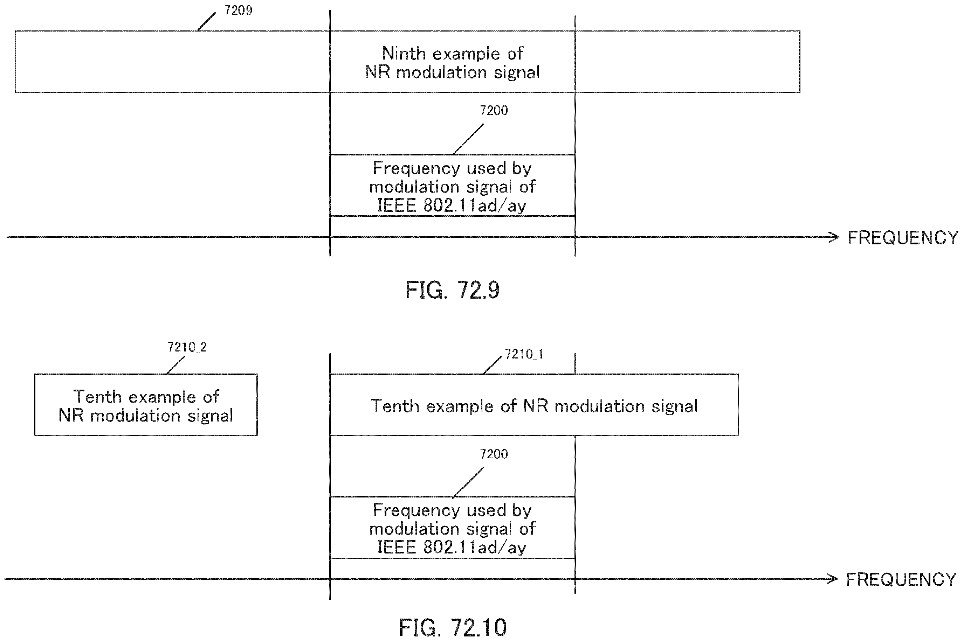

FIG. 72.10 illustrates exemplary frequency usage;

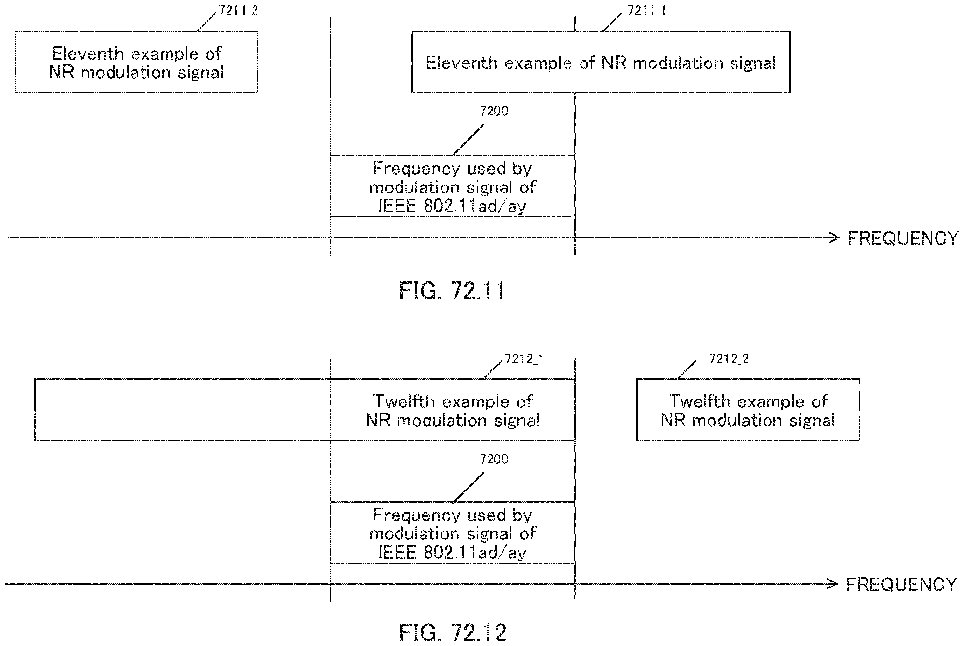

FIG. 72.11 illustrates exemplary frequency usage;
FIG. 72.12 illustrates exemplary frequency usage;

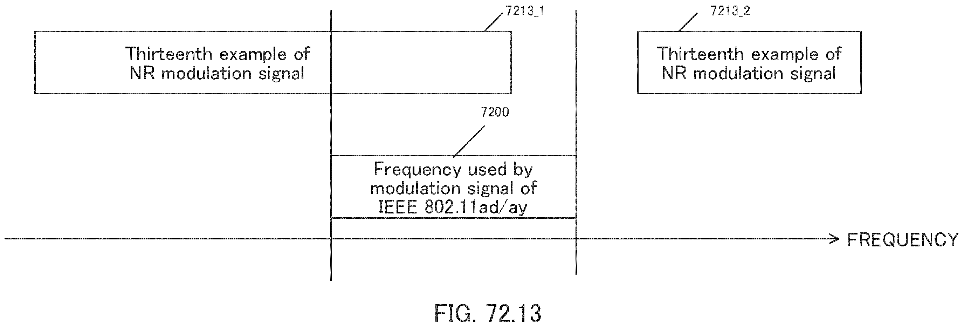

FIG. 72.13 illustrates exemplary frequency usage;

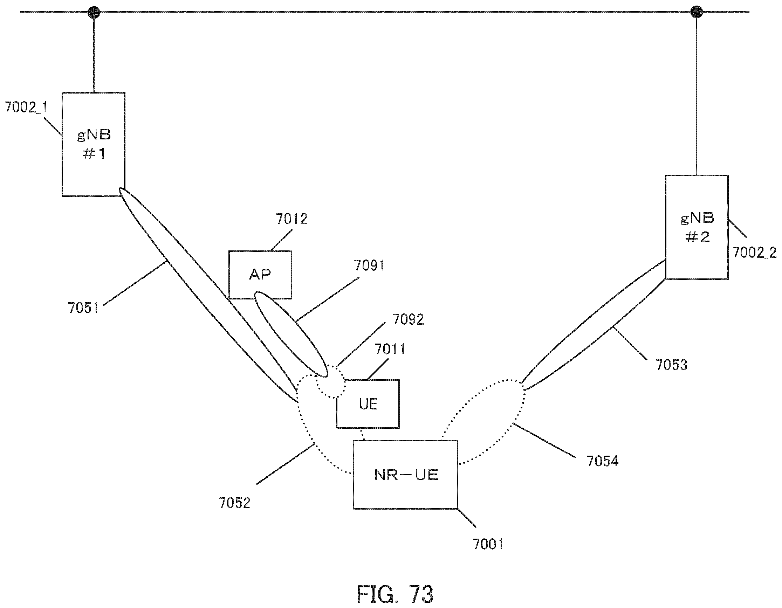

FIG. 73 illustrates an exemplary communication state of gNBs and NR-UE and an exemplary communication state of AP and UE;

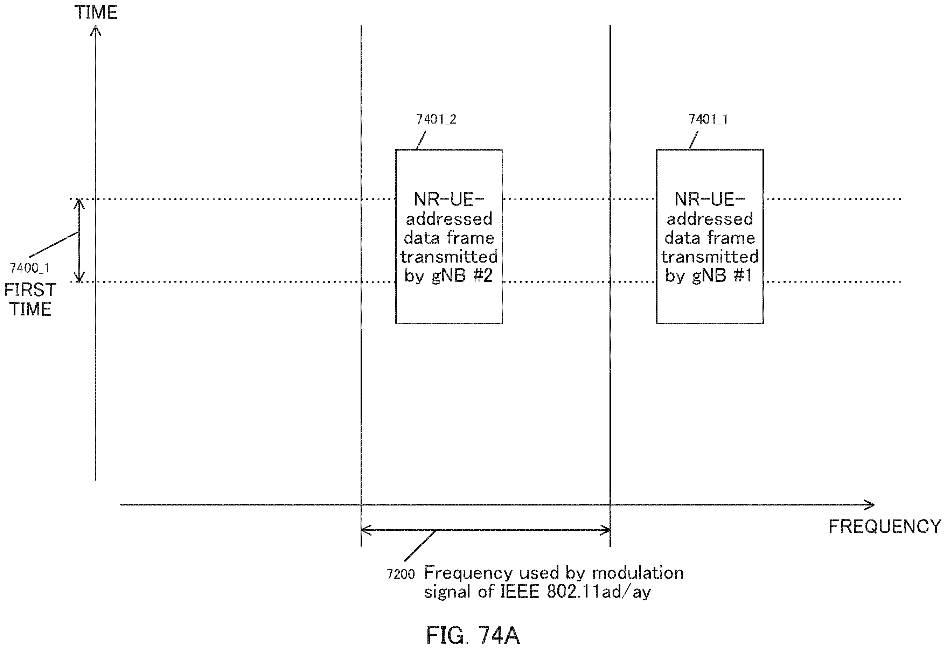

FIG. 74A illustrates an exemplary state of downlink FDM at multiple TRP;

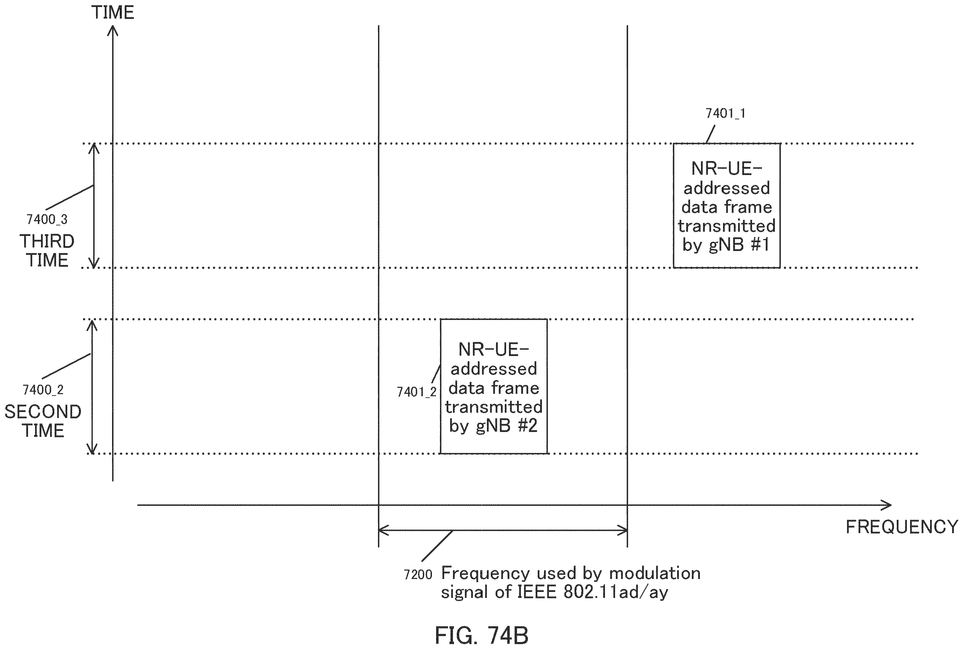

FIG. 74B illustrates an exemplary state of downlink FDM at multiple TRP;

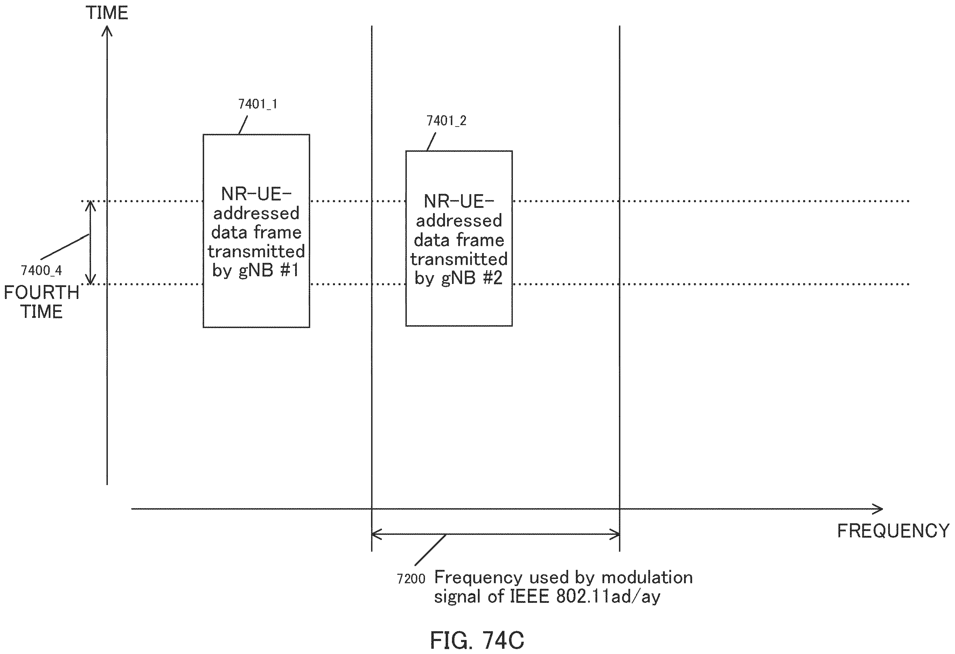

FIG. 74C illustrates an exemplary state of downlink FDM at multiple TRP;

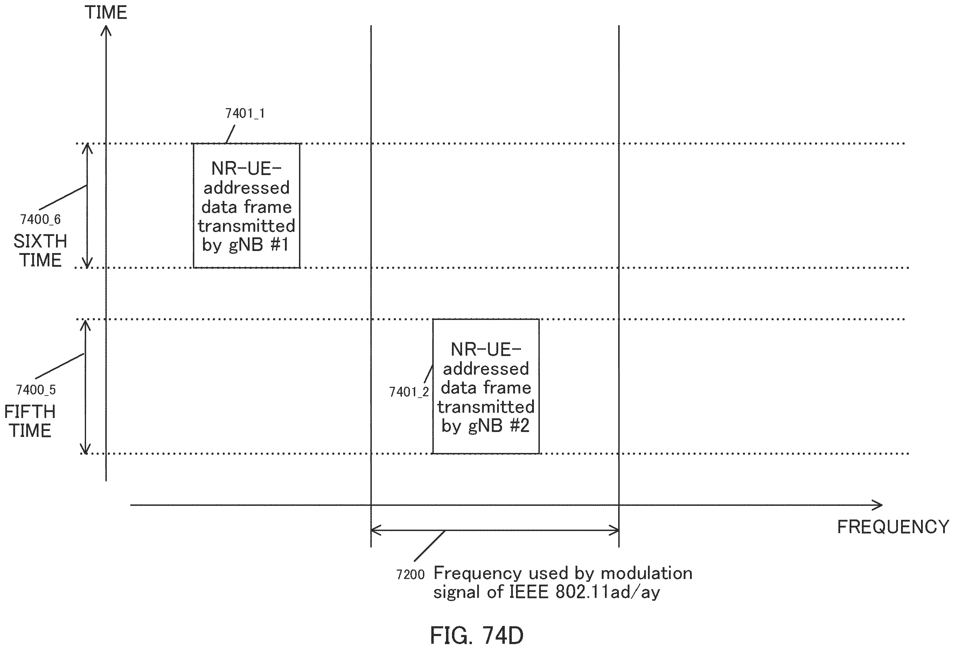

FIG. 74D illustrates an exemplary state of downlink FDM at multiple TRP;

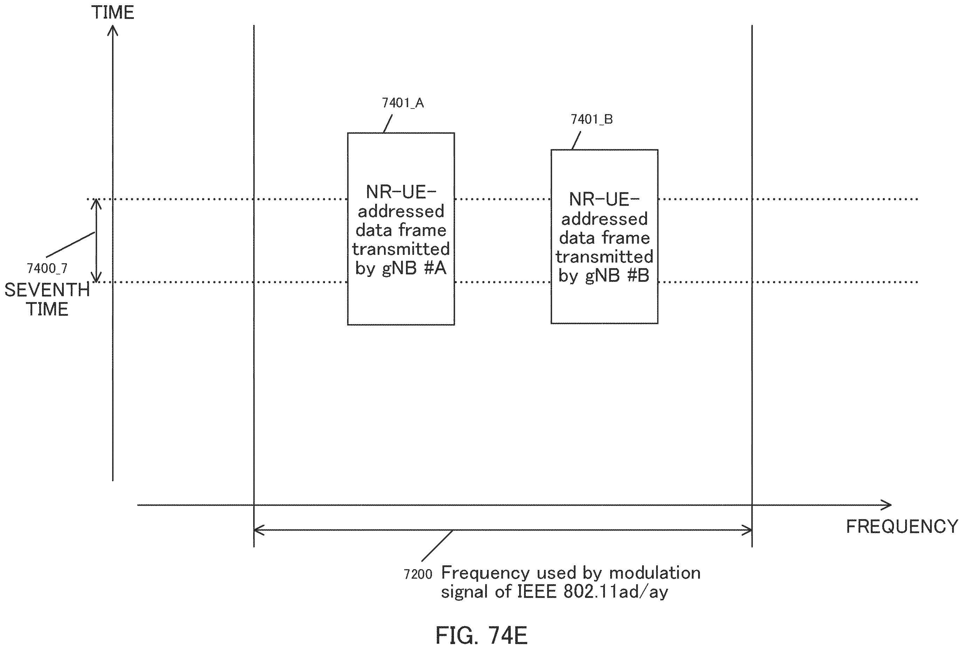

FIG. 74E illustrates an exemplary state of downlink FDM at multiple TRP;

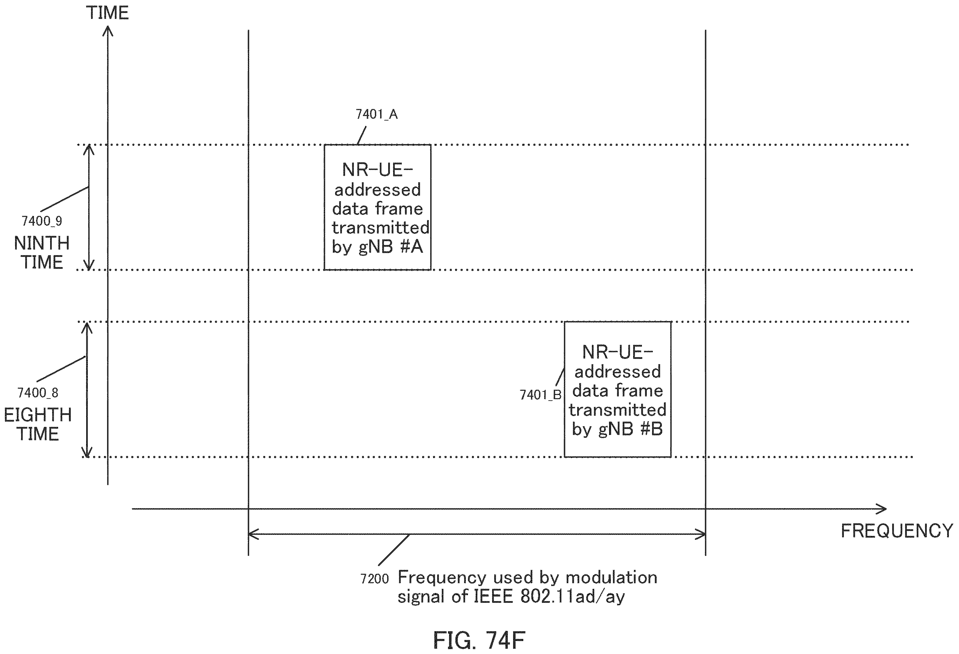

FIG. 74F illustrates an exemplary state of downlink FDM at multiple TRP;

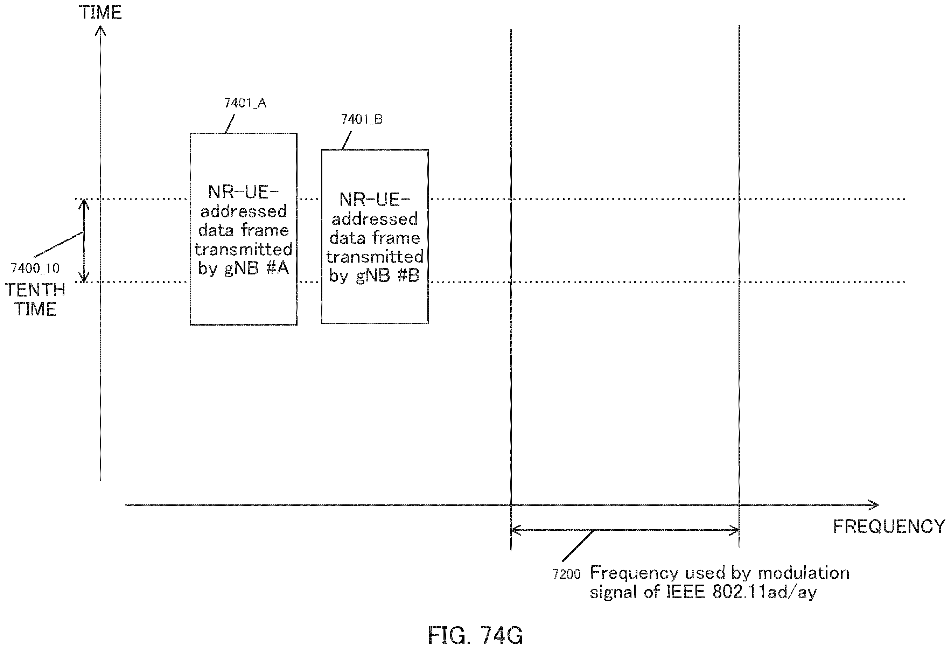

FIG. 74G illustrates an exemplary state of downlink FDM at multiple TRP;

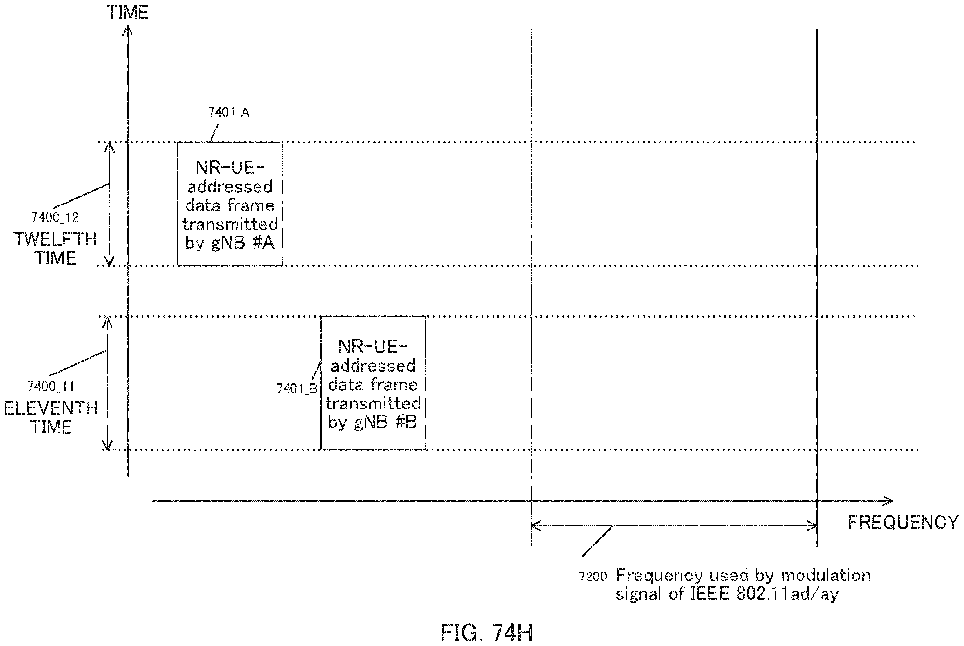

FIG. 74H illustrates an exemplary state of downlink FDM at multiple TRP;

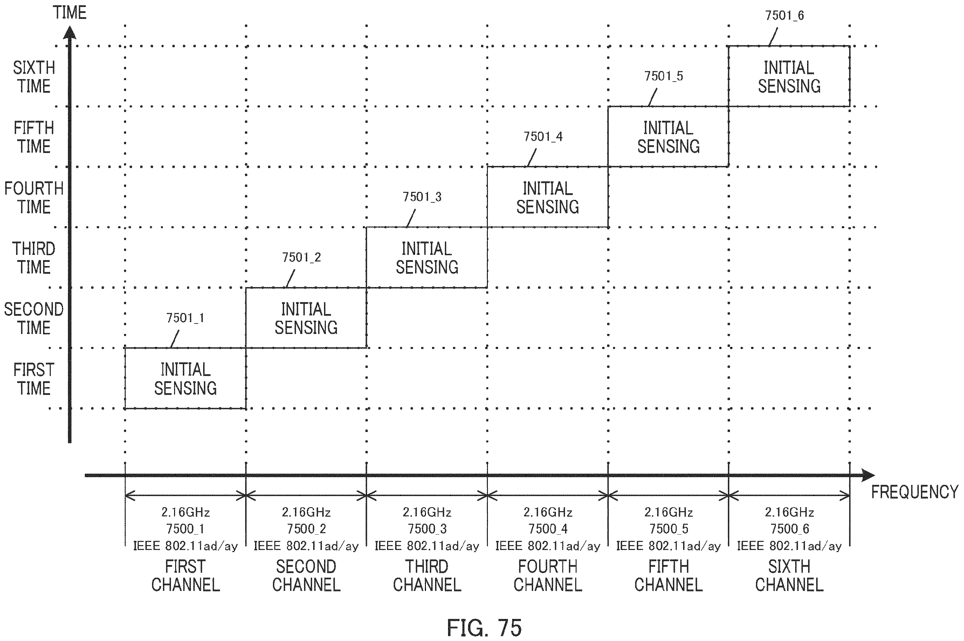

FIG. 75 illustrates relationships in frequency and time when initial sensing is performed;

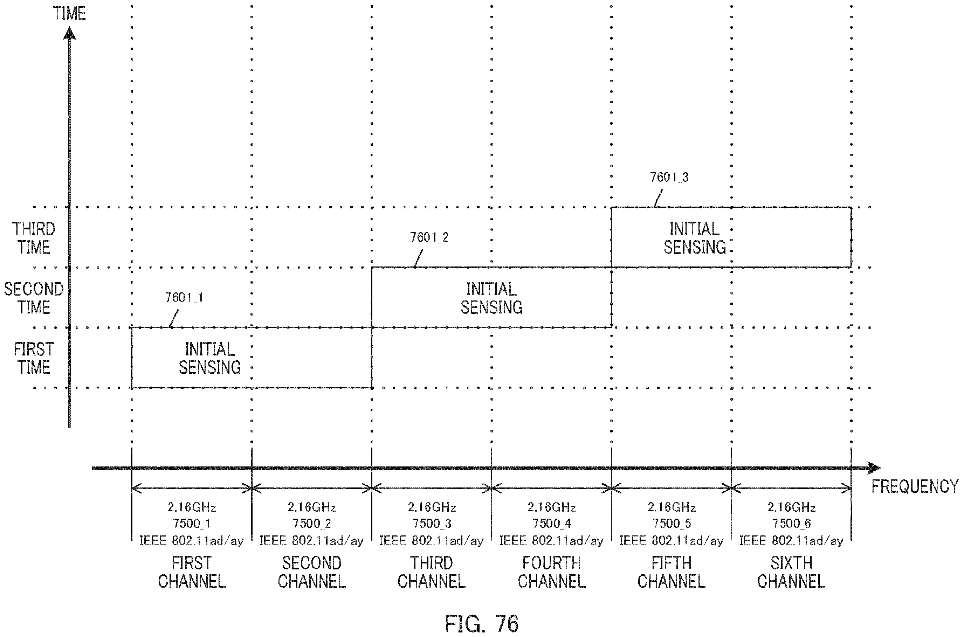

FIG. 76 illustrates relationships in frequency and time when initial sensing is performed;

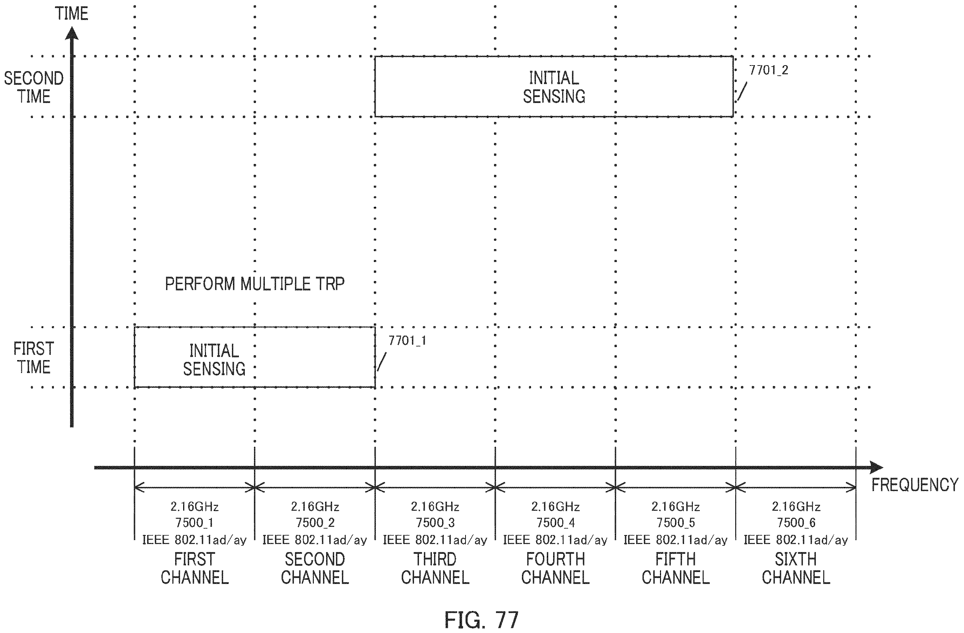

FIG. 77 illustrates relationships in frequency and time when initial sensing is performed;

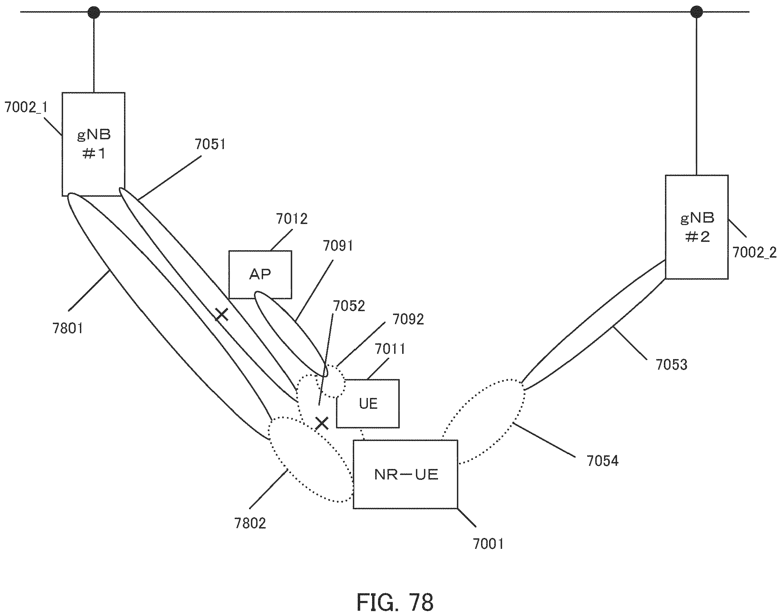

FIG. 78 illustrates an exemplary communication state of gNBs and NR-UE and an exemplary communication state of AP and UE;

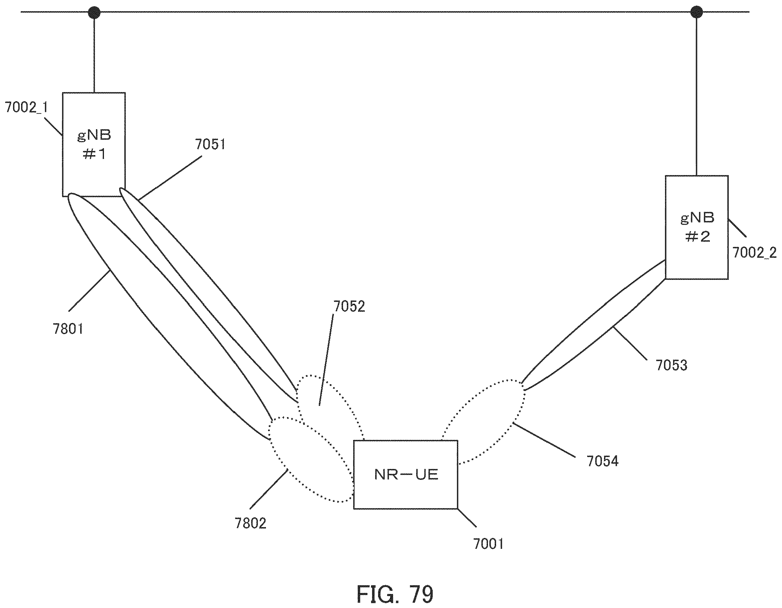

FIG. 79 illustrates an exemplary communication state of gNBs and NR-UE;

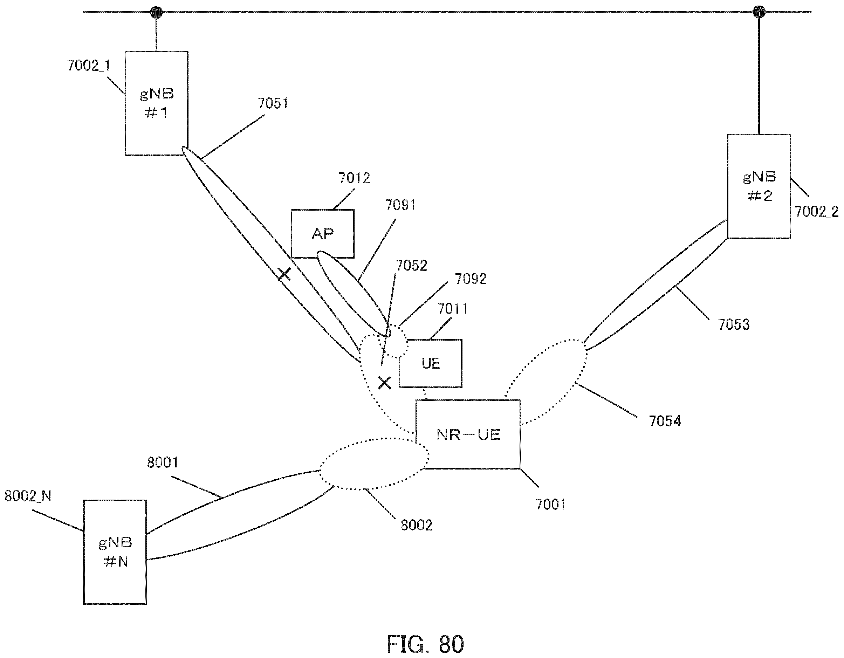

FIG. 80 illustrates an exemplary communication state of gNBs and NR-UE and an exemplary communication state of AP and UE;

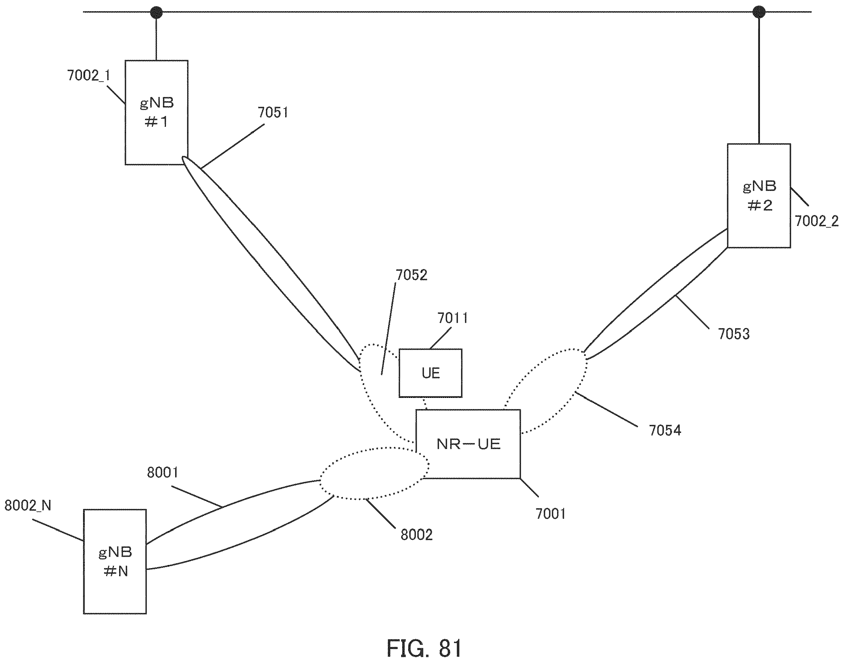

FIG. 81 illustrates an exemplary communication state of gNBs and NR-UE;

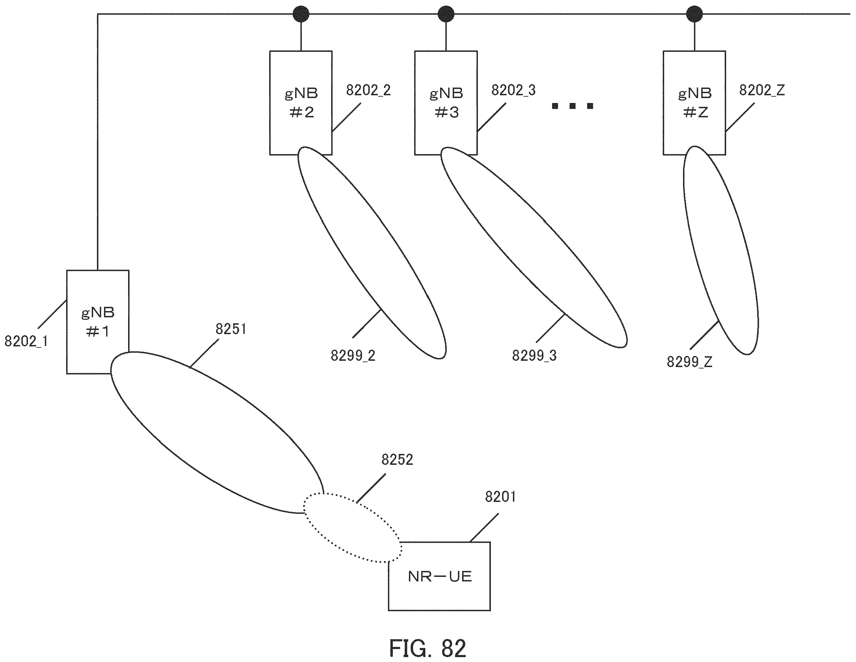

FIG. 82 illustrates an exemplary communication state of gNBs and NR-UE;

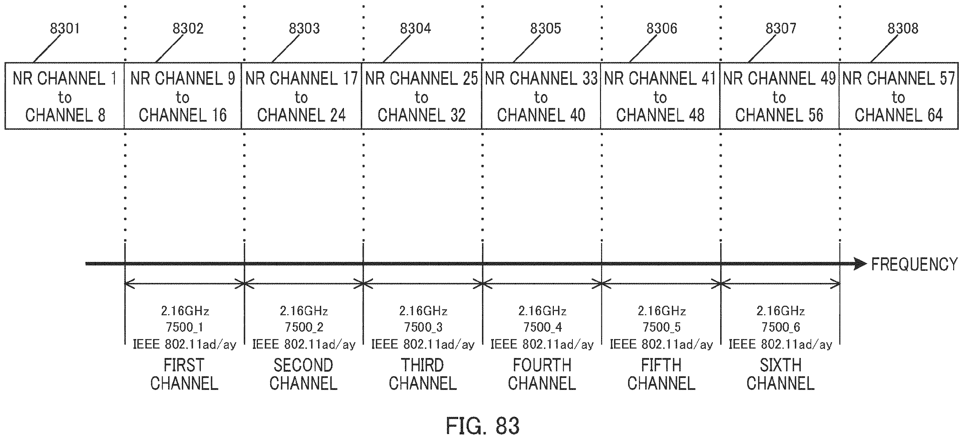

FIG. 83 illustrates exemplary relationships between channels of the first standard and channels of the second standard;

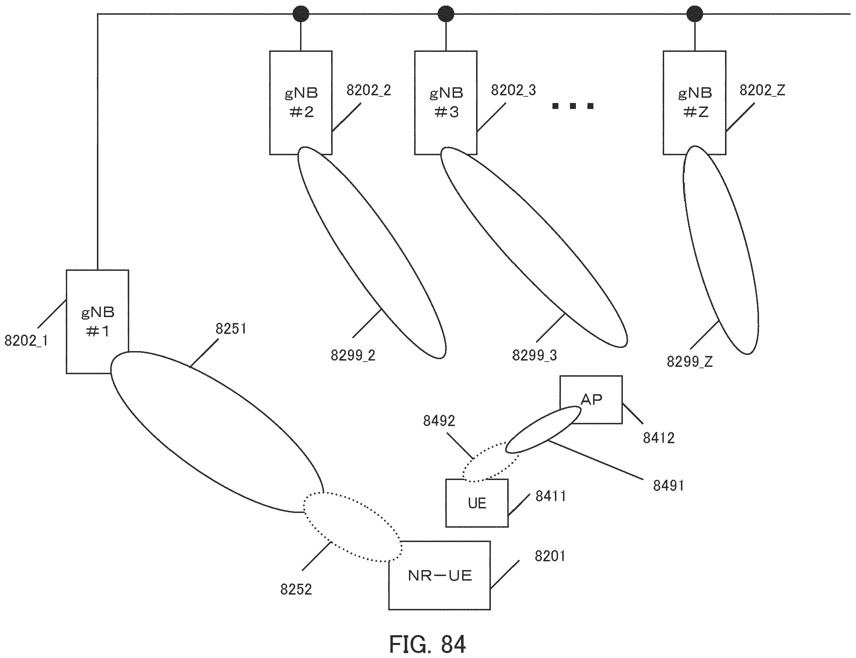

FIG. 84 illustrates an exemplary communication state of gNBs and NR-UE and an exemplary communication state of AP and UE;

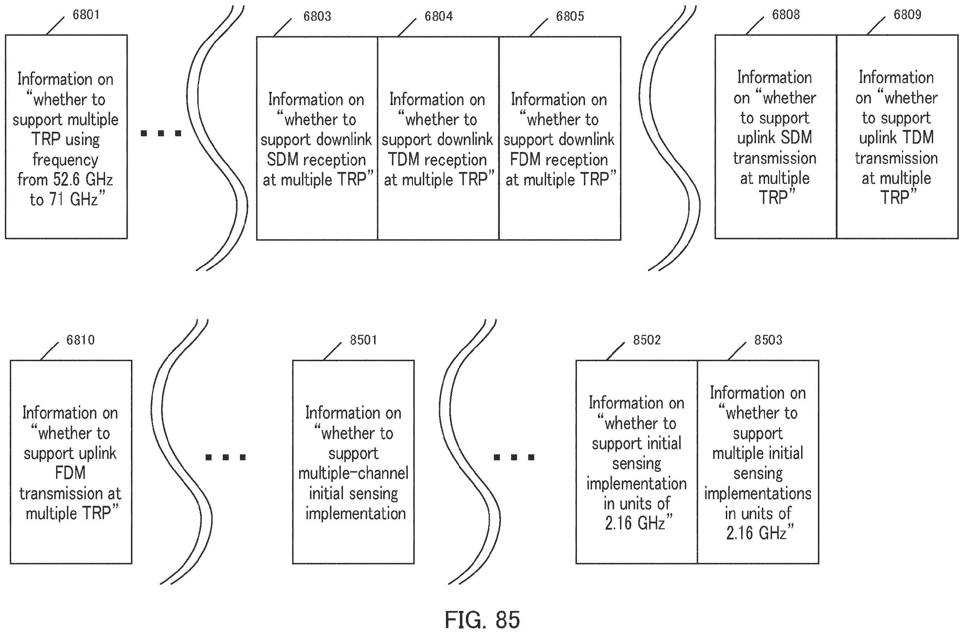

FIG. 85 illustrates exemplary capability/capabilities information;

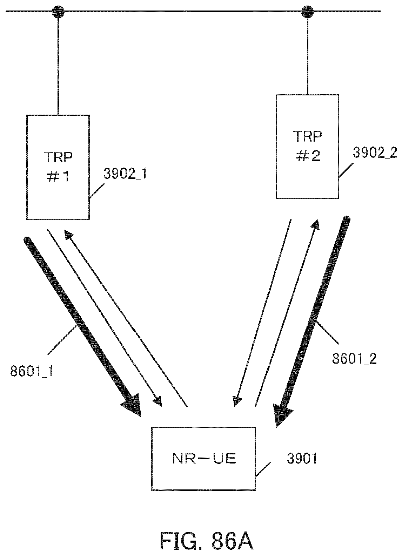

FIG. 86A illustrates a variation of communication of TRPs and NR-UE;

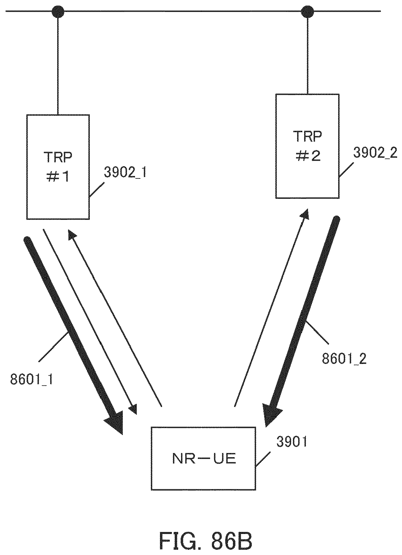

FIG. 86B illustrates a variation of communication of TRPs and NR-UE;

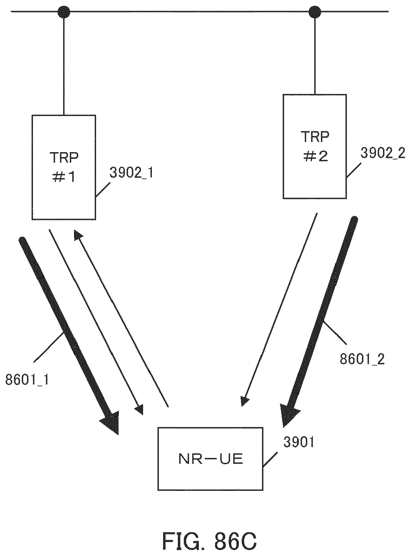

FIG. 86C illustrates a variation of communication of TRPs and NR-UE;

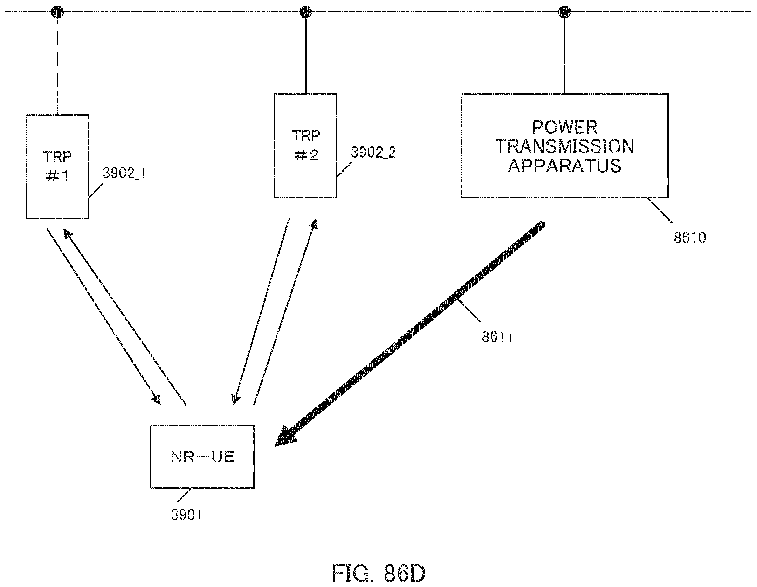

FIG. 86D illustrates a variation of communication of TRPs and NR-UE;

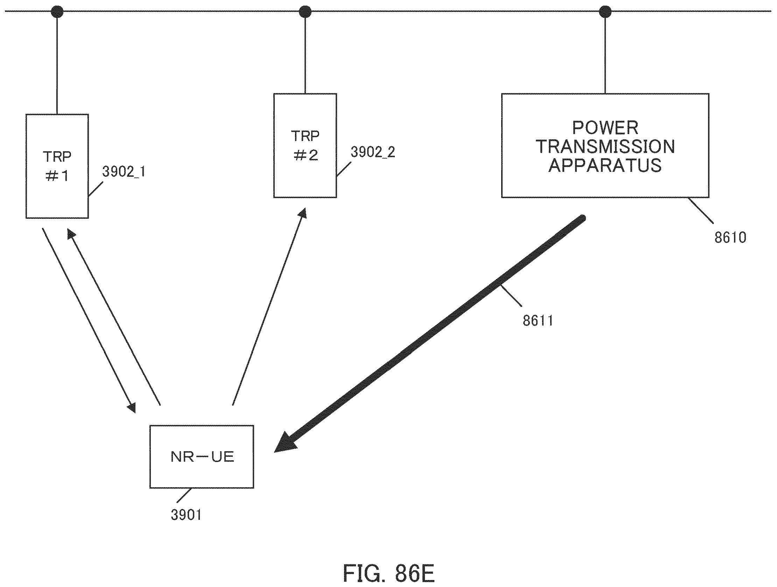

FIG. 86E illustrates a variation of communication of TRPs and NR-UE;

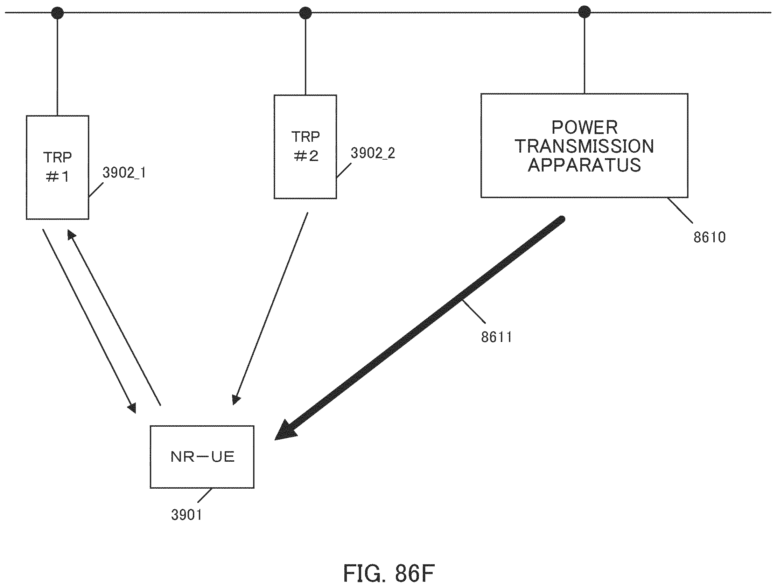

FIG. 86F illustrates a variation of communication of TRPs and NR-UE;

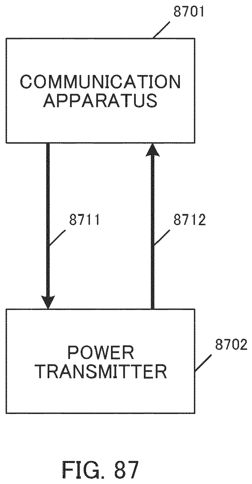

FIG. 87 illustrates an exemplary configuration of TRP;

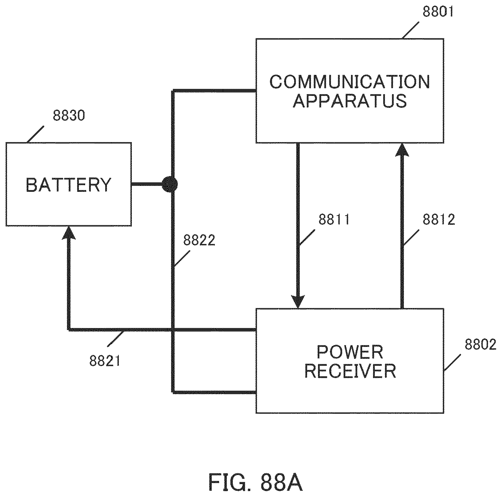

FIG. 88A illustrates an exemplary configuration of NR-UE;

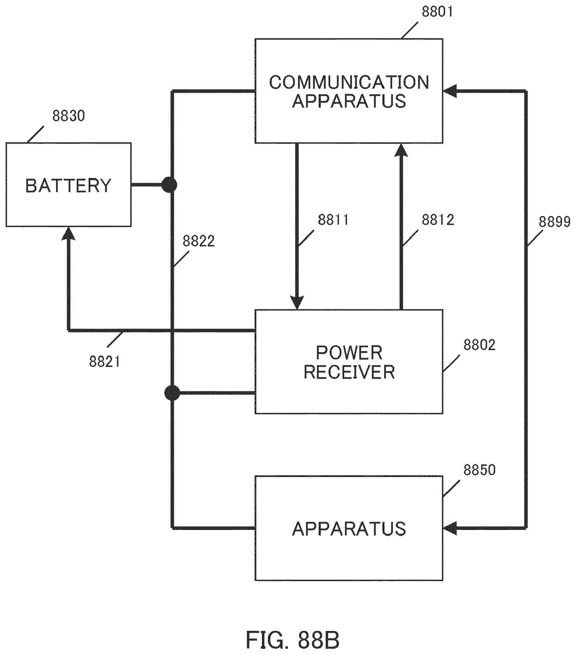

FIG. 88B illustrates an exemplary configuration of NR-UE;

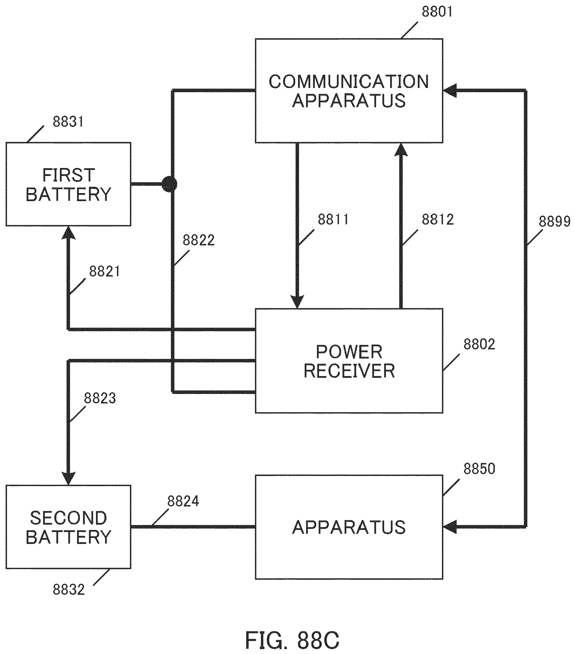

FIG. 88C illustrates an exemplary configuration of NR-UE;

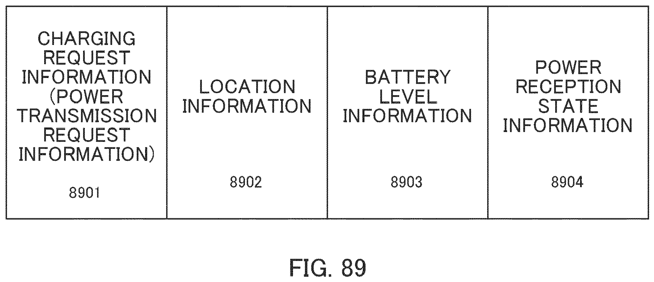

FIG. 89 illustrates exemplary information included in a modulation signal transmitted by NR-UE;

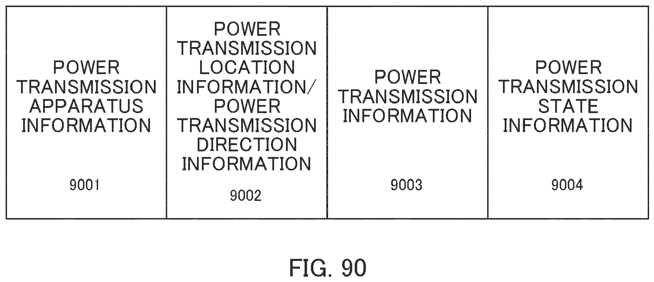

FIG. 90 illustrates exemplary information included in a modulation signal transmitted by TRP;

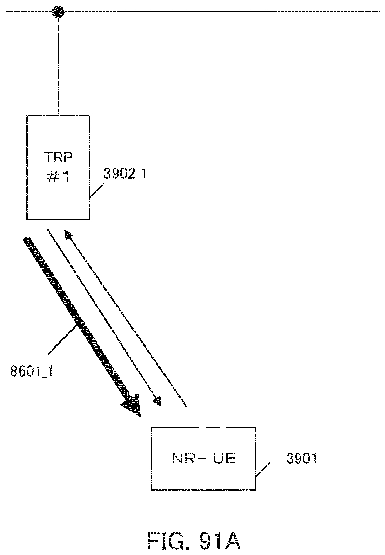

FIG. 91A illustrates a variation of communication of TRP and NR-UE;

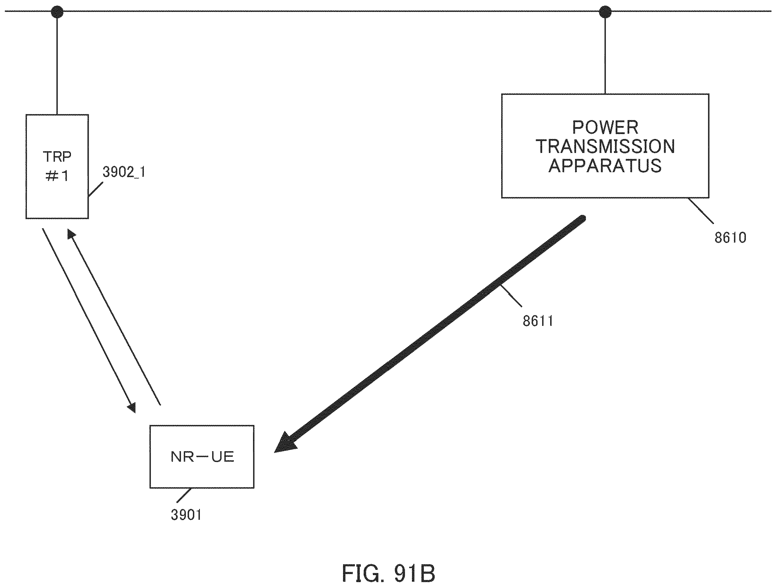

FIG. 91B illustrates a variation of communication of TRP and NR-UE; and

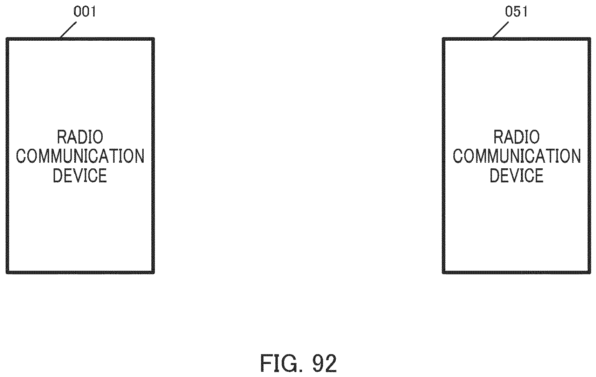

FIG. 92 illustrates an exemplary communication state of radio communication devices according to a conventional technique.

Description of Embodiments

Hereinafter, embodiments of the present disclosure will be described in detail with reference to the accompanying drawings.

First, communication methods using sector sweep will be described in Embodiments 1 to 5, and then sensing methods when sector sweep-based communication is in use will be described.

(Embodiment 1)

In Embodiment 1, a description will be given of a communication system, a communication apparatus, and a communication method using sector sweep.

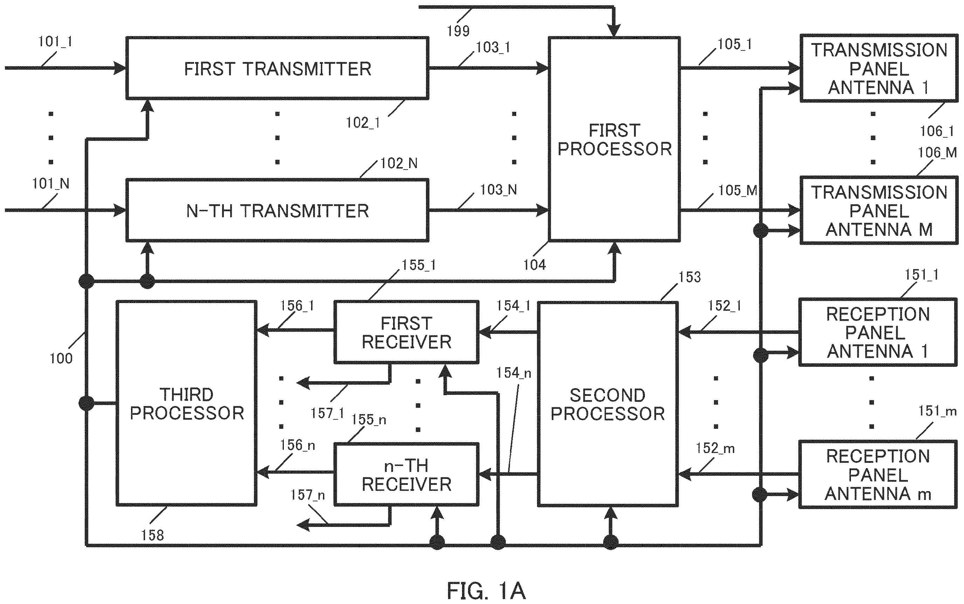

FIG. 1A illustrates an exemplary configuration of a communication apparatus, such as a base station, an access point, a terminal, a repeater, and a transmission (Tx)/reception (Rx) point (TRP) in Embodiment 1.

The communication apparatus in FIG. 1A includes N transmitters, which are "first transmitter 102_1 to N-th transmitter 102_N". Note that N is an integer equal to or greater than 1 or an integer equal to or greater than 2.

The communication apparatus in FIG. 1A also includes M transmission panel antennas, which are "transmission panel antenna 1 labeled 106_1 to transmission panel antenna M labeled 106_M", for transmission. Note that M is an integer equal to or greater than 1 or an integer equal to or greater than 2.

The communication apparatus in FIG. 1A includes n receivers, which are "first receiver 155_1 to n-th receiver 155_n". Note that n is an integer equal to or greater than 1 or an integer equal to or greater than 2.

The communication apparatus in FIG. 1A includes m reception panel antennas, which are "reception panel antenna 1 labeled 151_1 to reception panel antenna m labeled 151_m", for reception. Note that m is an integer equal to or greater than 1 or an integer equal to or greater than 2.

The i-th transmitter 102_i takes control signal 100 and i-th data 101_i as input, performs processing such as error correction coding and mapping based on a modulation scheme, and outputs i-th modulation signal 103_i. Note that i is an integer from 1 to N (both inclusive).

Note that i-th data 101_i may be configured to include data of one or more users. In this case, an error correction code, a modulation scheme, and a transmission method may be configured for each user.

First processor 104 takes i-th modulation signal 103_i (i is an integer from 1 to N (both inclusive)), control signal 100, and reference signal 199 as input and outputs j-th transmission signal 105_j (j is an integer from 1 to M (both inclusive)) based on frame configuration information included in control signal 100. Note that some of i-th modulation signals 103_i may include no signal, and some of j-th transmission signals 105 J may include no signal.

Then, j-th transmission signal 105J is outputted as a radio wave from transmission panel antenna j labeled 106_j. Note that transmission panel antenna j labeled 106_j may perform beamforming and change the transmission directivity taking control signal 100 as input. In addition, transmission panel antenna j labeled 106_j may be switched by control signal 100 in transmitting a modulation signal to a communication counterpart. This will be described later.

Reception panel antenna i labeled 151_i receives i-th received signal 152_i. Note that reception panel antenna i labeled 151_i may perform beamforming and change the reception directivity taking control signal 100 as input. This will be described later.

Second processor 153 performs processing such as frequency conversion taking i-th received signal 152_i and control signal 100 as input, and outputs j-th signal-processing-subjected signal (i.e., j-th signal that has been subjected to signal processing) 154_j. Note that some of i-th received signals 152_i may include no signal, and some of j-th signal-processing-subjected signals 154_j may include no signal.

Then, j-th receiver 155_j takes j-th signal-processing-subjected signal 154_j and control signal 100 as input, performs processing such as demodulation and error correction decoding on j-th signal-processing-subjected signal 154_j based on control signal 100, and outputs j-th control data 156_j and j-th data 157_j.

Note that j-th control data 156_j may be configured to include control data of one or more users, and j-th data 157_j may be configured to include data of one or more users.

Third processor 158 takes j-th control data 156_j as input, generates control signal 100 based on information obtained from the communication counterpart, and outputs generated control signal 100.

Incidentally, first processor 104 of the communication apparatus in FIG. 1A may perform processing for transmit beamforming (transmission directivity control), for example, precoding processing. Meanwhile, second processor 153 may perform processing for reception directivity control. As another example, first processor 104 may perform processing of outputting first modulation signal 103_1 as first transmission signal 105_1, second modulation signal 103_2 as second transmission signal 105_2, and third modulation signal 103_3 as third transmission signal 105_3, for example. Alternatively, first processor 104 may perform processing of outputting second modulation signal 103_2 as first transmission signal 105_1. In addition, second processor 153 may perform processing of outputting first received signal 152_1 as first signal-processing-subjected signal 154_1, second received signal 152_2 as second signal-processing-subjected signal 154_2, and third received signal 152_3 as third signal-processing-subjected signal 154_3. Alternatively, the second processor 153 may perform processing of outputting first received signal 152_1 as second signal-processing-subjected signal 154_2.

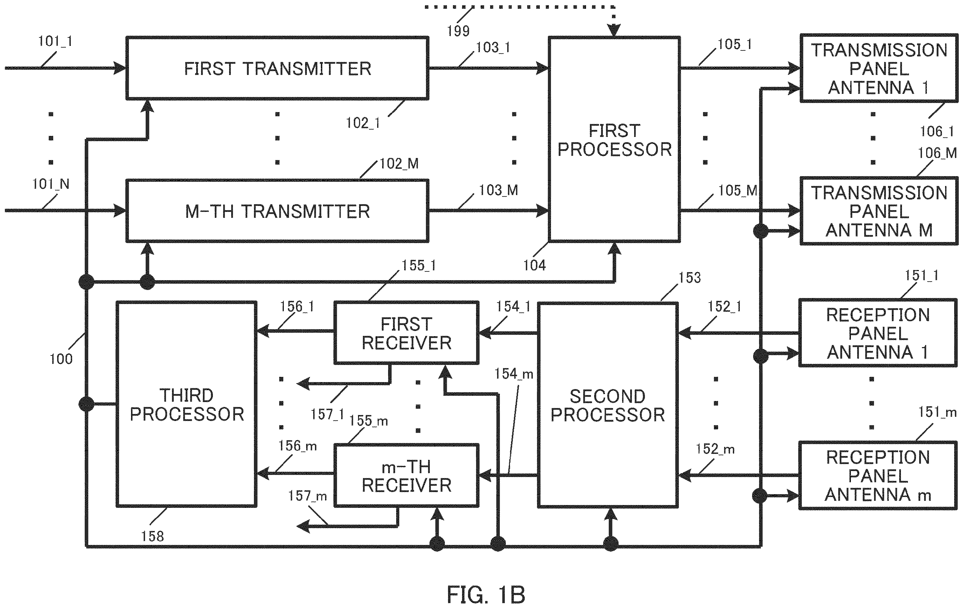

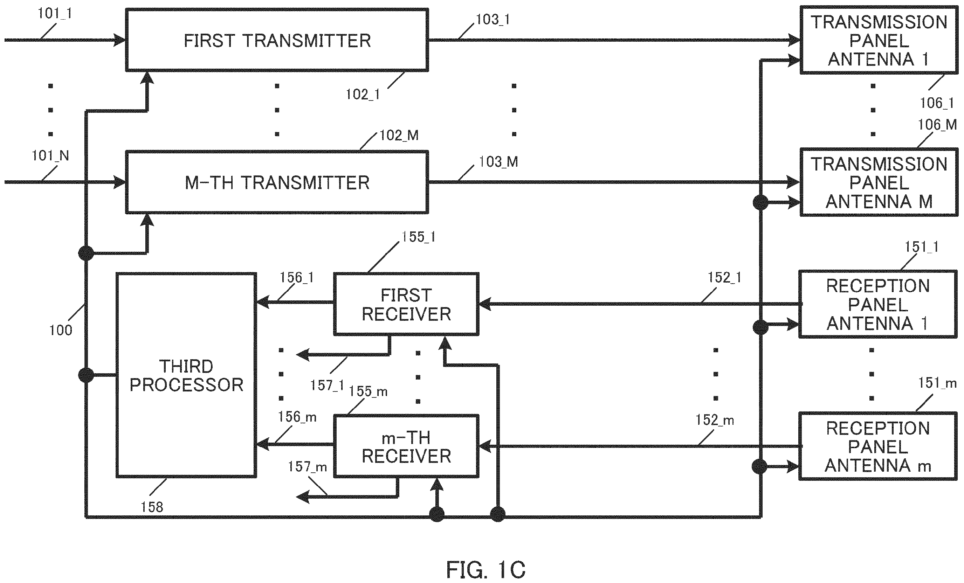

The configuration in FIG. 1A may include a processor not illustrated in FIG. 1A. For example, an interleaver for sorting symbols and/or data, a padder for padding, and the like may be included in the communication apparatus. Moreover, the communication apparatus in FIG. 1A (also in FIG. 1B and FIG. 1C) may perform transmission and/or reception corresponding to multiple input multiple output (MIMO) transmission for transmitting a plurality of modulation signals (a plurality of streams), using a plurality of antennas. Further, the communication apparatus in FIG. 1A (also in FIG. 1B and FIG. 1C) may perform transmission corresponding to multi-user MIMO transmission for transmitting, using a first frequency (band), modulation signals to a plurality of terminals in a first time period at least.

FIG. 1B illustrates an exemplary configuration of the communication apparatus in Embodiment 1, such as a base station, an access point, a terminal, a repeater, a TRP, etc., different from the configuration in FIG. 1A. In FIG. 1B, the components that operate in the same manner as in FIG. 1A are denoted by the same reference signs, and detailed descriptions thereof will be omitted.

The configuration in FIG. 1B is characterized in that the number of transmitters and the number of transmission panel antennas are the same. In this case, first processor 104 may perform processing for transmit beamforming (transmission directivity control), for example, precoding processing. First processor 104 may output y-th modulation signal 103_y as x-th transmission signal 105_x. Note that x is an integer from 1 to M (both inclusive), and y is an integer from 1 to M (both inclusive).

In addition, the number of receivers and the number of reception panel antennas are the same. In this case, second processor 153 may perform processing for the reception directivity control. Second processor 153 may output y-th received signal 152_y as x-th signal-processing-subjected signal 154_x. Note that x is an integer from 1 to m (both inclusive), and y is an integer from 1 to m (both inclusive).

FIG. 1C illustrates an exemplary configuration of the communication apparatus in Embodiment 1, such as a base station, an access point, a terminal, a repeater, a TRP, etc., different from the configurations in FIGS. 1A and 1B. In FIG. 1C, the components that operate in the same manner as in FIG. 1A are denoted by the same reference signs, and detailed descriptions thereof will be omitted.

The configuration in FIG. 1C is characterized in that the number of transmitters and the number of transmission panel antennas are the same and the first processor is not present. In addition, the number of receivers and the number of reception panel antennas are the same and the second processor is not present.

Note that FIGS. 1A, 1B, and 1C illustrate exemplary configurations of the communication apparatus, such as a base station, an access point, a terminal, a repeater, a TRP, etc., and the configuration of the communication apparatus is not limited to these examples.

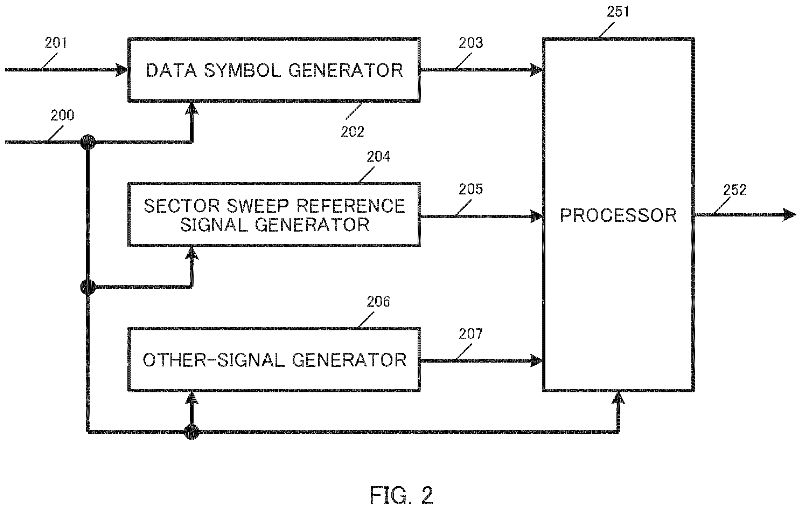

FIG. 2 illustrates an exemplary configuration of i-th transmitter 102_i. Note that i is "an integer from 1 to N (both inclusive)" or "an integer from 1 to M (both inclusive)".

Data symbol generator 202 takes data 201 and control signal 200 as input, performs error correction coding, mapping, signal processing for transmission, etc. on the basis of information on an error correction coding method, information on a modulation scheme, information on a transmission method, information on a frame configuration method, etc. included in control signal 200, and outputs data symbol modulation signal 203. Note that data 201 corresponds to i-th data 101_i, and control signal 200 corresponds to control signal 100. Thus, data 201 may include data of one or more users.

Sector sweep reference signal (i.e., reference signal for sector sweep) generator 204 takes control signal 200 as input, generates sector sweep reference signal 205 based on the frame configuration information included in control signal 200, and outputs the generated signal. Note that specific configuration methods and transmission methods for sector sweep reference signal 205 will be described later in detail.

Other-signal generator 206 takes control signal 200 as input, generates other signals 207 based on the control signal, and outputs the generated signals.

Processor 251 takes data symbol modulation signal 203, sector sweep reference signal 205, other signals 207, and control signal 200 as input, generates frame configuration-based modulation signal (i.e., modulation signal in accordance with frame configuration) 252 based on the frame configuration information included in control signal 200, and outputs the generated signal. Note that frame configuration-based modulation signal 252 corresponds to i-th modulation signal 103_i, and specific examples of the frame configuration will be described later in detail.

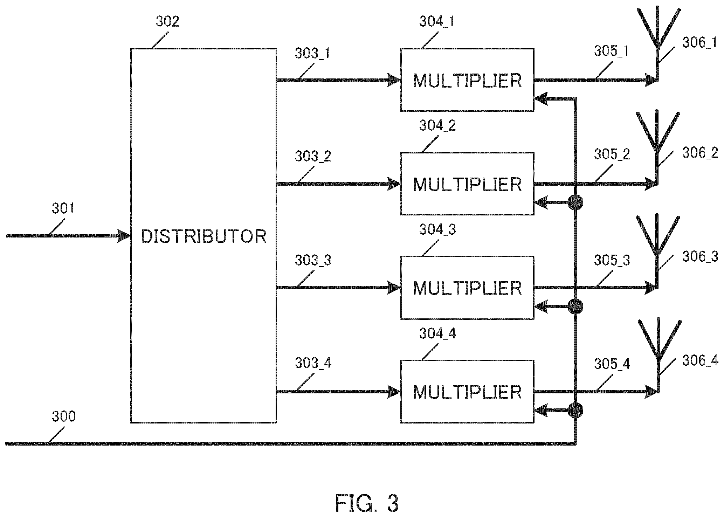

FIG. 3 illustrates an exemplary configuration of transmission panel antenna i labeled 106_i in FIGS. 1A, 1B, and 1C. Note that i is "an integer from 1 to M (both inclusive)". Distributor 302 takes transmission signal 301 as input, performs distribution, and outputs first transmission signal 303_1, second transmission signal 303_2, third transmission signal 303_3, and fourth transmission signal 303_4. Note that transmission signal 301 corresponds to "i-th transmission signal 105_i in FIGS. 1A and 1B" or "i-th modulation signal 103_i in FIG. 1C".

Multiplier 304_1 takes first transmission signal 303_1 and control signal 300 as input, multiplies first transmission signal 303_1 by a multiplication coefficient based on control signal 300, generates and outputs coefficient-multiplication-subjected first transmission signal (i.e., first transmission signal that has been subjected to the coefficient multiplication) 305_1. Then, coefficient-multiplication-subjected first transmission signal 305_1 is outputted from antenna 306_1 as a radio wave. Note that control signal 300 corresponds to control signal 100.

A specific description follows. First transmission signal 303_1 is represented by tx1(t). Note that t represents time. When the multiplication coefficient is w1, coefficient-multiplication-subjected first transmission signal 305_1 can be expressed as tx1(t) $\times$ w1. Note that tx1(t) can be represented by a complex number, and thus, it may be a real number. Likewise, w1 can be represented by a complex number, and thus, it may be a real number.

Multiplier 304_2 takes second transmission signal 303_2 and control signal 300 as input, multiplies second transmission signal 303_2 by a multiplication coefficient based on control signal 300, generates and outputs coefficient-multiplication-subjected second transmission signal 305_2. Then, coefficient-multiplication-subjected second transmission signal 305_2 is outputted from antenna 306_2 as a radio wave.

A specific description follows. Second transmission signal 303_2 is represented by tx2(t). Note that t represents time. When the multiplication coefficient is w2, coefficient-multiplication-subjected second transmission signal 305_2 can be expressed as tx2(t) $\times$ w2. Note that tx2(t) can be represented by a complex number, and thus, it may be a real number. Likewise, w2 can be represented by a complex number, and thus, it may be a real number.

Multiplier 304_3 takes third transmission signal 303_3 and control signal 300 as input, multiplies third transmission signal 303_3 by a multiplication coefficient based on control signal 300, generates and outputs coefficient-multiplication-subjected third transmission signal 305_3. Then, coefficient-multiplication-subjected third transmission signal 305_3 is outputted from antenna 306_3 as a radio wave.

A specific description follows. Third transmission signal 303_3 is represented by tx3(t). Note that t represents time. When the multiplication coefficient is w3, coefficient-multiplication-subjected third transmission signal 305_3 can be expressed as tx3(t) $\times$ w3. Note that tx3(t) can be represented by a complex number, and thus, it may be a real number. Likewise, w3 can be represented by a complex number, and thus, it may be a real number.

Multiplier 304_4 takes fourth transmission signal 303_4 and control signal 300 as input, multiplies fourth transmission signal 303_4 by a multiplication coefficient based on control signal 300, generates and outputs coefficient-multiplication-subjected fourth transmission signal 305_4. Then, coefficient-multiplication-subjected fourth transmission signal 305_4 is outputted from antenna 306_4 as a radio wave.

A specific description follows. Fourth transmission signal 303_4 is represented by tx4(t). Note that t represents time. When the multiplication coefficient is w4, coefficient-multiplication-subjected fourth transmission signal 305_4 can be expressed as tx4(t) $\times$ w4. Note that tx4(t) can be represented by a complex number, and thus, it may be a real number. Likewise, w4 can be represented by a complex number, and thus, it may be a real number.

Note that "an absolute value of w1, an absolute value of w2, an absolute value of w3, and an absolute value of w4 may be equal to each other". This corresponds to a case where a phase change has been performed. It is needless to say that the absolute value of w1, the absolute value of w2, the absolute value of w3, and the absolute value of w4 need not be equal to each other.

The respective values of w1, w2, w3, and w4 may be switched for each frame, each slot, each mini-slot, each multiple-symbols, or each symbol. The switch timings of the respective values of w1, w2, w3, and w4 are not limited to the above examples.

Further, FIG. 3 illustrates an example of the transmission panel antenna composed of four antennas (and four multipliers), but the number of antennas is not limited to four and the transmission panel antenna only needs to be composed of two or more antennas.

Note that transmission panel antenna i labeled 106_i in FIGS. 1A, 1B, and 1C may perform directivity control by changing the characteristics of the antenna itself, and in this case, transmission panel antenna i labeled 106_i may be composed of one or more antennas.

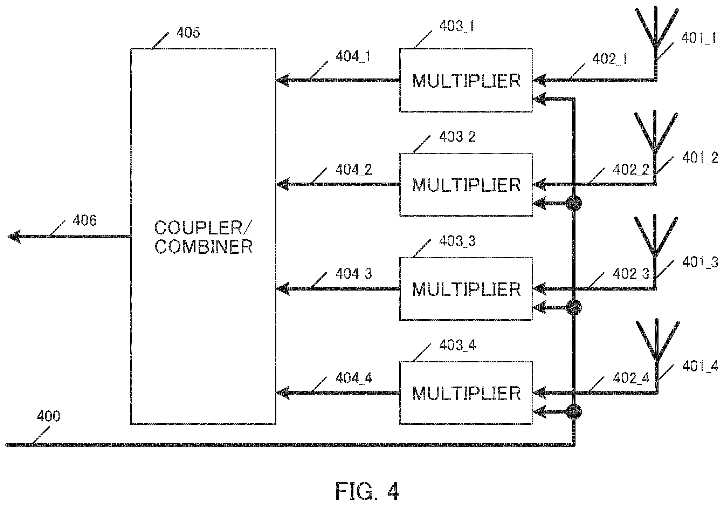

FIG. 4 illustrates an exemplary configuration of reception panel antenna i labeled 151_i in FIGS. 1A, 1B, and 1C. Note that i is "an integer from 1 to m (both inclusive)".

Multiplier 403_1 takes first received signal 402_1 received at antenna 401_1 and control signal 400 as input, multiplies first received signal 402_1 by a multiplication coefficient based on control signal 400, and outputs coefficient-multiplication-subjected first received signal 404_1.

A specific description follows. First received signal 402_1 is represented by rx1(t). Note that t represents time. When the multiplication coefficient is d1, coefficient-multiplication-subjected first received signal 404_1 can be expressed as rx1(t) $\times$ d1. Note that rx1(t) can be represented by a complex number, and thus, it may be a real number. Likewise, d1 can be represented by a complex number, and thus, it may be a real number.

Multiplier 403_2 takes second received signal 402_2 received at antenna 401_2 and control signal 400 as input, multiplies second received signal 402_2 by a multiplication coefficient based on control signal 400, and outputs coefficient-multiplication-subjected second received signal 404_2.

A specific description follows. Second received signal 402_2 is represented by rx2(t). Note that t represents time. When the multiplication coefficient is d2, coefficient-multiplication-subjected second received signal 404_2 can be expressed as rx2(t) × d2. Note that rx2(t) can be represented by a complex number, and thus, it may be a real number. Likewise, d2 can be represented by a complex number, and thus, it may be a real number.

Multiplier 403_3 takes third received signal 402_3 received at antenna 401_3 and control signal 400 as input, multiplies third received signal 402_3 by a multiplication coefficient based on control signal 400, and outputs coefficient-multiplication-subjected third received signal 404_3.

A specific description follows. Third received signal 402_3 is represented by rx3(t). Note that t represents time. When the multiplication coefficient is d3, coefficient-multiplication-subjected third received signal 404_3 can be expressed as rx3(t) × d3. Note that rx3(t) can be represented by a complex number, and thus, it may be a real number. Likewise, d3 can be represented by a complex number, and thus, it may be a real number.

Multiplier 403_4 takes fourth received signal 402_4 received at antenna 401_4 and control signal 400 as input, multiplies fourth received signal 402_4 by a multiplication coefficient based on control signal 400, and outputs coefficient-multiplication-subjected fourth received signal 404_4.

A specific description follows. Fourth received signal 402_4 is represented by rx4(t). Note that t represents time. When the multiplication coefficient is d4, coefficient-multiplication-subjected fourth received signal 404_4 can be expressed as rx4(t) × d4. Note that rx4(t) can be represented by a complex number, and thus, it may be a real number. Likewise, d4 can be represented by a complex number, and thus, it may be a real number.

Coupler/combiner 405 takes coefficient-multiplication-subjected first received signal 404_1, coefficient-multiplication-subjected second received signal 404_2, coefficient-multiplication-subjected third received signal 404_3, and coefficient-multiplication-subjected fourth received signal 404_4 as input, combines coefficient-multiplication-subjected first received signal 404_1, coefficient-multiplication-subjected second received signal 404_2, coefficient-multiplication-subjected third received signal 404_3, and coefficient-multiplication-subjected fourth received signal 404_4, and outputs modulation signal 406. Note that modulation signal 406 is expressed as rx1(t) × d1 + rx2(t) × d2 + rx3(t) × d3 + rx4(t) × d4.

Note that control signal 400 corresponds to control signal 100, and modulation signal 406 corresponds to i-th received signal 152_i.

In addition, "an absolute value of d1, an absolute value of d2, an absolute value of d3, and an absolute value of d4 may be equal to each other". This corresponds to a case where a phase change has been performed. It is needless to say that the absolute value of d1, the absolute value of d2, the absolute value of d3, and the absolute value of d4 need not be equal to each other.

The respective values of d1, d2, d3, and d4 may be switched for each frame, each slot, each mini-slot, each multiple-symbols, or each symbol. The switch timings of the respective values of d1, d2, d3, and d4 are not limited to the above examples.

Further, FIG. 4 illustrates an example of the reception panel antenna composed of four antennas (and four multipliers), but the number of antennas is not limited to four and the reception panel antenna only needs to be composed of two or more antennas.

Note that reception panel antenna i labeled 151_i in FIGS. 1A, 1B, and 1C may perform directivity control by changing the characteristics of the antenna itself, and in this case, reception panel antenna i labeled 151_i may be composed of one or more antennas.

In the present embodiment, in a case where the communication apparatus in FIGS. 1A, 1B, and 1C is a base station, g Node B (gNB), or terminal, for example, it supports multi-carrier transmission such as orthogonal frequency division multiplexing (OFDM). The base station, gNB, or terminal in FIGS. 1A, 1B, and 1C may also support orthogonal frequency division multiple access (OFDMA).

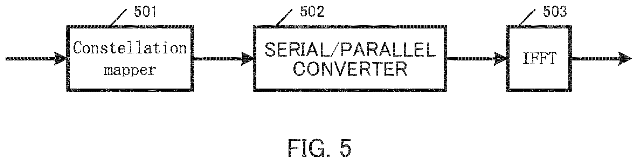

FIG. 5 illustrates an exemplary configuration of a transmission apparatus in a case of using an OFDM scheme. As illustrated in FIG. 5, the transmission apparatus is composed of, for example, constellation mapper 501, serial/parallel converter 502, and inverse fast Fourier transform (IFFT) 503.

Constellation mapper 501, for example, takes data as input, performs mapping based on the configured modulation scheme, and outputs the modulation signal.

Serial/parallel converter 502 converts serial signals into parallel signals. Note that serial/parallel converter 502 need not be present when parallel signals are already obtained.

IFFT 503 performs IFFT processing on an input signal, and outputs the modulation signal based on the OFDM scheme. Note that IFFT 503 may be an inverse Fourier transformer performing inverse Fourier transform.

The transmission apparatus in a case of using the OFDM scheme may include another processor (e.g., error correction coder, interleaver, etc.), and the configuration is not limited to that in FIG. 5.

In the present embodiment, in a case where the communication apparatus in FIGS. 1A, 1B, and 1C is a base station, gNB, or terminal, for example, it may support multi-carrier reception such as in the OFDM scheme or may support single-carrier reception such as in a single-carrier scheme based on discrete Fourier transform (DFT), for example. The following description is about an exemplary configuration of a reception part in a single-carrier scheme.

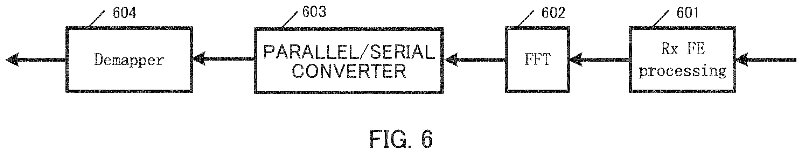

FIG. 6 illustrates an exemplary configuration of a reception apparatus in a case of using the OFDM scheme. As illustrated in FIG. 6, the reception apparatus in a case of using the OFDM scheme is composed of receiver (Rx) front end (FE) processing 601, fast Fourier transform 602, parallel/serial converter 603, and demapper 604.

Rx FE processing 601 performs processing of a reception front end.

FFT 602 performs FFT processing on the input signal.

Parallel/serial converter 603 converts parallel signals into serial signals. Note that parallel/serial converter 603 need not be present when serial signals are already obtained.

Demapper 604 performs demodulation processing based on the transmission method and modulation scheme.

Note that the reception apparatus may include another processor (e.g., deinterleaver, decoder for error correction coding, etc.), and the configuration is not limited to that in FIG. 6.

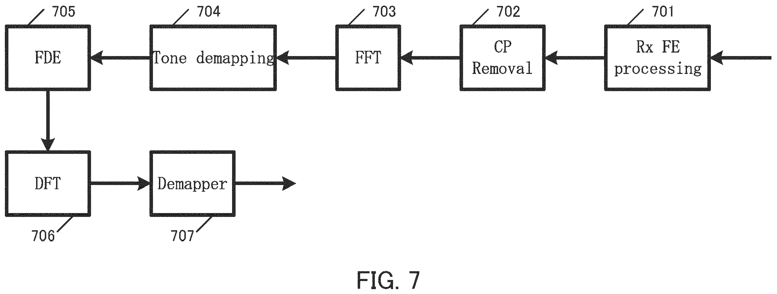

FIG. 7 illustrates an exemplary configuration of the reception apparatus in a case of using a single-carrier scheme based on DFT. As illustrated in FIG. 7, the reception apparatus is composed of receiver (Rx) FE processing 701, CP removal 702, fast Fourier transform 703, tone demapping 704, frequency domain equalization (FDE) 705, DFT 706, and demapper 707. Note that the reception apparatus may include a processor other than the above.

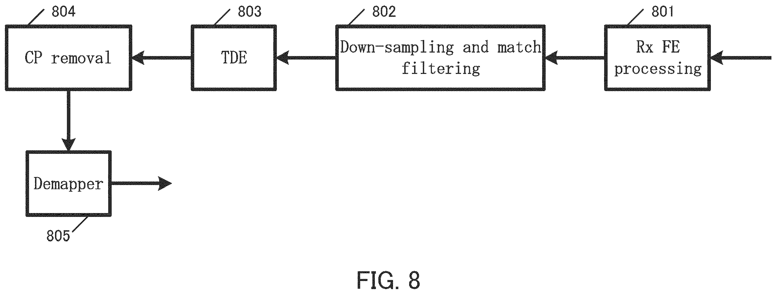

FIG. 8 illustrates an exemplary configuration of the reception apparatus in a case of using a single-carrier scheme based on time domain. As illustrated in FIG. 8, the reception apparatus is composed of receiver (Rx) FE processing 801, down-sampling and match filtering 802, time domain equalization (TDE) 803, CP removal 804, and demapper 805. Note that the reception apparatus may include a processor other than the above.

Although exemplary reception methods in single-carrier schemes and exemplary configurations of the reception apparatus have been described above, the reception method in a single-carrier scheme and the reception apparatus are not limited to these. For example, examples of the single-carrier scheme include "discrete Fourier transform (DFT)-spread orthogonal frequency division multiplexing (OFDM)" (DFT-S OFDM), "trajectory constrained DFT-spread OFDM", "constrained DFT-spread OFDM" (constrained DFT-S OFDM), "OFDM based single carrier (SC)", "single carrier (SC)-frequency division multiple access (FDMA)", "guard interval DFT-spread OFDM", a time-domain implementation single carrier scheme (e.g., single carrier (SC)-QAM), and the like.

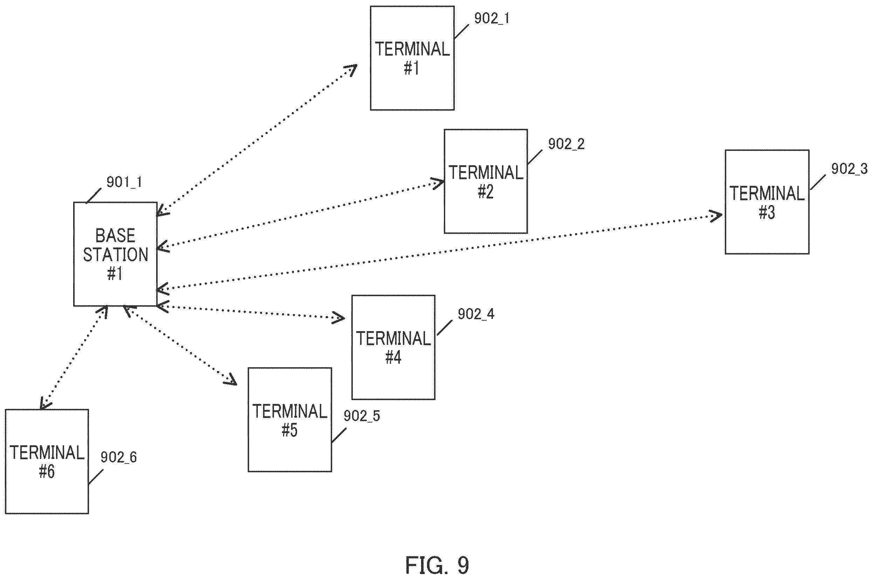

FIG. 9 illustrates an exemplary communication state in Embodiment 1. As illustrated in FIG. 9, a case to be discussed is where base station #1 labeled 901_1 communicates with terminal #1 labeled 902_1, terminal #2 labeled 902_2, terminal #3 labeled 902_3, terminal #4 labeled 902_4, terminal #5 labeled 902_5, and terminal #6 labeled 902_6. A relationship between a base station and terminals, however, is not limited to this example, and the base station may communicate with one or more terminals, for example.

Note that the following description is about an exemplary case where the base station transmits modulation signals to the terminals using the OFDMA scheme.

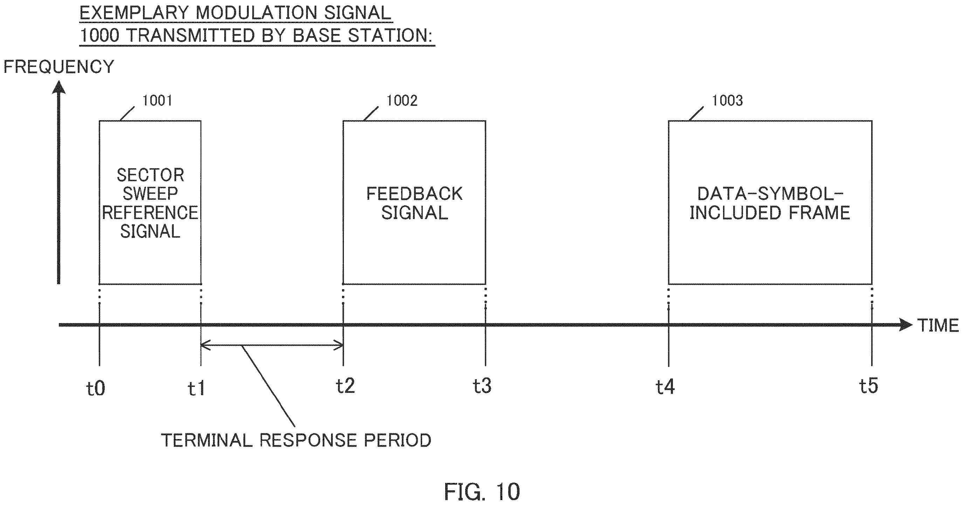

FIG. 10 illustrates an example of modulation signal 1000 transmitted by base station #1 labeled 901_1 in FIG. 9. In FIG. 10, the horizontal axis represents time and the vertical axis represents frequency. In the time period from time t0 to t1, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a slot/mini-slot/unit-included frame, or the like.

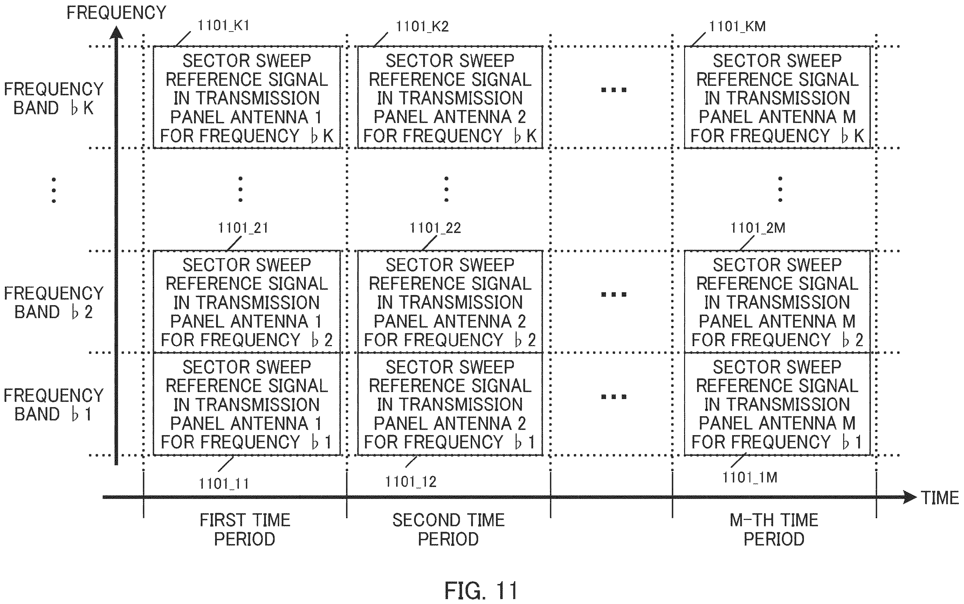

FIG. 11 illustrates examples of sector sweep reference signal 1001 in FIG. 10 transmitted by base station #1 labeled 901_1 in FIG. 9 with the configuration in FIG. 1A, 1B, or 1C, for example. Note that the horizontal axis represents time and the vertical axis represents frequency in FIG. 11. In the example of FIG. 11, the frequency is divided into frequency band ♭1, frequency band ♭2, ..., frequency band ♭K as illustrated in FIG. 11 for base station #1 labeled 901_1 to transmit modulation signals based on OFDMA. Note that K is an integer equal to or greater than 1 or an integer equal to or greater than 2. Note that, in a case of using OFDM(A), for example, a single frequency band includes one or more (sub)carriers or includes two or more (sub)carriers. This may apply to the other drawings and embodiments.

In frequency band ♭1, for example, sector sweep reference signal 1101_11 in transmission panel antenna 1 for frequency ♭1 is present in the first time period, sector sweep reference signal 1101_12 in transmission panel antenna 2 for frequency ♭1 is present in the second time period, ..., sector sweep reference signal 1101_1M in transmission panel antenna M for frequency ♭1 is present in the M-th time period.

That is, in frequency band ♭i, sector sweep reference signal 1101_i1 in transmission panel antenna 1 for frequency ♭i is present in the first time period, sector sweep reference signal 1101_i2 in transmission panel antenna 2 for frequency ♭i is present in the second time period, ..., sector sweep reference signal 1101_iM in transmission panel antenna M for frequency ♭i is present in the M-th time period. Note that i is an integer from 1 to K (both inclusive).

Note that sector sweep reference signal 1101_ij in transmission panel antenna j for frequency ♭i is transmitted from transmission panel antenna j labeled 106_j of base station #1 labeled 901_1 with the configuration in FIG. 1A, 1B, or 1C. In this case, j is an integer from 1 to M (both inclusive).

One feature is that "sector sweep reference signals are transmitted from the same transmission panel antenna in the i-th time period regardless of the frequency band in FIG. 11". At this time, the same beamforming parameter is used in a first period of time regardless of the frequency band. Note that the beamforming will be described later.

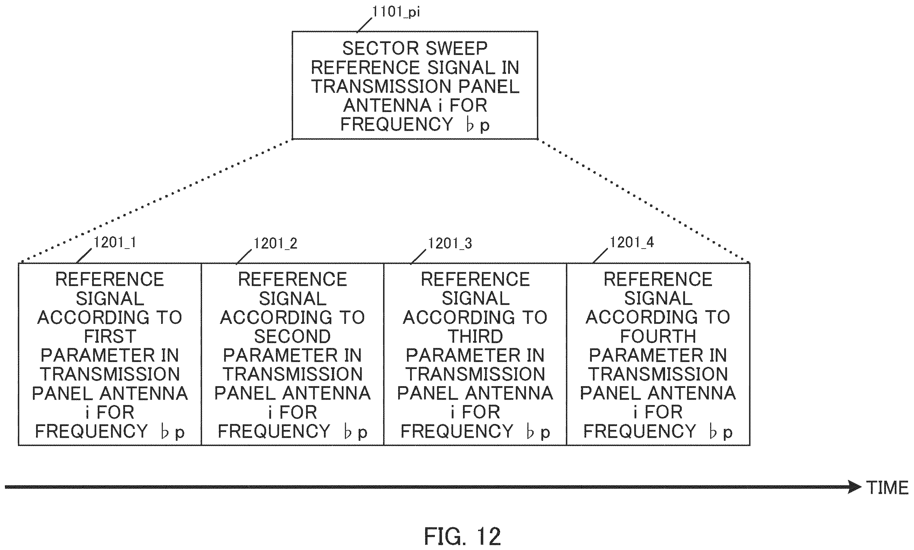

FIG. 12 illustrates an exemplary configuration of "sector sweep reference signal 1101_pi in transmission panel antenna i for frequency ♭p" in FIG. 11. Note that the horizontal axis represents time in FIG. 12. Note that p is an integer from 1 to K (both inclusive) and i is an integer from 1 to M (both inclusive).

For example, base station #1 labeled 901_1 with the configuration in FIG. 1A, 1B, or 1C includes the configuration in FIG. 3 as transmission panel antenna i labeled 106_i.

A description will be given of "reference signal 1201_1 according to first parameter in transmission panel antenna i for frequency ♭p".

When base station #1 labeled 901_1 transmits "reference signal 1201_1 according to first parameter in transmission panel antenna i for frequency ♭p" illustrated in FIG. 12, base station #1 labeled 901_1 sets the multiplication coefficient in multiplier 304_1 in transmission panel antenna i labeled 106_i as w1(i, 1). When first transmission signal 303_1 of "reference signal 1201_1 according to first parameter in transmission panel antenna i for frequency ♭p" is tx1ref1(t), multiplier 304_1 obtains tx1ref1(t) × w1(i, 1). Then, base station #1 labeled 901_1 transmits tx1ref1(t) × w1(i, 1) from antenna 306_1 in FIG. 3. Note that t represents time.

When base station #1 labeled 901_1 transmits "reference signal 1201_1 according to first parameter in transmission panel antenna i for frequency ♭p" illustrated in FIG. 12, base station #1 labeled 901_1 sets the multiplication coefficient in multiplier 304_2 in transmission panel antenna i labeled 106_i as w2(i, 1). When second transmission signal 303_2 of "reference signal 1201_1 according to first parameter in transmission panel antenna i for frequency ♭p" is tx2ref1(t), multiplier 304_2 obtains tx2ref1(t) × w2(i, 1). Then, base station #1 labeled 901_1 transmits tx2ref1(t) × w2(i, 1) from antenna 306_2 in FIG. 3.

When base station #1 labeled 901_1 transmits "reference signal 1201_1 according to first parameter in transmission panel antenna i for frequency ♭p" illustrated in FIG. 12, base station #1 labeled 901_1 sets the multiplication coefficient in multiplier 304_3 in transmission panel antenna i labeled 106_i as w3(i, 1). When third transmission signal 303_3 of "reference signal 1201_1 according to first parameter in transmission panel antenna i for frequency ♭p" is tx3ref1(t), multiplier 304_3 obtains tx3ref1(t) × w3(i, 1). Then, base station #1 labeled 901_1 transmits tx3ref1(t) × w3(i, 1) from antenna 306_3 in FIG. 3.

When base station #1 labeled 901_1 transmits "reference signal 1201_1 according to first parameter in transmission panel antenna i for frequency ♭p" illustrated in FIG. 12, base station #1 labeled 901_1 sets the multiplication coefficient in multiplier 304_4 in transmission panel antenna i labeled 106_i as w4(i, 1). When fourth transmission signal 303_4 of "reference signal 1201_1 according to first parameter in transmission panel antenna i for frequency ♭p" is tx4ref1(t), multiplier 304_4 obtains tx4ref1(t) × w4(i, 1). Then, base station #1 labeled 901_1 transmits tx4ref1(t) × w4(i, 1) from antenna 306_4 in FIG. 3.

A description will be given of "reference signal 1201_j according to j-th parameter in transmission panel antenna i for frequency ♭p".

When base station #1 labeled 901_1 transmits "reference signal 1201_j according to j-th parameter in transmission panel antenna i for frequency ♭p" illustrated in FIG. 12, base station #1 labeled 901_1 sets the multiplication coefficient in multiplier 304_1 in transmission panel antenna i labeled 106_i as w1(i, j). When first transmission signal 303_1 of "reference signal 1201_j according to j-th parameter in transmission panel antenna i for frequency ♭p" is tx1refj(t), multiplier 304_1 obtains tx1refj(t) × w1(i, j). Then, base station #1 labeled 901_1 transmits tx1refj(t) × w1(i,j) from antenna 306_1 in FIG. 3. Note that t represents time.

When base station #1 labeled 901_1 transmits "reference signal 1201_j according to j-th parameter in transmission panel antenna i for frequency ♭p" illustrated in FIG. 12, base station #1 labeled 901_1 sets the multiplication coefficient in multiplier 304_2 in transmission panel antenna i labeled 106_i as w2(i, j). When second transmission signal 303_2 of "reference signal 1201_j according to j-th parameter in transmission panel antenna i for frequency ♭p" is tx2refj(t), multiplier 304_2 obtains tx2refj(t) × w2(i, j). Then, base station #1 labeled 901_1 transmits tx2refj(t) × w2(i, j) from antenna 306_2 in FIG. 3.

When base station #1 labeled 901_1 transmits "reference signal 1201_j according to j-th parameter in transmission panel antenna i for frequency ♭p" illustrated in FIG. 12, base station #1 labeled 901_1 sets the multiplication coefficient in multiplier 304_3 in transmission panel antenna i labeled 106_i as w3(i, j). When third transmission signal 303_3 of "reference signal 1201_j according to j-th parameter in transmission panel antenna i for frequency ♭p" is tx3refj(t), multiplier 304_3 obtains tx3refj(t) × w3(i, j). Then, base station #1 labeled 901_1 transmits tx3refj(t) × w3(i, j) from antenna 306_3 in FIG. 3.

When base station #1 labeled 901_1 transmits "reference signal 1201_j according to j-th parameter in transmission panel antenna i for frequency ♭p" illustrated in FIG. 12, base station #1 labeled 901_1 sets the multiplication coefficient in multiplier 304_4 in transmission panel antenna i labeled 106_i as w4(i, j). When fourth transmission signal 303_4 of "reference signal 1201_j according to j-th parameter in transmission panel antenna i for frequency ♭p" is tx4refj(t), multiplier 304_4 obtains tx4refj(t) × w4(i, j). Then, base station #1 labeled 901_1 transmits tx4refj(t) × w4(i, j) from antenna 306_4 in FIG. 3.

Note that j is an integer from 1 to 4 (both inclusive) in the case of FIG. 12. The number Z of parameter changes is four in FIG. 12, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 11 and 12, when base station #1 labeled 901_1 transmits "sector sweep reference signal 1101_i in transmission panel antenna i for frequency ♭p", "reference signal 1201_j according to j-th parameter in transmission panel antenna i for frequency ♭p" includes, for example, the following information:

- Identification number (ID) of the transmission panel antenna, which corresponds to i here, for example;
- Identification number (ID) of the parameter used for beamforming (directivity control), which corresponds to j here, for example; and
- The number of time divisions in which sector sweep reference signals can be transmitted when the terminals transmit the sector sweep reference signals, which will be described later.

Note that "reference signal 1201_j according to j-th parameter in transmission panel antenna i for frequency ♭p" may include other information. Examples of the information will be described in the other embodiments, for example, in Embodiment 6 or later.

The following information may also be included in "reference signal 1201_j according to j-th parameter in transmission panel antenna i for frequency ♭p";

- Information on the frequency band and/or frequency ♭p (information of the number of frequency divisions may also be included), which will be described later.

Transmission of the "identification number (ID) of the transmission panel antenna for frequency ♭p" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of time divisions in which sector sweep reference signals can be transmitted when the terminals transmit the sector sweep reference signals" may be changeable according to the frame and/or time, for example. This produces the effect of enhancing data transmission efficiency of a communication system.

Further, transmission of the "information on the frequency band and/or frequency ♭p" by base station #1 labeled 901_1 allows the terminals to obtain the information and transmit "information relative to a frequency that the terminals desire the base station to use for transmission". This allows the base station to perform appropriate control and produces the effect of enhancing data reception quality.

Next, a description will be given of an operation in the time period from time t1 to t2 in FIG. 10, which is the terminal response period. Note that, in Embodiment 1, the description is based on a case where the terminals use OFDM and frequency (bands) used by the base station and frequency (bands) used by the terminals partially overlap each other.

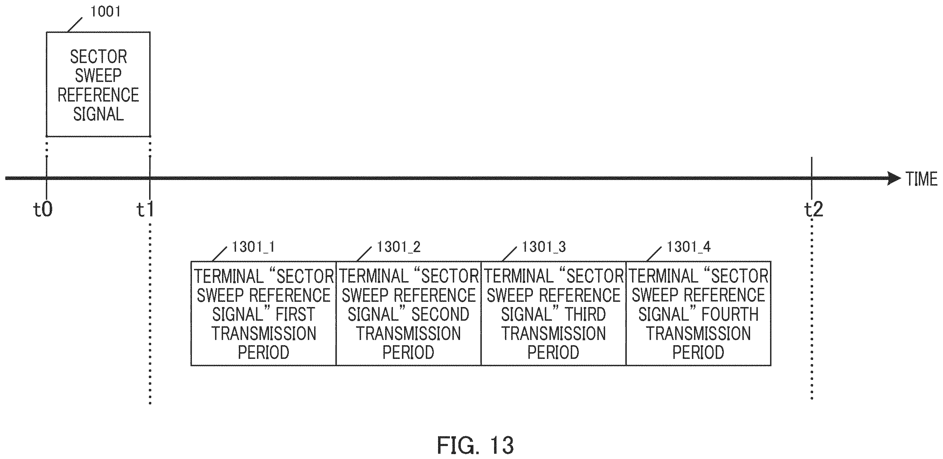

FIG. 13 illustrates an exemplary operation in the time period from time t1 to t2, which is the terminal response period. Note that the horizontal axis represents time in FIG. 13. Terminals such as terminal #1 labeled 902_1, terminal #2 labeled 902_2, terminal #3 labeled 902_3, terminal #4 labeled 902_4, terminal #5 labeled 902_5, and terminal #6 labeled 902_6 in FIG. 9 transmit sector sweep reference signals in the time period from time t1 to t2, which is the terminal response period.

As illustrated in FIGS. 10 and 13, for example, base station #1 labeled 901_1 transmits sector sweep reference signals in the time period from time t0 to t1. After that, the terminal response period, which is the time period from time t1 to t2, includes terminal "sector sweep reference signal" first transmission period (i.e., first transmission period for terminals to transmit sector sweep reference signals) 1301_1, terminal "sector sweep reference signal" second transmission period 1301_2, terminal "sector sweep reference signal" third transmission period 1301_3, and terminal "sector sweep reference signal" fourth transmission period 1301_4, as illustrated in FIG. 13.

Thus, in the case of FIG. 13, "the number of time divisions in which sector sweep reference signals can be transmitted when the terminals transmit the sector sweep reference signals" is set to four by base station #1 labeled 901_1.

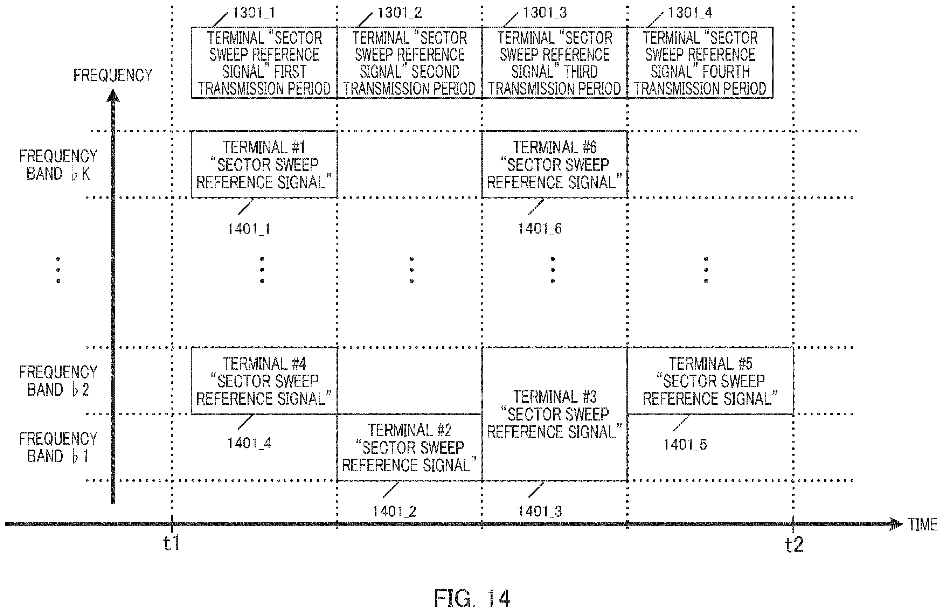

FIG. 14 illustrates exemplary occupation by the terminals in terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4 illustrated in FIG. 13. Note that the horizontal axis represents time and the vertical axis represents frequency in FIG. 14.

Terminal #1 labeled 902_1 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency ♭p" included in sector sweep reference signal 1001 may be used for this estimation.

Terminal #1 labeled 902_1 estimates, for example, "transmission panel antenna a1 and parameter b1" as the "transmission panel antenna and parameter" with high reception quality. Terminal #1 labeled 902_1 also estimates frequency band ♭K as the "frequency domain" with high reception quality.

In addition, while estimating the "transmission panel antenna and parameter" with high reception quality, terminal #1 labeled 902_1 simultaneously obtains information of "the number of time divisions in which sector sweep reference signals can be transmitted when the terminals transmit the sector sweep reference signals". In the case of FIG. 14, terminal #1 labeled 902_1 obtains information indicating that "the number of time divisions in which sector sweep reference signals can be transmitted when the terminals transmit the sector sweep reference signals" is four.

In this case, terminal #1 labeled 902_1 obtains, for example, any one of the values "0", "1", "2", and "3" using a random number. For example, terminal #1 labeled 902_1 obtains "0" using a random number. In this case, since "0" + 1 = 1, terminal #1 labeled 902_1 transmits terminal #1 "sector sweep reference signal" 1401_1 using "terminal "sector sweep reference signal" first (= "0" + 1) transmission period 1301_1" in FIG. 14. Here, the transmission period for the sector sweep reference signal is configured using a random number, but the transmission period for the sector sweep reference signal may be configured using, instead of a random number, a random number of an integer or a natural number, an irregular integer or natural number, a regular integer or natural number, an integer or a natural number held uniquely by the terminal, for example. Hence, the configuration of the transmission period for the sector sweep reference signal is not limited to the above example, and the transmission period for the sector sweep reference signal is configured for each terminal, for example. This is also applicable to the following similar descriptions.

Note that terminal #1 "sector sweep reference signal" 1401_1 includes information of the "transmission panel antenna and parameter" with high reception quality obtained by terminal #1 labeled 902_1, that is, information of "transmission panel antenna a1 and parameter b1". Terminal #1 "sector sweep reference signal" 1401_1 may also include information of the "frequency domain", for example, information of "frequency band ♭K". This will be described later.

Likewise, terminal #2 labeled 902_2 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency ♭p" included in sector sweep reference signal 1001 may be used for this estimation.

Terminal #2 labeled 902_2 estimates, for example, "transmission panel antenna a2 and parameter b2" as the "transmission panel antenna and parameter" with high reception quality. Terminal #2 labeled 902_2 also estimates frequency band ♭1 as the "frequency domain" with high reception quality.

In addition, while estimating the "transmission panel antenna and parameter" with high reception quality, terminal #2 labeled 902_2 simultaneously obtains information of "the number of time divisions in which sector sweep reference signals can be transmitted when the terminals transmit the sector sweep reference signals". In the case of FIG. 14, terminal #2 labeled 902_2 obtains information indicating that "the number of time divisions in which sector sweep reference signals can be transmitted when the terminals transmit the sector sweep reference signals" is four.

In this case, terminal #2 labeled 902_2 obtains, for example, any one of the values "0", "1", "2", and "3" using a random number. For example, terminal #2 labeled 902_2 obtains "1" using a random number. In this case, since "1" + 1 = 2, terminal #2 labeled 902_2 transmits terminal #2 "sector sweep reference signal" 1401_2 using "terminal "sector sweep reference signal" second (= "1" + 1) transmission period 1301_2" in FIG. 14.

Note that terminal #2 "sector sweep reference signal 1401_2" includes information of the "transmission panel antenna and parameter" with high reception quality obtained by terminal #2 labeled 902_2, that is, information of "transmission panel antenna a2 and parameter b2". Terminal #2 "sector sweep reference signal" 1401_2 may also include information of the "frequency domain", for example, information of "frequency band ♭1". This will be described later.

Thus, terminal #i labeled 902_i receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example. In addition, the "information on the frequency band and/or frequency ♭p" included in sector sweep reference signal 1001 may be used for this estimation.

Terminal #i labeled 902_i estimates, for example, "transmission panel antenna ai and parameter bi" as the "transmission panel antenna and parameter" with high reception quality. Terminal #i labeled 902_i also estimates frequency band bzi as the "frequency domain" with high reception quality.

In addition, while estimating the "transmission panel antenna and parameter" with high reception quality, terminal #i labeled 902_i simultaneously obtains information of "the number of time divisions in which sector sweep reference signals can be transmitted when the terminals transmit the sector sweep reference signals". In the case of FIG. 14, terminal #i labeled 902_i obtains information indicating that "the number of time divisions in which sector sweep reference signals can be transmitted when the terminals transmit the sector sweep reference signals" is four.

In this case, terminal #i labeled 902_i obtains, for example, any one of the values "0", "1", "2", and "3" using a random number. For example, terminal #i labeled 902_i obtains "yi" using a random number. Note that yi is any one of the values "0", "1", "2", and "3". In this case, terminal #i labeled 902_i transmits terminal #i "sector sweep reference signal" 1401_i using terminal "sector sweep reference signal" ("yi" + 1)-th transmission period 1301_("yi" + 1) in FIG. 14.

Note that terminal #i "sector sweep reference signal" 1401_i includes information of the "transmission panel antenna and parameter" with high reception quality obtained by terminal #i labeled 902_i, that is, information of "transmission panel antenna ai and parameter bi". Terminal #i "sector sweep reference signal" 1401_i may also include information of the "frequency domain", for example, information of "frequency band ♭p". This will be described later.

Note that terminal #i "sector sweep reference signal" 1401_i may be assigned to a plurality of frequency bands as illustrated in FIG. 14. For example, terminal #3 "sector sweep reference signal" 1401_3 is assigned to frequency band ♭1 and frequency band ♭2. As another example, terminal #i "sector sweep reference signal" 1401_i may be assigned to frequency bands discretely. For example, terminal #i "sector sweep reference signal" 1401_i may be assigned to frequency band ♭1 and frequency band ♭K. (As a result, terminal #i "sector sweep reference signal" 1401_i is assigned to one or more frequency bands.)

In the manner described above, a collision of the sector sweep reference signals transmitted by the respective terminals can be reduced. This produces the effect that the base station can receive more sector sweep reference signals and can communicate with more terminals.

A description will be given of a configuration of terminal #i "sector sweep reference signal" 1401_i transmitted by terminal #i labeled 902_i described with reference to FIG. 14. To simplify the description, terminal #i labeled 902_i has the configuration in FIG. 1A, 1B, or 1C, and terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

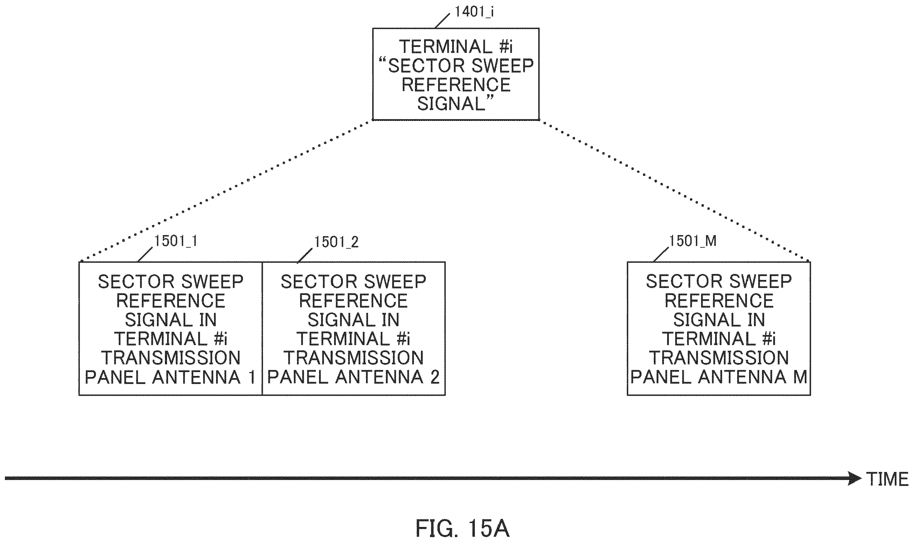

Terminal #i labeled 902_i transmits terminal #i "sector sweep reference signal" 1401_i as illustrated in FIG. 14. FIG. 15A illustrates an exemplary configuration of terminal #i "sector sweep reference signal" 1401_i. Note that the horizontal axis represents time in FIG. 15A.

As illustrated in FIG. 15A, terminal #i "sector sweep reference signal" 1401_i of terminal #i labeled 902_i is composed of "sector sweep reference signal 1501_1 in terminal #i transmission panel antenna 1, sector sweep reference signal 1501_2 in terminal #i transmission panel antenna 2, ..., sector sweep reference signal 1501_M in terminal #i transmission panel antenna M".

For example, terminal #i labeled 902_i with the configuration in FIG. 1A, 1B, or 1C transmits "sector sweep reference signal 1501_1 in terminal #i transmission panel antenna 1" using transmission panel antenna 1 labeled 106_1.

That is, terminal #i labeled 902_i with the configuration in FIG. 1A, 1B, or 1C transmits "sector sweep reference signal 1501_k in terminal #i transmission panel antenna k" using transmission panel antenna k labeled 106_k. Note that k is an integer from 1 to M (both inclusive).

Note that the number of transmission panel antennas included in terminal #i labeled 902_i is M in FIG. 15A, but the number of transmission panel antennas is not limited to this and may be N, where N is an integer equal to or greater than 1.

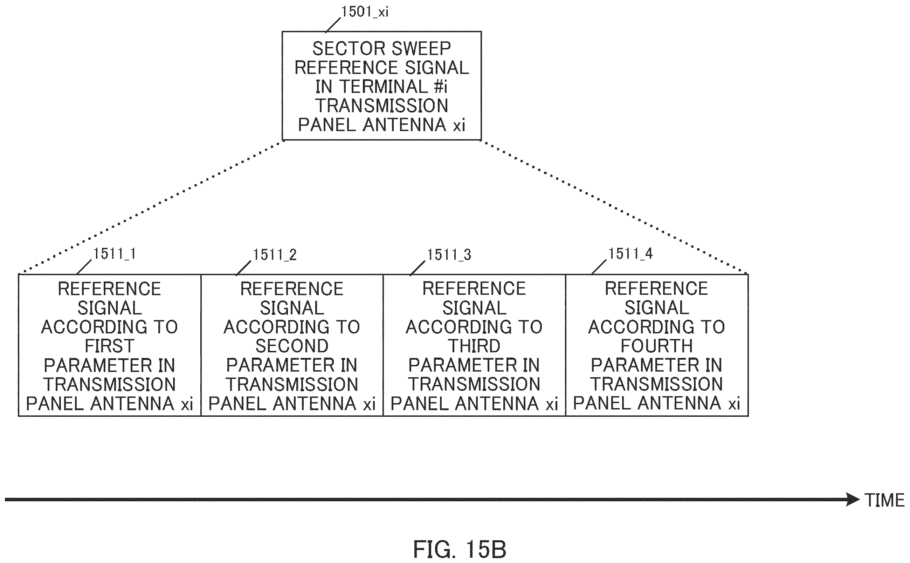

FIG. 15B illustrates an exemplary configuration of "sector sweep reference signal 1501_xi in terminal #i transmission panel antenna xi" in FIG. 15A. Note that the horizontal axis represents time in FIG. 15.

As illustrated in FIG. 15B, "sector sweep reference signal 1501_xi in terminal #i transmission panel antenna xi" is composed of, for example, "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi".

For example, terminal #i labeled 902_i with the configuration in FIG. 1A, 1B, or 1C includes the configuration in FIG. 3 as transmission panel antenna xi labeled 106_xi.

A description will be given of "reference signal 1511_1 according to first parameter in transmission panel antenna xi".

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_1 in transmission panel antenna xi labeled 106_xi as w1(xi, 1). When first transmission signal 303_1 of "reference signal 1511_1 according to first parameter in transmission panel antenna xi" is tx1ref1(t), multiplier 304_1 obtains tx1ref1(t) $\times$ w1(xi, 1). Then, terminal #i labeled 902_i transmits tx1ref1(t) $\times$ w1(xi, 1) from antenna 306_1 in FIG. 3. Note that t represents time.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_2 in transmission panel antenna xi labeled 106_xi as w2(xi, 1). When second transmission signal 303_2 of "reference signal 1511_1 according to first parameter in transmission panel antenna xi" is tx2ref1(t), multiplier 304_2 obtains tx2ref1(t) $\times$ w2(xi, 1). Then, terminal #i labeled 902_i transmits tx2ref1(t) $\times$ w2(xi, 1) from antenna 306_2 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_3 in transmission panel antenna xi labeled 106_xi as w3(xi, 1). When third transmission signal 303_3 of "reference signal 1511_1 according to first parameter in transmission panel antenna xi" is tx3ref1(t), multiplier 304_3 obtains tx3ref1(t) $\times$ w3(xi, 1). Then, terminal #i labeled 902_i transmits tx3ref1(t) $\times$ w3(xi, 1) from antenna 306_3 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_4 in transmission panel antenna xi labeled 106_xi as w4(xi, 1). When fourth transmission signal 303_4 of "reference signal 1511_1 according to first parameter in transmission panel antenna xi" is tx4ref1(t), multiplier 304_4 obtains tx4ref1(t) $\times$ w4(xi, 1). Then, terminal #i labeled 902_i transmits tx4ref1(t) $\times$ w4(xi, 1) from antenna 306_4 in FIG. 3.

A description will be given of "reference signal 1511_j according to j-th parameter in transmission panel antenna xi".

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_1 in transmission panel antenna xi labeled 106_xi as w1(xi, j). When first transmission signal 303_1 of "reference signal 1511_j according to j-th parameter in transmission panel antenna xi" is tx1refj(t), multiplier 304_1 obtains tx1refj(t) $\times$ w1(xi, j). Then, terminal #i labeled 902_i transmits tx1refj(t) $\times$ w1(xi, j) from antenna 306_1 in FIG. 3. Note that t represents time.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_2 in transmission panel antenna xi labeled 106_xi as w2(xi, j). When second transmission signal 303_2 of "reference signal 1511_j according to j-th parameter in transmission panel antenna xi" is tx2refj(t), multiplier 304_2 obtains tx2refj(t) $\times$ w2(xi, j). Then, terminal #i labeled 902_i transmits tx2refj(t) $\times$ w2(xi, j) from antenna 306_2 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_3 in transmission panel antenna xi labeled 106_xi as w3(xi, j). When third transmission signal 303_3 of "reference signal 1511_j according to j-th parameter in transmission panel antenna xi" is tx3refj(t), multiplier 304_3 obtains tx3refj(t) × w3(xi, j). Then, terminal #i labeled 902_i transmits tx3refj(t) × w3(xi, j) from antenna 306_3 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_4 in transmission panel antenna xi labeled 106_xi as w4(xi, j). When fourth transmission signal 303_4 of "reference signal 1511_j according to j-th parameter in transmission panel antenna xi" is tx4refj(t), multiplier 304_4 obtains tx4refj(t) × w4(xi, j). Then, terminal #i labeled 902_i transmits tx4refj(t) × w4(xi, j) from antenna 306_4 in FIG. 3.

Note that j is an integer from 1 to 4 (both inclusive) in the case of FIG. 15B. The number Z of parameter changes is four in FIG. 15B, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 14, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A.

Note that "reference signal 1511J according to j-th parameter in transmission panel antenna xi" may include other information.

In addition, terminal #i labeled 902_i transmits the "information of the "transmission panel antenna and parameter" of base station #1 labeled 901_1 with high reception quality" in "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi" in FIG. 15B in ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A".

In this case, base station #1 labeled 901_1 is more likely to receive, even with an omnidirectional antenna for example, any of ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 14, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 14, 15A, and 15B, when terminal #i labeled 902_i transmits "sector sweep reference signal 1501_xi in terminal #i transmission panel antenna xi", "reference signal 1511J according to j-th parameter in transmission panel antenna xi" includes, for example, the following information:

· Identification number (ID) of the transmission panel antenna, which corresponds to xi here, for example; and

· Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Note that "reference signal 1511J according to j-th parameter in transmission panel antenna xi" may include other information. Examples of the information will be described in the other embodiments, for example, in Embodiment 6 or later.

Further, as illustrated in FIGS. 14, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· "Information on the frequency band and/or frequency ♭p" that has been used for transmission by terminal #i labeled 902_i or that terminal #i labeled 902_i desires base station #1 labeled 901_1 to use.

Transmission of the "information on the frequency band and/or frequency ♭p" by terminal #i labeled 902_i allows base station #1 labeled 901_1 to recognize the "information on the frequency band and/or frequency ♭p"; accordingly, terminal #i labeled 902_i and base station #1 labeled 901_1 can perform appropriate control. This produces the effect of enhancing data reception quality.

In a case where base station #1 labeled 901_1 and terminal #i labeled 902_i perform communication using the same frequency band, however, they can recognize the "information on the frequency band and/or frequency ♭p" by detecting modulation signals transmitted from each other without the transmission of the "information on the frequency band and/or frequency bp".

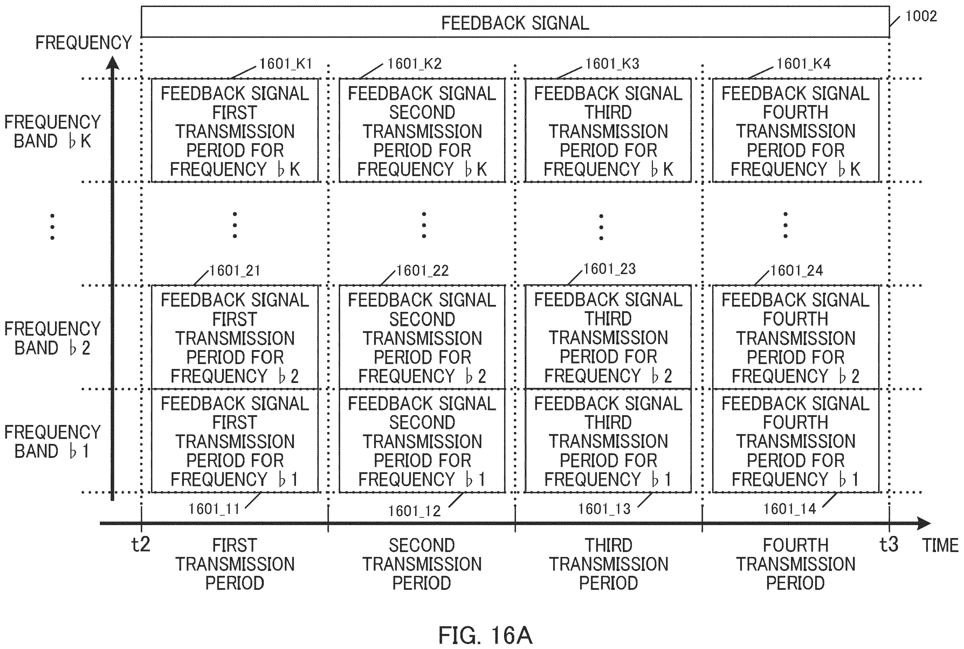

FIG. 16A illustrates an exemplary configuration of feedback signal 1002 that is present in the time period from t2 to t3 in FIG. 10 and transmitted by base station #1 labeled 901_1. Note that the horizontal axis represents time and the vertical axis represents frequency in FIG. 16A. In this example, since "the number of time divisions in which sector sweep reference signals can be transmitted when the terminals transmit the sector sweep reference signals" is four, there are a first transmission period, a second transmission period, a third transmission period, and a fourth transmission period for feedback signal 1002 as illustrated in FIG. 16A. Note that, in a case where "the number of time divisions in which sector sweep reference signals can be transmitted when the terminals transmit the sector sweep reference signals" is S2, for example, S2 transmission periods may be configured to be present for feedback signal 1002, where $\Omega$ is an integer equal to or greater than 1 or an integer equal to or greater than 2.

In addition, there are frequency band ♭1, frequency band ♭2, ..., frequency band ♭K for feedback signal 1002 in FIG. 16A.

Thus, the first transmission period includes feedback signal first transmission period 1601_11 for frequency ♭1, feedback signal first transmission period 1601_21 for frequency ♭2, ..., feedback signal first transmission period 1601_K1 for frequency ♭K. Likewise, the second transmission period includes feedback signal second transmission period 1601_12 for frequency ♭1, feedback signal second transmission period 1601_22 for frequency ♭2, ..., feedback signal second transmission period 1601_K2 for frequency ♭K. The third transmission period includes feedback signal third transmission period 1601_13 for frequency ♭1, feedback signal third transmission period 1601_23 for frequency ♭2, ..., feedback signal third transmission period 1601_K3 for frequency ♭K. The fourth transmission period includes feedback signal fourth transmission period 1601_14 for frequency ♭1, feedback signal fourth transmission period 1601_24 for frequency ♭2, ..., feedback signal fourth transmission period 1601_K4 for frequency ♭K.

One feature is that "feedback signals are transmitted from the same transmission panel antenna in the i-th time period regardless of the frequency band in FIG. 16A".

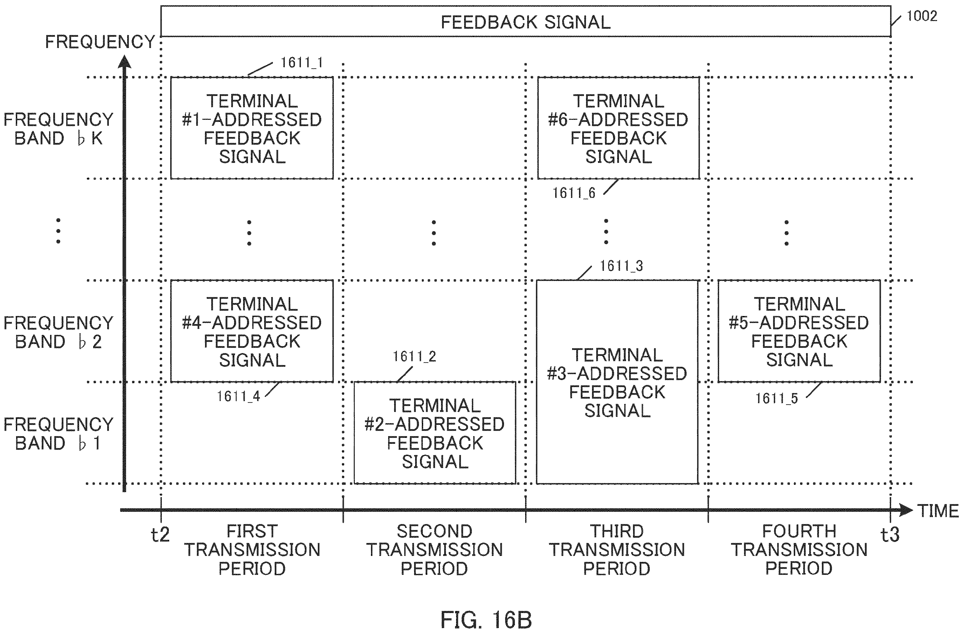

FIG. 16B illustrates exemplary specific feedback signal assignment for feedback signal 1002 illustrated in FIG. 16A.

As in FIG. 14, for example, terminal #1 labeled 902_1 transmits terminal #1 "sector sweep reference signal" 1401_1, terminal #2 labeled 902_2 transmits terminal #2 "sector sweep reference signal" 1401_2, terminal #3 labeled 902_3 transmits terminal #3 "sector sweep reference signal" 1401_3, terminal #4 labeled 902_4 transmits terminal #4 "sector sweep reference signal" 1401_4, terminal #5 labeled 902_5 transmits terminal #5 "sector sweep reference signal" 1401_5, and terminal #6 labeled 902_6 transmits terminal #6 "sector sweep reference signal" 1401_6.

Since terminal #1 "sector sweep reference signal" 1401_1 is present in frequency band ♭K as in FIG. 14, terminal #1-addressed feedback signal (i.e., feedback signal addressed to terminal #1) 1611_1 is present in frequency band ♭K in FIG. 16B.

Since terminal #2 "sector sweep reference signal" 1401_2 is present in frequency band ♭1 as in FIG. 14, terminal #2-addressed feedback signal 1611_2 is present in frequency band ♭1 in FIG. 16B.

Since terminal #3 "sector sweep reference signal" 1401_3 is present in frequency bands ♭1 and ♭2 as in FIG. 14, terminal #3-addressed feedback signal 1611_3 is present in frequency bands ♭1 and ♭2 in FIG. 16B.

Since terminal #4 "sector sweep reference signal" 1401_4 is present in frequency band ♭2 as in FIG. 14, terminal #4-addressed feedback signal 1611_4 is present in frequency band ♭2 in FIG. 16B.

Since terminal #5 "sector sweep reference signal" 1401_5 is present in frequency band ♭2 as in FIG. 14, terminal #5-addressed feedback signal 1611_5 is present in frequency band ♭2 in FIG. 16B.

Since terminal #6 "sector sweep reference signal" 1401_6 is present in frequency band ♭K as in FIG. 14, terminal #6-addressed feedback signal 1611_6 is present in frequency band ♭K in FIG. 16B.

In this manner, obtaining terminal #i-addressed feedback signal 1611_i allows terminal #i labeled 902_i to know that communication with base station #1 labeled 901_1 is available and to know the frequency band to be used. Note that FIG. 16B is merely an example. In a case where there is no terminal #1-addressed feedback signal 1611_1 as feedback signal 1002, for example, terminal #1 labeled 902_1 recognizes that the communication with base station #1 labeled 901_1 has not been established.

At this time, terminal #i-addressed feedback signal 1611_i includes, for example, information indicating that communication with terminal #i labeled 902_i is available (or indicating that data-symbol-included frame 1003 in FIG. 10 includes a symbol addressed to terminal #i labeled 902_i).

Further, base station #1 labeled 901_1 selects a frequency (band) and a transmission panel antenna and sets a parameter of beamforming based on the ""frequency (band) information" and information of the "transmission panel antenna and parameter" of base station #1 labeled 901_1 with high reception quality" transmitted by terminal #i labeled 902_i, and base station #1 labeled 901_1 then transmits terminal #i-addressed feedback signal 1611_i.

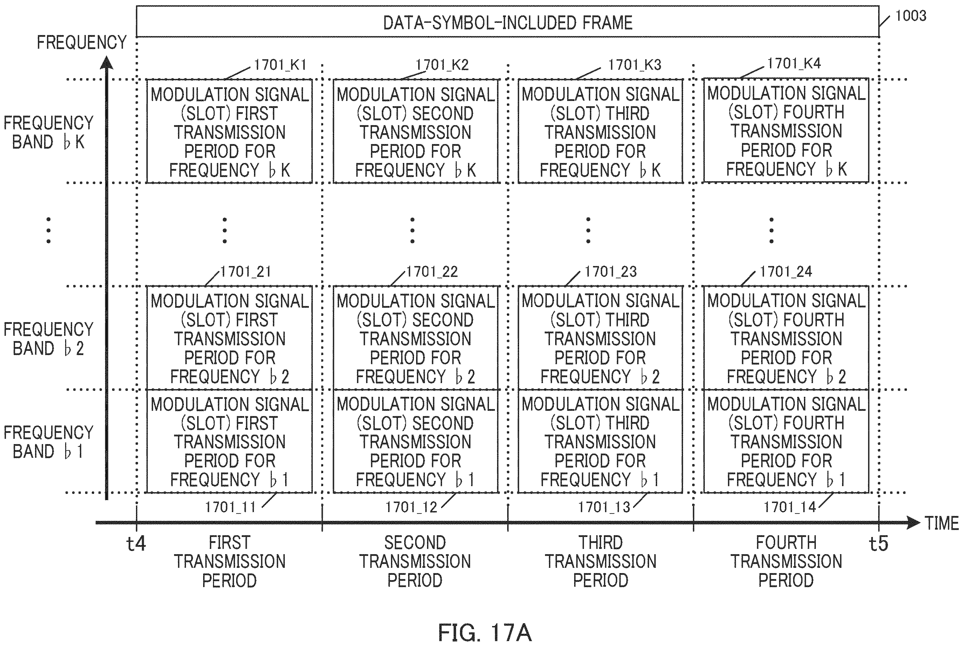

FIG. 17A illustrates an exemplary configuration of data-symbol-included frame 1003 that is present in the time period from t4 to t5 in FIG. 10 and transmitted by base station #1 labeled 901_1. Note that the horizontal axis represents time and the vertical axis represents frequency in FIG. 17A. In this example, since "the number of time divisions in which sector sweep reference signals can be transmitted when the terminals transmit the sector sweep reference signals" is four, there are a first transmission period, a second transmission period, a third transmission period, and a fourth transmission period for data-symbol-included frame 1003 as illustrated in FIG. 17A. Note that, in a case where "the number of time divisions in which sector sweep reference signals can be transmitted when the terminals transmit the sector sweep reference signals" is S2, for example, S2 transmission periods may be configured to be present for data-symbol-included frame 1003, where Ω is an integer equal to or greater than 1 or an integer equal to or greater than 2.

In addition, there are frequency band ♭1, frequency band ♭2, ..., frequency band ♭K for data-symbol-included frame 1003 in FIG. 17A.

Thus, the first transmission period includes modulation signal (slot) first transmission period 1701_11 for frequency ♭1, modulation signal (slot) first transmission period 1701_21 for frequency ♭2, ..., modulation signal (slot) first transmission period 1701_K1 for frequency ♭K. Likewise, the second transmission period includes modulation signal (slot) second transmission period 1701_12 for frequency ♭1, modulation signal (slot) second transmission period 1701_22 for frequency ♭2, ..., modulation signal (slot) second transmission period 1701_K2 for frequency ♭K. The third transmission period includes modulation signal (slot) third transmission period 1701_13 for frequency ♭1, modulation signal (slot) third transmission period 1701_23 for frequency ♭2, ..., modulation signal (slot) third transmission period 1701_K3 for frequency ♭K. The fourth transmission period includes modulation signal (slot) fourth transmission period 1701_14 for frequency ♭1, modulation signal (slot) fourth transmission period 1701_24 for frequency ♭2, ..., modulation signal (slot) fourth transmission period 1701_K4 for frequency ♭K.

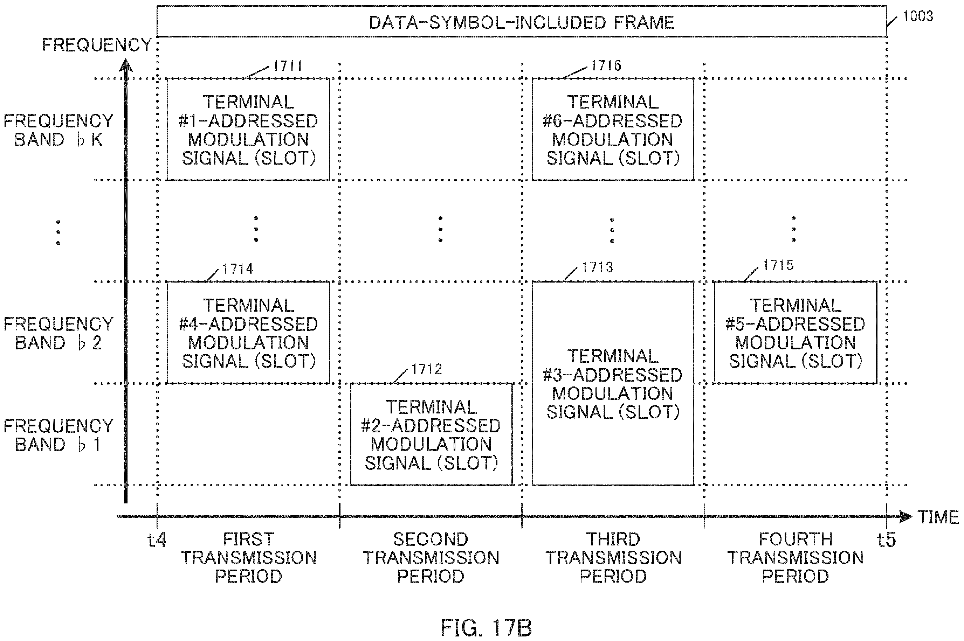

FIG. 17B illustrates exemplary specific modulation signal (slot) assignment for data-symbol-included frame 1003 illustrated in FIG. 17A.

As in FIG. 14, for example, terminal #1 labeled 902_1 transmits terminal #1 "sector sweep reference signal" 1401_1, terminal #2 labeled 902_2 transmits terminal #2 "sector sweep reference signal" 1401_2, terminal #3 labeled 902_3 transmits terminal #3 "sector sweep reference signal" 1401_3, terminal #4 labeled 902_4 transmits terminal #4 "sector sweep reference signal" 1401_4, terminal #5 labeled 902_5 transmits terminal #5 "sector sweep reference signal" 1401_5, and terminal #6 labeled 902_6 transmits terminal #6 "sector sweep reference signal" 1401_6.

Since terminal #1 "sector sweep reference signal" 1401_1 is present in frequency band ♭K as in FIG. 14, terminal #1-addressed modulation signal (slot) (i.e., modulation signal (slot) addressed to terminal #1) 1711 is present in frequency band ♭K in FIG. 17B.

Since terminal #2 "sector sweep reference signal" 1401_2 is present in frequency band ♭1 as in FIG.

14, terminal #2-addressed modulation signal (slot) 1712 is present in frequency band ♭1 in FIG. 17B.

Since terminal #3 "sector sweep reference signal" 1401_3 is present in frequency bands ♭1 and ♭2 as in FIG. 14, terminal #3-addressed modulation signal (slot) 1713 is present in frequency bands ♭1 and ♭2 in FIG. 17B.

Since terminal #4 "sector sweep reference signal" 1401_4 is present in frequency band ♭2 as in FIG. 14, terminal #4-addressed modulation signal (slot) 1714 is present in frequency band ♭2 in FIG. 17B.

Since terminal #5 "sector sweep reference signal" 1401_5 is present in frequency band ♭2 as in FIG. 14, terminal #5-addressed modulation signal (slot) 1715 is present in frequency band ♭2 in FIG. 17B.

Since terminal #6 "sector sweep reference signal" 1401_6 is present in frequency band ♭K as in FIG. 14, terminal #6-addressed modulation signal (slot) 1716 is present in frequency band ♭K in FIG. 17B.

At this time, terminal #i-addressed modulation signal (slot) 171i includes, for example, a data symbol (data and/or information) addressed to terminal #i labeled 902_i.

In this manner, terminal #i-addressed modulation signal (slot) 171i allows terminal #i labeled 902_i to know that communication with base station #1 labeled 901_1 is available and to know the frequency band to be used. Note that FIG. 17B is merely an example. In a case where there is no terminal #1-addressed modulation signal (slot) 1711 as data-symbol-included frame 1003, for example, terminal #1 labeled 902_1 recognizes that the communication with base station #1 labeled 901_1 has not been established.

Further, base station #1 labeled 901_1 selects a frequency (band) and a transmission panel antenna and sets a parameter of beamforming based on the ""frequency (band) information" and information of the "transmission panel antenna and parameter" of base station #1 labeled 901_1 with high reception quality" transmitted by terminal #i labeled 902_i, and base station #1 labeled 901_1 then transmits terminal #i-addressed modulation signal (slot) 171i.

Note that, in FIGS. 16A and 16B, base station #1 labeled 901_1 may estimate the "frequency (band)" and the "transmission panel antenna and parameter" of terminal #i labeled 902_1 with high reception quality in receiving "terminal #i "sector sweep reference signal" 1401_i transmitted by terminal #i labeled 902_i", and the estimated information may be included in terminal #i-addressed feedback signal 1611_i.

Terminal #i labeled 902_i selects a frequency (band) and a transmission panel antenna and determines a beamforming method based on the information of "frequency (band)" and "transmission panel antenna and parameter" of terminal #i labeled 902_i with high reception quality obtained from base station #1 labeled 901_1, and terminal #i labeled 902_i then transmits a symbol, a frame, and/or a modulation signal to base station #1 labeled 901_1. This produces the effect of enhancing data reception quality in base station #1 labeled 901_1.

Incidentally, in the time period from t3 to t4 in FIG. 10, terminal #i labeled 902_i may transmit, to base station #1 labeled 901_1, a modulation signal including information indicating successful reception of a signal from base station #1 labeled 901_1, such as acknowledgement (ACK).

Note that, terminal #i-addressed modulation signal (slot) 171i in FIG. 17B may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

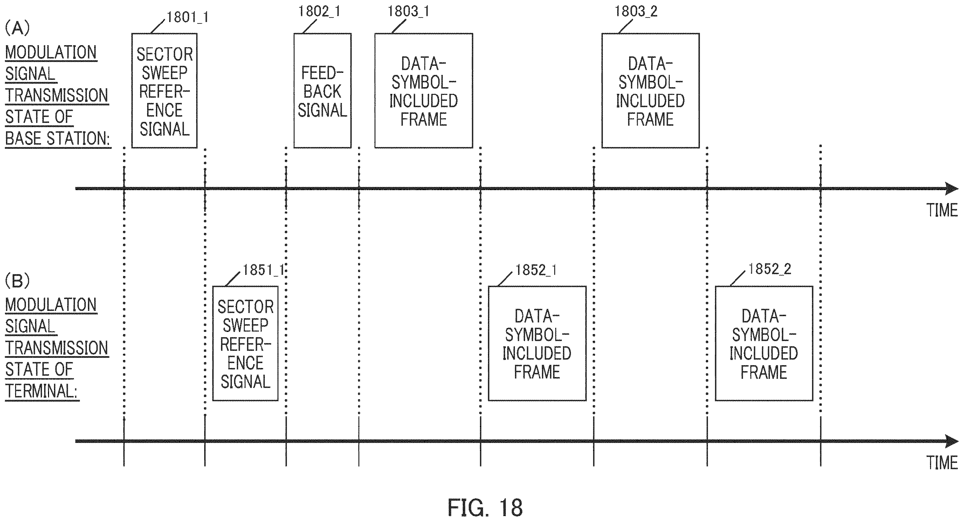

FIG. 18 illustrates an exemplary state where base station #1 labeled 901_1 and "terminal #1 labeled 902_1, terminal #2 labeled 902_2, terminal #3 labeled 902_3, terminal #4 labeled 902_4, terminal #5 labeled 902_5, and terminal #6 labeled 902_6" communicate with each other as illustrated in FIG. 9. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, terminal #3 labeled 902_3, terminal #4 labeled 902_4, terminal #5 labeled 902_5, and terminal #6 labeled 902_6". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_1. Note that this has already been described with reference to, for example, FIGS. 13, 14, 15A, 15B, etc., and the description thereof will be thus omitted.

Base station #1 labeled 901_1 transmits feedback signal 1802_1. Note that this has already been described with reference to FIGS. 16A and 16B, and the description thereof will be thus omitted.

After that, base station #1 labeled 901_1 transmits "data-symbol-included frame 1803_1". Note that this has already been described with reference to FIGS. 17A and 17B, and the description thereof will be thus omitted. (Hence, "data-symbol-included frame 1803_1" is considered to be a frame for downlink, for example).

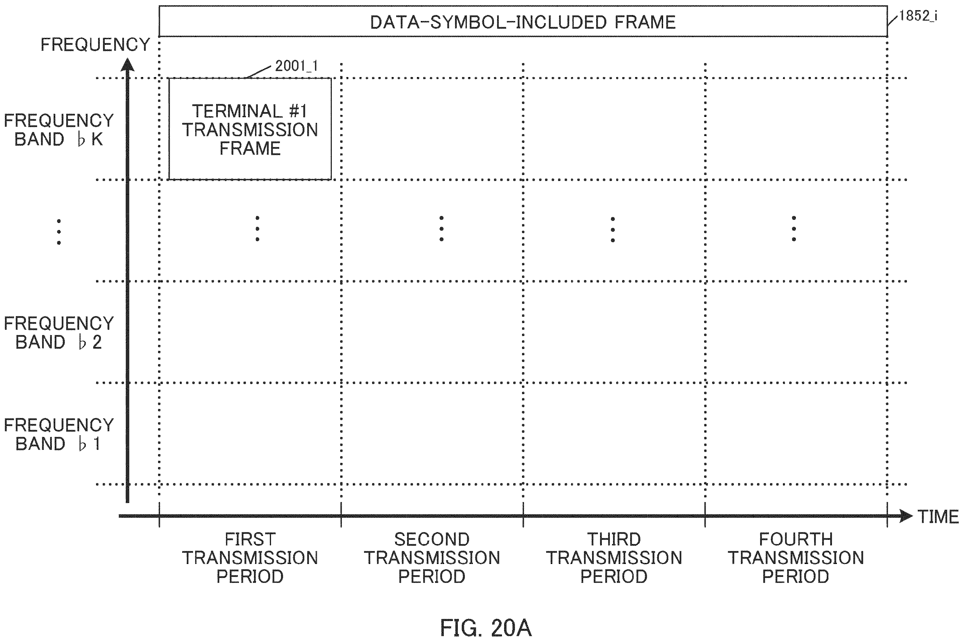

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_1". Note that a configuration of the frame will be described later with reference to FIGS. 20A to 20F. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIGS. 17A and 17B.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_2". Note that a configuration of the frame will be described later with reference to FIGS. 20A to 20F.

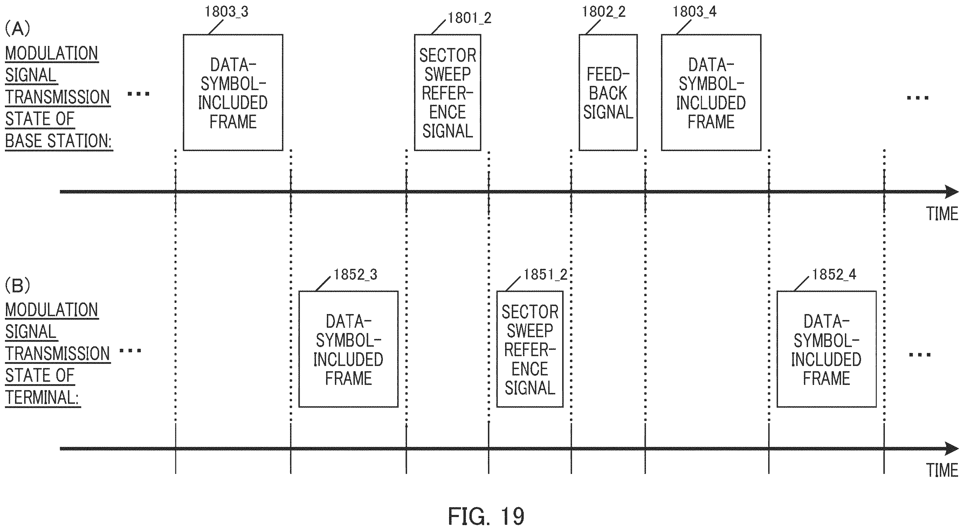

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6", and it is a temporal continuation from the modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_3" is as described with reference to FIGS. 17A and 17B.

The terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_3". Note that a configuration of the frame will be described later with reference to FIGS. 20A to 20F.

Next, base station #1 labeled 901_1 transmits sector sweep reference signal 1801_2. Note that this has already been described with reference to FIG. 10, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_2. Note that this has already been described with reference to, for example, FIGS. 13, 14, 15A, 15B, etc., and the description thereof will be thus omitted.

Base station #1 labeled 901_1 transmits feedback signal 1802_2. Note that this has already been described with reference to FIGS. 16A and 16B, and the description thereof will be thus omitted.

After that, base station #1 labeled 901_1 transmits "data-symbol-included frame 1803_4". Note that this has already been described with reference to FIGS. 17A and 17B, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_4". Note that a configuration of the frame will be described later with reference to FIGS. 20A to 20F.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"" Base station #1 labeled 901_1 and the terminal then each configure a frequency (band), select a transmission panel antenna to be used, and configure transmit beamforming. This produces the effect that the base station and/or the terminal achieve high data reception quality.

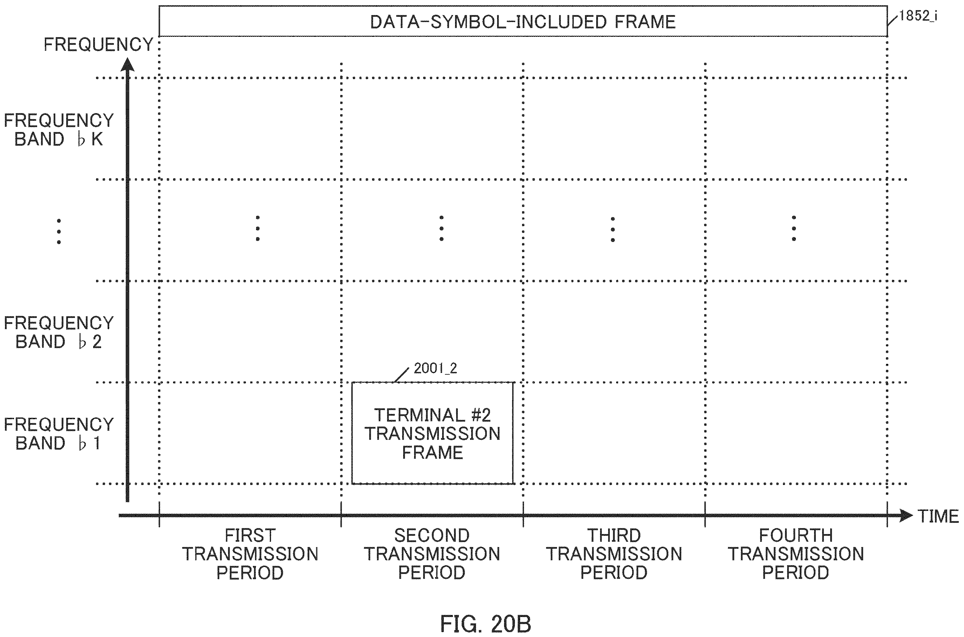

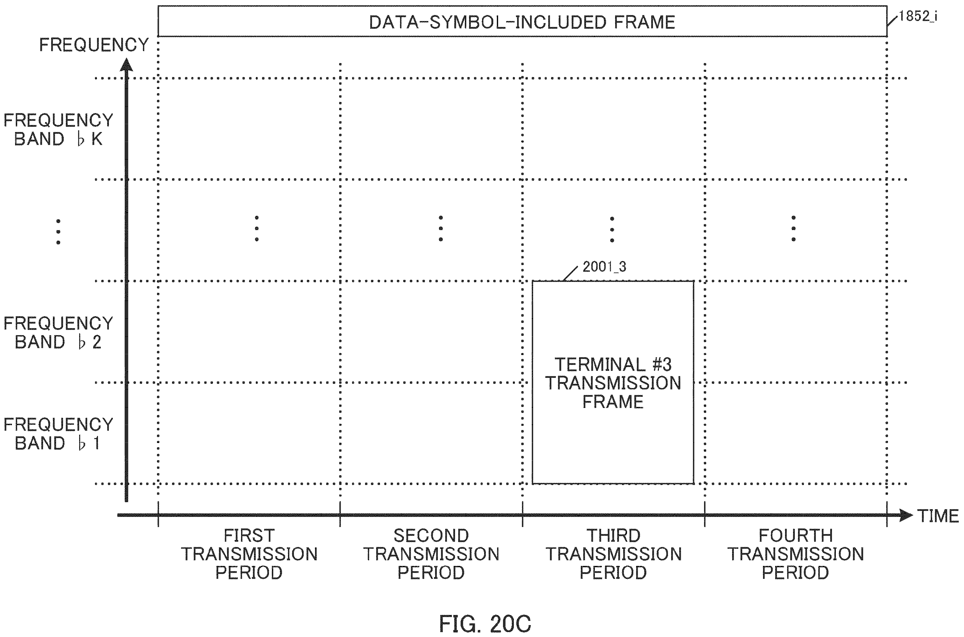

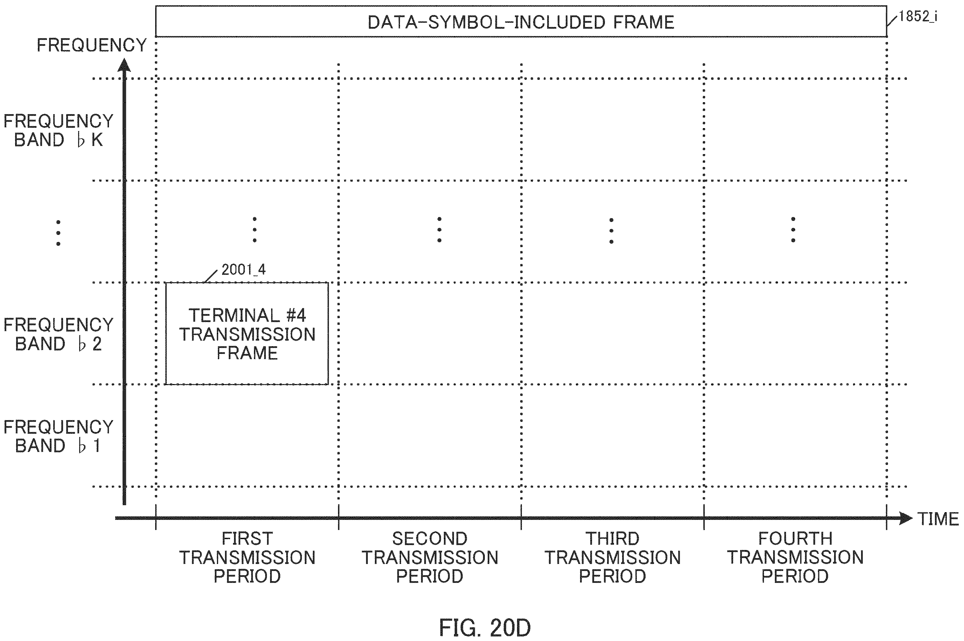

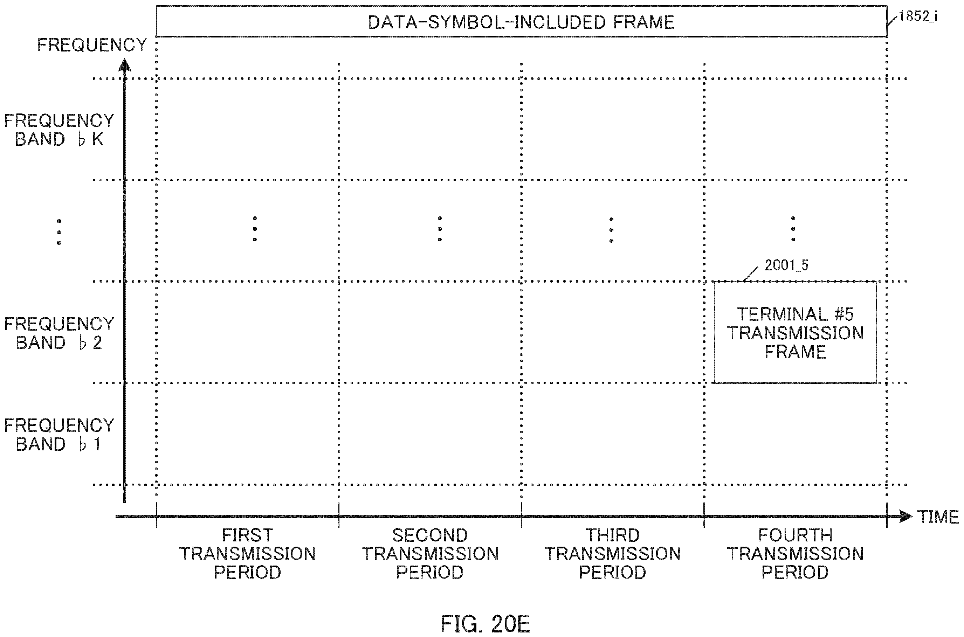

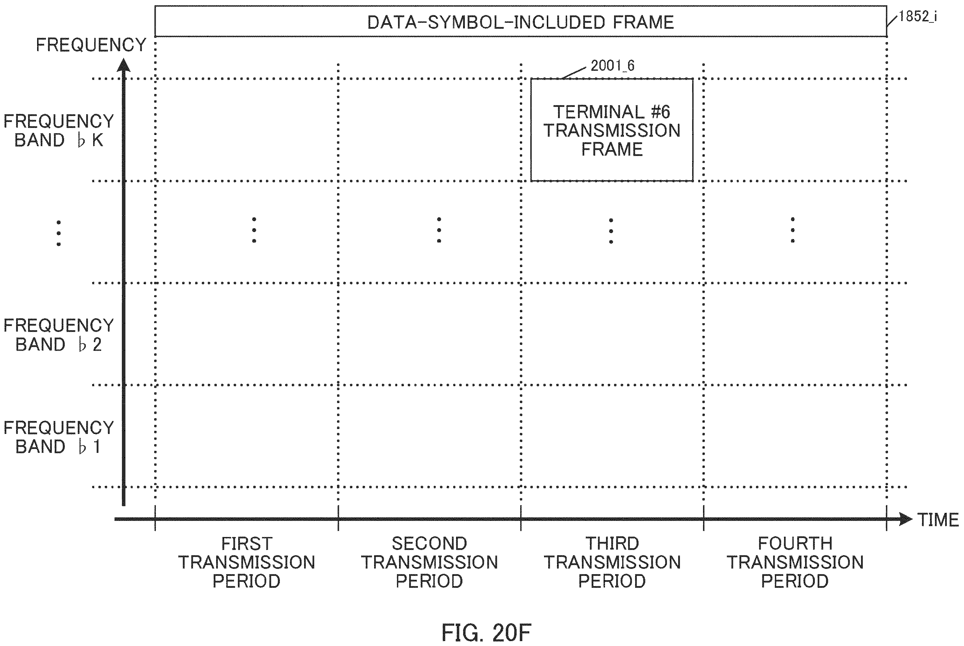

Next, a description will be given of an exemplary configuration of "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" with reference to FIGS. 20Ato 20F. Note that i is an integer equal to or greater than 1, for example, and the horizontal axis represents time in FIGS. 20A to 20F.

As illustrated in FIGS. 20A, 20B, 20C, 20D, 20E, and 20F, "data-symbol-included frame 1852_i" is composed of a first transmission period, a second transmission period, a third transmission period, and a fourth transmission period. In addition, there are frequency band ♭1, frequency band ♭2, ..., frequency band ♭K for "data-symbol-included frame 1852_i".

As illustrated in FIG. 20A, terminal #1 labeled 902_1 transmits terminal #1 transmission frame (including a data symbol) 2001_1 using frequency band ♭K and the first transmission period, for example.

"Terminal #1 labeled 902_1 transmits terminal #1 transmission frame (including a data symbol) 2001_1 using frequency band ♭K" because "base station #1 labeled 901_1 transmits a modulation signal (slot) addressed to terminal #1 labeled 902_1 using frequency band ♭K" as illustrated in FIG. 17B.

As illustrated in FIG. 20B, terminal #2 labeled 902_2 transmits terminal #2 transmission frame (including a data symbol) 2001_2 using frequency band ♭1 and the second transmission period, for example.

"Terminal #2 labeled 902_2 transmits terminal #2 transmission frame (including a data symbol) 2001_2 using frequency band ♭1" because "base station #1 labeled 901_1 transmits a modulation signal (slot) addressed to terminal #2 labeled 902_2 using frequency band ♭1" as illustrated in FIG. 17B.

As illustrated in FIG. 20C, terminal #3 labeled 902_3 transmits terminal #3 transmission frame (including a data symbol) 2001_3 using frequency bands ♭1 and ♭2 and the third transmission period, for example.

"Terminal #3 labeled 902_3 transmits terminal #3 transmission frame (including a data symbol) 2001_3 using frequency bands ♭1 and ♭2" because "base station #1 labeled 901_1 transmits a modulation signal (slot) addressed to terminal #3 labeled 902_3 using frequency bands ♭1 and ♭2" as illustrated in FIG. 17B.

As illustrated in FIG. 20D, terminal #4 labeled 902_4 transmits terminal #4 transmission frame (including a data symbol) 2001_4 using frequency band ♭2 and the first transmission period, for example.

"Terminal #4 labeled 902_4 transmits terminal #4 transmission frame (including a data symbol) 2001_4 using frequency band ♭2" because "base station #1 labeled 901_1 transmits a modulation signal (slot) addressed to terminal #4 labeled 902_4 using frequency band ♭2" as illustrated in FIG. 17B.

As illustrated in FIG. 20E, terminal #5 labeled 902_5 transmits terminal #5 transmission frame (including a data symbol) 2001_5 using frequency band ♭2 and the fourth transmission period, for example.

"Terminal #5 labeled 902_5 transmits terminal #5 transmission frame (including a data symbol) 2001_5 using frequency band ♭2" because "base station #1 labeled 901_1 transmits a modulation signal (slot) addressed to terminal #5 labeled 902_5 using frequency band ♭2" as illustrated in FIG. 17B.

As illustrated in FIG. 20F, terminal #6 labeled 902_6 transmits terminal #6 transmission frame (including a data symbol) 2001_6 using frequency band ♭K and the third transmission period, for example.

"Terminal #6 labeled 902_6 transmits terminal #6 transmission frame (including a data symbol) 2001_6 using frequency band ♭K" because "base station #1 labeled 901_1 transmits a modulation signal (slot) addressed to terminal #6 labeled 902_6 using frequency band ♭K" as illustrated in FIG. 17B.

As described above, "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" is subjected to, for example, OFDMA and/or time division and transmitted by each terminal, and base station #1 labeled 901_1 receives the frame transmitted by the terminal, thereby preventing interference and achieving high data reception quality.

Note that terminal #1 transmission frame 2001_1, terminal #2 transmission frame 2001_2, terminal #3 transmission frame 2001_3, terminal #4 transmission frame 2001_4, terminal #5 transmission frame 2001_5, and terminal #6 transmission frame 2001_6 in FIGS. 20A, 20B, 20C, 20D, 20E, and 20F may include, in addition to the data symbol, a "reference signal such as DMRS, PTRS, or SRS", a pilot symbol, a pilot signal, a preamble, and a symbol including control information, for example.

In FIGS. 20A, 20B, 20C, 20D, 20E, and 20F, a description has been given of a case where the terminals perform OFDMA and/or time division on the frames to be transmitted, but the terminals may perform spatial division on the frames to be transmitted using multi user-multiple-input multiple-output (MU-MIMO).

Note that the present embodiment has provided a description of a case where a terminal transmits a modulation signal in a multi-carrier scheme such as OFDM, for example, but the scheme is not limited to this. For example, a terminal may transmit a signal in a single-carrier scheme when transmitting a signal of a frame in FIGS. 14, 20A, 20B, 20C, 20D, 20E, 20F, etc.

In FIG. 14, for example, terminal #1 labeled 902_1 may transmit terminal #1 "sector sweep reference signal" 1401_1 in frequency band ♭K in a single-carrier scheme. Further, in FIG. 20A, terminal #1 labeled 902_1 may transmit "terminal #1 transmission frame" 2001_1 in frequency band ♭K in a single-carrier scheme. Note that other terminals may also transmit a signal in a single-carrier scheme.

(Embodiment 2)

In Embodiment 2, a description will be given of a communication system, communication apparatus, and communication method using sector sweep as a variation of Embodiment 1. Note that the drawings used in Embodiment 1 are sometimes used in the following description of Embodiment 2.

FIGS. 1A, 1B, and 1C illustrate exemplary configurations of, for example, a base station, an access point, a terminal, a repeater, and a TRP in Embodiment 2, and the description of the detailed operations will be omitted since they have already been described with reference to FIGS. 2, 3, 4, 5, 6, 7, and 8. For FIGS. 2, 3, 4, 5, 6, 7, and 8, the description of the detailed operations will also be omitted since they have already been described.

FIG. 9 illustrates an exemplary communication state in Embodiment 2. As illustrated in FIG. 9, a case to be discussed is where base station #1 labeled 901_1 communicates with terminal #1 labeled 902_1, terminal #2 labeled 902_2, terminal #3 labeled 902_3, terminal #4 labeled 902_4, terminal #5 labeled 902_5, and terminal #6 labeled 902_6. A relationship between a base station and terminals, however, is not limited to this example, and the base station may communicate with one or more terminals, for example.

Note that the following description is about an exemplary case where the base station transmits modulation signals to the terminals using the OFDMA scheme and the terminals transmit modulation signals to the base station using a single-carrier scheme.

FIG. 10 illustrates an example of modulation signal 1000 transmitted by base station #1 labeled 901_1 in FIG. 9. In FIG. 10, the horizontal axis represents time and the vertical axis represents frequency. In the time period from time t0 to t1, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a slot/mini-slot/unit-included frame, or the like.

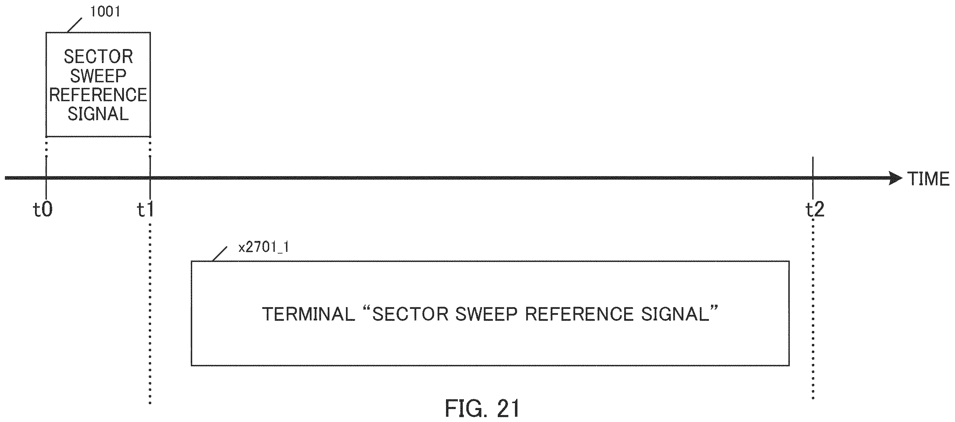

FIG. 21 illustrates an exemplary configuration of the time period from time t1 to t2 in FIG. 10, which is the terminal response period, and the horizontal axis represents time. Sector sweep reference signal 1001 transmitted by the base station is present in the time period from time t0 to t1.

Subsequently, terminal "sector sweep reference signal" x2701 is present in the time period from time t1 to t2.

FIG. 11 illustrates examples of sector sweep reference signal 1001 in FIG. 10 transmitted by base station #1 labeled 901_1 in FIG. 9 with the configuration in FIG. 1A, 1B, or 1C, for example. Note that the horizontal axis represents time and the vertical axis represents frequency in FIG. 11. In the example of FIG. 11, the frequency is divided into frequency band ♭1, frequency band ♭2, ..., frequency band ♭K as illustrated in FIG. 11 for base station #1 labeled 901_1 to transmit modulation signals based on OFDMA. Note that K is an integer equal to or greater than 1 or an integer equal to or greater than 2.

In frequency band ♭1, for example, sector sweep reference signal 1101_11 in transmission panel antenna 1 for frequency ♭1 is present in the first time period, sector sweep reference signal 1101_12 in transmission panel antenna 2 for frequency ♭1 is present in the second time period, ..., sector sweep reference signal 1101_1M in transmission panel antenna M for frequency ♭1 is present in the M-th time period.

That is, in frequency band ♭i, sector sweep reference signal 1101_i1 in transmission panel antenna 1 for frequency bi is present in the first time period, sector sweep reference signal 1101_i2 in transmission panel antenna 2 for frequency ♭i is present in the second time period, ..., sector sweep reference signal 1101_iM in transmission panel antenna M for frequency ♭i is present in the M-th time period. Note that i is an integer from 1 to K (both inclusive).

Note that sector sweep reference signal 1101_ij in transmission panel antenna j for frequency ♭i is transmitted from transmission panel antenna j labeled 106_j of base station #1 labeled 901_1 with the configuration in FIG. 1A, 1B, or 1C. In this case, j is an integer from 1 to M (both inclusive).

One feature is that "sector sweep reference signals are transmitted from the same transmission panel antenna in the i-th time period regardless of the frequency band in FIG. 11". At this time, the same beamforming parameter is used in a first period of time regardless of the frequency band. Note that the beamforming will be described later.

FIG. 12 illustrates an exemplary configuration of "sector sweep reference signal 1101_pi in transmission panel antenna i for frequency ♭p" in FIG. 11. Note that the horizontal axis represents time in FIG. 12. Note that p is an integer from 1 to K (both inclusive) and i is an integer from 1 to M (both inclusive).

A description will be omitted regarding a specific example of a transmission method for "sector sweep reference signal 1101_pi in transmission panel antenna i for frequency ♭p" that is composed as in FIGS. 11 and 12 and transmitted by base station #1 labeled 901_1 with the configuration in FIG. 1A, 1B, or 1C, since it has already been described.

As illustrated in FIGS. 11 and 12, when base station #1 labeled 901_1 transmits "sector sweep reference signal 1101_i in transmission panel antenna i for frequency ♭p", "reference signal 1201_j according to j-th parameter in transmission panel antenna i for frequency ♭p" includes, for example, the following information:

· Identification number (ID) of the transmission panel antenna, which corresponds to i here, for example;
· Identification number (ID) of the parameter used for beamforming (directivity control), which corresponds to j here, for example; and
· The number of frequency divisions in which sector sweep reference signals can be transmitted when the terminals transmit the sector sweep reference signals, which will be described later.

Note that, in a case where "the number of frequency divisions in which sector sweep reference signals can be transmitted" is determined in advance, information of the number of frequency divisions in which sector sweep reference signals can be transmitted need not be included in "reference signal 1201_j according to j-th parameter in transmission panel antenna i for frequency ♭p".

Note that "reference signal 1201_j according to j-th parameter in transmission panel antenna i for frequency ♭p" may include other information. Examples of the information will be described in the other embodiments, for example, in Embodiment 6 or later.

The following information may also be included in "reference signal 1201_j according to j-th parameter in transmission panel antenna i for frequency ♭p".

· Information on the frequency band and/or frequency ♭p (information of the number of frequency divisions may also be included), which will be described later.

Transmission of the "identification number (ID) of the transmission panel antenna for frequency ♭p" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of frequency divisions in which sector sweep reference signals can be transmitted when the terminals transmit the sector sweep reference signals" may be changeable according to the frame and/or time, for example. This produces the effect of enhancing data transmission efficiency of a communication system.

Further, transmission of the "information on the frequency band and/or frequency ♭p" by base station #1 labeled 901_1 allows the terminals to obtain the information and transmit "information relative to a frequency that the terminals desire the base station to use for transmission". This allows the base station to perform appropriate control and produces the effect of enhancing data reception quality.

Next, a description will be given of an operation in the time period from time t1 to t2 in FIG. 10, which is the terminal response period. Note that, in this Embodiment 6, the description is based on a case where the terminals use a multi-carrier scheme such as the OFDM scheme and frequency (bands) used by the base station and frequency (bands) used by the terminals partially overlap each other, by way of example.

FIG. 21 illustrates an exemplary operation in the time period from time t1 to t2, which is the terminal response period. Note that the horizontal axis represents time in FIG. 21. Terminals such as terminal #1 labeled 902_1, terminal #2 labeled 902_2, terminal #3 labeled 902_3, terminal #4 labeled 902_4, terminal #5 labeled 902_5, and terminal #6 labeled 902_6 in FIG. 9 transmit sector sweep reference signals in the time period from time t1 to t2, which is the terminal response period. Note that, in FIG. 21, the components that operate in the same manner as in FIG. 10 are denoted by the same reference signs.

As illustrated in FIGS. 10 and 21, for example, base station #1 labeled 901_1 transmits sector sweep reference signals in the time period from time t0 to t1. After that, the terminal response period, which is the time period from time t1 to t2, includes terminal "sector sweep reference signal" x2701_1 as illustrated in FIG. 13.

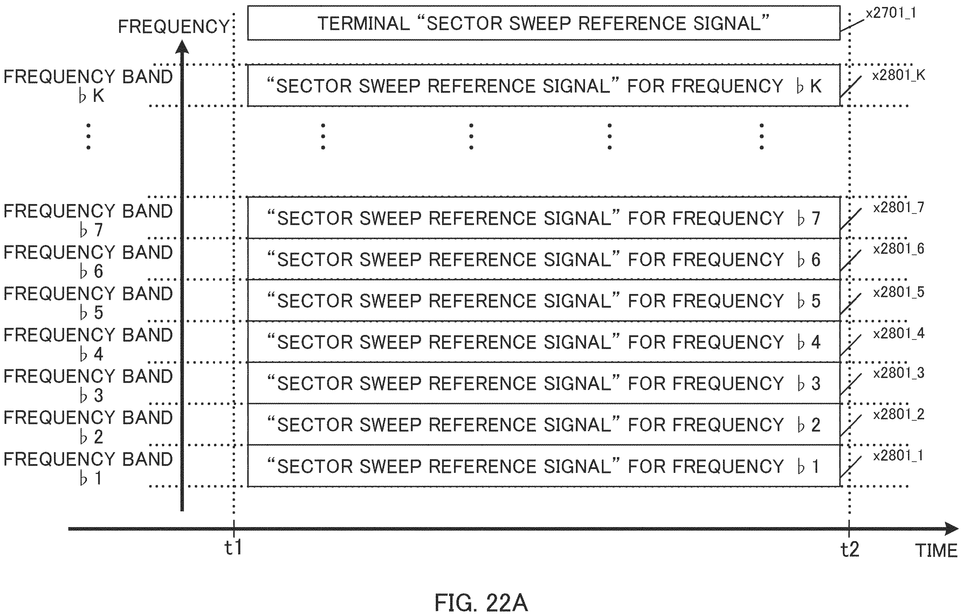

FIG. 22A illustrates an exemplary configuration, in time and frequency, of terminal "sector sweep reference signal" x2701_1 illustrated in FIG. 21. Note that the horizontal axis represents time and the vertical axis represents frequency in FIG. 22A.

As illustrated in FIG. 22A, "terminal "sector sweep reference signal" x2701_1 includes areas for "sector sweep reference signal" x2801_1 for frequency ♭1, "sector sweep reference signal" x2801_2 for frequency ♭2, "sector sweep reference signal" x2801_3 for frequency ♭3, "sector sweep reference signal" x2801_4 for frequency ♭4, "sector sweep reference signal" x2801_5 for frequency ♭5, "sector sweep reference signal" x2801_6 for frequency ♭6, "sector sweep reference signal" x2801_7 for frequency ♭7, ..., "sector sweep reference signal" x2801_K for frequency ♭K".

Thus, in the case of FIG. 22A, "the number of frequency divisions in which sector sweep reference signals can be transmitted when the terminals transmit the sector sweep reference signals" is set to K by base station #1 labeled 901_1.

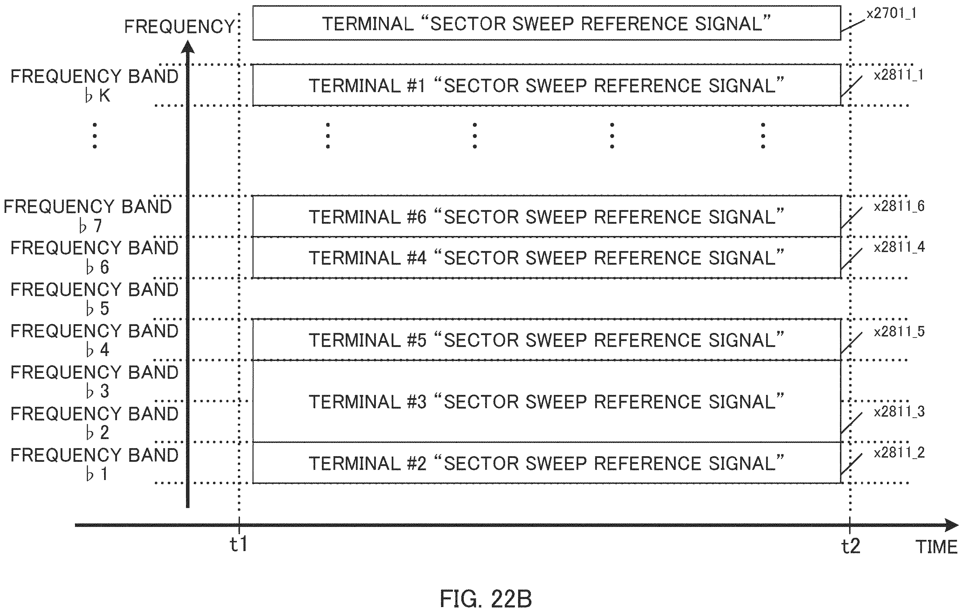

FIG. 22B illustrates exemplary occupation by the terminals in the areas for "sector sweep reference signal" x2801_1 for frequency ♭1, "sector sweep reference signal" x2801_2 for frequency ♭2, "sector sweep reference signal" x2801_3 for frequency ♭3, "sector sweep reference signal" x2801_4 for frequency ♭4, "sector sweep reference signal" x2801_5 for frequency ♭5, "sector sweep reference signal" x2801_6 for frequency ♭6, "sector sweep reference signal" x2801_7 for frequency ♭7, ..., "sector sweep reference signal" x2801_K for frequency ♭K" included in terminal "sector sweep reference signal" x2701_1 illustrated in FIG. 21A. Note that the horizontal axis represents time and the vertical axis represents frequency in FIG. 22A.

Terminal #1 labeled 902_1 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency ♭p" included in sector sweep reference signal 1001 may be used for this estimation.

Terminal #1 labeled 902_1 estimates, for example, "transmission panel antenna a1 and parameter b1" as the "transmission panel antenna and parameter" with high reception quality. Terminal #1 labeled 902_1 also estimates frequency band ♭K as the "frequency domain" with high reception quality. Terminal #1 labeled 902_1 may further estimate the frequency domain with second highest reception quality, the frequency domain with third highest reception quality, and so forth. Note that the frequency domain with highest reception quality will be discussed here to simplify the description.

While estimating the "transmission panel antenna and parameter" with high reception quality, terminal #1 labeled 902_1 may simultaneously obtain information of "the number of frequency divisions in which sector sweep reference signals can be transmitted when the terminals transmit the sector sweep reference signals". In the case of FIG. 22B, terminal #1 labeled 902_1 may obtain information indicating that "the number of frequency divisions in which sector sweep reference signals can be transmitted when the terminals transmit the sector sweep reference signals" is K.

Then, terminal #1 labeled 902_1, for example, transmits terminal #1 "sector sweep reference signal" x2811_1 using frequency band ♭K based on the above result. Although the description here is based on an example where terminal #1 labeled 902_1 uses "frequency band ♭K" that is estimated to have the highest reception quality, a frequency band other than the frequency band estimated to have the highest reception quality may be used.

Note that terminal #1 "sector sweep reference signal" x2811_1 includes information of the "transmission panel antenna and parameter" with high reception quality obtained by terminal #1 labeled 902_1, that is, information of "transmission panel antenna a1 and parameter b1". Terminal #1 "sector sweep reference signal" x2811_1 also includes information of the "frequency domain", for example, information of "frequency band ♭K". This will be described later.

Likewise, terminal #2 labeled 902_2 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency ♭p" included in sector sweep reference signal 1001 may be used for this estimation.

Terminal #2 labeled 902_2 estimates, for example, "transmission panel antenna a2 and parameter b2" as the "transmission panel antenna and parameter" with high reception quality. Terminal #2 labeled 902_2 also estimates frequency band ♭1 as the "frequency domain" with high reception quality. Terminal #2 labeled 902_2 may further estimate the frequency domain with second highest reception quality, the frequency domain with third highest reception quality, and so forth. Note that the frequency domain with highest reception quality will be discussed here to simplify the description.

While estimating the "transmission panel antenna and parameter" with high reception quality, terminal #2 labeled 902_2 may simultaneously obtain information of "the number of frequency divisions in which sector sweep reference signals can be transmitted when the terminals transmit the sector sweep reference signals". In the case of FIG. 22B, terminal #2 labeled 902_2 may obtain information indicating that "the number of frequency divisions in which sector sweep reference signals can be transmitted when the terminals transmit the sector sweep reference signals" is K.

Then, terminal #2 labeled 902_2, for example, transmits terminal #2 "sector sweep reference signal" x2811_2 using frequency band ♭1 based on the above result. Although the description here is based on an example where terminal #2 labeled 902_2 uses "frequency band ♭1" that is estimated to have the highest reception quality, a frequency band other than the frequency band estimated to have the highest reception quality may be used.

Note that terminal #2 "sector sweep reference signal x2811_2" includes information of the "transmission panel antenna and parameter" with high reception quality obtained by terminal #2 labeled 902_2, that is, information of "transmission panel antenna a2 and parameter b2". Terminal #2 "sector sweep reference signal" x2811_2 also includes information of the "frequency domain", for example, information of "frequency band b1". This will be described later.

Thus, terminal #i labeled 902_i receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example. In addition, the "information on the frequency band and/or frequency ♭p" included in sector sweep reference signal 1001 may be used for this estimation.

Terminal #i labeled 902_i estimates, for example, "transmission panel antenna ai and parameter bi" as the "transmission panel antenna and parameter" with high reception quality. Terminal #i labeled 902_i also estimates frequency band bzi as the "frequency domain" with high reception quality. Note that a plurality of frequency domains can be specified. Terminal #i labeled 902_i may further estimate the frequency domain with second highest reception quality, the frequency domain with third highest reception quality, and so forth. Note that the frequency domain with highest reception quality will be discussed here to simplify the description.

While estimating the "transmission panel antenna and parameter" with high reception quality, terminal #i labeled 902_i may simultaneously obtain information of "the number of frequency divisions in which sector sweep reference signals can be transmitted when the terminals transmit the sector sweep reference signals".

Then, terminal #i labeled 902_i, for example, transmits terminal #i "sector sweep reference signal" x2811_i using frequency band bzi based on the above result. Although the description here is based on an example where terminal #i labeled 902_i uses "frequency band bzi" that is estimated to have the highest reception quality, a frequency band other than the frequency band estimated to have the highest reception quality may be used.

Note that terminal #i "sector sweep reference signal" 2811_i includes information of the "transmission panel antenna and parameter" with high reception quality obtained by terminal #i labeled 902_i, that is, information of "transmission panel antenna ai and parameter bi". Terminal #i "sector sweep reference signal" x2811_i also includes information of the "frequency domain", for example, information of "frequency band bzi". This will be described later.

Note that, in FIG. 21, when the frequency (band) used for sector sweep reference signal 1001 transmitted by base station #1 labeled 901_1 is the same as the frequency (band) used for terminal "sector sweep reference signal" x2701_1 transmitted by terminal #i, terminal #i "sector sweep reference signal" x2811_i need not but may include the information of the "frequency domain". In this case, base station #1 labeled 901_1 can recognize the "frequency domain" by referring to the frequency domain where terminal #i "sector sweep reference signal" x2811_i is present.

Meanwhile, in FIG. 21, when the frequency (band) used for sector sweep reference signal 1001 transmitted by base station #1 labeled 901_1 is different from the frequency (band) used for terminal "sector sweep reference signal" x2701_1 transmitted by terminal #i, including the information of the "frequency domain" in terminal #i "sector sweep reference signal" x2811_i produces the effect of accurately transmitting the information of the "frequency domain" to base station #1 labeled 901_1.

A description will be given of a configuration of terminal #i "sector sweep reference signal" x2811_i transmitted by terminal #i labeled 902_i described with reference to FIG. 22B. To simplify the description, terminal #i labeled 902_i has the configuration in FIG. 1A, 1B, or 1C. In addition, terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

Terminal #i labeled 902_i transmits terminal #i "sector sweep reference signal" x2811_i as illustrated in FIG. 22B. FIG. 15A illustrates an exemplary configuration of terminal #i "sector sweep reference signal" x2811_i. Note that the horizontal axis represents time in FIG. 15A. "Terminal #i "sector sweep reference signal" 1401_i" in FIG. 15A corresponds to an example of "sector sweep reference signal" x2811_i in FIG. 22B.

As illustrated in FIG. 15A, terminal #i "sector sweep reference signal" x2811_i of terminal #i labeled 902_i is composed of "sector sweep reference signal 1501_1 in terminal #i transmission panel antenna 1, sector sweep reference signal 1501_2 in terminal #i transmission panel antenna 2, ..., sector sweep reference signal 1501_M in terminal #i transmission panel antenna M".

For example, terminal #i labeled 902_i with the configuration in FIG. 1A, 1B, or 1C transmits "sector sweep reference signal 1501_1 in terminal #i transmission panel antenna 1" using transmission panel antenna 1 labeled 106_1.

That is, terminal #i labeled 902_i with the configuration in FIG. 1A, 1B, or 1C transmits "sector sweep reference signal 1501_k in terminal #i transmission panel antenna k" using transmission panel antenna k labeled 106_k. Note that k is an integer from 1 to M (both inclusive).

Note that the number of transmission panel antennas included in terminal #i labeled 902_i is M in FIG. 15A, but the number of transmission panel antennas is not limited to this and may be N, where N is an integer equal to or greater than 1.

The details have also been described in other embodiments.

FIG. 15B illustrates an exemplary configuration of "sector sweep reference signal 1501_xi in terminal #i transmission panel antenna xi" in FIG. 15A. Note that the horizontal axis represents time in FIG. 15.

As illustrated in FIG. 15B, "sector sweep reference signal 1501_xi in terminal #i transmission panel antenna xi" is composed of, for example, "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi".

For example, terminal #i labeled 902_i with the configuration in FIG. 1A, 1B, or 1C includes the configuration in FIG. 3 as transmission panel antenna xi labeled 106_xi.

A description will be given of "reference signal 1511_1 according to first parameter in transmission panel antenna xi".

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_1 in transmission panel antenna xi labeled 106_xi as w1(xi, 1). When first transmission signal 303_1 of "reference signal 1511_1 according to first parameter in transmission panel antenna xi" is tx1ref1(t), multiplier 304_1 obtains tx1ref1(t) × w1(xi, 1). Then, terminal #i labeled 902_i transmits tx1ref1(t) × w1(xi, 1) from antenna 306_1 in FIG. 3. Note that t represents time.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_2 in transmission panel antenna xi labeled 106_xi as w2(xi, 1). When second transmission signal 303_2 of "reference signal 1511_1 according to first parameter in transmission panel antenna xi" is tx2ref1(t), multiplier 304_2 obtains tx2ref1(t) × w2(xi, 1). Then, terminal #i labeled 902_i transmits tx2ref1(t) × w2(xi, 1) from antenna 306_2 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_3 in transmission panel antenna xi labeled 106_xi as w3(xi, 1). When third transmission signal 303_3 of "reference signal 1511_1 according to first parameter in transmission panel antenna xi" is tx3ref1(t), multiplier 304_3 obtains tx3ref1(t) × w3(xi, 1). Then, terminal #i labeled 902_i transmits tx3ref1(t) × w3(xi, 1) from antenna 306_3 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_4 in transmission panel antenna xi labeled 106_xi as w4(xi, 1). When fourth transmission signal 303_4 of "reference signal 1511_1 according to first parameter in transmission panel antenna xi" is tx4ref1(t), multiplier 304_4 obtains tx4ref1(t) × w4(xi, 1). Then, terminal #i labeled 902_i transmits tx4ref1(t) × w4(xi, 1) from antenna 306_4 in FIG. 3.

A description will be given of "reference signal 1511j according to j-th parameter in transmission panel antenna xi".

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_1 in transmission panel antenna xi labeled 106_xi as w1(xi, j). When first transmission signal 303_1 of "reference signal 1511_j according to j-th parameter in transmission panel antenna xi" is tx1refj(t), multiplier 304_1 obtains tx1refj(t) × w1(xi, j). Then, terminal #i labeled 902_i transmits tx1refj(t) × w1(xi, j) from antenna 306_1 in FIG. 3. Note that t represents time.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_2 in transmission panel antenna xi labeled 106_xi as w2(xi, j). When second transmission signal 303_2 of "reference signal 1511_j according to j-th parameter in transmission panel antenna xi" is tx2refj(t), multiplier 304_2 obtains tx2refj(t) × w2(xi, j). Then, terminal #i labeled 902_i transmits tx2refj(t) × w2(xi, j) from antenna 306_2 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_3 in transmission panel antenna xi labeled 106_xi as w3(xi, j). When third transmission signal 303_3 of "reference signal 1511_j according to j-th parameter in transmission panel antenna xi" is tx3refj(t), multiplier 304_3 obtains tx3refj(t) × w3(xi, j). Then, terminal #i labeled 902_i transmits tx3refj(t) × w3(xi, j) from antenna 306_3 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_4 in transmission panel antenna xi labeled 106_xi as w4(xi, j). When fourth transmission signal 303_4 of "reference signal 1511_j according to j-th parameter in transmission panel antenna xi" is tx4refj(t), multiplier 304_4 obtains tx4refj(t) × w4(xi, j). Then, terminal #i labeled 902_i transmits tx4refj(t) × w4(xi, j) from antenna 306_4 in FIG. 3.

Note that j is an integer from 1 to 4 (both inclusive) in the case of FIG. 15B. The number Z of parameter changes is four in FIG. 15B, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 22B, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A.

In addition, terminal #i labeled 902_i transmits the "information of the "transmission panel antenna and parameter" of base station #1 labeled 901_1 with high reception quality" in "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi" in FIG. 15B in ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A".

In this case, base station #1 labeled 901_1 is more likely to receive, even with an omnidirectional antenna for example, any of ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 22B, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 22B, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· Identification number (ID) of the transmission panel antenna, which corresponds to Xi here, for example; and

· Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Note that "reference signal 1511j according to j-th parameter in transmission panel antenna xi" may include other information.

Further, as illustrated in FIGS. 22B, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

"Information on the frequency band and/or frequency ♭p" that has been used for transmission by terminal #i labeled 902_i or that terminal #i labeled 902_i desires base station #1 labeled 901_1 to use.

Transmission of the "information on the frequency band and/or frequency ♭p" by terminal #i labeled 902_i allows base station #1 labeled 901_1 to recognize the "information on the frequency band and/or frequency ♭p"; accordingly, terminal #i labeled 902_i and base station #1 labeled 901_1 can perform appropriate control. This produces the effect of enhancing data reception quality.

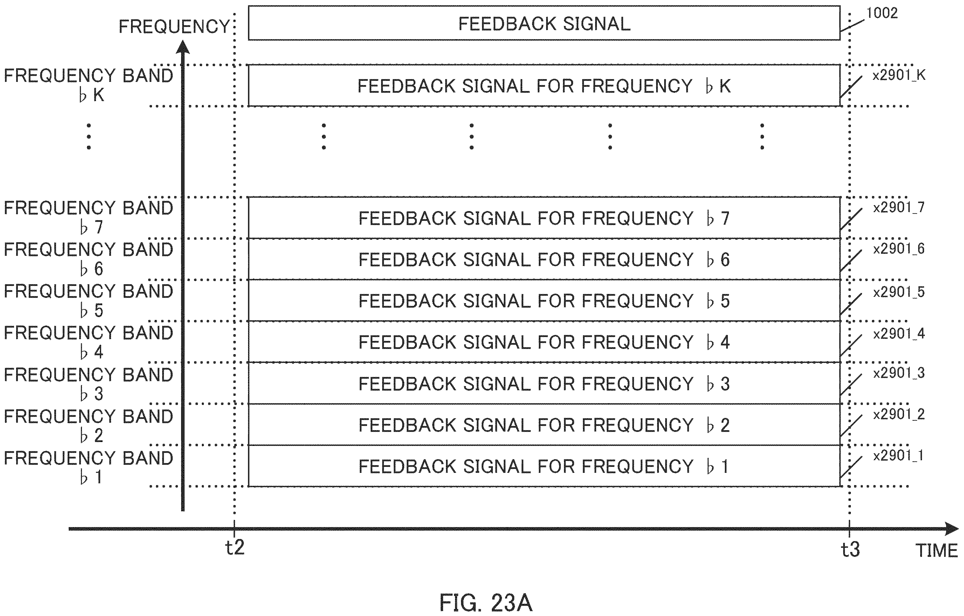

FIG. 23A illustrates an exemplary configuration of feedback signal 1002 that is present in the time period from t2 to t3 in FIG. 10 and transmitted by base station #1 labeled 901_1. Note that the horizontal axis represents time and the vertical axis represents frequency in FIG. 23A. In this example, feedback signal 1002 includes areas for "feedback signal x2901_1 for frequency ♭1, feedback signal x2901_2 for frequency ♭2, feedback signal x2901_3 for frequency ♭3, feedback signal x2901_4 for frequency ♭4, feedback signal x2901_5 for frequency ♭5, feedback signal x2901_6 for frequency ♭6, feedback signal x2901_7 for frequency ♭7, ..., feedback signal x2901_K for frequency ♭K" as illustrated in FIG. 23A.

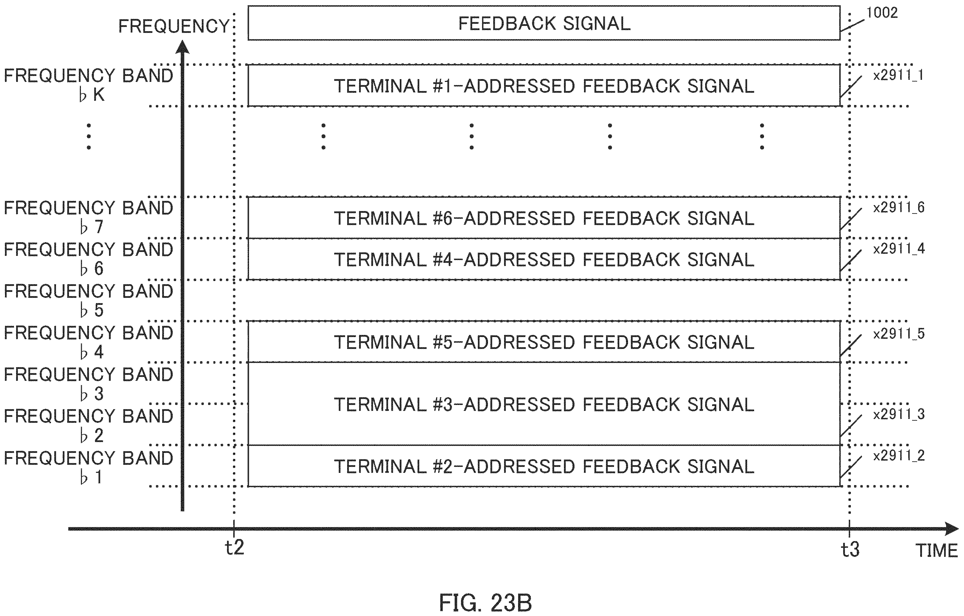

FIG. 23B illustrates exemplary specific feedback signal assignment for feedback signal 1002 in the areas for "feedback signal x2901_1 for frequency ♭1, feedback signal x2901_2 for frequency ♭2, feedback signal x2901_3 for frequency ♭3, feedback signal x2901_4 for frequency ♭4, feedback signal x2901_5 for frequency ♭5, feedback signal x2901_6 for frequency ♭6, feedback signal x2901_7 for frequency ♭7, ..., feedback signal x2901_K for frequency ♭K" illustrated in FIG. 23A.

As in FIG. 22B, for example, terminal #1 labeled 902_1 transmits terminal #1 "sector sweep reference signal" x2811_1, terminal #2 labeled 902_2 transmits terminal #2 "sector sweep reference signal" x2811_2, terminal #3 labeled 902_3 transmits terminal #3 "sector sweep reference signal" x2811_3, and other terminals also transmit sector sweep reference signals.

As in FIG. 23B, base station #1 labeled 901_1 transmits terminal #1-addressed feedback signal x2911_1 using frequency band ♭K based on terminal #1 "sector sweep reference signal" x2811_1.

Base station #1 labeled 901_1 transmits terminal #2-addressed feedback signal x2911_2 using frequency band ♭1 based on terminal #2 "sector sweep reference signal" x2811_2 as in FIG. 23B.

Base station #1 labeled 901_1 transmits terminal #3-addressed feedback signal x2911_3 using frequency bands ♭2 and ♭3 based on terminal #3 "sector sweep reference signal" x2811_3 as in FIG. 23B.

Base station #1 labeled 901_1 transmits terminal #4-addressed feedback signal x2911_4 using frequency band ♭6 based on terminal #4 "sector sweep reference signal" x2811_4 as in FIG. 23B.

Base station #1 labeled 901_1 transmits terminal #5-addressed feedback signal x2911_5 using frequency band ♭4 based on terminal #5 "sector sweep reference signal" x2811_5 as in FIG. 23B.

Base station #1 labeled 901_1 transmits terminal #6-addressed feedback signal x2911_6 using frequency band ♭7 based on terminal #6 "sector sweep reference signal" x2811_6 as in FIG. 23B.

In this manner, obtaining terminal #i-addressed feedback signal x2911_i allows terminal #i labeled 902_i to know that communication with base station #1 labeled 901_1 is available and to know the frequency band to be used. Note that FIG. 23B is merely an example. In a case where there is no terminal #1-addressed feedback signal x2911_1 as feedback signal 1002, for example, terminal #1 labeled 902_1 recognizes that the communication with base station #1 labeled 901_1 has not been established.

At this time, terminal #i-addressed feedback signal 2911_i includes, for example, information indicating that communication with terminal #i labeled 902_i is available (or indicating that data-symbol-included frame 1003 in FIG. 10 includes a symbol addressed to terminal #i labeled 902_i).

Further, base station #1 labeled 901_1 selects a frequency (band) and a transmission panel antenna and sets a parameter of beamforming based on the "information of the "transmission panel antenna and parameter" of base station #1 labeled 901_1 with high reception quality" transmitted by terminal #i labeled 902_i, and base station #1 labeled 901_1 then transmits terminal #i-addressed feedback signal x2911_i. The ""frequency (band) information" of base station #1 labeled 901_1 with high reception quality" transmitted by terminal #i labeled 902_i may be included.

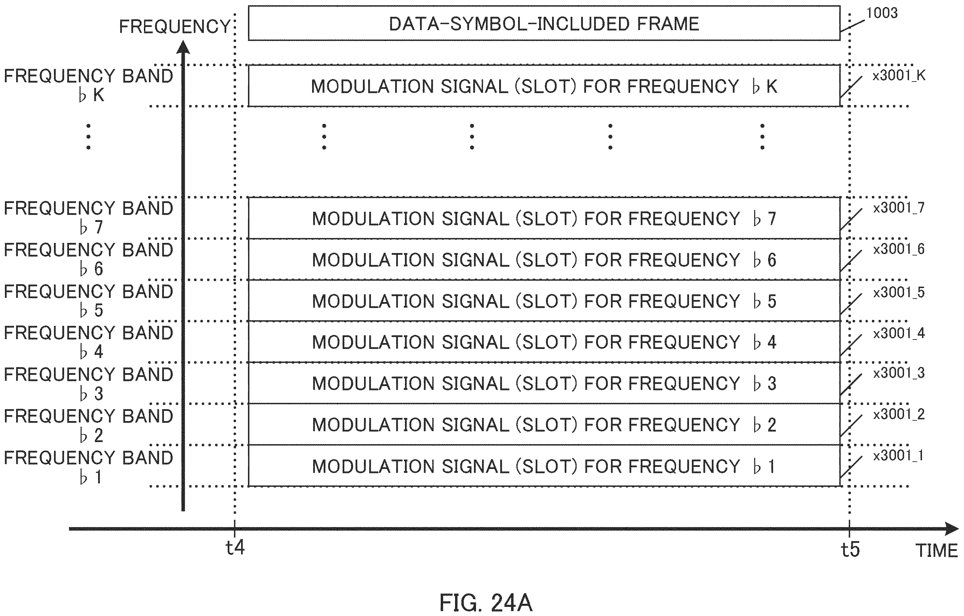

FIG. 24A illustrates an exemplary configuration of data-symbol-included frame 1003 that is present in the time period from t4 to t5 in FIG. 10 and transmitted by base station #1 labeled 901_1. Note that the horizontal axis represents time and the vertical axis represents frequency in FIG. 24A. In this example, data-symbol-included frame 1003 includes areas for "modulation signal (slot) x3001_1 for frequency ♭1, modulation signal (slot) x3001_2 for frequency ♭2, modulation signal (slot) x3001_3 for frequency ♭3, modulation signal (slot) x3001_4 for frequency ♭4, modulation signal (slot) x3001_5 for frequency ♭5, modulation signal (slot) x3001_6 for frequency ♭6, modulation signal (slot) x3001_7 for frequency ♭7, ..., modulation signal (slot) x3001_K for frequency ♭K" as illustrated in FIG. 24A.

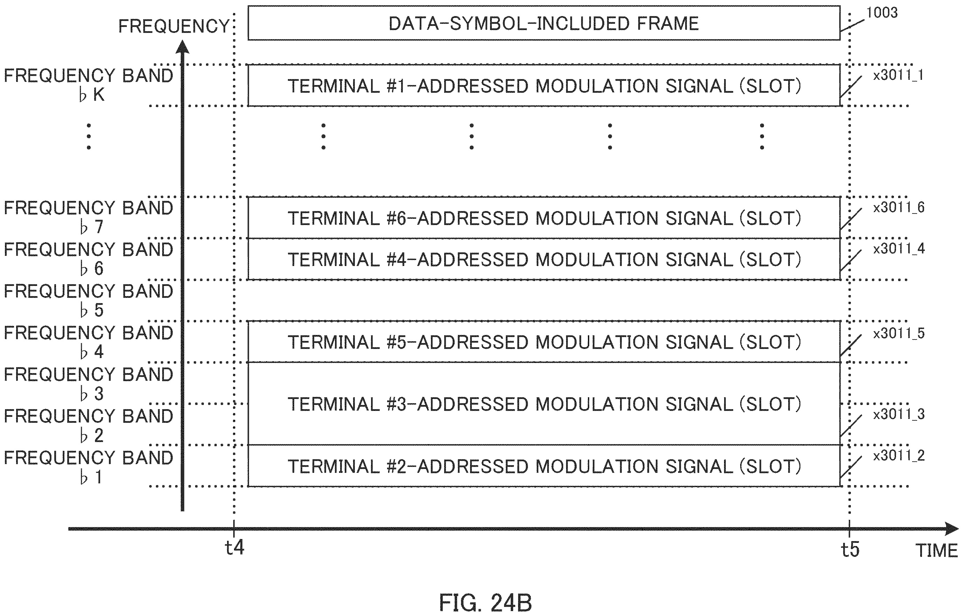

FIG. 24B illustrates exemplary specific modulation signal (slot) assignment for data-symbol-included frame 1003 in the areas for "modulation signal (slot) x3001_1 for frequency ♭1, modulation signal (slot) x3001_2 for frequency ♭2, modulation signal (slot) x3001_3 for frequency ♭3, modulation signal (slot) x3001_4 for frequency ♭4, modulation signal (slot) x3001_5 for frequency ♭5, modulation signal (slot) x3001_6 for frequency ♭6, modulation signal (slot) x3001_7 for frequency ♭7, ..., modulation signal (slot) x3001_K for frequency bK" illustrated in FIG. 24A.

As in FIG. 22B, for example, terminal #1 labeled 902_1 transmits terminal #1 "sector sweep reference signal" x2811_1, terminal #2 labeled 902_2 transmits terminal #2 "sector sweep reference signal" x2811_2, terminal #3 labeled 902_3 transmits terminal #3 "sector sweep reference signal" x2811_3, and other terminals also transmit sector sweep reference signals.

As in FIG. 24B, base station #1 labeled 901_1 transmits terminal #1-addressed modulation signal (slot) x3011_1 using frequency band ♭K based on terminal #1 "sector sweep reference signal" x2811_1.

Base station #1 labeled 901_1 transmits terminal #2-addressed modulation signal (slot) x3011_2 using frequency band ♭1 based on terminal #2 "sector sweep reference signal" x2811_2 as in FIG. 24B.

Base station #1 labeled 901_1 transmits terminal #3-addressed modulation signal (slot) x3011_3 using frequency bands ♭2 and ♭3 based on terminal #3 "sector sweep reference signal" 2811_3 as in FIG. 24B.

Base station #1 labeled 901_1 transmits terminal #4-addressed modulation signal (slot) x3011_4 using frequency band ♭6 based on terminal #4 "sector sweep reference signal" 2811_4 as in FIG. 24B.

Base station #1 labeled 901_1 transmits terminal #5-addressed modulation signal (slot) x3011_5 using frequency band ♭4 based on terminal #5 "sector sweep reference signal" 2811_5 as in FIG. 24B.

Base station #1 labeled 901_1 transmits terminal #6-addressed modulation signal (slot) x3011_6 using frequency band ♭7 based on terminal #6 "sector sweep reference signal" 2811_6 as in FIG. 24B.

At this time, terminal #i-addressed modulation signal (slot) x3011_i includes, for example, a data symbol (data and/or information) addressed to terminal #i labeled 902_i.

In this manner, terminal #i-addressed modulation signal (slot) x3011_i allows terminal #i labeled 902_i to know that communication with base station #1 labeled 901_1 is available and to know the frequency band to be used. Note that FIG. 24B is merely an example. In a case where there is no terminal #1-addressed modulation signal (slot) x3011_1 as data-symbol-included frame 1003, for example, terminal #1 labeled 902_1 recognizes that the communication with base station #1 labeled 901_1 has not been established.

Further, base station #1 labeled 901_1 selects a frequency (band) and a transmission panel antenna and sets a parameter of beamforming based on the "information of the "transmission panel antenna and parameter" of base station #1 labeled 901_1 with high reception quality" transmitted by terminal #i labeled 902_i, and base station #1 labeled 901_1 then transmits terminal #i-addressed modulation signal (slot) x3011_i. The ""frequency (band) information" of base station #1 labeled 901_1 with high reception quality" transmitted by terminal #i labeled 902_i may be included.

Note that, in FIGS. 23A and 23B, base station #1 labeled 901_1 may estimate the "frequency (band)" and the "transmission panel antenna and parameter" of terminal #i labeled 902_1 with high reception quality in receiving "terminal #i "sector sweep reference signal" x2811_i transmitted by terminal #i labeled 902_i", and the estimated information may be included in terminal #i-addressed feedback signal x2911_i.

Terminal #i labeled 902_i selects a frequency (band) and a transmission panel antenna and determines a beamforming method based on the information of "frequency (band)" and "transmission panel antenna and parameter" of terminal #i labeled 902_i with high reception quality obtained from base station #1 labeled 901_1, and terminal #i labeled 902_i then transmits a symbol, a frame, and/or a modulation signal to base station #1 labeled 901_1. This produces the effect of enhancing data reception quality in base station #1 labeled 901_1.

Incidentally, in the time period from t3 to t4 in FIG. 10, terminal #i labeled 902_i may transmit, to base station #1 labeled 901_1, a modulation signal including information indicating successful reception of a signal from base station #1 labeled 901_1, such as acknowledgement (ACK).

Note that, terminal #i-addressed modulation signal (slot) x3011_i in FIG. 24B may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

FIG. 18 illustrates an exemplary state where base station #1 labeled 901_1 and "terminal #1 labeled 902_1, terminal #2 labeled 902_2, terminal #3 labeled 902_3, terminal #4 labeled 902_4, terminal #5 labeled 902_5, and terminal #6 labeled 902_6" communicate with each other as illustrated in FIG. 9. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, terminal #3 labeled 902_3, terminal #4 labeled 902_4, terminal #5 labeled 902_5, and terminal #6 labeled 902_6". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_1. Note that this has already been described with reference to, for example, FIGS. 21, 22A, 22B, 15A, 15B, etc.

Base station #1 labeled 901_1 transmits feedback signal 1802_1. Note that this has already been described with reference to FIGS. 23A and 23B, and the description thereof will be thus omitted.

After that, base station #1 labeled 901_1 transmits "data-symbol-included frame 1803_1". Note that this has already been described with reference to FIGS. 24A and 24B, and the description thereof will be thus omitted. (Hence, "data-symbol-included frame 1803_1" is considered to be a frame for downlink, for example).

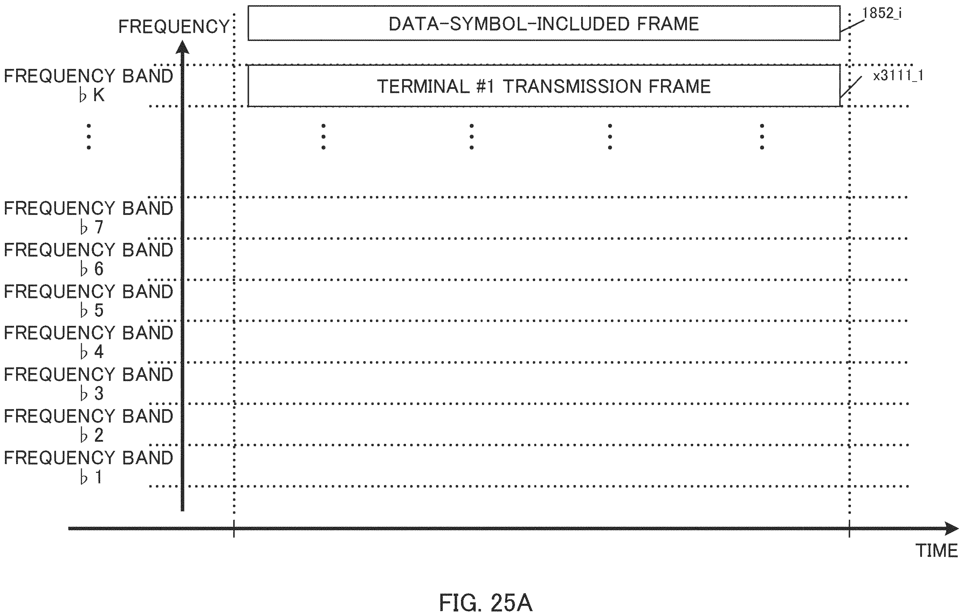

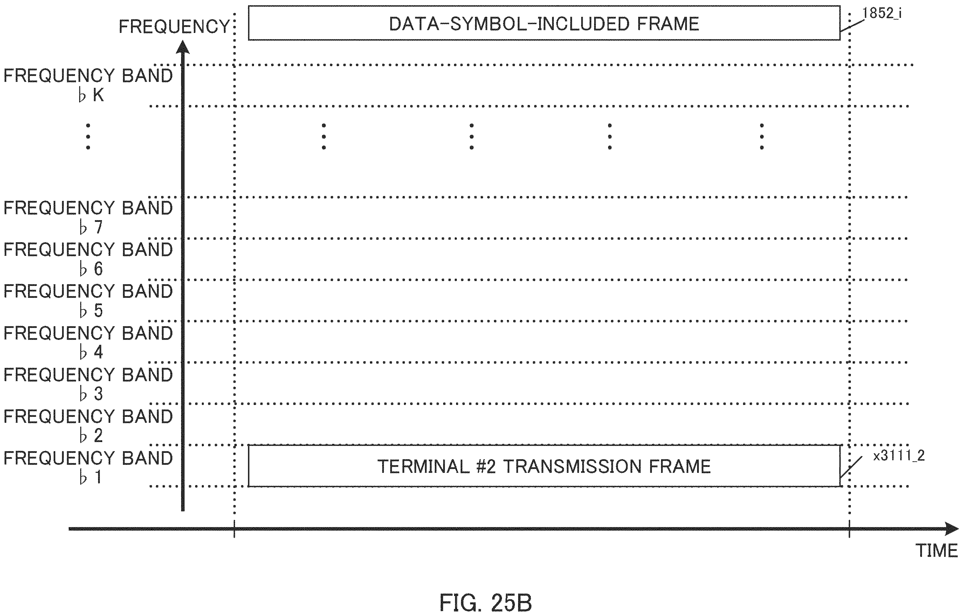

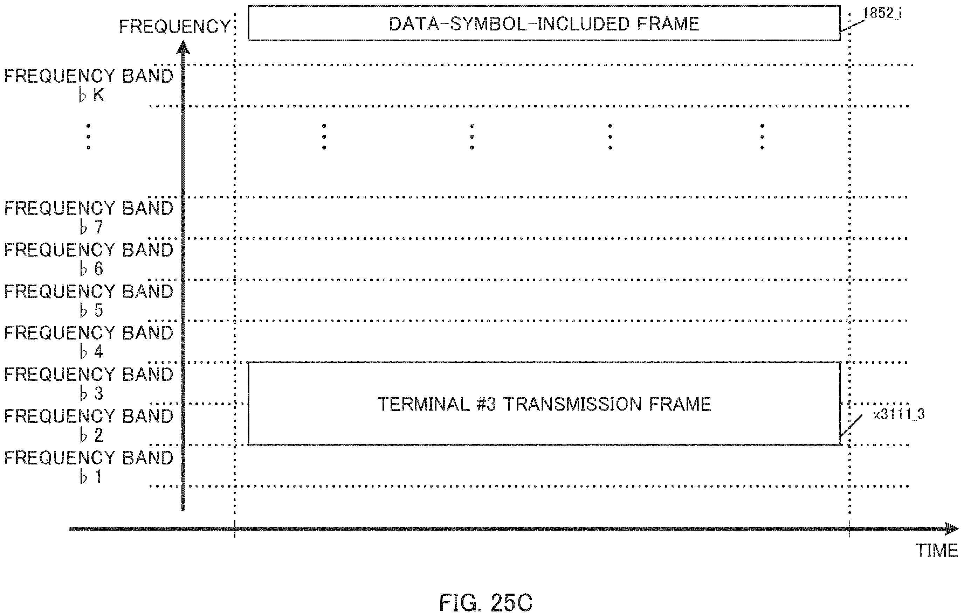

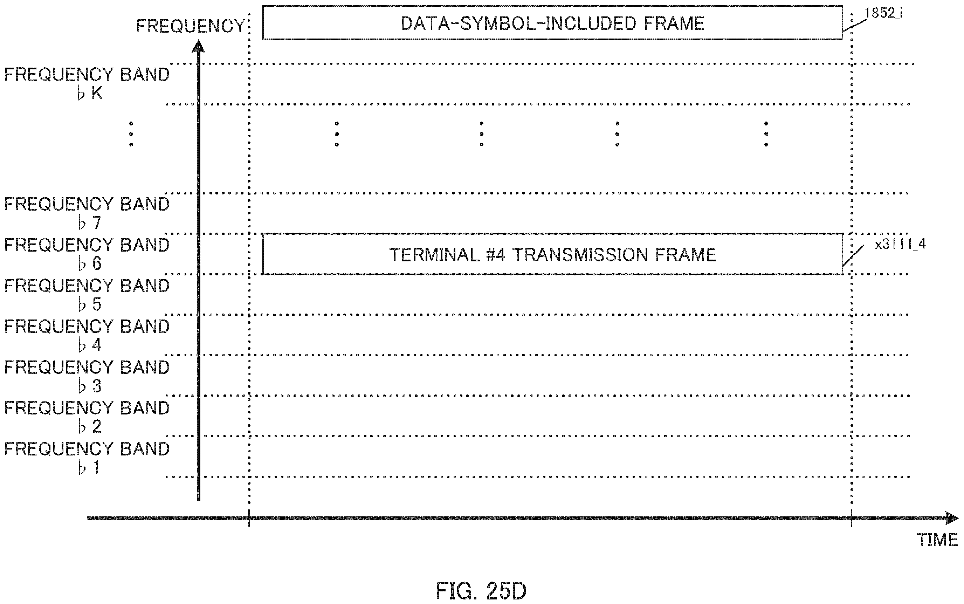

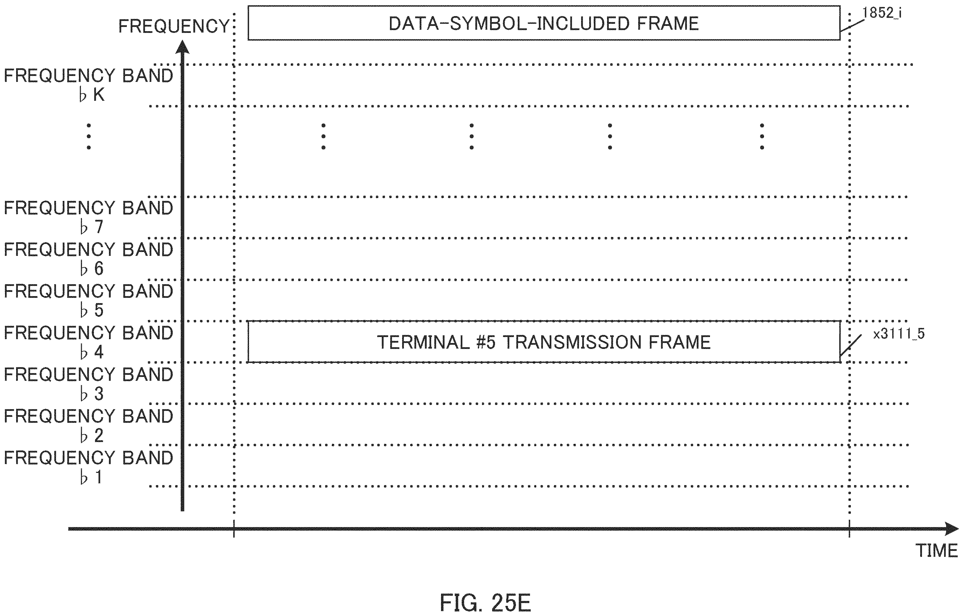

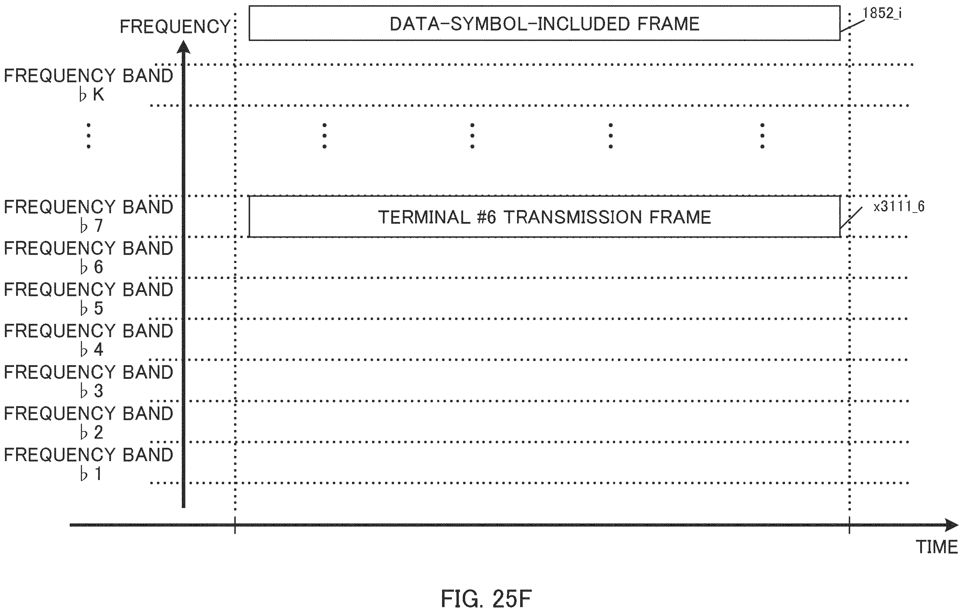

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_1". Note that a configuration of the frame will be described later with reference to FIGS. 25A, 25B, 25C, 25D, 25E, and 25F. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIGS. 24A and 24B.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_2". Note that a configuration of the frame will be described later with reference to FIGS. 25A, 25B, 25C, 25D, 25E, and 25F.

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6", and it is a temporal continuation from the modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_3" is as described with reference to FIGS. 24A and 24B.

The terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_3". Note that a configuration of the frame will be described later with reference to FIGS. 25A, 25B, 25C, 25D, 25E, and 25F.

Next, base station #1 labeled 901_1 transmits sector sweep reference signal 1801_2. Note that this has already been described with reference to FIG. 10, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_2. Note that this has already been described with reference to, for example, FIGS. 21, 22A, 22B, 15A, 15B, etc., and the description thereof will be thus omitted.

Base station #1 labeled 901_1 transmits feedback signal 1802_2. Note that this has already been described with reference to FIGS. 23A and 23B, and the description thereof will be thus omitted.

After that, base station #1 labeled 901_1 transmits "data-symbol-included frame 1803_4". Note that this has already been described with reference to FIGS. 24A and 24B, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_4". Note that a configuration of the frame will be described later with reference to FIGS. 25A, 25B, 25C, 25D, 25E, and 25F.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"". Base station #1 labeled 901_1 and the terminal then each configure a frequency (band), select a transmission panel antenna to be used, and configure transmit beamforming. This produces the effect that the base station and/or the terminal achieve high data reception quality.

Next, a description will be given of an exemplary configuration of "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" with reference to FIGS. 25A, 25B, 25C, 25D, 25E, and 25F. Note that i is an integer equal to or greater than 1, for example, and the horizontal axis represents time and the vertical axis represents frequency in FIGS. 25A, 25B, 25C, 25D, 25E, and 25F.

As illustrated in FIGS. 25A, 25B, 25C, 25D, 25E, and 25F, there are frequency band ♭1, frequency band ♭2, frequency band ♭3, frequency band ♭4, frequency band ♭5, frequency band ♭6, frequency band ♭7, ..., frequency band ♭K for "data-symbol-included frame 1852_i".

FIG. 25A illustrates "data-symbol-included frame 1852_i" transmitted by terminal #1 labeled 902_1, and terminal #1 labeled 902_1 transmits "terminal #1 transmission frame (including a data symbol) x3111_1" using frequency band ♭K as illustrated in FIG. 25A.

FIG. 25B illustrates "data-symbol-included frame 1852_i" transmitted by terminal #2 labeled 902_2, and terminal #2 labeled 902_2 transmits "terminal #2 transmission frame (including a data symbol) x3111_2" using frequency band ♭1 as illustrated in FIG. 25B.

FIG. 25C illustrates "data-symbol-included frame 1852_i" transmitted by terminal #3 labeled 902_3, and terminal #3 labeled 902_3 transmits "terminal #3 transmission frame (including a data symbol) x3111_3" using frequency bands ♭2 and ♭3 as illustrated in FIG. 25C.

FIG. 25D illustrates "data-symbol-included frame 1852_i" transmitted by terminal #4 labeled 902_4, and terminal #4 labeled 902_4 transmits "terminal #4 transmission frame (including a data symbol) x3111_4" using frequency band♭6 as illustrated in FIG. 25D.

FIG. 25E illustrates "data-symbol-included frame 1852_i" transmitted by terminal #5 labeled 902_5, and terminal #5 labeled 902_5 transmits "terminal #5 transmission frame (including a data symbol) x3111_5" using frequency band ♭4 as illustrated in FIG. 25E.

FIG. 25F illustrates "data-symbol-included frame 1852_i" transmitted by terminal #6 labeled 902_6, and terminal #6 labeled 902_6 transmits "terminal #6 transmission frame (including a data symbol) x3111_6" using frequency band ♭7 as illustrated in FIG. 25F.

As described above, "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" is subjected to, for example, frequency division (OFDMA here) and transmitted by each terminal, and base station #1 labeled 901_1 receives the frame transmitted by the terminal, thereby preventing interference and achieving high data reception quality.

Note that terminal #1 transmission frame x3111_1, terminal #2 transmission frame x3111_2, terminal #3 transmission frame x3111_3, terminal #4 transmission frame x31114, terminal #5 transmission frame x3111_5, and terminal #6 transmission frame x3111_6 in FIGS. 25A, 25B, 25C, 25D, 25E, and 25F may include, in addition to the data symbol, a "reference signal such as DMRS, PTRS, or SRS", a pilot symbol, a pilot signal, a preamble, and a symbol including control information, for example.

In FIGS. 25A, 25B, 25C, 25D, 25E, and 25F, a description has been given of a case where the terminals perform frequency division on the frames to be transmitted, but the terminals may perform spatial division on the frames to be transmitted using multi user-multiple-input multiple-output (MU-MIMO).

Note that, although the present embodiment has provided a description of a case where frequency (bands) for signals transmitted by a base station and frequency (bands) for signals transmitted by a terminal are the same or partially overlap each other, by way of example, the same can be implemented in a case where frequency (bands) for signals transmitted by a base station and frequency (bands) for signals transmitted by a terminal are different or partially different from each other.

Further, the present embodiment has provided a description of a case where a terminal transmits a modulation signal in a multi-carrier scheme such as OFDM, for example, but the scheme is not limited to this. For example, a terminal may transmit a signal in a single-carrier scheme when transmitting a signal of a frame in FIGS. 14, 20A, 20B, 20C, 20D, 20E, 20F, etc.

In FIG. 14, for example, terminal #1 labeled 902_1 may transmit terminal #1 "sector sweep reference signal" 1401_1 in frequency band ♭K in a single-carrier scheme. Further, in FIG. 20A, terminal #1 labeled 902_1 may transmit "terminal #1 transmission frame" 2001_1 in frequency band ♭K in a single-carrier scheme. Note that other terminals may also transmit a signal in a single-carrier scheme.

(Embodiment 3)

In Embodiment 3, a description will be given of a communication system, communication apparatus, and communication method using sector sweep in a case where a base station and a terminal performs transmission in a single-carrier scheme. Note that the drawings used in Embodiment 1 are sometimes used in the following description of Embodiment 3.

FIGS. 1A, 1B, and 1C illustrate exemplary configurations of, for example, a base station, an access point, a terminal, a repeater, and a TRP according to Embodiment 3, and the description of the detailed operations will be omitted since they have already been described with reference to FIGS. 2, 3, 4, 5, 6, 7, and 8. For FIGS. 2, 3, 4, 5, 6, 7, and 8, the description of the detailed operations will also be omitted since they have already been described.

For example, examples of the single-carrier scheme include "discrete Fourier transform (DFT)-spread orthogonal frequency division multiplexing (OFDM)" (DFT-S OFDM), "trajectory constrained DFT-spread OFDM", "constrained DFT-spread OFDM" (constrained DFT-S OFDM), "OFDM based single carrier (SC)", "single carrier (SC)-frequency division multiple access (FDMA)", "guard interval DFT-spread OFDM", a time-domain implementation single carrier scheme (e.g., single carrier (SC)-QAM), and the like.

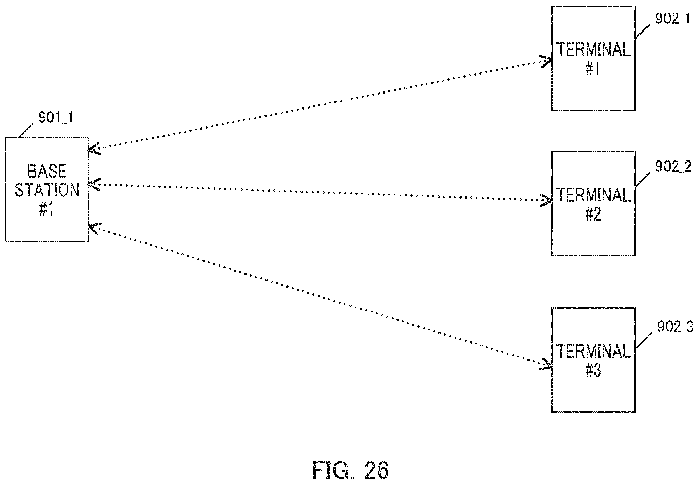

FIG. 26 illustrates an exemplary communication state in Embodiment 5. As illustrated in FIG. 26, a case to be discussed is where base station #1 labeled 901_1 communicates with terminal #1 labeled 902_1, terminal #2 labeled 902_2, and terminal #3 labeled 902_3. A relationship between a base station and terminals, however, is not limited to this example, and the base station may communicate with one or more terminals, for example.

Note that the following description is about an exemplary case where the base station and the terminals perform time division duplex (TDD), time division multiple access (TDMA), or time division multiplexing (TDM).

FIG. 10 illustrates an example of modulation signal 1000 transmitted by base station #1 labeled 901_1 in FIG. 26. In FIG. 10, the horizontal axis represents time. In the time period from time t0 to t1, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a frame, slot, mini-slot, unit, or the like.

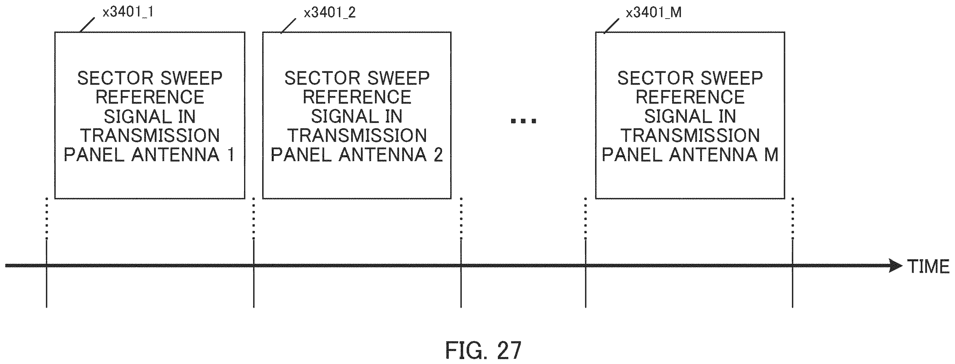

FIG. 27 illustrates examples of sector sweep reference signal 1001 in FIG. 10 transmitted by base station #1 labeled 901_1 in FIG. 26. Note that the horizontal axis represents time in FIG. 27.

For example, base station #1 labeled 901_1 with the configuration in FIG. 1A, 1B, or 1C transmits sector sweep reference signal x3401_1 in transmission panel antenna 1 from transmission panel antenna 1 labeled 106_1.

That is, as illustrated in FIG. 27, base station #1 labeled 901_1 with the configuration in FIG. 1A, 1B, or 1C transmits sector sweep reference signal x3401_i in transmission panel antenna i from transmission panel antenna i labeled 106_i. Note that i is an integer from 1 to M (both inclusive).

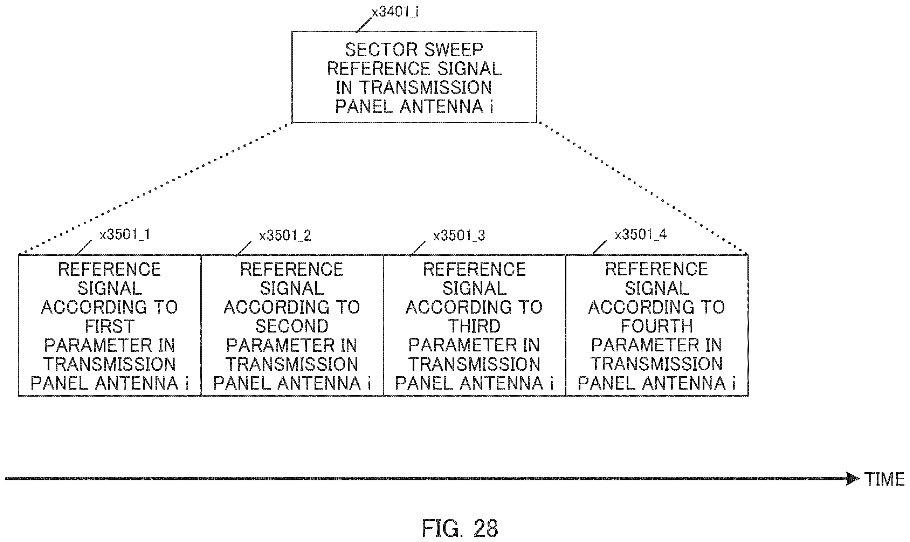

FIG. 28 illustrates an exemplary configuration of "sector sweep reference signal x3401_i in transmission panel antenna i" in FIG. 27. Note that the horizontal axis represents time in FIG. 28.

For example, base station #1 labeled 901_1 with the configuration in FIG. 1A, 1B, or 1C includes the configuration in FIG. 3 as transmission panel antenna i labeled 106_i.

A description will be given of "reference signal x3501_1 according to first parameter in transmission panel antenna i".

When base station #1 labeled 901_1 transmits "reference signal x3501_1 according to first parameter in transmission panel antenna i" illustrated in FIG. 28, base station #1 labeled 901_1 sets the multiplication coefficient in multiplier 304_1 in transmission panel antenna i labeled 106_i as w1(i, 1). When first transmission signal 303_1 of "reference signal x3501_1 according to first parameter in transmission panel antenna i" is tx1ref1(t), multiplier 304_1 obtains tx1ref1(t) × w1(i, 1). Then, base station #1 labeled 901_1 transmits tx1ref1(t) × w1(i, 1) from antenna 306_1 in FIG. 3. Note that t represents time.

When base station #1 labeled 901_1 transmits "reference signal x3501_1 according to first parameter in transmission panel antenna i" illustrated in FIG. 28, base station #1 labeled 901_1 sets the multiplication coefficient in multiplier 304_2 in transmission panel antenna i labeled 106_i as w2(i, 1). When second transmission signal 303_2 of "reference signal x3501_1 according to first parameter in transmission panel antenna i" is tx2ref1(t), multiplier 304_2 obtains tx2ref1(t) × w2(i, 1). Then, base station #1 labeled 901_1 transmits tx2ref1(t) × w2(i, 1) from antenna 306_2 in FIG. 3.

When base station #1 labeled 901_1 transmits "reference signal x3501_1 according to first parameter in transmission panel antenna i" illustrated in FIG. 28, base station #1 labeled 901_1 sets the multiplication coefficient in multiplier 304_3 in transmission panel antenna i labeled 106_i as w3(i, 1). When third transmission signal 303_3 of "reference signal x3501_1 according to first parameter in transmission panel antenna i" is tx3ref1(t), multiplier 304_3 obtains tx3ref1(t) × w3(i, 1). Then, base station #1 labeled 901_1 transmits tx3ref1(t) × w3(i, 1) from antenna 306_3 in FIG. 3.

When base station #1 labeled 901_1 transmits "reference signal x3501_1 according to first parameter in transmission panel antenna i" illustrated in FIG. 28, base station #1 labeled 901_1 sets the multiplication coefficient in multiplier 304_4 in transmission panel antenna i labeled 106_i as w4(i, 1). When fourth transmission signal 303_4 of "reference signal x3501_1 according to first parameter in transmission panel antenna i" is tx4ref1(t), multiplier 304_4 obtains tx4ref1(t) × w4(i, 1). Then, base station #1 labeled 901_1 transmits tx4ref1(t) × w4(i, 1) from antenna 306_4 in FIG. 3.

A description will be given of "reference signal x3501_j according to j-th parameter in transmission panel antenna i".

When base station #1 labeled 901_1 transmits "reference signal x3501_j according to j-th parameter in transmission panel antenna i" illustrated in FIG. 28, base station #1 labeled 901_1 sets the multiplication coefficient in multiplier 304_1 in transmission panel antenna i labeled 106_i as w1(i, j). When first transmission signal 303_1 of "reference signal x3501_j according to j-th parameter in transmission panel antenna i" is tx1refj(t), multiplier 304_1 obtains tx1refj(t) × w1(i, j). Then, base station #1 labeled 901_1 transmits tx1refj(t) × w1(i, j) from antenna 306_1 in FIG. 3. Note that t represents time.

When base station #1 labeled 901_1 transmits "reference signal x3501_j according to j-th parameter in transmission panel antenna i" illustrated in FIG. 28, base station #1 labeled 901_1 sets the multiplication coefficient in multiplier 304_2 in transmission panel antenna i labeled 106_i as w2(i, j). When second transmission signal 303_2 of "reference signal x3501_j according to j-th parameter in transmission panel antenna i" is tx2refj(t), multiplier 304_2 obtains tx2refj(t) × w2(i, j). Then, base station #1 labeled 901_1 transmits tx2refj(t) × w2(i, j) from antenna 306_2 in FIG. 3.

When base station #1 labeled 901_1 transmits "reference signal x3501_j according to j-th parameter in transmission panel antenna i" illustrated in FIG. 28, base station #1 labeled 901_1 sets the multiplication coefficient in multiplier 304_3 in transmission panel antenna i labeled 106_i as w3(i, j). When third transmission signal 303_3 of "reference signal x3501_j according to j-th parameter in transmission panel antenna i" is tx3refj(t), multiplier 304_3 obtains tx3refj(t) × w3(i, j). Then, base station #1 labeled 901_1 transmits tx3refj(t) × w3(i, j) from antenna 306_3 in FIG. 3.

When base station #1 labeled 901_1 transmits "reference signal x3501_j according to j-th parameter in transmission panel antenna i" illustrated in FIG. 28, base station #1 labeled 901_1 sets the multiplication coefficient in multiplier 304_4 in transmission panel antenna i labeled 106_i as w4(i, j). When fourth transmission signal 303_4 of "reference signal x3501_j according to j-th parameter in transmission panel antenna i" is tx4refj(t), multiplier 304_4 obtains tx4refj(t) × w4(i, j). Then, base station #1 labeled 901_1 transmits tx4refj(t) × w4(i, j) from antenna 306_4 in FIG. 3.

Note that j is an integer from 1 to 4 (both inclusive) in the case of FIG. 12. The number Z of parameter changes is four in FIG. 28, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 27 and 28, when base station #1 labeled 901_1 transmits "sector sweep reference signal x3401_i in transmission panel antenna i", "reference signal x3501_j according to j-th parameter in transmission panel antenna i" includes, for example, the following information:

· Identification number (ID) of the transmission panel antenna, which corresponds to i here, for example;

· Identification number (ID) of the parameter used for beamforming (directivity control), which corresponds to j here, for example; and

· The number of slots in which sector sweep reference signals can be transmitted when the terminals transmit the sector sweep reference signals (the number of terminals that can transmit the sector sweep reference signals), which will be described later.

Note that "reference signal x3501_j according to j-th parameter in transmission panel antenna i" may include other information.

Transmission of the "identification number (ID) of the transmission panel antenna" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of slots in which sector sweep reference signals can be transmitted when the terminals transmit the sector sweep reference signals (the number of terminals that can transmit the sector sweep reference signals)" may be changeable according to the frame and/or time, for example. This produces the effect of enhancing data transmission efficiency of a communication system.

Next, a description will be given of an operation in the time period from time t1 to t2 in FIG. 10, which is the terminal response period.

FIG. 13 illustrates an exemplary operation in the time period from time t1 to t2, which is the terminal response period. Note that the horizontal axis represents time in FIG. 13.

As illustrated in FIGS. 10 and 13, for example, base station #1 labeled 901_1 transmits sector sweep reference signals in the time period from time t0 to t1. After that, the terminal response period, which is the time period from time t1 to t2, includes terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4, as illustrated in FIG. 13.

Thus, in the case of FIG. 13, "the number of slots in which sector sweep reference signals can be transmitted when the terminals transmit the sector sweep reference signals (the number of terminals that can transmit the sector sweep reference signals)" is set to four by base station #1 labeled 901_1.

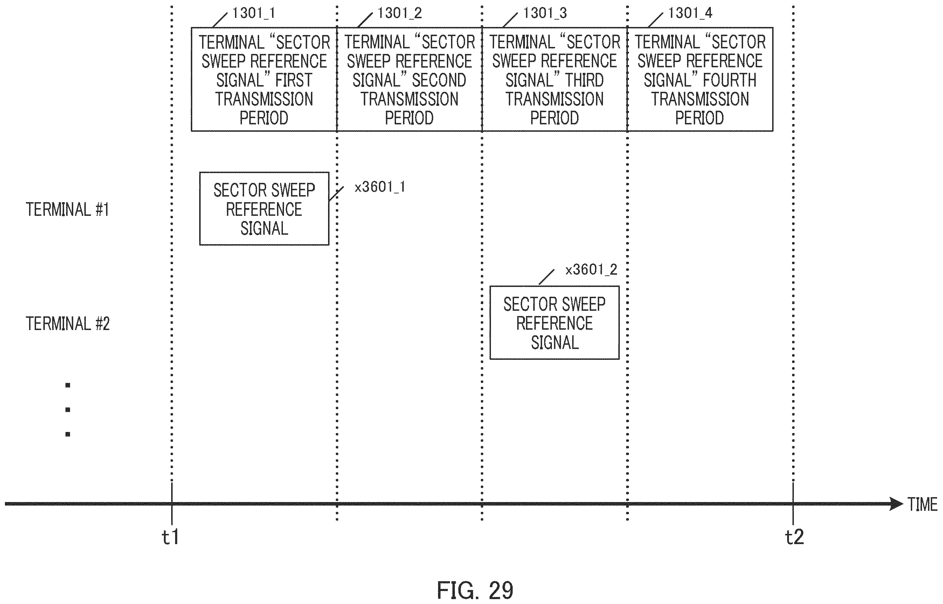

FIG. 29 illustrates exemplary occupation by the terminals in terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4 illustrated in FIG. 13. Note that the horizontal axis represents time in FIG. 29.

Terminal #1 labeled 902_1 in FIG. 26 receives sector sweep reference signal 1001 transmitted by base station #1 labeled 901_1 and estimates the "transmission panel antenna and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001.

Terminal #1 labeled 902_1 estimates, for example, "transmission panel antenna a1 and parameter b1" as the "transmission panel antenna and parameter" with high reception quality.

In addition, while estimating the "transmission panel antenna and parameter" with high reception quality, terminal #1 labeled 902_1 simultaneously obtains information of "the number of slots in which sector sweep reference signals can be transmitted when the terminals transmit the sector sweep reference signals (the number of terminals that can transmit the sector sweep reference signals)". In the case of FIG. 29, terminal #1 labeled 902_1 obtains information indicating that "the number of slots in which sector sweep reference signals can be transmitted when the terminals transmit the sector sweep reference signals (the number of terminals that can transmit the sector sweep reference signals)" is four.

In this case, terminal #1 labeled 902_1 obtains, for example, any one of the values "0", "1", "2", and "3" using a random number. For example, terminal #1 labeled 902_1 obtains "0" using a random number. In this case, since "0" + 1 = 1, terminal #1 labeled 902_1 transmits sector sweep reference signal x3601_1 using "terminal "sector sweep reference signal" first (= "0" + 1) transmission period 1301_1" in FIG. 29. Here, the transmission period for the sector sweep reference signal is configured using a random number, but the transmission period for the sector sweep reference signal may be configured using, instead of a random number, a random number of an integer or a natural number, an irregular integer or natural number, a regular integer or natural number, an integer or a natural number held uniquely by the terminal, for example. Hence, the configuration of the transmission period for the sector sweep reference signal is not limited to the above example, and the transmission period for the sector sweep reference signal is configured for each terminal, for example. This is also applicable to the following similar descriptions.

Note that sector sweep reference signal 1401_1 includes information of the "transmission panel antenna and parameter" with high reception quality obtained by terminal #1 labeled 902_1, that is, information of "transmission panel antenna a1 and parameter b1". This will be described later.

Likewise, terminal #2 labeled 902_2 in FIG. 26 receives sector sweep reference signal 1001 transmitted by base station #1 labeled 901_1 and estimates the "transmission panel antenna and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001.

Terminal #2 labeled 902_2 estimates, for example, "transmission panel antenna a2 and parameter b2" as the "transmission panel antenna and parameter" with high reception quality.

In addition, while estimating the "transmission panel antenna and parameter" with high reception quality, terminal #2 labeled 902_2 simultaneously obtains information of "the number of slots in which sector sweep reference signals can be transmitted when the terminals transmit the sector sweep reference signals (the number of terminals that can transmit the sector sweep reference signals)". In the case of FIG. 29, terminal #2 labeled 902_2 obtains information indicating that "the number of slots in which sector sweep reference signals can be transmitted when the terminals transmit the sector sweep reference signals (the number of terminals that can transmit the sector sweep reference signals)" is four.

In this case, terminal #2 labeled 902_2 obtains, for example, any one of the values "0", "1", "2", and "3" using a random number. For example, terminal #2 labeled 902_2 obtains "2" using a random number. In this case, since "2" + 1 = 3, terminal #2 labeled 902_2 transmits sector sweep reference signal x3601_2 using "terminal "sector sweep reference signal" third (= "2" + 1) transmission period 1301_3" in FIG. 29.

Note that sector sweep reference signal 1401_2 includes information of the "transmission panel antenna and parameter" with high reception quality obtained by terminal #2 labeled 902_2, that is, information of "transmission panel antenna a2 and parameter b2". This will be described later.

Thus, terminal #i labeled 902_i receives sector sweep reference signal 1001 transmitted by base station #1 labeled 901_1 and estimates the "transmission panel antenna and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example.

Terminal #i labeled 902_i estimates, for example, "transmission panel antenna ai and parameter bi" as the "transmission panel antenna and parameter" with high reception quality.

In addition, while estimating the "transmission panel antenna and parameter" with high reception quality, terminal #i labeled 902_i simultaneously obtains information of "the number of slots in which sector sweep reference signals can be transmitted when the terminals transmit the sector sweep reference signals (the number of terminals that can transmit the sector sweep reference signals)". In the case of FIG. 29, terminal #i labeled 902_i obtains information indicating that "the number of slots in which sector sweep reference signals can be transmitted when the terminals transmit the sector sweep reference signals (the number of terminals that can transmit the sector sweep reference signals)" is four.

In this case, terminal #i labeled 902_i obtains, for example, any one of the values "0", "1", "2", and "3" using a random number. For example, terminal #i labeled 902_i obtains "j" using a random number. Note that j is any one of the values "0", "1", "2", and "3". In this case, terminal #i labeled 902_i transmits sector sweep reference signal x3601_i using terminal "sector sweep reference signal" ("j" + 1)-th transmission period 1301_("j" + 1) in FIG. 29.

Note that sector sweep reference signal 3601_i includes information of the "transmission panel antenna and parameter" with high reception quality obtained by terminal #i labeled 902_i, that is, information of "transmission panel antenna ai and parameter bi". This will be described later.

In the manner described above, a collision of the sector sweep reference signals transmitted by the respective terminals can be reduced. This produces the effect that the base station can receive more sector sweep reference signals and can communicate with more terminals.

A description will be given of a configuration of sector sweep reference signal x3601_i transmitted by terminal #i labeled 902_i described with reference to FIG. 29. To simplify the description, terminal #i labeled 902_i has the configuration in FIG. 1A, 1B, or 1C. In addition, terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

FIG. 27 illustrates examples of sector sweep reference signal x3401_i transmitted by terminal #i labeled 902_i. Note that the horizontal axis represents time in FIG. 27.

For example, terminal #i labeled 902_i with the configuration in FIG. 1A, 1B, or 1C transmits sector sweep reference signal x3401_1 in transmission panel antenna 1 from transmission panel antenna 1 labeled 106_1.

That is, as illustrated in FIG. 27, terminal #i labeled 902_i with the configuration in FIG. 1A, 1B, or 1C transmits sector sweep reference signal x3401_xi in transmission panel antenna xi from transmission panel antenna xi labeled 106_xi. Note that xi is an integer from 1 to M (both inclusive).

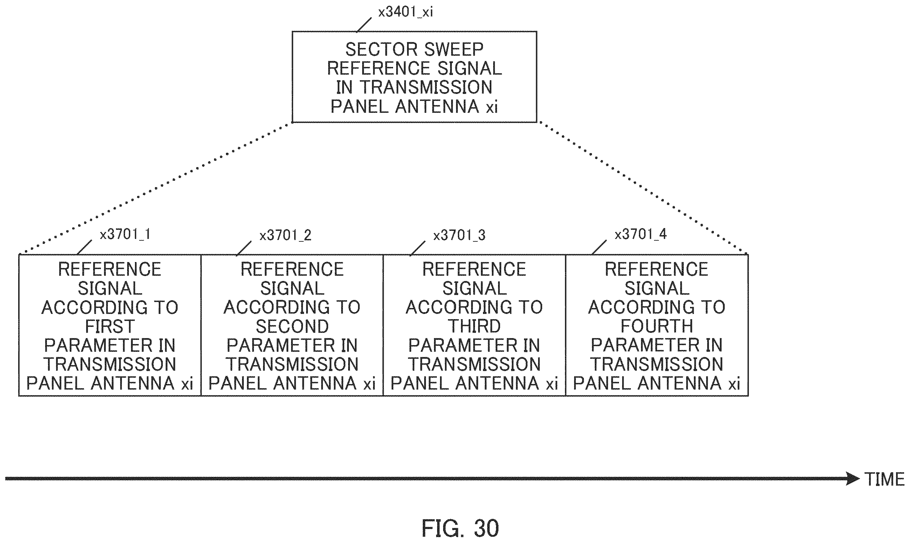

FIG. 30 illustrates an exemplary configuration of "sector sweep reference signal x3401_xi in transmission panel antenna xi" in FIG. 27. Note that the horizontal axis represents time in FIG. 30.

For example, terminal #i labeled 902_i with the configuration in FIG. 1A, 1B, or 1C includes the configuration in FIG. 3 as transmission panel antenna xi labeled 106_xi.

A description will be given of "reference signal x3701_1 according to first parameter in transmission panel antenna xi".

When terminal #i labeled 902_i transmits "reference signal x3701_1 according to first parameter in transmission panel antenna xi" illustrated in FIG. 30, terminal #i labeled 902_i sets the multiplication coefficient in multiplier 304_1 in transmission panel antenna xi labeled 106_xi as w1(xi, 1). When first transmission signal 303_1 of "reference signal x3701_1 according to first parameter in transmission panel antenna xi" is tx1ref1(t), multiplier 304_1 obtains tx1ref1(t) × w1(xi, 1). Then, terminal #i labeled 902_i transmits tx1ref1(t) × w1(xi, 1) from antenna 306_1 in FIG. 3. Note that t represents time.

When terminal #i labeled 902_i transmits "reference signal x3701_1 according to first parameter in transmission panel antenna xi" illustrated in FIG. 30, terminal #i labeled 902_i sets the multiplication coefficient in multiplier 304_2 in transmission panel antenna xi labeled 106_xi as w2(xi, 1). When second transmission signal 303_2 of "reference signal x3701_1 according to first parameter in transmission panel antenna xi" is tx2ref1(t), multiplier 304_2 obtains tx2ref1(t) × w2(xi, 1). Then, terminal #i labeled 902_i transmits tx2ref1(t) × w2(xi, 1) from antenna 306_2 in FIG. 3.

When terminal #i labeled 902_i transmits "reference signal x3701_1 according to first parameter in transmission panel antenna xi" illustrated in FIG. 30, terminal #i labeled 902_i sets the multiplication coefficient in multiplier 304_3 in transmission panel antenna xi labeled 106_xi as w3(xi, 1). When third transmission signal 303_3 of "reference signal x3701_1 according to first parameter in transmission panel antenna xi" is tx3ref1(t), multiplier 304_3 obtains tx3ref1(t) × w3(xi, 1). Then, terminal #i labeled 902_i transmits tx3ref1(t) × w3(xi, 1) from antenna 306_3 in FIG. 3.

When terminal #i labeled 902_i transmits "reference signal x3701_1 according to first parameter in transmission panel antenna xi" illustrated in FIG. 30, terminal #i labeled 902_i sets the multiplication coefficient in multiplier 304_4 in transmission panel antenna xi labeled 106_xi as w4(xi, 1). When fourth transmission signal 303_4 of "reference signal x3701_1 according to first parameter in transmission panel antenna xi" is tx4ref1(t), multiplier 304_4 obtains tx4ref1(t) × w4(xi, 1). Then, terminal #i labeled 902_i transmits tx4ref1(t) × w4(xi, 1) from antenna 306_4 in FIG. 3.

A description will be given of "reference signal 3701_j according to j-th parameter in transmission panel antenna xi".

When terminal #i labeled 902_i transmits "reference signal x3701_j according to j-th parameter in transmission panel antenna xi" illustrated in FIG. 30, terminal #i labeled 902_i sets the multiplication coefficient in multiplier 304_1 in transmission panel antenna xi labeled 106_xi as w1(xi, j). When first transmission signal 303_1 of "reference signal x3701_j according to j-th parameter in transmission panel antenna xi" is tx1refj(t), multiplier 304_1 obtains tx1refj(t) × w1(xi, j). Then, terminal #i labeled 902_i transmits tx1refj(t) × w1(xi, j) from antenna 306_1 in FIG. 3. Note that t represents time.

When terminal #i labeled 902_i transmits "reference signal x3701_j according to j-th parameter in transmission panel antenna xi" illustrated in FIG. 30, terminal #i labeled 902_i sets the multiplication coefficient in multiplier 304_2 in transmission panel antenna xi labeled 106_xi as w2(xi, j). When second transmission signal 303_2 of "reference signal x3701_j according to j-th parameter in transmission panel antenna xi" is tx2refj(t), multiplier 304_2 obtains tx2refj(t) × w2(xi, j). Then, terminal #i labeled 902_i transmits tx2refj(t) × w2(xi, j) from antenna 306_2 in FIG. 3.

When terminal #i labeled 902_i transmits "reference signal x3701_j according to j-th parameter in transmission panel antenna xi" illustrated in FIG. 30, terminal #i labeled 902_i sets the multiplication coefficient in multiplier 304_3 in transmission panel antenna xi labeled 106_xi as w3(xi, j). When third transmission signal 303_3 of "reference signal x3701_j according to j-th parameter in transmission panel antenna xi" is tx3refj(t), multiplier 304_3 obtains tx3refj(t) × w3(xi, j). Then, terminal #i labeled 902_i transmits tx3refj(t) × w3(xi, j) from antenna 306_3 in FIG. 3.

When terminal #i labeled 902_i transmits "reference signal x3701_j according to j-th parameter in transmission panel antenna xi" illustrated in FIG. 30, terminal #i labeled 902_i sets the multiplication coefficient in multiplier 304_4 in transmission panel antenna xi labeled 106_xi as w4(xi, j). When fourth transmission signal 303_4 of "reference signal x3701_j according to j-th parameter in transmission panel antenna xi" is tx4refj(t), multiplier 304_4 obtains tx4refj(t) × w4(xi, j). Then, terminal #i labeled 902_i transmits tx4refj(t) × w4(xi, j) from antenna 306_4 in FIG. 3.

Note that j is an integer from 1 to 4 (both inclusive) in the case of FIG. 30. The number Z of parameter changes is four in FIG. 30, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 27 and 30, when terminal #i labeled 902_i transmits "sector sweep reference signal x3401_xi in transmission panel antenna xi", "reference signal x3701_j according to j-th parameter in transmission panel antenna xi" includes, for example, the following information:

· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal x3401_1 in transmission panel antenna 1", "sector sweep reference signal x3401_2 in transmission panel antenna 2", ..., "sector sweep reference signal x3401_M in transmission panel antenna M" in FIG. 27.

In addition, terminal #i labeled 902_i transmits the "information of the "transmission panel antenna and parameter" of base station #1 labeled 901_1 with high reception quality" in "reference signal x3701_1 according to first parameter in transmission panel antenna xi", "reference signal x3701_2 according to second parameter in transmission panel antenna xi", "reference signal x3701_3 according to third parameter in transmission panel antenna xi", and "reference signal x3701_4 according to fourth parameter in transmission panel antenna xi" in FIG. 30 in ""sector sweep reference signal x3401_1 in transmission panel antenna 1", "sector sweep reference signal x3401_2 in transmission panel antenna 2", ..., "sector sweep reference signal x3401_M in transmission panel antenna M" in FIG. 27".

In this case, base station #1 labeled 901_1 is more likely to receive, even with an omnidirectional antenna for example, any of ""sector sweep reference signal x3401_1 in transmission panel antenna 1", "sector sweep reference signal x3401_2 in transmission panel antenna 2", ..., "sector sweep reference signal x3401_M in transmission panel antenna M" in FIG. 27" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 29, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 27 and 30, when terminal #i labeled 902_i transmits "sector sweep reference signal x3401_xi in transmission panel antenna xi", "reference signal x3701_j according to j-th parameter in transmission panel antenna xi" includes, for example, the following information:

· Identification number (ID) of the transmission panel antenna, which corresponds to i here, for example; and

· Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Note that "reference signal 3701_j according to j-th parameter in transmission panel antenna xi" may include other information.

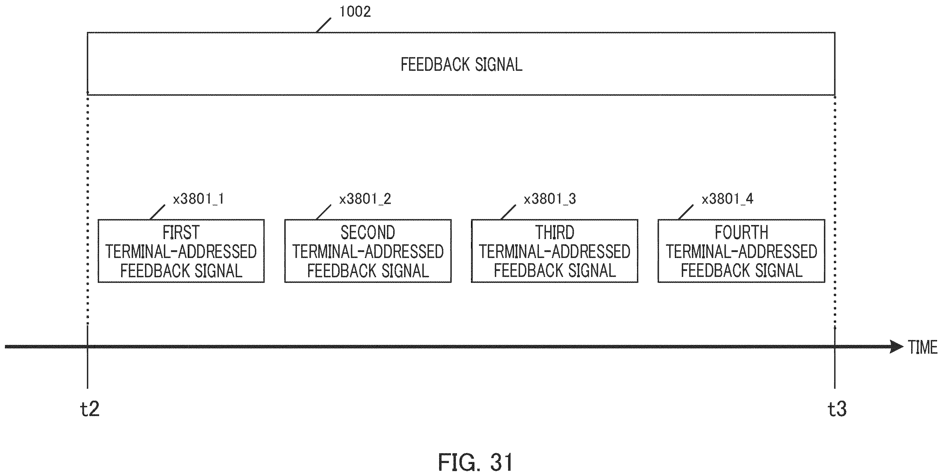

FIG. 31 illustrates an exemplary configuration of feedback signal 1002 that is present in the time period from t2 to t3 in FIG. 10 and transmitted by base station #1 labeled 901_1. Note that the horizontal axis represents time in FIG. 31. In this example, since "the number of slots in which sector sweep reference signals can be transmitted when the terminals transmit the sector sweep reference signals (the number of terminals that can transmit the sector sweep reference signals)" is four, there are four terminal-addressed feedback signals, such as first terminal-addressed feedback signal x3801_1, second terminal-addressed feedback signal x3801_2, third terminal-addressed feedback signal x3801_3, and fourth terminal-addressed feedback signal x3801_4, for feedback signal 1002 as illustrated in FIG. 31. Note that, in a case where "the number of slots in which sector sweep reference signals can be transmitted when the terminals transmit the sector sweep reference signals (the number of terminals that can transmit the sector sweep reference signals)" is S2, for example, S2 terminal feedback signals may be configured to be present for feedback signal 1002, where Ω is an integer equal to or greater than 1 or an integer equal to or greater than 2.

As in FIG. 29, when terminal #1 labeled 902_1 transmits sector sweep reference signal x3601_1 and terminal #2 labeled 902_2 transmits sector sweep reference signal x3601_2, for example, base station #1 labeled 901_1 transmits a feedback signal to terminal #1 labeled 902_1 using first terminal-addressed feedback signal x3801_1 and transmits a feedback signal to terminal #2 labeled 902_2 using third terminal-addressed feedback signal x3801_3.

At this time, first terminal-addressed feedback signal x3801_1 includes, for example, information indicating that communication with terminal #1 labeled 902_1 is available (or indicating that data-symbol-included frame 1003 in FIG. 10 includes a symbol addressed to terminal #1 labeled 902_1).

Third terminal-addressed feedback signal 3801_3 includes, for example, information indicating that communication with terminal #2 labeled 902_2 is available (or indicating that data-symbol-included frame 1003 in FIG. 10 includes a symbol addressed to terminal #2 labeled 902_2).

Note that base station #1 labeled 901_1 selects a transmission panel antenna and sets a parameter of beamforming based on the "information of the "transmission panel antenna and parameter" of base station #1 labeled 901_1 with high reception quality" transmitted by terminal #1 labeled 902_1, and base station #1 labeled 901_1 then transmits first terminal-addressed feedback signal x3801_1.

Likewise, base station #1 labeled 901_1 selects a transmission panel antenna and sets a parameter of beamforming based on the "information of the "transmission panel antenna and parameter" of base station #1 labeled 901_1 with high reception quality" transmitted by terminal #2 labeled 902_2, and base station #1 labeled 901_1 then transmits third terminal-addressed feedback signal x3801_3.

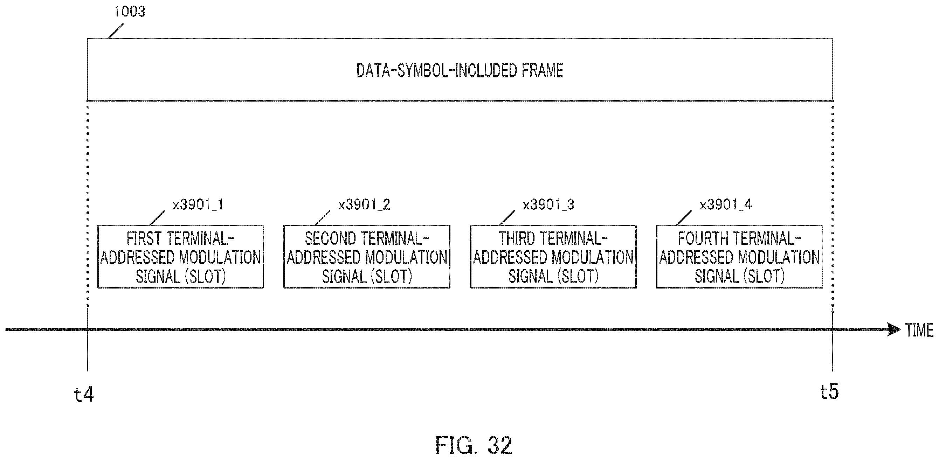

FIG. 32 illustrates an exemplary configuration of data-symbol-included frame 1003 that is present in the time period from t4 to t5 in FIG. 10 and transmitted by base station #1 labeled 901_1. Note that the horizontal axis represents time in FIG. 32. In this example, since "the number of slots in which sector sweep reference signals can be transmitted when the terminals transmit the sector sweep reference signals (the number of terminals that can transmit the sector sweep reference signals)" is four, there are four terminal-addressed modulation signals (slots), such as first terminal-addressed modulation signal (first terminal-addressed slot) x3901_1, second terminal-addressed modulation signal (second terminal-addressed slot) x3901_2, third terminal-addressed modulation signal (third terminal-addressed slot) x3901_3, and fourth terminal-addressed modulation signal (fourth terminal-addressed slot) x3901_4, for data-symbol-included frame 1003 as illustrated in FIG. 17. Note that, in a case where "the number of slots in which sector sweep reference signals can be transmitted when the terminals transmit the sector sweep reference signals (the number of terminals that can transmit the sector sweep reference signals)" is S2, for example, S2 terminal-addressed modulation signals (slots) may be configured to be present for data-symbol-included frame 1003, where Ω is an integer equal to or greater than 1 or an integer equal to or greater than 2.

As in FIG. 29, when terminal #1 labeled 902_1 transmits sector sweep reference signal x3601_1 and terminal #2 labeled 902_2 transmits sector sweep reference signal x3601_2, for example, base station #1 labeled 901_1 transmits a modulation signal (slot) to terminal #1 labeled 902_1 using first terminal-addressed modulation signal (first terminal-addressed slot) x3901_1 and transmits a modulation signal (slot) to terminal #2 labeled 902_2 using third terminal-addressed modulation signal (first terminal-addressed slot) x3901_3.

At this time, first terminal-addressed modulation signal (first terminal-addressed slot) x3901_1 includes, for example, a data symbol (data/information) addressed to terminal #1 labeled 902_1.

Third terminal-addressed modulation signal (third terminal-addressed slot) x3901_3 includes, for example, a data symbol (data/information) addressed to terminal #2 labeled 902_2.

Note that base station #1 labeled 901_1 selects a transmission panel antenna and sets a parameter of beamforming based on the "information of the "transmission panel antenna and parameter" of base station #1 labeled 901_1 with high reception quality" transmitted by terminal #1 labeled 902_1, and base station #1 labeled 901_1 then transmits first terminal-addressed modulation signal (first terminal-addressed slot) x3901_1.

Likewise, base station #1 labeled 901_1 selects a transmission panel antenna and sets a parameter of beamforming based on the "information of the "transmission panel antenna and parameter" of base station #1 labeled 901_1 with high reception quality" transmitted by terminal #2 labeled 902_2, and base station #1 labeled 901_1 then transmits third terminal-addressed modulation signal (third terminal-addressed slot) x3901_3.

Note that, in FIG. 31, "base station #1 labeled 901_1 may estimate the "transmission panel antenna and parameter" of terminal #1 labeled 902_1 with high reception quality in receiving "sector sweep reference signal 3601_1 transmitted by terminal #1 labeled 902_1", and the estimated information" may be included in first terminal-addressed feedback signal x3801_1.

Terminal #1 labeled 902_1 selects a transmission panel antenna and determines a beamforming method based on the information of "transmission panel antenna and parameter" of terminal #1 labeled 902_1 with high reception quality obtained from base station #1 labeled 901_1, and terminal #1 labeled 902_1 then transmits a symbol, a frame, and/or a modulation signal to base station #1 labeled 901_1. This produces the effect of enhancing data reception quality in base station #1 labeled 901_1.

Further, in FIG. 31, "base station #1 labeled 901_1 may estimate the "transmission panel antenna and parameter" of terminal #2 labeled 902_2 with high reception quality in receiving "sector sweep reference signal x3601_2 transmitted by terminal #2 labeled 902_2", and the estimated information" may be included in third terminal-addressed feedback signal x3801_3.

Terminal #2 labeled 902_2 selects a transmission panel antenna and determines a beamforming method based on the information of "transmission panel antenna and parameter" of terminal #2 labeled 902_2 with high reception quality obtained from base station #2 labeled 901_1, and terminal #2 labeled 902_2 then transmits a symbol, a frame, and/or a modulation signal to base station #1 labeled 901_1. This produces the effect of enhancing data reception quality in base station #1 labeled 901_1.

Incidentally, in the time period from t3 to t4, terminals, which are terminal #1 labeled 902_1 and terminal #2 labeled 902_2 in the above description, may transmit, to base station #1 labeled 901_1, modulation signals including information indicating successful reception of a signal from base station #1 labeled 901_1, such as acknowledgement (ACK).

Note that, first terminal-addressed modulation signal (first terminal-addressed slot) x3901_1 in FIG. 32 may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

Likewise, second terminal-addressed modulation signal (second terminal-addressed slot) x3901_2, third terminal-addressed modulation signal (third terminal-addressed slot) x3901_3, and fourth terminal-addressed modulation signal (fourth terminal-addressed slot) x3901_4 may include, in addition to the data symbol, a "reference signal such as DMRS, PTRS, or SRS", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the MCS, and the like.

FIG. 18 illustrates an exemplary state where base station #1 labeled 901_1 and "terminal #1 labeled 902_1, terminal #2 labeled 902_2, and terminal #3 labeled 902_3" communicate with each other as illustrated in FIG. 26. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, and terminal #3 labeled 902_3". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, and terminal #3 labeled 902_3" transmits sector sweep reference signal 1851_1. Note that this has already been described with reference to, for example, FIGS. 13, 29, etc., and the description thereof will be thus omitted.

Base station #1 labeled 901_1 transmits feedback signal 1802_1. Note that this has already been described with reference to FIG. 31, and the description thereof will be thus omitted.

After that, base station #1 labeled 901_1 transmits "data-symbol-included frame 1803_1". Note that this has already been described with reference to FIG. 32, and the description thereof will be thus omitted. (Hence, "data-symbol-included frame 1803_1" is considered to be a frame for downlink, for example).

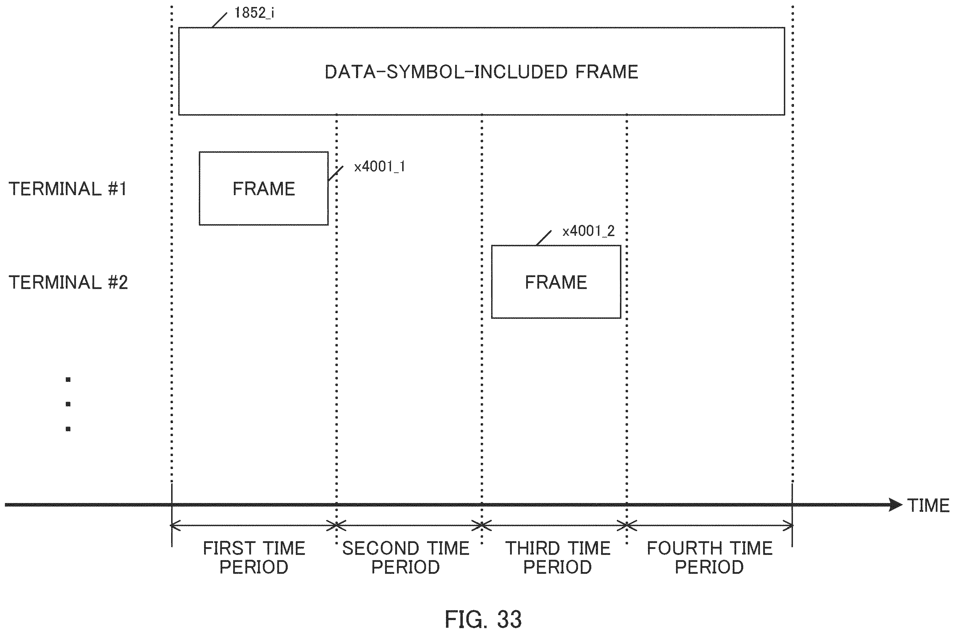

Then, the terminal such as "terminal #1 labeled 902_1, terminal #2 labeled 902_2, and terminal #3 labeled 902_3" transmits "data-symbol-included frame 1852_1". Note that a configuration of the frame will be described later with reference to FIG. 33. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIG. 32.

Then, the terminal such as "terminal #1 labeled 902_1, terminal #2 labeled 902_2, and terminal #3 labeled 902_3" transmits "data-symbol-included frame 1852_2". Note that a configuration of the frame will be described later with reference to FIG. 33.

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, and terminal #3 labeled 902_3" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of "terminal #1 labeled 902_1, terminal #2 labeled 902_2, and terminal #3 labeled 902_3", and it is a temporal continuation from the modulation signal transmission state of "terminal #1 labeled 902_1, terminal #2 labeled 902_2, and terminal #3 labeled 902_3" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_2" is as described with reference to FIG. 32.

The terminal such as "terminal #1 labeled 902_1, terminal #2 labeled 902_2, and terminal #3 labeled 902_3" transmits "data-symbol-included frame 1852_3". Note that a configuration of the frame will be described later with reference to FIG. 33.

Next, base station #1 labeled 901_1 transmits sector sweep reference signal 1801_2. Note that this has already been described with reference to FIG. 10, and the description thereof will be thus omitted.

Then, the terminal such as "terminal #1 labeled 902_1, terminal #2 labeled 902_2, and terminal #3 labeled 902_3" transmits sector sweep reference signal 1851_2. Note that this has already been described with reference to, for example, FIGS. 13, 29, etc., and the description thereof will be thus omitted.

Base station #1 labeled 901_1 transmits feedback signal 1802_2. Note that this has already been described with reference to FIG. 31, and the description thereof will be thus omitted.

After that, base station #1 labeled 901_1 transmits "data-symbol-included frame 1803_4". Note that this has already been described with reference to FIG. 32, and the description thereof will be thus omitted.

Then, the terminal such as "terminal #1 labeled 902_1, terminal #2 labeled 902_2, and terminal #3 labeled 902_3" transmits "data-symbol-included frame 1852_4". Note that a configuration of the frame will be described later with reference to FIG. 33.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, and terminal #3 labeled 902_3"", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, and terminal #3 labeled 902_3"". Base station #1 labeled 901_1 and the terminal then each select a transmission panel antenna to be used and configure transmit beamforming. This produces the effect that the base station and/or the terminal achieve high data reception quality.

Next, a description will be given of an exemplary configuration of "data-symbol-included frame 1852_i" transmitted by the terminal such as "terminal #1 labeled 902_1, terminal #2 labeled 902_2, and terminal #3 labeled 902_3" with reference to FIG. 33. Note that i is an integer equal to or greater than 1, for example, and the horizontal axis represents time in FIG. 33.

As illustrated in FIG. 33, "data-symbol-included frame 1852_i" is composed of a first time period, a second time period, a third time period, and a fourth time period.

Terminal #1 labeled 902_1 transmits frame (including a data symbol) x4001_1 using the first time period, for example. Terminal #2 labeled 902_2 transmits frame (including a data symbol) x4001_2 using the third time period.

As described above, "data-symbol-included frame 1852_i" transmitted by the terminal such as "terminal #1 labeled 902_1, terminal #2 labeled 902_2, and terminal #3 labeled 902_3" is subjected to, for example, time division and transmitted by each terminal, and base station #1 labeled 901_1 receives the frame transmitted by the terminal, thereby preventing interference and achieving high data reception quality.

Note that frame x4001_1 in FIG. 33 may include, in addition to the data symbol, a "reference signal such as DMRS, PTRS, or SRS", a pilot symbol, a pilot signal, a preamble, and a symbol including control information, for example.

Likewise, frames present in the first time period, the second time period, the third time period, and the fourth time period, such as frames x4001_1 and x4001_2, may include, in addition to the data symbol, a "reference signal such as DMRS, PTRS, or SRS", a pilot symbol, a pilot signal, a preamble, and a symbol including control information, for example.

In FIG. 33, a description has been given of a case where the terminals perform time division on the frames to be transmitted, but the terminals may perform frequency division on the frames to be transmitted or perform spatial division using multi user-multiple-input multiple-output (MU-MIMO). Note that the configurations of the terminals and the base station are not limited to the configurations in FIGS. 1A, 1B, and 1C. In addition, the configurations of a transmission panel antenna and a reception panel antenna are not limited to the configurations in FIGS. 3 and 4, and may be any antenna configurations as long as one or more or a plurality of transmission directivities and reception directivities can be generated, for example. Further, signals, frames, etc. are illustrated in FIGS. 10, 13, 18, 19, 27, 28, 29, 30, 31, 32, and 33, but the names thereof are not limited to those in the drawings and the important part is the functions of the signals to be transmitted.

(Embodiment 4)

The embodiments in the present specification, such as Embodiments 1 to 3, have provided a description of methods of transmitting a sector sweep reference signal (e.g., 1001 in FIG. 10, etc.) by a base station, the example of which is base station #1 labeled 901_1 in FIG. 9, etc., and a description of methods of transmitting a sector sweep reference signal by a terminal, the example of which is the terminal labeled 902_i in FIG. 9, etc. In the present embodiment, a description will be given of variations of the "methods of transmitting a sector sweep reference signal by a base station" and the "methods of transmitting a sector sweep reference signal by a terminal".

The methods of transmitting a sector sweep reference signal by a base station have been described with reference to, for example, FIGS. 11, 12, 27, 28, etc.

To be more specific, a sector sweep reference signal is generated based on the identification (ID) of a transmission panel antenna and the ID of beamforming (see FIG. 12).

For example, a base station transmits sector sweep reference signals using transmission panel antenna #1. In this case, the base station transmits sector sweep reference signals as described below using transmission panel antenna #1.

- "(Reference) signal subj ected to processing based on a parameter of beamforming (directivity control) ID 0, which is parameter ID 0, using transmission panel antenna #1"
- "(Reference) signal subjected to processing based on a parameter of beamforming (directivity control) ID 1, which is parameter ID 1, using transmission panel antenna #1"
- "(Reference) signal subj ected to processing based on a parameter of beamforming (directivity control) ID 2, which is parameter ID 2, using transmission panel antenna #1"
- "(Reference) signal subj ected to processing based on a parameter of beamforming (directivity control) ID 3, which is parameter ID 3, using transmission panel antenna #1"

Likewise, the base station transmits sector sweep reference signals using transmission panel antenna #2. In this case, the base station transmits sector sweep reference signals as described below using transmission panel antenna #2.

- "(Reference) signal subj ected to processing based on a parameter of beamforming (directivity control) ID 0, which is parameter ID 0, using transmission panel antenna #2"
- "(Reference) signal subj ected to processing based on a parameter of beamforming (directivity control) ID 1, which is parameter ID 1, using transmission panel antenna #2"
- "(Reference) signal subj ected to processing based on a parameter of beamforming (directivity control) ID 2, which is parameter ID 2, using transmission panel antenna #2"
- "(Reference) signal subj ected to processing based on a parameter of beamforming (directivity control) ID 3, which is parameter ID 3, using transmission panel antenna #2"

That is, the base station transmits sector sweep reference signals using transmission panel antenna #i. Note that i is an integer equal to or greater than 1. In this case, the base station transmits sector sweep reference signals as described below using transmission panel antenna #i.

- "(Reference) signal subj ected to processing based on a parameter of beamforming (directivity control) ID 0, which is parameter ID 0, using transmission panel antenna #i"
- "(Reference) signal subj ected to processing based on a parameter of beamforming (directivity control) ID 1, which is parameter ID 1, using transmission panel antenna #i"
- "(Reference) signal subj ected to processing based on a parameter of beamforming (directivity control) ID 2, which is parameter ID 2, using transmission panel antenna #i"
- "(Reference) signal subj ected to processing based on a parameter of beamforming (directivity control) ID 3, which is parameter ID 3, using transmission panel antenna #i"

In the above, "the ID of a transmission panel antenna and the ID of beamforming (directivity control) of a base station" are distinguished from each other, but the ID may be assigned without distinguishing and the base station may generate and transmit a sector sweep reference signal.

For example, an ID is assigned to "use of beamforming (directivity control) ID 0, which is parameter ID 0, with transmission panel antenna #1", and it is ID b0. An ID is assigned to "use of beamforming (directivity control) ID 1, which is parameter ID 1, with transmission panel antenna #1", and it is ID b1. An ID is assigned to "use of beamforming (directivity control) ID 2, which is parameter ID 2, with transmission panel antenna #1", and it is ID b2. An ID is assigned to "use of beamforming (directivity control) ID 3, which is parameter ID 3, with transmission panel antenna #1", and it is ID b3.

An ID is assigned to "use of beamforming (directivity control) ID 0, which is parameter ID 0, with transmission panel antenna #2", and it is ID b4. An ID is assigned to "use of beamforming (directivity control) ID 1, which is parameter ID 1, with transmission panel antenna #2", and it is ID b5. An ID is assigned to "use of beamforming (directivity control) ID 2, which is parameter ID 2, with transmission panel antenna #2", and it is ID b6. An ID is assigned to "use of beamforming (directivity control) ID 3, which is parameter ID 3, with transmission panel antenna #2", and it is ID b7.

An ID is assigned to "use of beamforming (directivity control) ID 0, which is parameter ID 0, with transmission panel antenna #3", and it is ID b8. An ID is assigned to "use of beamforming (directivity control) ID 1, which is parameter ID 1, with transmission panel antenna #3", and it is ID b9. An ID is assigned to "use of beamforming (directivity control) ID 2, which is parameter ID 2, with transmission panel antenna #3", and it is ID b10. An ID is assigned to "use of beamforming (directivity control) ID 3, which is parameter ID 3, with transmission panel antenna #3", and it is ID b11, and so forth.

Then, the base station transmits, as sector sweep reference signals, a "(reference) signal subjected to processing based on ID b0", a "(reference) signal subjected to processing based on ID b1", a "(reference) signal subjected to processing based on ID b2", a "(reference) signal subjected to processing based on ID b3", a "(reference) signal subjected to processing based on ID b4", a "(reference) signal subjected to processing based on ID b5", a "(reference) signal subjected to processing based on ID b6", a "(reference) signal subjected to processing based on ID b7", a "(reference) signal subjected to processing based on ID b8", a "(reference) signal subjected to processing based on ID b9", a "(reference) signal subjected to processing based on ID b10", a "(reference) signal subjected to processing based on ID b11", and so forth. Note that the above signals may be transmitted in the above order or in a different order.

At this time, the "(reference) signal subjected to processing based on ID bk" transmitted by the base station includes information of ID 6k, where k is an integer equal to or greater than 0. Note that the "(reference) signal subjected to processing based on ID bk" transmitted by the base station may include other information. The examples are described in other embodiments, and the description thereof will be thus omitted (information of a transmission panel antenna may be included).

A terminal then receives the sector sweep reference signals transmitted by the base station and transmits a sector sweep reference signal including information of the ID with high reception quality (e.g., when "ID b3" has high reception quality, the information of "ID b3" is included). Note that the sector sweep reference signal transmitted by a terminal may include other information. The examples are as described in other embodiments. Methods of transmitting the sector sweep reference signal by a terminal are as described in other embodiments and will be described later in the present embodiment.

Atransmission panel antenna (see FIGS. 1A, 1B and 1C) of the base station may include the configuration in FIG. 3. The transmission panel antenna may be composed of a single antenna or a plurality of antennas.

Based on the above, the base station may generate and transmit, for example, sector sweep reference signal 1001 in FIG. 10, etc. in the following manner.

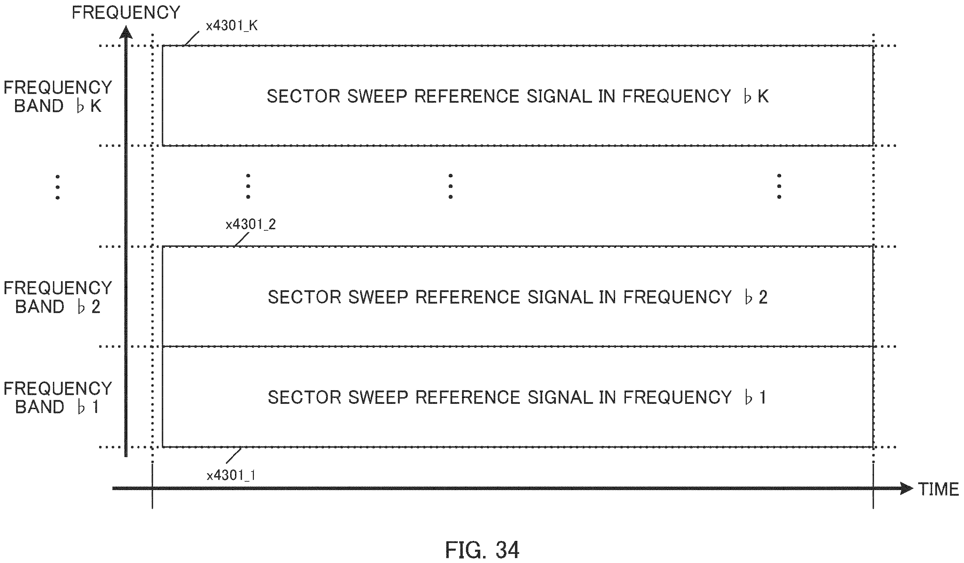

FIG. 34 illustrates an exemplary configuration of sector sweep reference signal 1001, which has been described with reference to FIG. 10 etc., for example, transmitted by the base station. The vertical axis represents frequency and the horizontal axis represents time in FIG. 34. Note that there are frequency band b1, frequency band b2, ..., frequency band bK as in other embodiments.

As illustrated in FIG. 34, sector sweep reference signal 1001 is composed of "sector sweep reference signal x4301_1 in frequency b1", "sector sweep reference signal x4301_2 in frequency b2", ..., "sector sweep reference signal x4301_K in frequency bK".

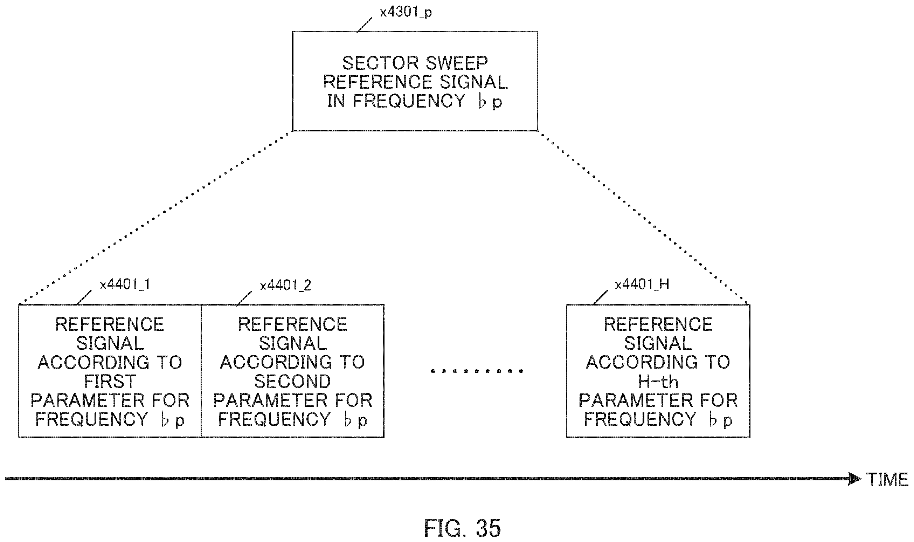

FIG. 35 illustrates an exemplary configuration of "sector sweep reference signal x4301_p in frequency bp" in FIG. 34. Note that the horizontal axis represents time in FIG. 35. Note that p is an integer from 1 to K (both inclusive).

"Sector sweep reference signal x4301_p in frequency bp" is composed of "reference signal x4401_1 according to first parameter for frequency bp", "reference signal x4401_2 according to second parameter for frequency bp", ..., "reference signal x4401_H according to H-th parameter for frequency bp". Note that H is an integer equal to or greater than 1 or an integer equal to or greater than 2.

In a case where the base station has a configuration in FIG. 1A, 1B, or 1C, "reference signal x4401_i according to i-th parameter for frequency bp" is transmitted using one or more transmission panel antennas among transmission panel antenna 1 labeled 106_1 to transmission panel antenna M labeled 106_M. Note that i is an integer from 1 to H (both inclusive).

For example, in a case where the base station has a configuration in FIG. 1A or 1B, "reference signal x4401_i according to i-th parameter for frequency bp" is subjected to signal processing (beamforming (directivity control)) according to the i-th parameter in first processor 104, and first processor 104 generates "reference signal x4401_i according to i-th parameter for frequency bp" to be transmitted using one or more transmission panel antennas among transmission panel antenna 1 labeled 106_1 to transmission panel antenna M labeled 106_M.

"Reference signal x4401_i according to i-th parameter for frequency bp" includes, for example, the following information.

Information on the i-th parameter, that is, a beamforming (directivity control) identification number (ID), which corresponds to i here, for example;

The number of time divisions in which sector sweep reference signals can be transmitted when the terminals transmit the sector sweep reference signals; and

Information on the frequency band and/or frequency bp (information of the number of frequency divisions may also be included).

Other information may also be included, and "reference signal x4401_i according to i-th parameter for frequency bp" may include, for example, information similar to the information included in reference signal 1201_a according to a-th parameter in a transmission panel antenna for frequency bp in FIG. 12. Thus, for operations on "reference signal 1201_a according to a-th parameter in a transmission panel antenna for frequency bp in FIG. 12" in the present specification, the same can be implemented by replacing "reference signal 1201_a according to a-th parameter in a transmission panel antenna for frequency bp in FIG. 12" with "reference signal x4401_i according to i-th parameter for frequency bp".

In addition, "reference signal x4401_i according to i-th parameter for frequency bp" may include information of an antenna (e.g., transmission panel antenna ID, sector antenna information, and antenna port number) used for transmitting "reference signal x4401_i according to i-th parameter for frequency bp".

Note that, although the above description is based on a case of multi-carrier such as OFDM, by way of example, the present disclosure is not limited to this and the same can be implemented in a case of single-carrier. It can be implemented in a single-carrier scheme, for example, considering that there is only frequency b1 in FIG. 34, etc.

Next, a variation on a sector sweep reference signal transmitted by a terminal will be described.

The methods of transmitting a sector sweep reference signal by a terminal have described with reference to, for example, FIGS. 14, 15A, 15B, etc.

To be more specific, a sector sweep reference signal is generated based on the identification (ID) of a transmission panel antenna and the ID of beamforming (see FIGS. 15A and 15B).

For example, a terminal transmits sector sweep reference signals using transmission panel antenna #1. In this case, the terminal transmits the following sector sweep reference signals using transmission panel antenna #1.

- "(Reference) signal subj ected to processing based on a parameter of beamforming (directivity control) ID 0, which is parameter ID 0, using transmission panel antenna #1"
- "(Reference) signal subj ected to processing based on a parameter of beamforming (directivity control) ID 1, which is parameter ID 1, using transmission panel antenna #1"
- "(Reference) signal subj ected to processing based on a parameter of beamforming (directivity control) ID 2, which is parameter ID 2, using transmission panel antenna #1"
- "(Reference) signal subj ected to processing based on a parameter of beamforming (directivity control) ID 3, which is parameter ID 3, using transmission panel antenna #1"

Likewise, the terminal transmits sector sweep reference signals using transmission panel antenna #2. In this case, the terminal transmits the following sector sweep reference signals using transmission panel antenna #2.

- "(Reference) signal subj ected to processing based on a parameter of beamforming (directivity control) ID 0, which is parameter ID 0, using transmission panel antenna #2"
- "(Reference) signal subj ected to processing based on a parameter of beamforming (directivity control) ID 1, which is parameter ID 1, using transmission panel antenna #2"
- "(Reference) signal subj ected to processing based on a parameter of beamforming (directivity control) ID 2, which is parameter ID 2, using transmission panel antenna #2"
- "(Reference) signal subj ected to processing based on a parameter of beamforming (directivity control) ID 3, which is parameter ID 3, using transmission panel antenna #2"

That is, the terminal transmits sector sweep reference signals using transmission panel antenna #i. Note that i is an integer equal to or greater than 1. In this case, the terminal transmits the following sector sweep reference signals using transmission panel antenna #i.

· "(Reference) signal subj ected to processing based on a parameter of beamforming (directivity control) ID 0, which is parameter ID 0, using transmission panel antenna #i"

· "(Reference) signal subj ected to processing based on a parameter of beamforming (directivity control) ID 1, which is parameter ID 1, using transmission panel antenna #i"

· "(Reference) signal subj ected to processing based on a parameter of beamforming (directivity control) ID 2, which is parameter ID 2, using transmission panel antenna #i"

· "(Reference) signal subj ected to processing based on a parameter of beamforming (directivity control) ID 3, which is parameter ID 3, using transmission panel antenna #i"

In the above, "the ID of a transmission panel antenna and the ID of beamforming (directivity control) of a terminal" are distinguished from each other, but the ID may be assigned without distinguishing and the terminal may generate and transmit a sector sweep reference signal.

For example, an ID is assigned to "use of beamforming (directivity control) ID 0, which is parameter ID 0, with transmission panel antenna #1", and it is ID b0. An ID is assigned to "use of beamforming (directivity control) ID 1, which is parameter ID 1, with transmission panel antenna #1", and it is ID b1. An ID is assigned to "use of beamforming (directivity control) ID 2, which is parameter ID 2, with transmission panel antenna #1", and it is ID b2. An ID is assigned to "use of beamforming (directivity control) ID 3, which is parameter ID 3, with transmission panel antenna #1", and it is ID b3.

An ID is assigned to "use of beamforming (directivity control) ID 0, which is parameter ID 0, with transmission panel antenna #2", and it is ID b4. An ID is assigned to "use of beamforming (directivity control) ID 1, which is parameter ID 1, with transmission panel antenna #2", and it is ID b5. An ID is assigned to "use of beamforming (directivity control) ID 2, which is parameter ID 2, with transmission panel antenna #2", and it is ID b6. An ID is assigned to "use of beamforming (directivity control) ID 3, which is parameter ID 3, with transmission panel antenna #2", and it is ID b7.

An ID is assigned to "use of beamforming (directivity control) ID 0, which is parameter ID 0, with transmission panel antenna #3", and it is ID b8. An ID is assigned to "use of beamforming (directivity control) ID 1, which is parameter ID 1, with transmission panel antenna #3", and it is ID b9. An ID is assigned to "use of beamforming (directivity control) ID 2, which is parameter ID 2, with transmission panel antenna #3", and it is ID b10. An ID is assigned to "use of beamforming (directivity control) ID 3, which is parameter ID 3, with transmission panel antenna #3", and it is ID b11, and so forth.

Then, the terminal transmits, as sector sweep reference signals, a "(reference) signal subjected to processing based on ID b0", a "(reference) signal subjected to processing based on ID b1", a "(reference) signal subj ected to processing based on ID b2", a "(reference) signal subjected to processing based on ID b3", a "(reference) signal subjected to processing based on ID b4", a "(reference) signal subj ected to processing based on ID b5", a "(reference) signal subjected to processing based on ID b6", a "(reference) signal subjected to processing based on ID b7", a "(reference) signal subj ected to processing based on ID b8", a "(reference) signal subjected to processing based on ID b9", a "(reference) signal subjected to processing based on ID b10", a "(reference) signal subjected to processing based on ID b11", and so forth. Note that the above signals may be transmitted in the above order or in a different order.

At this time, the "(reference) signal subjected to processing based on ID 6k" transmitted by the terminal includes information of ID 6k, where k is an integer equal to or greater than 0. Note that the "(reference) signal subjected to processing based on ID 6k" transmitted by the terminal may include other information. The examples are described in other embodiments, and the description thereof will be thus omitted (information of a transmission panel antenna may be included).

A base station then receives the sector sweep reference signals transmitted by the terminal and transmits a feedback signal including information of the ID with high reception quality (e.g., when "ID b3" has high reception quality, the information of "ID b3" is included). Note that the feedback signal transmitted by a base station may include other information. The examples are as described in other embodiments. Methods of transmitting the feedback signal by a base station are as described in other embodiments and will be described later in the present embodiment.

A transmission panel antenna (see FIGS. 1A, 1B and 1C) of the terminal may include the configuration in FIG. 3. The transmission panel antenna may be composed of a single antenna or a plurality of antennas.

Based on the above, the terminal may generate and transmit, for example, a terminal sector sweep reference signal in FIG. 13, etc. in the following manner.

FIG. 14 illustrates exemplary assignment of sector sweep reference signals transmitted by the terminals. The description thereof will be omitted since it has already been described.

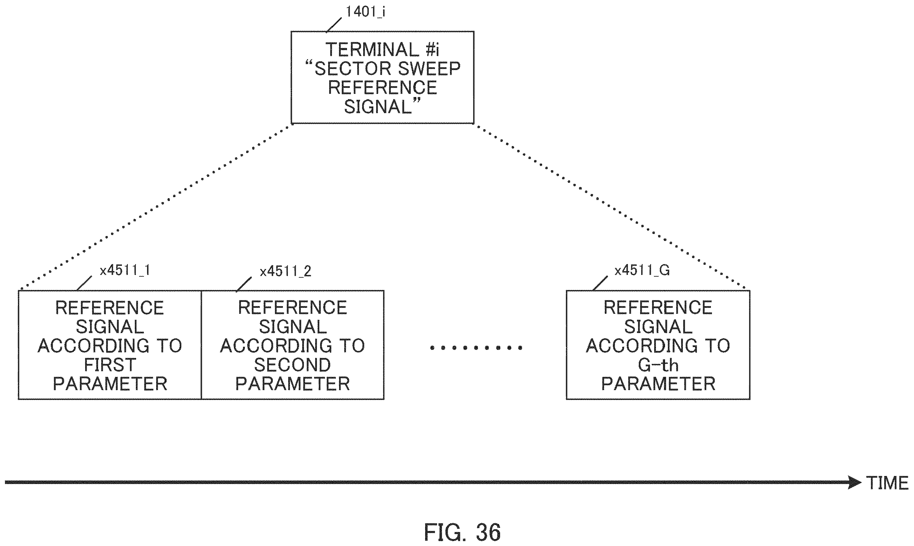

FIG. 36 illustrates an exemplary configuration of terminal #i "sector sweep reference signal" 1401_i in FIG. 14. Terminal #i "sector sweep reference signal" 1401_i is composed of "reference signal x4511_1 according to first parameter", "reference signal x4511_2 according to second parameter", ..., "reference signal x4511_G according to G-th parameter". Note that G is an integer equal to or greater than 1 or an integer equal to or greater than 2.

In a case where terminal #i has a configuration in FIG. 1A, 1B, or 1C, terminal #i "sector sweep reference signal" 1401_i is transmitted using one or more transmission panel antennas among transmission panel antenna 1 labeled 106_1 to transmission panel antenna M labeled 106_M.

For example, in a case where the terminal has a configuration in FIG. 1A or 1B, "reference signal x4511_k according to k-th parameter" is subjected to signal processing (beamforming (directivity control)) according to the k-th parameter in first processor 104, and first processor 104 generates "reference signal x4511_k according to k-th parameter" to be transmitted using one or more transmission panel antennas among transmission panel antenna 1 labeled 106_1 to transmission panel antenna M labeled 106_M. Note that k is an integer from 1 to G (both inclusive).

"Reference signal x4511_k according to k-th parameter" includes, for example, the following information.

· Information on the k-th parameter, that is, a beamforming (directivity control) identification number (ID), for example; and

· Information to be fed back to the base station, for example, information of a frequency (band) with high reception quality, information of a parameter of beamforming (directivity control) with high reception quality, and information of an antenna with high reception quality that have been estimated by the terminal in receiving sector sweep reference signals transmitted by the base station.

Information included in "reference signal x4511 k according to k-th parameter" are as described in other embodiments, including the above-described information.

Thus, for operations on "reference signal 1511_a according to a-th parameter in transmission panel antenna xi in FIG. 15B" in the present specification, the same can be implemented by replacing "reference signal 1511_a according to a-th parameter in transmission panel antenna xi in FIG. 15B" with "reference signal x4511_k according to k-th parameter".

In addition, "reference signal x4511_k according to k-th parameter" may include information of an antenna (e.g., transmission panel antenna ID, sector antenna information, and antenna port number) used for transmitting "reference signal x4511_k according to k-th parameter".

Another example will be described.

A transmission panel antenna (see FIGS. 1A, 1B and 1C) of the terminal may include the configuration in FIG. 3. The transmission panel antenna may be composed of a single antenna or a plurality of antennas.

Based on the above, the terminal may generate and transmit, for example, a terminal sector sweep reference signal in FIG. 23, etc. in the following manner.

FIG. 24 illustrates exemplary assignment of sector sweep reference signals transmitted by the terminals. The description thereof will be omitted since it has already been described.

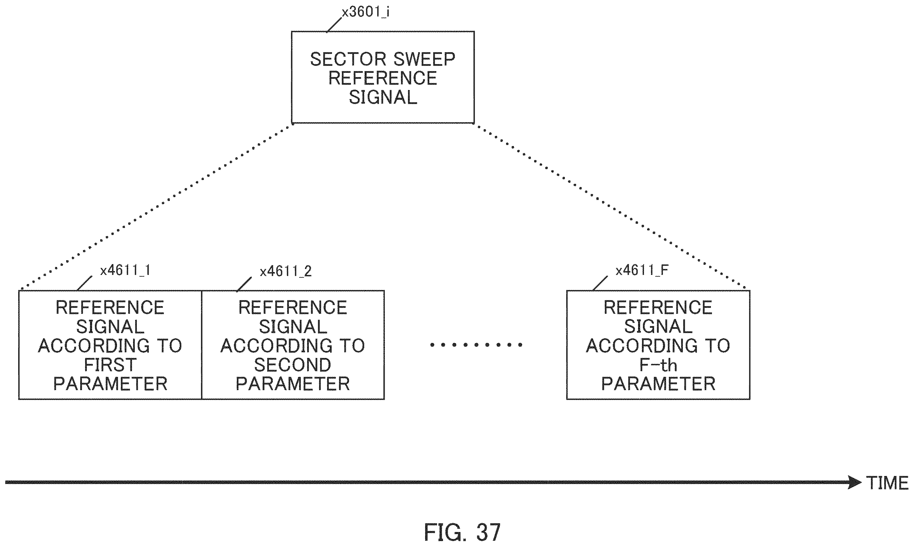

FIG. 37 illustrates an exemplary configuration of sector sweep reference signal x3601_i in FIG. 29. Sector sweep reference signal x3601_i is composed of "reference signal x4611_1 according to first parameter", "reference signal x4611_2 according to second parameter", ..., "reference signal x4611_F according to F-th parameter". Note that F is an integer equal to or greater than 1 or an integer equal to or greater than 2.

In a case where terminal #i has a configuration in FIG. 1A, 1B, or 1C, sector sweep reference signal x3601_i is transmitted using one or more transmission panel antennas among transmission panel antenna 1 labeled 106_1 to transmission panel antenna M labeled 106_M.

For example, in a case where the terminal has a configuration in FIG. 1A or 1B, "reference signal x4611_k according to k-th parameter" is subjected to signal processing (beamforming (directivity control)) according to the k-th parameter in first processor 104, and first processor 104 generates "reference signal x4611_k according to k-th parameter" to be transmitted using one or more transmission panel antennas among transmission panel antenna 1 labeled 106_1 to transmission panel antenna M labeled 106_M. Note that k is an integer from 1 to F (both inclusive).

"Reference signal x4611_k according to k-th parameter" includes, for example, the following information.

· Information on the k-th parameter, that is, a beamforming (directivity control) identification number (ID), for example; and

· Information to be fed back to the base station, for example, information of a frequency (band) with high reception quality, information of a parameter of beamforming (directivity control) with high reception quality, and information of an antenna with high reception quality that have been estimated by the terminal in receiving sector sweep reference signals transmitted by the base station.

Information included in "reference signal x4611_k according to k-th parameter" are as described in other embodiments, including the above-described information.

Thus, for operations on "reference signal 1511_a according to a-th parameter in transmission panel antenna xi in FIG. 15B" in the present specification, the same can be implemented by replacing "reference signal 1511_a according to a-th parameter in transmission panel antenna xi in FIG. 15B" with "reference signal x4611_k according to k-th parameter".

In addition, "reference signal x4611_k according to k-th parameter" may include information of an antenna (e.g., transmission panel antenna ID, sector antenna information, and antenna port number) used for transmitting "reference signal x4611_k according to k-th parameter".

The base station may transmit, to a communication counterpart (terminal), information of a reception panel antenna used for reception of a modulation signal and information of a parameter of beamforming (directivity control) for the reception. In addition, as is the case with the above examples on transmission, an ID may be assigned without distinguishing between the information of a reception panel antenna and the beamforming (directivity control), and the ID information may be transmitted to the communication counterpart (terminal).

Note that, although FIGS. 1A, 1B, and 1C have been used for the configuration example of the base station, the configuration is not limited to these. The configuration of a reception panel antenna is not limited to the configuration in FIG. 4 either, and the reception panel antenna may be composed of a single antenna or a plurality of antennas.

At this time, the beamforming (directivity control) for reception may be performed using one or more reception panel antennas (one or more reception antennas). Then, information of a parameter of the beamforming (directivity control) used for the reception may be transmitted to a communication counterpart (terminal).

The terminal may transmit, to a communication counterpart (base station), information of a reception panel antenna used for reception of a modulation signal and information of a parameter of beamforming (directivity control) for the reception. In addition, as is the case with the above examples on transmission, an ID may be assigned without distinguishing between the information of a reception panel antenna and the beamforming (directivity control), and the ID information may be transmitted to the communication counterpart (base station).

Note that, although FIGS. 1A, 1B, and 1C have been used for the configuration example of the terminal, the configuration is not limited to these. The configuration of a reception panel antenna is not limited to the configuration in FIG. 4 either, and the reception panel antenna may be composed of a single antenna or a plurality of antennas.

At this time, the beamforming (directivity control) for reception may be performed using one or more reception panel antennas (one or more reception antennas). Then, information of a parameter of the beamforming (directivity control) used for the reception may be transmitted to a communication counterpart (base station).

Note that a description has been given of examples of transmission beamforming by a base station, reception beamforming by the base station, transmission beamforming by a terminal, and reception beamforming by the terminal using Embodiment 1 to Embodiment 4, but the implementation method is not limited to these examples. For example, the base station may use either a multi-carrier scheme such as OFDM or a single-carrier scheme, and the base station may support both the multicarrier scheme such as OFDM and the single-carrier scheme. Likewise, the terminal may use either a multicarrier scheme such as OFDM or a single-carrier scheme, and the terminal may support both the multicarrier scheme such as OFDM and the single-carrier scheme.

(Embodiment 5)

In some cases, radio systems using different radio communication schemes share "a licensed band and/or an unlicensed band". For example, the NR system in a frequency band from 52.6 GHz to 71 GHz (both inclusive) and a radio system of IEEE 802.11ad/ay sometimes share "a licensed band and/or an unlicensed band". A description will be given of exemplary operations in the case where radio systems using different radio communication schemes share "a licensed band and/or an unlicensed band". Note that operations described in the present embodiment are applicable to a case where a frequency (band) is shared.

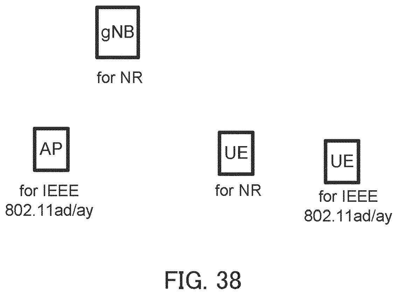

FIG. 38 illustrates an exemplary radio system according to Embodiment 5, etc. In FIG. 38, a radio system of NR and a radio system of IEEE 802. Had and/or IEEE 802. Hay are present in a certain space. In the following, IEEE 802.11ad and/or IEEE 802.11ay are sometimes referred to as the first standard.

The radio system of new radio (NR) includes a base station and a terminal. The base station of NR may be referred to as g Node B (gNB). The terminal of NR may be referred to as user equipment (UE). In the following, the terminal of NR is sometimes referred to as "NR-UE".

The radio system specified in the first standard includes a base station and a terminal. The base station specified in the first standard may be referred to as an access point (AP). The terminal specified in the first standard may be referred to as UE.

The radio system of NR and the radio system specified in the first standard share "a licensed band and/or an unlicensed band". The radio system of NR and the radio system specified in the first standard can occupy the "licensed band and/or unlicensed band" based on Listen Before Talk (LBT), for example.

As a simple method, the radio system of NR and/or the radio system specified in the first standard performs carrier sensing and starts communication when a channel is available, for example. Meanwhile, the radio system of NR and/or the radio system specified in the first standard stands by to start communication when a channel is in use.

Next, one distinctive communication method in the radio system of NR will be described.

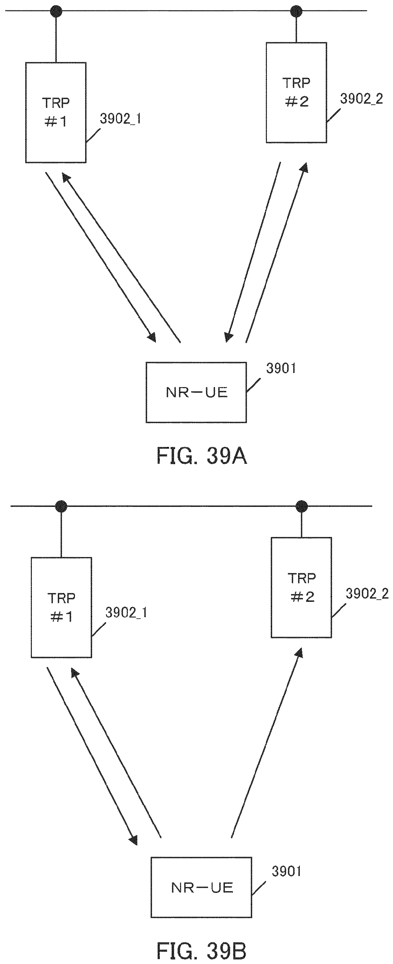

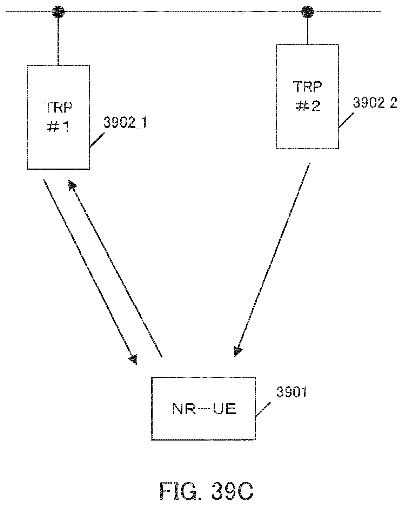

FIGS. 39A, 39B, and 39C illustrate exemplary implementation of multiple TRP (also referred to as multiple TX/RX points, multiple transmission/reception points, or multi-TRP).

In FIG. 39A, TRP #1 labeled 3902_1 and TRP #2 labeled 3902_2 may communicate with each other via a network, for example.

NR-UE 3901 performs radio communication, for example, with TRP #1 labeled 3902_1. NR-UE 3901 also performs radio communication, for example, with TRP #2 labeled 3902_2.

At this time, TRP #1 labeled 3902_1 transmits a modulation signal to NR-UE 3901 for the communication. This modulation signal may include a physical downlink shared channel (PDSCH).

In addition, TRP #2 labeled 3902_2 transmits a modulation signal to NR-UE 3901 for the communication. This modulation signal may include PDSCH.

The "modulation signal transmitted by TRP #1 labeled 3902_1" and the "modulation signal transmitted by TRP #2 labeled 3902_2" may be subjected to any of "spatial multiplexing (spatial division multiplexing (SDM))", "frequency division multiplexing (FDM)", and "time division multiplexing (TDM)".

NR-UE 3901 transmits a modulation signal to TRP #1 labeled 3902_1 for the communication. This modulation signal may include a physical uplink shared channel (PUSCH).

NR-UE 3901 also transmits a modulation signal to TRP #2 labeled 3902_2 for the communication. This modulation signal may include PUSCH.

The "modulation signal transmitted to TRP #1 labeled 3902_1 by NR-UE 3901" and the "modulation signal transmitted to TRP #2 labeled 3902_2 by NR-UE 3901" may be subjected to any of "spatial multiplexing (spatial division multiplexing (SDM))", "frequency division multiplexing (FDM)", and "time division multiplexing (TDM)".

FIG. 39B illustrates exemplary multiple TRP different from that in FIG. 39A. In FIG. 39B, TRP #1 labeled 3902_1 and TRP #2 labeled 3902_2 may communicate with each other via a network, for example.

NR-UE 3901 performs radio communication, for example, with TRP #1 labeled 3902_1. NR-UE 3901 also performs radio communication, for example, with TRP #2 labeled 3902_2.

At this time, TRP #1 labeled 3902_1 transmits a modulation signal to NR-UE 3901 for the communication. This modulation signal may include PDSCH.

NR-UE 3901 transmits a modulation signal to TRP #1 labeled 3902_1 for the communication. This modulation signal may include PUSCH.

NR-UE 3901 also transmits a modulation signal to TRP #2 labeled 3902_2 for the communication. This modulation signal may include PUSCH.

The "modulation signal transmitted to TRP #1 labeled 3902_1 by NR-UE 3901" and the "modulation signal transmitted to TRP #2 labeled 3902_2 by NR-UE 3901" may be subjected to any of "spatial multiplexing (spatial division multiplexing (SDM))", "frequency division multiplexing (FDM)", and "time division multiplexing (TDM)".

FIG. 39C illustrates exemplary multiple TRP different from those in FIGS. 39A and 39B. In FIG. 39C, TRP #1 labeled 3902_1 and TRP #2 labeled 3902_2 may communicate with each other via a network, for example.

NR-UE 3901 performs radio communication, for example, with TRP #1 labeled 3902_1. NR-UE 3901 also performs radio communication, for example, with TRP #2 labeled 3902_2.

At this time, TRP #1 labeled 3902_1 transmits a modulation signal to NR-UE 3901 for the communication. This modulation signal may include PDSCH.

In addition, TRP #2 labeled 3902_2 transmits a modulation signal to NR-UE 3901 for the communication. This modulation signal may include PDSCH.

The "modulation signal transmitted by TRP #1 labeled 3902_1" and the "modulation signal transmitted by TRP #2 labeled 3902_2" may be subjected to any of "spatial multiplexing (spatial division multiplexing (SDM))", "frequency division multiplexing (FDM)", and "time division multiplexing (TDM)".

NR-UE 3901 transmits a modulation signal to TRP #1 labeled 3902_1 for the communication. This modulation signal may include PUSCH.

Note that, although FIGS. 39A, 39B, and 39C have been described as exemplary multiple TRP, the present disclosure is not limited to these, and the NR-UE may perform communication with three or more TRPs. In this case, the NR-UE may transmit modulation signals to three or more TRPs, and the NR-UE may receive modulation signals transmitted by three or more TRPs.

Although it is called TRP in FIGS. 39A, 39B, and 39C, the TRP may be a base station, gNB, e Node B (eNB), repeater, etc. The TRP may be other than these examples. This may apply to the other drawings.

A description will be given of the point that the "modulation signal transmitted to TRP #1 labeled 3902_1 by NR-UE 3901" and the "modulation signal transmitted to TRP #2 labeled 3902_2 by NR-UE 3901" are subjected to "spatial multiplexing (spatial division multiplexing (SDM))", "frequency division multiplexing (FDM)", and "time division multiplexing (TDM)".

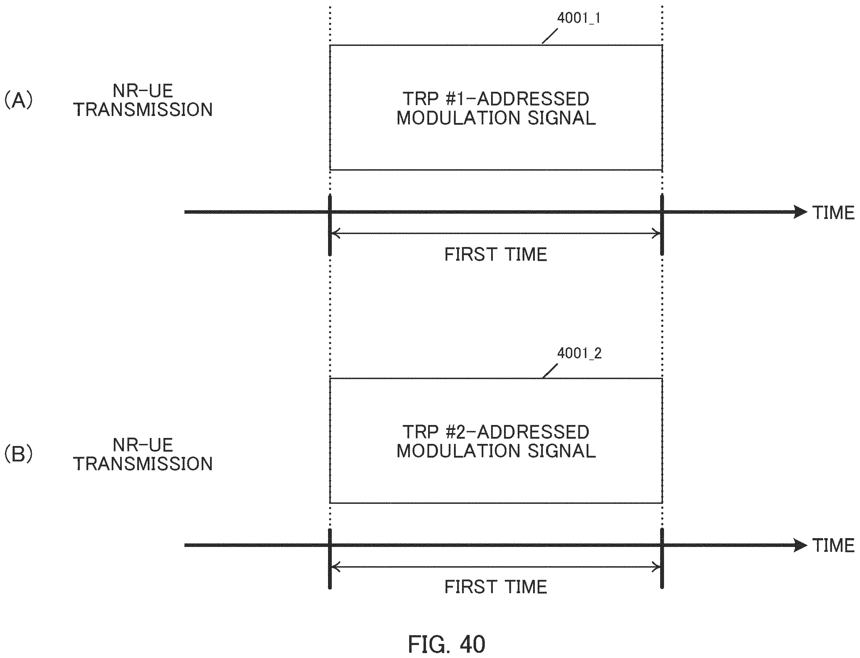

(A) and (B) of FIG. 40 illustrate an example where the "modulation signal transmitted to TRP #1 labeled 3902_1 by NR-UE 3901" and the "modulation signal transmitted to TRP #2 labeled 3902_2 by NR-UE 3901" are subjected to SDM or FDM.

In (A) and (B) of FIG. 40, the horizontal axes represent time. As illustrated in (A) of FIG. 40, NR-UE 3901 transmits TRP #1 labeled 3902_1-addressed modulation signal 4001_1 in the first time.

In addition, as illustrated in (B) of FIG. 40, NR-UE 3901 transmits TRP #2 labeled 3902_2-addressed modulation signal 4001_2 in the first time.

In this case, when a "frequency used by TRP #1-addressed modulation signal 4001_1" and a "frequency used by TRP #2-addressed modulation signal 4001_2" are the same (common), it is SDM. Note that, when the "frequency used by TRP #1-addressed modulation signal 4001_1" and the "frequency used by TRP #2-addressed modulation signal 4001_2" are partially the same (common), it may still be called SDM.

When the "frequency used by TRP #1-addressed modulation signal 4001_1" and the "frequency used by TRP #2-addressed modulation signal 4001_2" are different from each other, it is FDM.

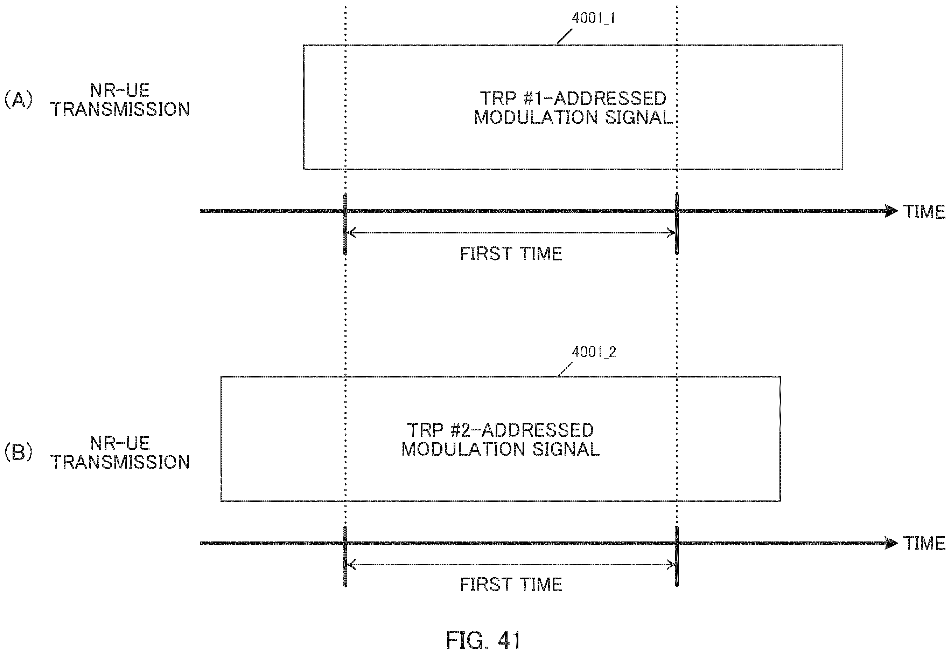

(A) and (B) of FIG. 41 illustrate an example different from (A) and (B) of FIG. 40 where the "modulation signal transmitted to TRP #1 labeled 3902_1 by NR-UE 3901" and the "modulation signal transmitted to TRP #2 labeled 3902_2 by NR-UE 3901" are subjected to SDM or FDM.

In (A) and (B) of FIG. 41, the horizontal axes represent time, and components similar to those in (A) and (B) of FIG. 40 are denoted by the same reference signs. As illustrated in (A) of FIG. 41, NR-UE 3901 transmits TRP #1 labeled 3902_1-addressed modulation signal 4001_1, and TRP #1 labeled 3902_1-addressed modulation signal 4001_1 is present at least in the first time.

In addition, as illustrated in (B) of FIG. 41, NR-UE 3901 transmits TRP #2 labeled 3902_2-addressed modulation signal 4001_2, and TRP #2 labeled 3902_2-addressed modulation signal 4001_2 is present at least in the first time.

In this case, when a "frequency used by TRP #1-addressed modulation signal 4001_1" and a "frequency used by TRP #2-addressed modulation signal 4001_2" are the same (common), it is SDM in the first time. Note that, when the "frequency used by TRP #1-addressed modulation signal 4001_1" and the "frequency used by TRP #2-addressed modulation signal 4001_2" are partially the same (common) in the first time, it may still be called SDM.

When the "frequency used by TRP #1-addressed modulation signal 4001_1" and the "frequency used by TRP #2-addressed modulation signal 4001_2" are different from each other, it is FDM.

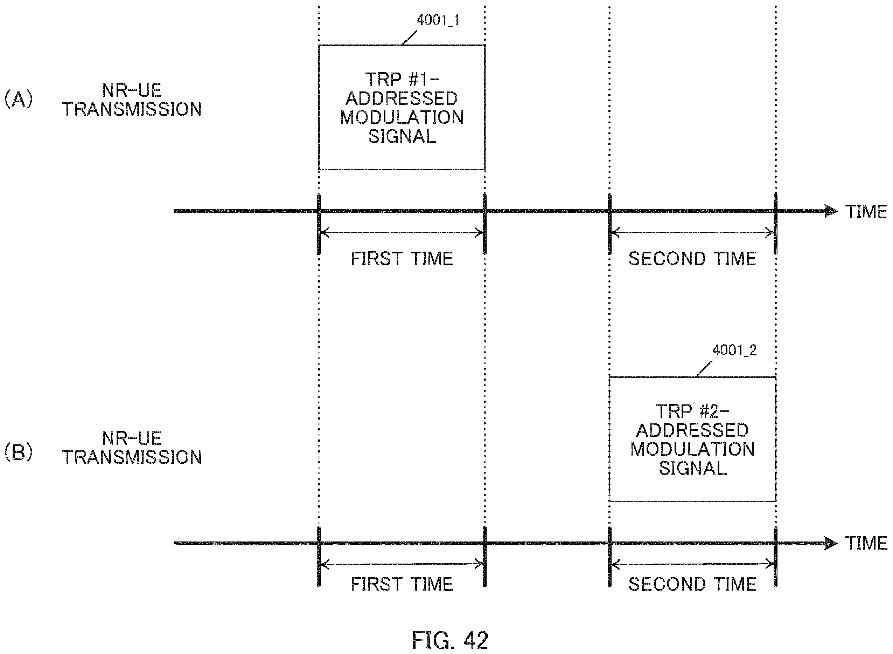

(A) and (B) of FIG. 42 illustrate an example where the "modulation signal transmitted to TRP #1 labeled 3902_1 by NR-UE 3901" and the "modulation signal transmitted to TRP #2 labeled 3902_2 by NR-UE 3901" are subjected to TDM or FDM.

In (A) and (B) of FIG. 42, the horizontal axes represent time, and components similar to those in (A) and (B) of FIG. 40 are denoted by the same reference signs. As illustrated in (A) of FIG. 42, NR-UE 3901 transmits TRP #1 labeled 3902_1-addressed modulation signal 4001_1 in the first time.

In addition, as illustrated in (B) of FIG. 42, NR-UE 3901 transmits TRP #2 labeled 3902_2-addressed modulation signal 4001_2 in the second time.

Note that the first time and the second time are different from each other.

In this case, when a "frequency used by TRP #1-addressed modulation signal 4001_1" and a "frequency used by TRP #2-addressed modulation signal 4001_2" are the same (common), it is TDM. Note that, when the "frequency used by TRP #1-addressed modulation signal 4001_1" and the "frequency used by TRP #2-addressed modulation signal 4001_2" are partially the same (common), it may still be called TDM.

When the "frequency used by TRP #1-addressed modulation signal 4001_1" and the "frequency used by TRP #2-addressed modulation signal 4001_2" are different from each other, it is FDM.

Note that the example of SDM, TDM, and FDM is not limited to the "example in (A) and (B) of FIG. 40", "example in (A) and (B) of FIG. 41", and "example in (A) and (B) of FIG. 42".

SDM such as the "SDM at multiple TRP as in (A) and (B) of FIG. 40" and the "SDM at multiple TRP as in (A) and (B) of FIG. 41" is sometimes referred to as "uplink SDM at multiple TRP" below.

TDM such as the "TDM at multiple TRP as in (A) and (B) of FIG. 42" is sometimes referred to as "uplink TDM at multiple TRP" below.

FDM such as the "FDM at multiple TRP as in (A) and (B) of FIG. 40", the "FDM at multiple TRP as in (A) and (B) of FIG. 41", and the "FDM at multiple TRP as in (A) and (B) of FIG. 42" is sometimes referred to as "uplink FDM at multiple TRP" below.

Next, a description will be given of the point that the "modulation signal transmitted by TRP #1 labeled 3902_1" and the "modulation signal transmitted by TRP #2 labeled 3902_2" are subjected to "spatial multiplexing (spatial division multiplexing (SDM))", "frequency division multiplexing (FDM)", and "time division multiplexing (TDM)".

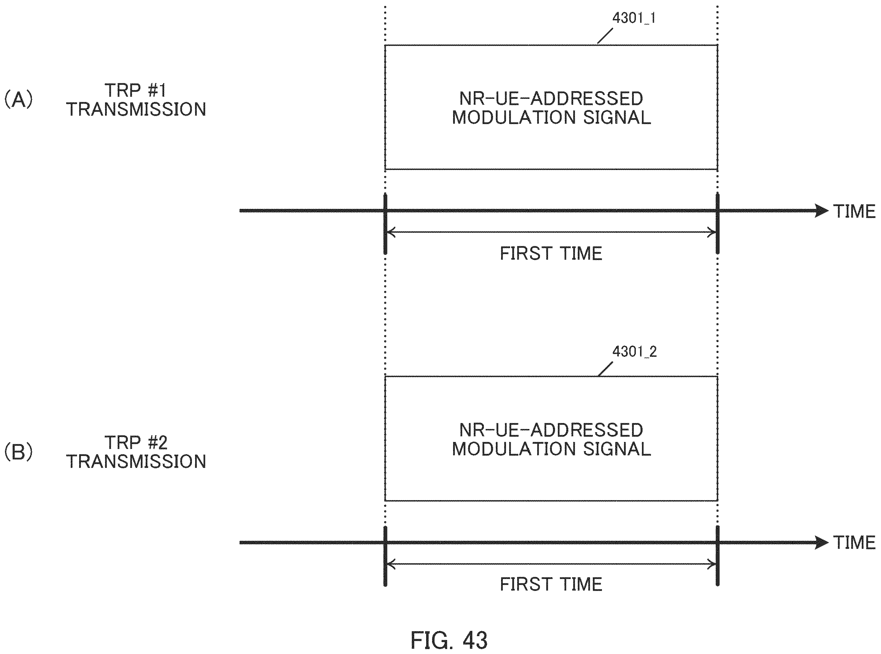

(A) and (B) of FIG. 43 illustrate an example where the "modulation signal transmitted to NR-UE 3901 by TRP #1 labeled 3902_1" and the "modulation signal transmitted to NR-UE 3901 by TRP #2 labeled 3902_2" are subjected to SDM or FDM.

In (A) and (B) of FIG. 43, the horizontal axes represent time. As illustrated in (A) of FIG. 43, TRP #1 labeled 3902_1 transmits NR-UE 3901-addressed modulation signal 4301_1 in the first time.

In addition, as illustrated in (B) of FIG. 43, TRP #2 labeled 3902_2 transmits NR-UE 3901-addressed modulation signal 4301_2 in the first time.

In this case, when a "frequency used by NR-UE-addressed modulation signal 4301_1" and a "frequency used by NR-UE-addressed modulation signal 4301_2" are the same (common), it is SDM. Note that, when the "frequency used by NR-UE-addressed modulation signal 4301_1" and the "frequency used by NR-UE-addressed modulation signal 4301_2" are partially the same (common), it may still be called SDM.

When the "frequency used by NR-UE-addressed modulation signal 4301_1" and the "frequency used by NR-UE-addressed modulation signal 4301_2" are different from each other, it is FDM.

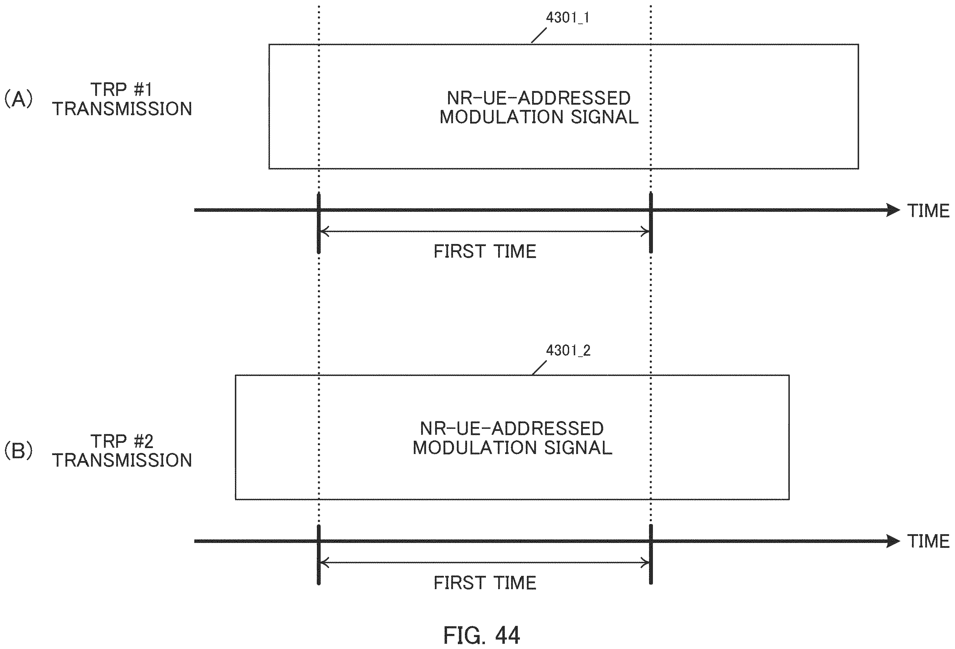

(A) and (B) of FIG. 44 illustrate an example different from (A) and (B) of FIG. 43 where the "modulation signal transmitted to NR-UE 3901 by TRP #1 labeled 3902_1" and the "modulation signal transmitted to NR-UE 3901 by TRP #2 labeled 3902_2" are subjected to SDM or FDM.

In (A) and (B) of FIG. 44, the horizontal axes represent time, and components similar to those in (A) and (B) of FIG. 43 are denoted by the same reference signs. As illustrated in (A) of FIG. 44, TRP #1 labeled 3902_1 transmits NR-UE 3901-addressed modulation signal 4301_1, and NR-UE 3901-addressed modulation signal 4301_1 is present at least in the first time.

In addition, as illustrated in (B) of FIG. 44, TRP #2 labeled 3902_2 transmits NR-UE 3901-addressed modulation signal 4301_2, and NR-UE 3901-addressed modulation signal 4301_2 is present at least in the first time.

In this case, when a "frequency used by NR-UE-addressed modulation signal 4301_1" and a "frequency used by NR-UE-addressed modulation signal 4301_2" are the same (common), it is SDM in the first time. Note that, when the "frequency used by NR-UE-addressed modulation signal 4301_1" and the "frequency used by NR-UE-addressed modulation signal 4301_2" are partially the same (common) in the first time, it may still be called SDM.

When the "frequency used by NR-UE-addressed modulation signal 4301_1" and the "frequency used by NR-UE-addressed modulation signal 4301_2" are different from each other, it is FDM.

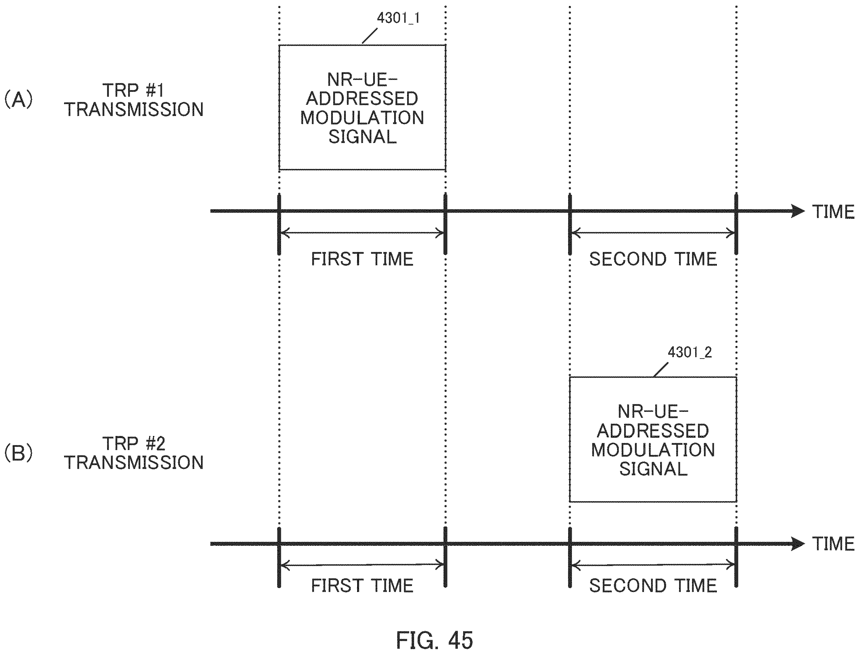

(A) and (B) of FIG. 45 illustrate an example where the "modulation signal transmitted to NR-UE 3901 by TRP #1 labeled 3902_1" and the "modulation signal transmitted to NR-UE 3901 by TRP #2 labeled 3902_2" are subjected to TDM or FDM.

In (A) and (B) of FIG. 45, the horizontal axes represent time, and components similar to those in (A) and (B) of FIG. 43 are denoted by the same reference signs. As illustrated in (A) of FIG. 45, TRP #1 labeled 3902_1 transmits NR-UE 3901-addressed modulation signal 4301_1 in the first time.

In addition, as illustrated in (B) of FIG. 45, TRP #2 labeled 3902_2 transmits NR-UE 3901-addressed modulation signal 4301_2 in the second time.

Note that the first time and the second time are different from each other.

In this case, when a "frequency used by NR-UE-addressed modulation signal 4301_1" and a "frequency used by NR-UE-addressed modulation signal 4301_2" are the same (common), it is TDM. Note that, when the "frequency used by NR-UE-addressed modulation signal 4301_1" and the "frequency used by NR-UE-addressed modulation signal 4301_2" are partially the same (common), it may still be called TDM.

When the "frequency used by NR-UE-addressed modulation signal 4301_1" and the "frequency used by NR-UE-addressed modulation signal 4301_2" are different from each other, it is FDM.

Note that the example of SDM, TDM, and FDM is not limited to the "example in (A) and (B) of FIG. 43", "example in (A) and (B) of FIG. 44", and "example in (A) and (B) of FIG. 45".

SDM such as the "SDM at multiple TRP as in (A) and (B) of FIG. 43" and the "SDM at multiple TRP as in (A) and (B) of FIG. 44" is sometimes referred to as "downlink SDM at multiple TRP" below.

TDM such as the "TDM at multiple TRP as in (A) and (B) of FIG. 45" is sometimes referred to as "downlink TDM at multiple TRP" below.

FDM such as the "FDM at multiple TRP as in (A) and (B) of FIG. 43", the "FDM at multiple TRP as in (A) and (B) of FIG. 44", and the "FDM at multiple TRP as in (A) and (B) of FIG. 45" is sometimes referred to as "downlink FDM at multiple TRP" below.

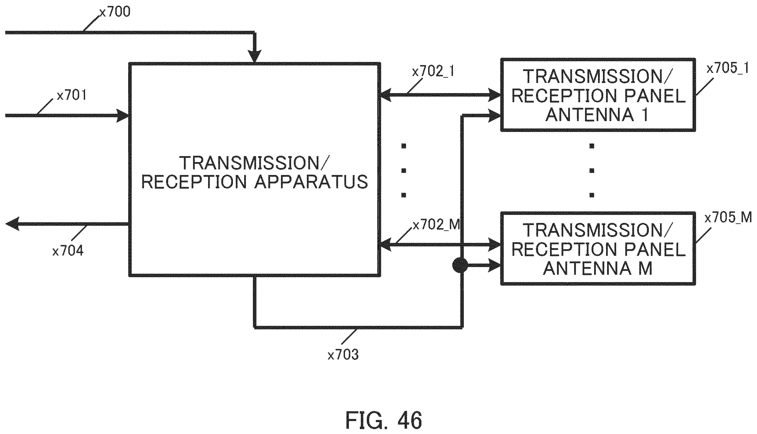

FIG. 46 illustrates an exemplary configuration of the gNB, NR-UE, and TRP, for example. Transmission/reception panel antenna i labeled x705_i in FIG. 46 is an antenna including components in FIGS. 3 and 4, for example. Here, i is an integer from 1 to M (both inclusive), and M is an integer equal to or greater than 1 or an integer equal to or greater than 2. Thus, transmission/reception panel antenna i labeled x705_i can perform transmit beamforming (transmission directivity control) and receive beamforming (reception directivity control).

Note that specific operations of transmit beamforming (transmission directivity control) and receive beamforming (reception directivity control) have already been described, and the apparatus performs transmit beamforming (transmission directivity control) to transmit a sector sweep reference signal, feedback signal, frame, slot, modulation signal, data symbol, and the like.

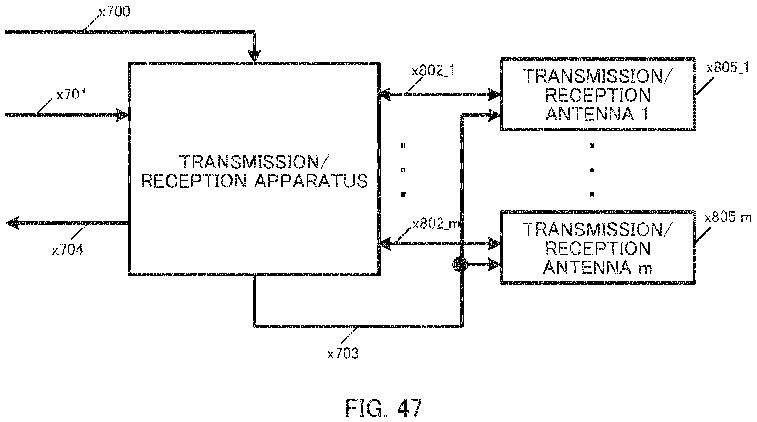

FIG. 47 illustrates another exemplary configuration of the gNB, NR-UE, and TRP. In FIG. 47, the components that operate in the same manner as in FIG. 46 are denoted by the same reference signs, and the descriptions thereof will be omitted.

In a case where the gNB has the configuration in FIG. 47, transmit beamforming (transmission directivity control) and receive beamforming (reception directivity control) are performed using one or more of "transmission/reception antenna 1 labeled x805_1 to transmission/reception antenna m labeled x805_m".

Then, the gNB with the configuration in FIG. 47 performs transmit beamforming (transmission directivity control) and transmits sector sweep reference signals described above.

For example, the gNB with the configuration in FIG. 47 uses a first transmit beam to transmit a first sector sweep reference signal, use a second transmit beam to transmit a second sector sweep reference signal, and so forth.

The gNB then determines "transmit beamforming and receive beamforming" to be used for communication with each terminal, and transmits and receives a feedback signal, frame, slot, modulation signal, data symbol, and the like.

In a case where the NR-UE has the configuration in FIG. 47, transmit beamforming (transmission directivity control) and receive beamforming (reception directivity control) are performed using one or more of "transmission/reception antenna 1 labeled x805_1 to transmission/reception antenna m labeled x805_m".

Then, the NR-UE with the configuration in FIG. 47 performs transmit beamforming (transmission directivity control) and transmits sector sweep reference signals described above.

For example, the NR-UE with the configuration in FIG. 47 uses a first transmit beam to transmit a first sector sweep reference signal, use a second transmit beam to transmit a second sector sweep reference signal, and so forth.

The NR-UE then determines "transmit beamforming and receive beamforming" to be used for communication with the gNB, and transmits and receives a feedback signal, frame, slot, modulation signal, data symbol, and the like.

Note that FIGS. 46 and 47 illustrating "a configuration of the gNB and a configuration of the NR-UE" are merely examples and the configurations are not limited to these.

The transmission/reception panel antenna (x705_1 to x705_M) in FIG. 46 may be composed of a single antenna or a plurality of antennas. In addition, the transmission/reception panel antenna (x705_1 to x705_M) may be composed of a single antenna element or a plurality of antenna elements. A configuration of the transmission/reception panel antenna (x705_1 to x705_M) is not limited to the configuration described in the present embodiment, and may be the configuration described in the other embodiments, for example.

The transmission/reception antenna (x805_1 to x805_m) in FIG. 47 may be composed of a single antenna or a plurality of antennas. In addition, the transmission/reception antenna (x805_1 to x805_m) may be composed of a single antenna element or a plurality of antenna elements. A configuration of the transmission/reception antenna (x805_1 to x805_m) is not limited to the configuration described in the present embodiment.

Note that, in a case where transmission/reception panel antenna i labeled x705_i in FIG. 46 shares, for example, the transmission panel antenna with the configuration in FIG. 3 and the reception panel antenna with the configuration in FIG. 4, transmission antenna 306_1 in FIG. 3 and reception antenna 401_1 in FIG. 4 are shared to configure a single antenna, and multiplier 304_1 and multiplier 403_1 are connected to the shared antenna.

Likewise, transmission antenna 306_2 in FIG. 3 and reception antenna 401_2 in FIG. 4 are shared to configure a single antenna, and multiplier 304_2 and multiplier 403_2 are connected to the shared antenna. In addition, transmission antenna 306_3 in FIG. 3 and reception antenna 401_3 in FIG. 4 are shared to configure a single antenna, and multiplier 304_3 and multiplier 403_3 are connected to the shared antenna. Then, transmission antenna 306_4 in FIG. 3 and reception antenna 401_4 in FIG. 4 are shared to configure a single antenna, and multiplier 304_4 and multiplier 403_4 are connected to the shared antenna.

Regarding Omni-Directional Antenna:

In a case where the gNB and NR-UE have the configuration in FIG. 46, signal reception is performed by using one or more of "transmission/reception panel antenna 1 labeled x705_1 to transmission/reception panel antenna M labeled x705_M".

In each of "transmission/reception panel antenna 1 labeled x705_1 to transmission/reception panel antenna M labeled x705_M", certain receive beamforming (reception directivity control) is configured for antennas composing the transmission/reception panel antenna.

Note that not all antennas composing the transmission/reception panel antenna need to be used for signal reception, and the configuration of receive beamforming (reception directivity control) may or may not be fixed in time.

The method of using the transmission/reception panel antenna in omni-directional reception is not limited to the above example.

In a case where the gNB and NR-UE have the configuration in FIG. 47, signal reception is performed by using one or more of "transmission/reception antenna 1 labeled x805_1 to transmission/reception antenna m labeled x805_m".

In each of "transmission/reception antenna 1 labeled x805_1 to transmission/reception antenna m labeled x805_m", certain receive beamforming (reception directivity control) is configured for antennas composing the transmission/reception antenna.

Note that not all antennas composing the transmission/reception antenna need to be used for signal reception.

The method of using the transmission/reception antenna in omni-directional reception is not limited to the above example.

Regarding Omni-Directional LBT:

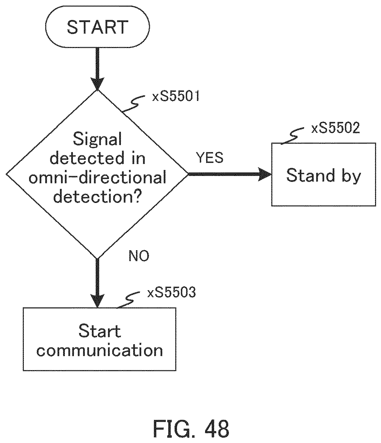

FIG. 48 is a flowchart describing an exemplary operation of the gNB in omni-directional LBT. The gNB determines whether a signal is detected in omni-directional detection (S5501).

When a signal is detected in the omni-directional detection (YES in xS5501), the gNB stands by for communication (xS5502). For example, the gNB determines that another apparatus (another gNB, NR-UE, AP, or first standard-UE) occupies a channel in the "licensed band and/or unlicensed band" and stands by without transmitting a signal.

When no signal is detected (no signal can be detected) in the omni-directional detection (NO in xS5501), the gNB starts communication (xS5503). For example, the gNB determines that another apparatus (another gNB, NR-UE, AP, or first standard-UE) does not occupy a channel in the "licensed band and/or unlicensed band" and starts communication.

As a method of signal detection, the gNB may determine that a signal is present when the power at the time of reception is greater than a threshold and that a signal is not present when the power is less than the threshold. As another method, the gNB may determine that a signal is present when the signal can be demodulated and that a signal is not present when the signal cannot be demodulated. Although two examples have been described as methods of signal detection, the present disclosure is not limited to these. In addition, the above description is about an exemplary operation of the gNB, but the NR-UE operates in the same manner. Note that, although the signal detected by the gNB and NR-UE is assumed to be a signal based on the first standard, it may be a signal other than the signal of the first standard.

Regarding Stand-by:

In some cases, the gNB and NR-UE "stand by" when the omni-directional reception is performed and a signal is detected. For example, the gNB and NR-UE stand by without transmitting a signal as illustrated in xS5502 of FIG. 48.

The gNB and NR-UE may restart the operation of the omni-directional LBT when a certain amount of time has passed. Alternatively, when the omni-directional reception is performed and a signal is detected, the gNB and NR-UE may again perform the omni-directional reception and check whether a signal is present.

Regarding Directional LBT:

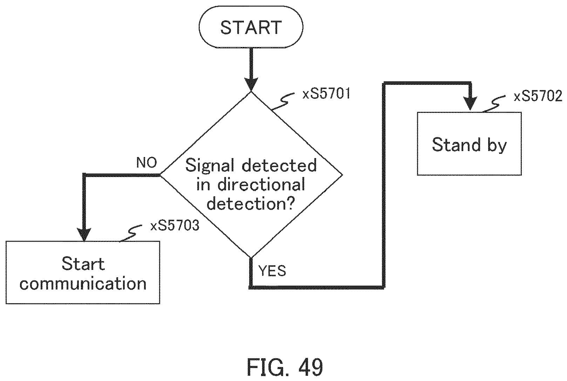

FIG. 49 is a flowchart describing an exemplary operation of the gNB in the directional LBT. The gNB determines whether a signal is detected in the directional detection (xS5701).

When a signal is detected in the directional detection (YES in xS5701), the gNB stands by for communication (xS5702). For example, the gNB determines that another apparatus (another gNB, NR-UE, AP, or first standard-UE) occupies a channel in the "licensed band and/or unlicensed band" and stands by without transmitting a signal.

When no signal is detected (no signal can be detected) in the directional detection (NO in xS5701), the gNB starts communication (xS5703). For example, the gNB determines that another apparatus (another gNB, NR-UE, AP, or first standard-UE) does not occupy a channel in the "licensed band and/or unlicensed band" and starts communication.

As a method of signal detection, the gNB may determine that a signal is present when the power at the time of reception is greater than a threshold and that a signal is not present when the power is less than the threshold. As another method, the gNB may determine that a signal is present when the signal can be demodulated and that a signal is not present when the signal cannot be demodulated. Two examples have been described but the method is not limited to the examples. In addition, the above description is about an exemplary operation of the gNB, but the NR-UE operates in the same manner. Note that, although the signal detected by the gNB and NR-UE is assumed to be a signal based on the first standard, it may be a signal other than the signal of the first standard.

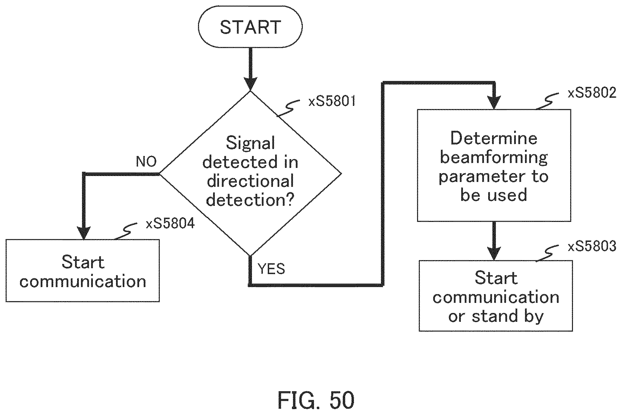

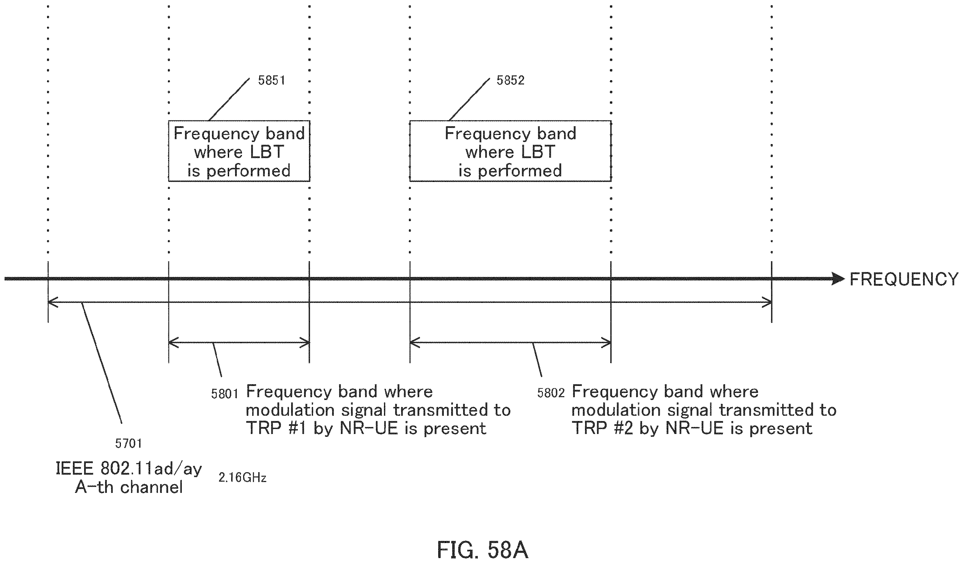

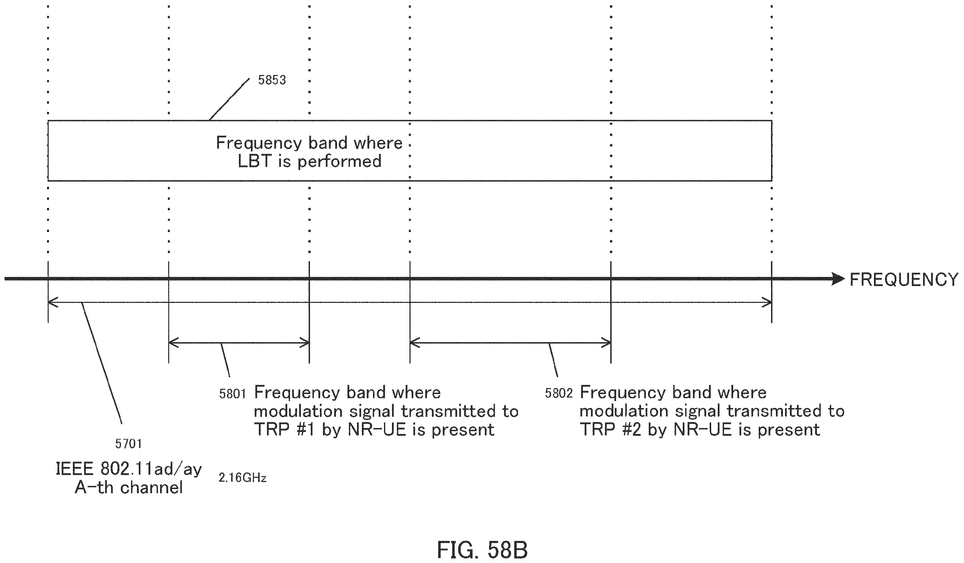

FIG. 50 is a flowchart describing an exemplary operation of the gNB in the directional LBT. In FIG. 58, the gNB specifies a beam direction in which signal interference occurs. The gNB stands by without transmitting a signal in the specified beam direction, and transmits a signal (starts communication) in a direction other than the specified beam direction.

The gNB determines whether a signal is detected in the directional detection (xS5801).

When a signal is detected in the directional detection (YES in xS5801), the gNB determines a beamforming parameter to be used for signal transmission (xS5802). For example, the gNB may determine a beamforming parameter in a direction other than the direction in which a signal is detected in the directional detection.

Upon determining the beamforming parameter in xS5802, the gNB starts communication or stands by, using the determined beamforming parameter (xS5803). For example, the gNB may determine that another apparatus (another gNB, NR-UE, AP, or first standard-UE) occupies a channel of the "licensed band and/or unlicensed band" in the direction in which a signal is detected in the directional detection, and stand by without transmitting a signal. The gNB may determine that another apparatus (another gNB, NR-UE, AP, or first standard-UE) does not occupy a channel of the "licensed band and/or unlicensed band" in a direction other than the direction in which a signal is detected in the directional detection, and starts communication.

When no signal is detected (no signal can be detected) in the directional detection (NO in xS5801), the gNB starts communication (xS5804). For example, the gNB determines that another apparatus (another gNB, NR-UE, AP, or first standard-UE) does not occupy a channel in the "licensed band and/or unlicensed band" and starts communication.

As a method of signal detection, the gNB may determine that a signal is present when the power at the time of reception is greater than a threshold and that a signal is not present when the power is less than the threshold. As another method, the gNB may determine that a signal is present when the signal can be demodulated and that a signal is not present when the signal cannot be demodulated. Two examples have been described but the method is not limited to the examples. In addition, the above description is about an exemplary operation of the gNB, but the NR-UE operates in the same manner. Note that, although the signal detected by the gNB and NR-UE is assumed to be a signal based on the first standard, it may be a signal other than the signal of the first standard.

Regarding Directional Antenna:

In a case where the gNB and NR-UE have the configuration in FIG. 46, signal reception is performed by using one of "transmission/reception panel antenna 1 labeled x705_1 to transmission/reception panel antenna M labeled x705_M".

In detecting a signal in the directional reception, each transmission panel antenna performs, for example, four types of receive beamforming (reception directivity control).

In detecting a signal in the directional reception, the gNB and NR-UE perform, for example, receive beamforming (reception directivity control) according to the first parameter, receive beamforming (reception directivity control) according to the second parameter, receive beamforming (reception directivity control) according to the third parameter, and receive beamforming (reception directivity control) according to the fourth parameter in transmission/reception panel antenna 1 labeled x705_1.

Further, in detecting a signal in the directional reception, the gNB and NR-UE perform receive beamforming (reception directivity control) according to the fifth parameter, receive beamforming (reception directivity control) according to the sixth parameter, receive beamforming (reception directivity control) according to the seventh parameter, and receive beamforming (reception directivity control) according to the eighth parameter in transmission/reception panel antenna 2 labeled x705_2.

Thus, in detecting a signal in the directional reception, receive beamforming (reception directivity control) according to the $(4 \times i - 3)$-th parameter, receive beamforming (reception directivity control) according to the $(4 \times i - 2)$-th parameter, receive beamforming (reception directivity control) according to the $(4 \times i - 1)$-th parameter, and receive beamforming (reception directivity control) according to the $(4 \times i)$-th parameter are performed in transmission/reception panel antenna i labeled x705_i. Note that i is an integer from 1 to M (both inclusive).

Then, the gNB and NR-UE perform receive beamforming (reception directivity control) according to the first parameter, and confirm whether a signal is present. Accordingly, the gNB and NR-UE use transmission/reception panel antenna 1 labeled x705_1.

The gNB and NR-UE perform receive beamforming (reception directivity control) according to the second parameter, and confirm whether a signal is present. Accordingly, the gNB and NR-UE use transmission/reception panel antenna 1 labeled x705_1.

The gNB and NR-UE perform receive beamforming (reception directivity control) according to the third parameter, and confirm whether a signal is present. Accordingly, the gNB and NR-UE use transmission/reception panel antenna 1 labeled x705_1.

The gNB and NR-UE perform receive beamforming (reception directivity control) according to the fourth parameter, and confirm whether a signal is present. Accordingly, the gNB and NR-UE use transmission/reception panel antenna 1 labeled x705_1.

The gNB and NR-UE perform receive beamforming (reception directivity control) according to the fifth parameter, and confirm whether a signal is present. Accordingly, the gNB and NR-UE use transmission/reception panel antenna 2 labeled x705_2.

The gNB and NR-UE perform receive beamforming (reception directivity control) according to the sixth parameter, and confirm whether a signal is present. Accordingly, the gNB and NR-UE use transmission/reception panel antenna 2 labeled x705_2.

The gNB and NR-UE perform receive beamforming (reception directivity control) according to the seventh parameter, and confirm whether a signal is present. Accordingly, the gNB and NR-UE use transmission/reception panel antenna 2 labeled x705_2.

The gNB and NR-UE perform receive beamforming (reception directivity control) according to the eighth parameter, and confirm whether a signal is present. Accordingly, the gNB and NR-UE use transmission/reception panel antenna 2 labeled x705_2.

Thus, the gNB and NR-UE perform receive beamforming (reception directivity control) according to the $(4 \times i - 3)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i - 2)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i - 1)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i)$-th parameter, and confirm whether a signal is present. Accordingly, the gNB and NR-UE use transmission/reception panel antenna i labeled x705_i.

Note that i is an integer from 1 to M (both inclusive).

Another example will be described. In a case where the gNB and NR-UE have the configuration in FIG. 47, signal reception is performed by using one or more of "transmission/reception antenna 1 labeled x805_1 to transmission/reception antenna m labeled x805_m" and performing receive beamforming (reception directivity control).

In detecting a signal in the directional reception, g types of receive beamforming (reception directivity control) are performed by using one or more of "transmission/reception antenna 1 labeled x805_1 to transmission/reception antenna m labeled x805_m". Note that g is an integer equal to or greater than 2.

The gNB and NR-UE perform receive beamforming (reception directivity control) according to the first parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the second parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the third parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the fourth parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the fifth parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the sixth parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the seventh parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the eighth parameter by using one or more of "transmission/reception antenna 1 labeled x805_1 to transmission/reception antenna m labeled x805_m", and confirm whether a signal is detected.

Thus, the gNB and NR-UE perform receive beamforming (reception directivity control) according to the i-th parameter by using one or more of "transmission/reception antenna 1 labeled x805_1 to transmission/reception antenna m labeled x805_m", and confirm whether a signal is detected. Note that i is an integer from 1 to g (both inclusive).

Regarding Stand-by:

In some cases, the gNB and NR-UE "stand by" when the directional reception is performed and a signal is detected. For example, the gNB and NR-UE stand by without transmitting a signal.

The gNB and NR-UE may restart the operation of the directional LBT when a certain amount of time has passed. Alternatively, when the directional reception is performed and a signal is detected, the gNB and NR-UE may again perform the directional reception and check whether a signal is present.

Regarding "Determine Beamforming Parameter to be Used" in S5802 of FIG. 50:

Descriptions will be separately given of a case where the gNB and NR-UE have the configuration in FIG. 46 and a case where the gNB and NR-UE have the configuration in FIG. 47.

1) Case where the gNB and NR-UE have the configuration in FIG. 46:

As described above, the gNB and NR-UE perform receive beamforming (reception directivity control) according to the $(4 \times i - 3)$-th parameter, and confirm whether a signal is present.

In addition, the gNB and NR-UE perform receive beamforming (reception directivity control) according to the $(4 \times i - 2)$-th parameter, and confirm whether a signal is present.

Then, the gNB and NR-UE perform receive beamforming (reception directivity control) according to the $(4 \times i - 1)$-th parameter, and confirm whether a signal is present.

The gNB and NR-UE perform receive beamforming (reception directivity control) according to the $(4 \times i)$-th parameter, and confirm whether a signal is present.

Note that i is an integer from 1 to M (both inclusive).

When confirming that a signal is present, the gNB and NR-UE do not use the parameter at that time to transmit a modulation signal. When not confirming that a signal is present (detecting no signal), the gNB and NR-UE can use the parameter at that time to transmit a modulation signal.

For example, the gNB and NR-UE perform receive beamforming (reception directivity control) according to the first parameter, and confirm whether a signal is present. At this time, the gNB and NR-UE use transmission/reception panel antenna 1 labeled x705_1.

When detecting a signal, the gNB and NR-UE do not transmit a modulation signal using the first parameter. When detecting no signal, the gNB and NR-UE can transmit a modulation signal using the first parameter.

For example, the gNB and NR-UE perform receive beamforming (reception directivity control) according to the fifth parameter, and confirm whether a signal is present. At this time, the gNB and NR-UE use transmission/reception panel antenna 2 labeled x705_2.

When detecting a signal, the gNB and NR-UE do not transmit a modulation signal using the fifth parameter. When detecting no signal, the gNB and NR-UE can transmit a modulation signal using the fifth parameter.

Similar processing is performed for beamforming parameters in the other reception periods.

2) Case where the gNB and NR-UE have the configuration in FIG. 47:

As described above, the gNB and NR-UE perform receive beamforming (reception directivity control) according to the i-th parameter by using one or more of "transmission/reception antenna 1 labeled x805_1 to transmission/reception antenna m labeled x805_m", and confirm whether a signal is detected. Note that i is an integer from 1 to g (both inclusive).

When detecting a signal, the gNB and NR-UE do not transmit a modulation signal using the parameter at that time. When detecting no signal, the gNB and NR-UE can transmit a modulation signal using the parameter at that time.

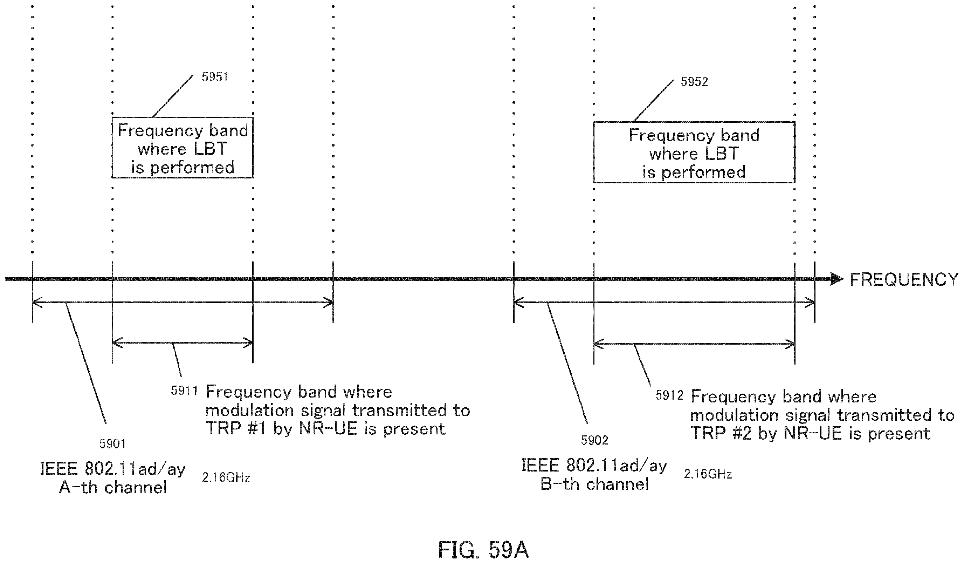

For example, as illustrated in FIG. 59A, the gNB and NR-UE perform receive beamforming (reception directivity control) according to the first parameter by using one or more of "transmission/reception antenna 1 labeled x805_1 to transmission/reception antenna m labeled x805_m", and confirm whether a signal is detected.

When detecting a signal, the gNB and NR-UE do not transmit a modulation signal using the first parameter. When detecting no signal, the gNB and NR-UE can transmit a modulation signal using the first parameter.

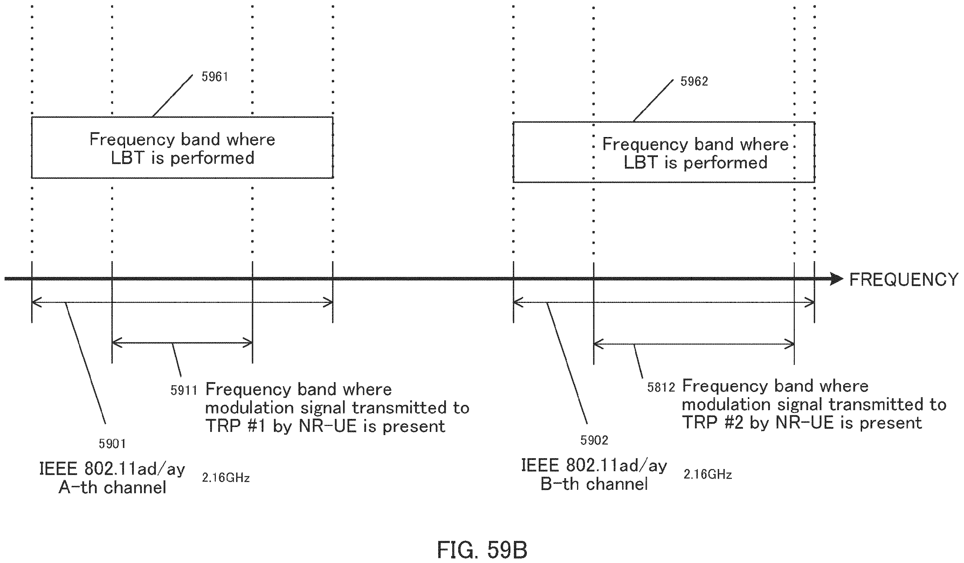

For example, as illustrated in FIG. 59B, the gNB and NR-UE perform receive beamforming (reception directivity control) according to the fifth parameter by using one or more of "transmission/reception antenna 1 labeled x805_1 to transmission/reception antenna m labeled x805_m", and confirm whether a signal is detected.

When detecting a signal, the gNB and NR-UE do not transmit a modulation signal using the fifth parameter. When detecting no signal, the gNB and NR-UE can transmit a modulation signal using the fifth parameter.

Similar processing is performed for beamforming parameters in the other reception periods.

Note that the gNB and NE-UE may perform the omni-directional LBT and directional LBT processing. The methods of the omni-directional LBT and directional LBT processing are not limited to the above example.

Next, specific operations at multiple TRP will be described.

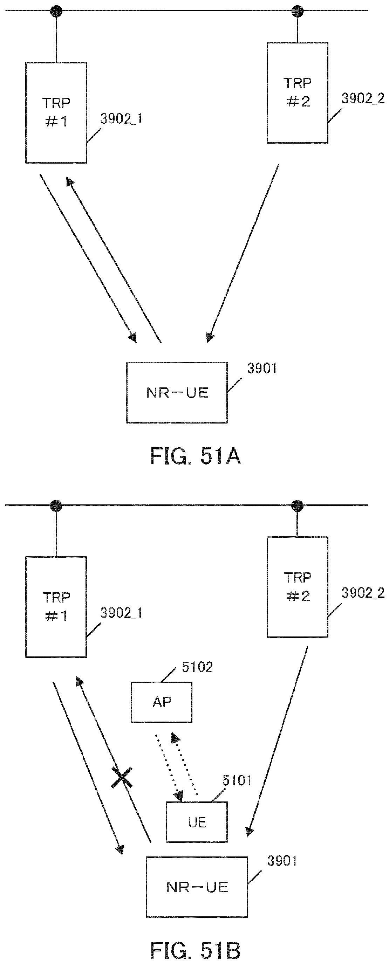

FIG. 51A illustrates an exemplary communication state of TRP #1, TRP #2, and NR-UE. Note that, in FIG. 51A, components that operate in the same manner as in FIG. 39 are denoted by the same reference signs.

TRP #1 labeled 3902_1 and NR-UE 3901 perform communication with each other. To be more specific, TRP #1 labeled 3902_1 transmits a modulation signal to NR-UE 3901. NR-UE 3901 also transmits a modulation signal to TRP #1 labeled 3902_1.

TRP #2 labeled 3902_2 and NR-UE 3901 perform communication with each other. To be more specific, TRP #2 labeled 3902_2 transmits a modulation signal to NR-UE 3901.

FIG. 51B illustrates an exemplary communication state of TRP #1, TRP #2, and NR-UE different from that in FIG. 51A. Note that, in FIG. 51B, components that operate in the same manner as in FIG. 39 are denoted by the same reference signs.

TRP #2 labeled 3902_2 and NR-UE 3901 perform communication with each other. To be more specific, TRP #2 labeled 3902_2 transmits a modulation signal to NR-UE 3901. AP 5102 and UE 5101 also perform communication with each other. To be more specific, AP 5102 transmits a modulation signal of the first standard to UE 5101. UE 5101 also transmits a modulation signal of the first standard to AP 5102.

TRP #1 labeled 3902_1 and NR-UE 3901 perform communication with each other.

At this time, NR-UE 3901 performs, for example, LBT processing such as the omni-directional LBT or directional LBT, and a modulation signal of the first standard is detected, for example; accordingly, NR-UE 3901 does not transmit a modulation signal to TRP #1 labeled 3902_1.

TRP #1 labeled 3902_1 also performs, for example, LBT processing such as the omni-directional LBT or directional LBT, and a modulation signal, such as a modulation signal of the first standard, is not detected, for example; accordingly, TRP #1 labeled 3902_1 transmits a modulation signal to NR-UE 3901.

Here, a description will be given of an operation when communication is started as "TRP #1, TRP #2, and NR-UE" do as described with reference to FIG. 51A, and "the state where AP 5102 and UE 5101 communicate with each other" occurs as in FIG. 51B.

The communication state of TRP #1, TRP #2, and NR-UE is assumed to be the state as in FIG. 51A.

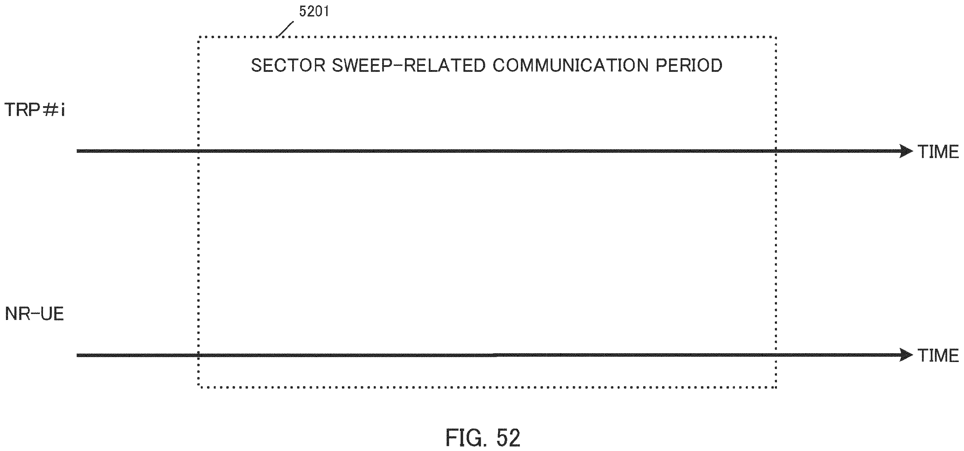

At this time, for example, as in FIG. 52, TRP #1, TRP #2, and NR-UE perform sector sweep-related processing, i.e., TRP #1, TRP #2, and NR-UE perform processing of transmit beamforming and receive beamforming.

FIG. 52 illustrates the sector-sweep related communication of TRP #i labeled 3902_i and NR-UE 3901 in time. Note that i is 1 or 2 here, and the horizontal axes represent time in FIG. 52.

As illustrated in FIG. 52, TRP #i labeled 3902_i and NR-UE 3901 perform communication for sector sweep-related processing in sector sweep-related communication period 5201. Note that specific methods of communication for sector sweep-related processing have already been described, and thus the description thereof will be omitted.

This determines "methods of transmit beamforming and receive beamforming for TRP #1 labeled 3902_1" and "methods of transmit beamforming and receive beamforming for NR-UE 3901" for communication between TRP #1 labeled 3902_1 and NR-UE 3901, thereby establishing communication with good reception quality.

This also determines "methods of transmit beamforming and receive beamforming for TRP #2 labeled 3902_2" and "methods of transmit beamforming and receive beamforming for NR-UE 3901" for communication between TRP #2 labeled 3902_2 and NR-UE 3901, thereby establishing communication with good reception quality.

As described above, NR-UE 3901 performs, for example, LBT processing such as the omni-directional LBT or directional LBT, and check if a signal is present. When no signal is present, NR-UE 3901 transmits a modulation signal to TRP #i labeled 3902_i. Note that i is 1 or 2, for example.

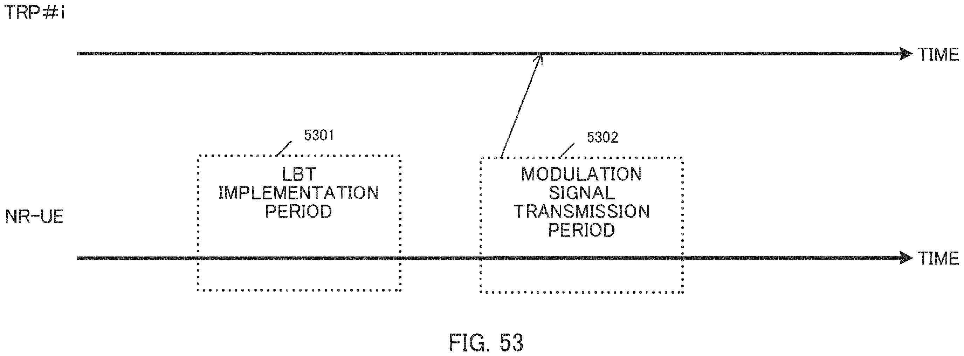

As illustrated in FIG. 53, NR-UE 3901 performs, for example, LBT processing such as the omni-directional LBT or directional LBT in LBT implementation period 5301. When no signal is confirmed, NR-UE 3901 transmits a modulation signal to TRP #i labeled 3902_i in modulation signal transmission period 5302 as illustrated in FIG. 53.

Meanwhile, NR-UE 3901 performs, for example, LBT processing such as the omni-directional LBT or directional LBT in LBT implementation period 5301. When a signal is confirmed, NR-UE 3901 does not transmit a modulation signal to TRP #i labeled 3902_i.

As described above, TRP #i labeled 3902_i performs, for example, LBT processing such as the omni-directional LBT or directional LBT, and check if a signal is present. When no signal is present, TRP #i labeled 3902_i transmits a modulation signal to NR-UE 3901. Note that i is 1 or 2, for example.

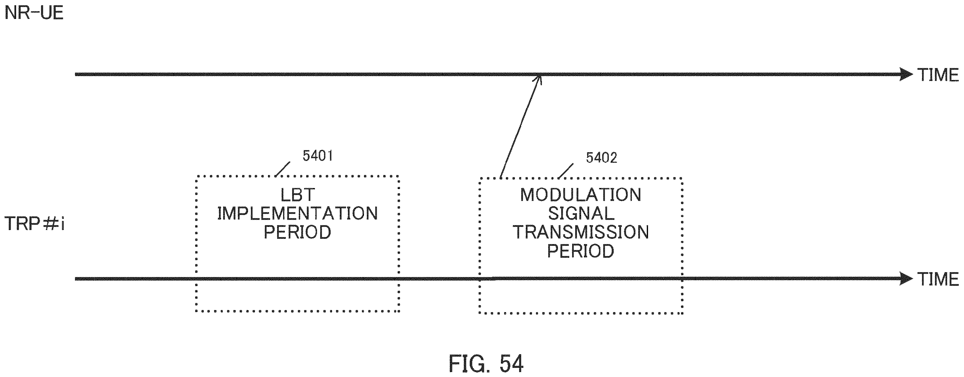

As illustrated in FIG. 54, TRP #i labeled 3902_i performs, for example, LBT processing such as the omni-directional LBT or directional LBT in LBT implementation period 5401. When no signal is confirmed, TRP #i labeled 3902_i transmits a modulation signal to NR-UE 3901 in modulation signal transmission period 5402 as illustrated in FIG. 54.

Meanwhile, TRP #i labeled 3902_i performs, for example, LBT processing such as the omni-directional LBT or directional LBT in LBT implementation period 5401. When a signal is confirmed, TRP #i labeled 3902_i does not transmit a modulation signal to NR-UE 3901.

Thus, in the case of FIG. 51A, NR-UE 3901 performs, for example, LBT processing such as the omni-directional LBT or directional LBT, and a modulation signal of the first standard is not detected, for example; accordingly, NR-UE 3901 transmits a modulation signal to TRP #1 labeled 3902_1.

TRP #1 labeled 3902_1 also performs, for example, LBT processing such as the omni-directional LBT or directional LBT, and a modulation signal, such as a modulation signal of the first standard, is not detected, for example; accordingly, TRP #1 labeled 3902_1 transmits a modulation signal to NR-UE 3901.

TRP #2 labeled 3902_2 also performs, for example, LBT processing such as the omni-directional LBT or directional LBT, and a modulation signal, such as a modulation signal of the first standard, is not detected, for example; accordingly, TRP #2 labeled 3902_2 transmits a modulation signal to NR-UE 3901.

When the state is as in FIG. 51B after FIG. 51A, NR-UE 3901 performs, for example, LBT processing such as the omni-directional LBT or directional LBT, and a modulation signal of the first standard is detected, for example; accordingly, NR-UE 3901 does not transmit a modulation signal to TRP #1 labeled 3902_1.

TRP #1 labeled 3902_1 also performs, for example, LBT processing such as the omni-directional LBT or directional LBT, and a modulation signal, such as a modulation signal of the first standard, is not detected, for example; accordingly, TRP #1 labeled 3902_1 transmits a modulation signal to NR-UE 3901.

TRP #2 labeled 3902_2 also performs, for example, LBT processing such as the omni-directional LBT or directional LBT, and a modulation signal, such as a modulation signal of the first standard, is not detected, for example; accordingly, TRP #2 labeled 3902_2 transmits a modulation signal to NR-UE 3901.

At this time, "TRP #1 labeled 3902_1 performs, for example, LBT processing such as the omni-directional LBT or directional LBT, and a modulation signal, such as a modulation signal of the first standard, is not detected, for example; accordingly, TRP #1 labeled 3902_1 transmits a modulation signal to NR-UE 3901", which produces at least an effect of improving a downlink transmission rate or an effect of improving reception quality when ultra-reliable and low-latency communication (URLLC) is applied.

Note that any scheme of "downlink SDM at multiple TRP", "downlink TDM at multiple TRP", and "downlink FDM at multiple TRP" may be applied in TRP #1 labeled 3902_1 and TRP #2 labeled 3902_2.

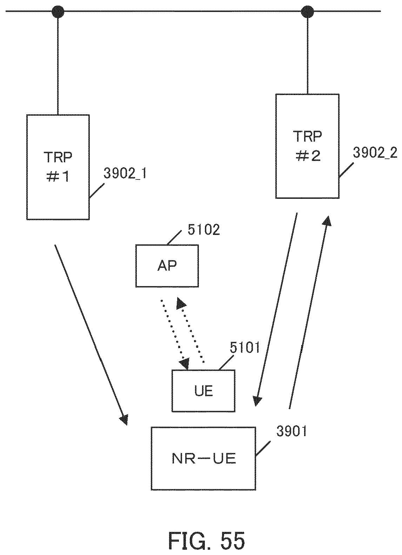

FIG. 55 illustrates an exemplary "communication state of TRP #1, TRP #2, and NR-UE" after the "communication state of TRP #1, TRP #2, and NR-UE" in FIG. 51B. Note that, in FIG. 55, components that operate in the same manner as in FIG. 39 or FIG. 51B are denoted by the same reference signs.

In FIG. 51A, NR-UE 3901 performs, for example, LBT processing such as the omni-directional LBT or directional LBT, and a modulation signal, such as a modulation signal of the first standard, is not detected, for example; accordingly, NR-UE 3901 transmits a modulation signal to TRP #1 labeled 3902_1. After that, the state is changed to that in FIG. 55, NR-UE 3901 performs, for example, LBT processing such as the omni-directional LBT or directional LBT, and a modulation signal, such as a modulation signal of the first standard, is detected in a direction of TRP #1 labeled 3902_1, for example; accordingly, NR-UE 3901 stops transmission of a modulation signal to TRP #1 labeled 3902_1. NR-UE 3901 also performs, for example, LBT processing such as the omni-directional LBT or directional LBT, and a modulation signal, such as a modulation signal of the first standard, is not detected in a direction of TRP #2 labeled 3902_2, for example; accordingly, NR-UE 3901 transmits a modulation signal to TRP #2 labeled 3902_2.

At this time, TRP #1 labeled 3902_1 may transmit a modulation signal to NR-UE 3901 depending on the result of LBT processing, as described above.

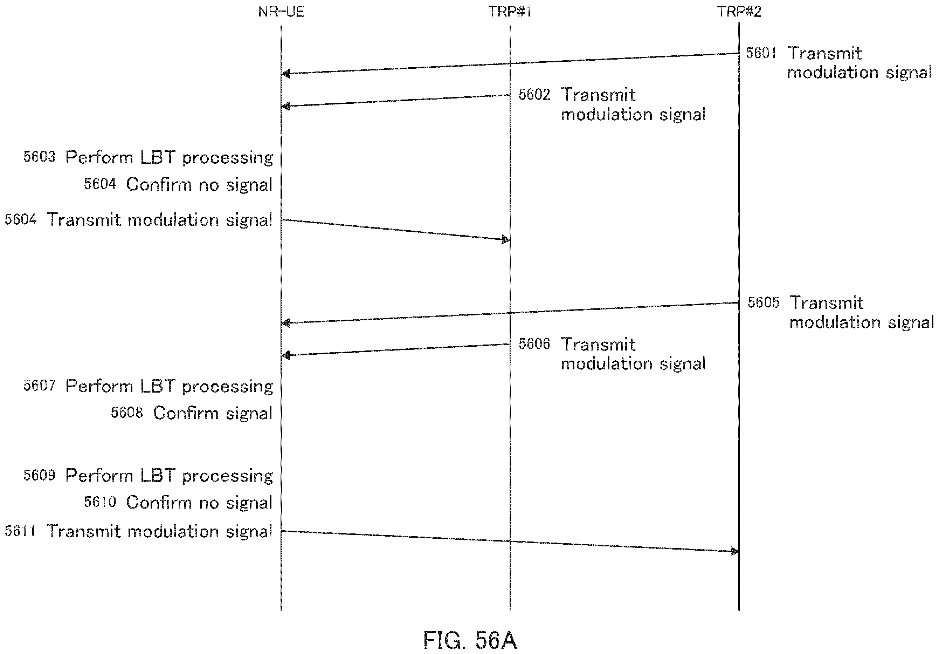

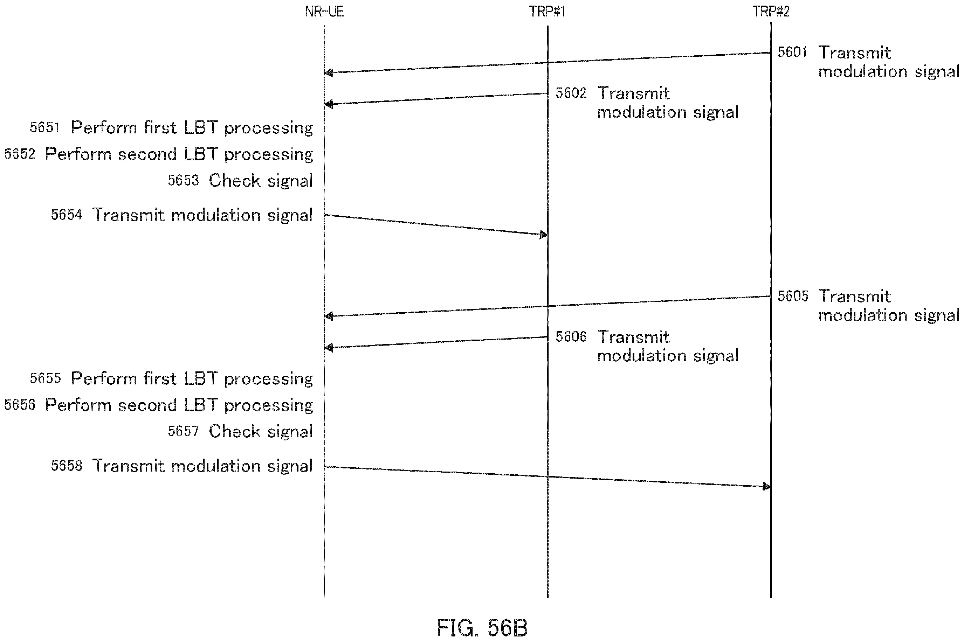

FIGS. 56A and 56B illustrate exemplary transition from FIG. 51A to FIG. 55. Note that not all operations are illustrated in FIGS. 56A and 56B. For example, TRP #1 and TRP #2 may perform LBT processing, and NR-UE, TRP #1, and TRP #2 may perform sector sweep processing, but these are not illustrated in FIGS. 56A and 56B. Processing other than the above may also be performed.

First, "TRP #1, TRP #2, and NR-UE" perform processing such as sector sweep as described above, and start communication as in FIG. 51A.

FIG. 56A illustrates exemplary transition from FIG. 51A to FIG. 55. TRP #2 labeled 3902_2 transmits a modulation signal for downlink (5601).

NR-UE 3901 then receives the modulation signal for downlink transmitted by TRP #2 labeled 3902_2.

TRP #1 labeled 3902_1 also transmits a modulation signal for downlink (5602).

NR-UE 3901 then receives the modulation signal for downlink transmitted by TRP #1 labeled 3902_1.

After that, NR-UE 3901 performs LBT processing (5603). It is assumed that NR-UE 3901 confirms no signal of the first standard in the direction of TRP #1 labeled 3902_1, for example (5604). Accordingly, NR-UE 3901 transmits a modulation signal for uplink to TRP #1 labeled 3902_1.

TRP #1 labeled 3902_1 then receives the modulation signal for uplink transmitted by NR-UE 3901.

Subsequently, TRP #2 labeled 3902_2 transmits a modulation signal for downlink (5605).

NR-UE 3901 then receives the modulation signal for downlink transmitted by TRP #2 labeled 3902_2.

TRP #1 labeled 3902_1 also transmits a modulation signal for downlink (5606).

After that, NR-UE 3901 performs LBT processing (5607). It is assumed that NR-UE 3901 confirms a signal of the first standard in the direction of TRP #1 labeled 3902_1, for example (5608). Accordingly, NR-UE 3901 does not transmit a modulation signal for uplink to TRP #1 labeled 3902_1.

Then, NR-UE 3901 performs LBT processing (5609). It is assumed that NR-UE 3901 confirms no signal of the first standard in the direction of TRP #2 labeled 3902_2, for example (5610). Accordingly, NR-UE 3901 transmits a modulation signal for uplink to TRP #2 labeled 3902_2.

FIG. 56B illustrates exemplary transition from FIG. 51A to FIG. 55 different from that in FIG. 56A.

Note that "TRP #1, TRP #2, and NR-UE" perform processing such as sector sweep as described above, and start communication as in FIG. 51A.

TRP #2 labeled 3902_2 transmits a modulation signal for downlink (5601).

NR-UE 3901 then receives the modulation signal for downlink transmitted by TRP #2 labeled 3902_2.

TRP #1 labeled 3902_1 also transmits a modulation signal for downlink (5602).

NR-UE 3901 then receives the modulation signal for downlink transmitted by TRP #1 labeled 3902_1.

After that, NR-UE 3901 performs the first LBT processing (5651). Then, NR-UE 3901 performs the second LBT processing (5652). Here, the first LBT processing is processing for checking whether a signal of the first standard is present in the direction of TRP #1 labeled 3902_1. The second LBT processing is processing for checking whether a signal of the first standard is present in the direction of TRP #2 labeled 3902_2.

Thus, NR-UE 3901 checks whether a signal of the first standard is present (5653). As a result of the check, NR-UE 3901 transmits a modulation signal for uplink to TRP #1 labeled 3902_1.

TRP #1 labeled 3902_1 then receives the modulation signal for uplink transmitted by NR-UE 3901.

Subsequently, TRP #2 labeled 3902_2 transmits a modulation signal for downlink (5605).

NR-UE 3901 then receives the modulation signal for downlink transmitted by TRP #2 labeled 3902_2.

TRP #1 labeled 3902_1 also transmits a modulation signal for downlink (5606).

After that, NR-UE 3901 performs the first LBT processing (5655). Then, NR-UE 3901 performs the second LBT processing (5656). Here, the first LBT processing is processing for checking whether a signal of the first standard is present in the direction of TRP #1 labeled 3902_1. The second LBT processing is processing for checking whether a signal of the first standard is present in the direction of TRP #2 labeled 3902_2.

Thus, NR-UE 3901 checks whether a signal of the first standard is present (5657). As a result of the check, NR-UE 3901 transmits a modulation signal for uplink to TRP #2 labeled 3902_2.

TRP #2 labeled 3902_1 then receives the modulation signal for uplink transmitted by NR-UE 3901.

As described above, NR-UE 3901 may perform LBT processing required as the processing each time as in FIG. 56A, or may perform the first LBT processing and the second LBT processing as a set as in FIG. 56B.

Note that the case where NR-UE 3901 performs LBT processing as in FIG. 56A produces an effect of reducing the number of times of LBT processing. Meanwhile, the case where NR-UE 3901 performs LBT processing as in FIG. 56B produces an effect of transmitting a modulation signal to TRP #1 labeled 3902_1 and TRP #2 labeled 3902_2 more appropriately.

Next, a frequency at which NR-UE 3901 performs LBT will be described.

A description will be given of a frequency at which NR-UE 3901 performs LBT in a case where "a frequency used by NR-UE 3901 to transmit a modulation signal to TRP #1 labeled 3902_1 in FIG. 51A" and "a frequency used by NR-UE 3901 to transmit a modulation signal to TRP #2 labeled 3902_2 in FIG. 55" are the same (common) or partially the same.

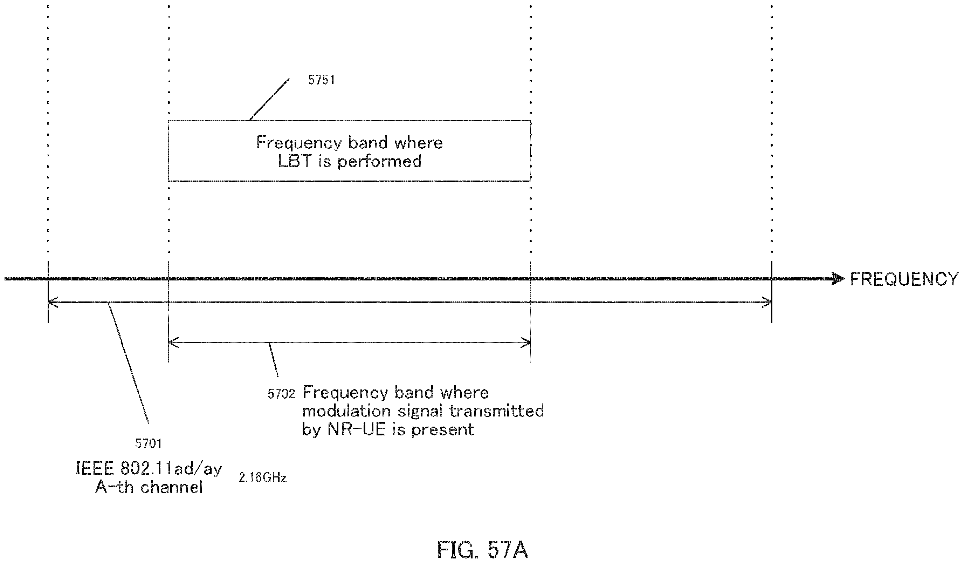

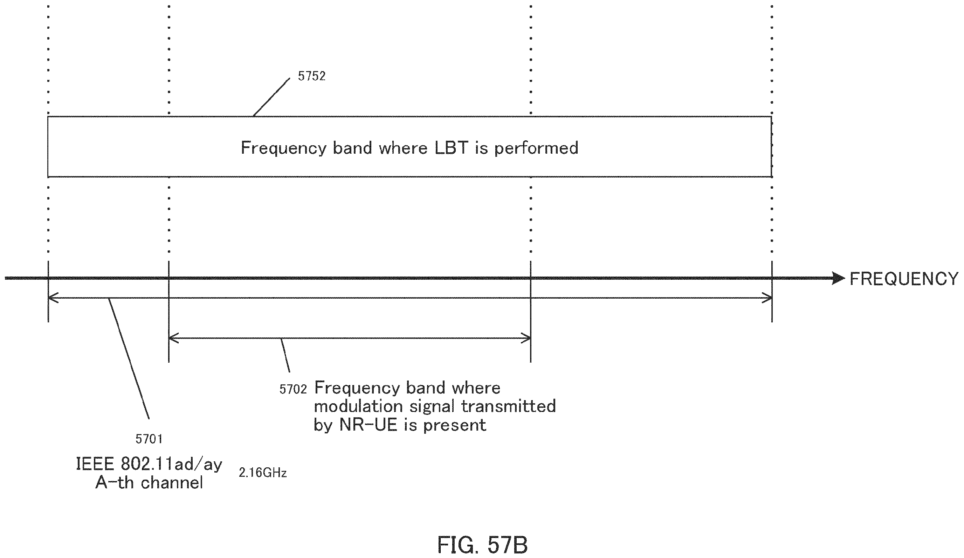

FIGS. 57A and 57B are examples for describing the frequency at which NR-UE 3901 performs LBT. Note that the example is not limited to the arrangement in FIGS. 57A and 57B.

The horizontal axis represents frequency in FIG. 57A. 5701 is a frequency band for the A-th channel of IEEE 802.11ad/ay, which is the first standard, and has a width of 2.16 GHz. 5702 is a frequency band where a modulation signal transmitted to TRP #1 labeled 3902_1 or TRP #2 labeled 3902_2 by NR-UE 3901 is present.

Thus, "frequency band 5701 for the A-th channel of IEEE 802.11ad/ay, which is the first standard" includes "frequency band 5702 where a modulation signal transmitted to TRP #1 labeled 3902_1 or TRP #2 labeled 3902_2 by NR-UE 3901 is present". Note that the example in this case is not limited to that in FIG. 57A.

Here, the frequency band where NR-UE 3901 performs LBT is 5751, and "frequency band 5702 where a modulation signal transmitted to TRP #1 labeled 3902_1 or TRP #2 labeled 3902_2 by NR-UE 3901 is present" and "frequency band 5751 where NR-UE 3901 performs LBT" are the same, or "frequency band 5702 where a modulation signal transmitted to TRP #1 labeled 3902_1 or TRP #2 labeled 3902_2 by NR-UE 3901 is present" includes "frequency band 5751 where NR-UE 3901 performs LBT".

FIG. 57B is an example different from FIG. 57A, and the horizontal axis represents frequency. Note that components that operate in the same manner as in FIG. 57A are denoted by the same reference signs, and the description thereof will be omitted.

"Frequency band 5701 for the A-th channel of IEEE 802.11ad/ay, which is the first standard" includes "frequency band 5702 where a modulation signal transmitted to TRP #1 labeled 3902_1 or TRP #2 labeled 3902_2 by NR-UE 3901 is present".

The frequency band where NR-UE 3901 performs LBT is 5752, and "frequency band 5701 for the A-th channel of IEEE 802.11ad/ay, which is the first standard" and "frequency band 5752 where NR-UE 3901 performs LBT" may be the same.

In addition, "frequency band 5701 for the A-th channel of IEEE 802.1 1ad/ay, which is the first standard" may include "frequency band 5751 where NR-UE 3901 performs LBT", and "frequency band 5751 where NR-UE 3901 performs LBT" may include "frequency band 5702 where a modulation signal transmitted to TRP #1 labeled 3902_1 or TRP #2 labeled 3902_2 by NR-UE 3901 is present".

Specifying the frequency bands as described above allows NR-UE 3901 to have an effect of suitably checking whether a (interference) signal of the first standard is present in "the direction in which a modulation signal transmitted by TRP #1 labeled 3902_1 is present" and "the direction in which a modulation signal transmitted by TRP #2 labeled 3902_2 is present".

A description will be given of a frequency at which NR-UE 3901 performs LBT in a case where "a frequency used by NR-UE 3901 to transmit a modulation signal to TRP #1 labeled 3902_1 in FIG. 51A" and "a frequency used by NR-UE 3901 to transmit a modulation signal to TRP #2 labeled 3902_2 in FIG. 55" are different from each other.

FIGS. 58A, 58B, 59A, and 59B are examples for describing the frequency at which NR-UE 3901 performs LBT.

The horizontal axis represents frequency in FIG. 58A. Note that components that operate in the same manner as in FIG. 57A are denoted by the same reference signs, and the description thereof will be omitted.

5801 is a "frequency band where a modulation signal transmitted to TRP #1 labeled 3902_1 by NR-UE 3901 is present". 5802 is a "frequency band where a modulation signal transmitted to TRP #2 labeled 3902_2 by NR-UE 3901 is present".

At this time, "frequency band 5701 for the A-th channel of IEEE 802.11ad/ay, which is the first standard" includes "frequency band 5801 where a modulation signal transmitted to TRP #1 labeled 3902_1 by NR-UE 3901 is present" and "frequency band 5802 where a modulation signal transmitted to TRP #2 labeled 3902_2 by NR-UE 3901 is present". Note that the example in this case is not limited to that in FIG. 58A.

Here, the frequency band where NR-UE 3901 performs LBT is 5851, and "frequency band 5801 where a modulation signal transmitted to TRP #1 labeled 3902_1 by NR-UE 3901 is present" and "frequency band 5851 where NR-UE 3901 performs LBT" are the same, or "frequency band 5801 where a modulation signal transmitted to TRP #1 labeled 3902_1 by NR-UE 3901 is present" includes "frequency band 5851 where NR-UE 3901 performs LBT". "Frequency band 5851 where NR-UE 3901 performs LBT" is for NR-UE 3901 to determine whether to use "frequency band 5801 where a modulation signal transmitted to TRP #1 labeled 3902_1 by NR-UE 3901 is present".

In addition, the frequency band where NR-UE 3901 performs LBT is 5852, and "frequency band 5802 where a modulation signal transmitted to TRP #2 labeled 3902_2 by NR-UE 3901 is present" and "frequency band 5852 where NR-UE 3901 performs LBT" are the same, or "frequency band 5802 where a modulation signal transmitted to TRP #2 labeled 3902_2 by NR-UE 3901 is present" includes "frequency band 5852 where NR-UE 3901 performs LBT". "Frequency band 5852 where NR-UE 3901 performs LBT" is for NR-UE 3901 to determine whether to use "frequency band 5802 where a modulation signal transmitted to TRP #2 labeled 3902_2 by NR-UE 3901 is present".

FIG. 58B is an example different from FIG. 58A, and the horizontal axis represents frequency. Note that components that operate in the same manner as in FIGS. 57A and 58A are denoted by the same reference signs, and the description thereof will be omitted.

5801 is a "frequency band where a modulation signal transmitted to TRP #1 labeled 3902_1 by NR-UE 3901 is present". 5802 is a "frequency band where a modulation signal transmitted to TRP #2 labeled 3902_2 by NR-UE 3901 is present".

At this time, "frequency band 5701 for the A-th channel of IEEE 802.11ad/ay, which is the first standard" includes "frequency band 5801 where a modulation signal transmitted to TRP #1 labeled 3902_1 by NR-UE 3901 is present" and "frequency band 5802 where a modulation signal transmitted to TRP #2 labeled 3902_2 by NR-UE 3901 is present". Note that the example in this case is not limited to that in FIG. 58B.

Here, the frequency band where NR-UE 3901 performs LBT is 5853, and "frequency band 5853 where NR-UE 3901 performs LBT" includes "frequency band 5801 where a modulation signal transmitted to TRP #1 labeled 3902_1 by NR-UE 3901 is present". Further, "frequency band 5853 where NR-UE 3901 performs LBT" includes "frequency band 5802 where a modulation signal transmitted to TRP #2 labeled 3902_2 by NR-UE 3901 is present". Here, "frequency band 5853 where NR-UE 3901 performs LBT" is for NR-UE 3901 to determine whether to use "frequency band 5801 where a modulation signal transmitted to TRP #1 labeled 3902_1 by NR-UE 3901 is present", and "frequency band 5853 where NR-UE 3901 performs LBT" is for NR-UE 3901 to determine whether to use "frequency band 5802 where a modulation signal transmitted to TRP #2 labeled 3902_2 by NR-UE 3901 is present".

Specifying the frequency bands as described above allows NR-UE 3901 to have an effect of suitably checking whether a (interference) signal of the first standard is present in "the direction in which a modulation signal transmitted by TRP #1 labeled 3902_1 is present" and "the direction in which a modulation signal transmitted by TRP #2 labeled 3902_2 is present".

The horizontal axis represents frequency in FIG. 59A. 5901 is a frequency band for the A-th channel of IEEE 802.1 1ad/ay, which is the first standard, and has a width of 2.16 GHz. 5902 is a frequency band for the B-th channel of IEEE 802.11ad/ay, which is the first standard.

5911 is a frequency band where a modulation signal transmitted to TRP #1 labeled 3902_1 by NR-UE 3901 is present. 5912 is a frequency band where a modulation signal transmitted to TRP #2 labeled 3902_2 by NR-UE 3901 is present.

At this time, "frequency band 5901 for the A-th channel of IEEE 802.11ad/ay, which is the first standard" includes "frequency band 5911 where a modulation signal transmitted to TRP #1 labeled 3902_1 by NR-UE 3901 is present". "Frequency band 5902 for the B-th channel of IEEE 802.11ad/ay, which is the first standard" includes "frequency band 5912 where a modulation signal transmitted to TRP #2 labeled 3902_2 by NR-UE 3901 is present". Note that the example in this case is not limited to that in FIG. 59A.

Here, the frequency band where NR-UE 3901 performs LBT is 5951, and "frequency band 5911 where a modulation signal transmitted to TRP #1 labeled 3902_1 by NR-UE 3901 is present" and "frequency band 5951 where NR-UE 3901 performs LBT" are the same, or "frequency band 5911 where a modulation signal transmitted to TRP #1 labeled 3902_1 by NR-UE 3901 is present" includes "frequency band 5951 where NR-UE 3901 performs LBT". "Frequency band 5951 where NR-UE 3901 performs LBT" is for NR-UE 3901 to determine whether to use "frequency band 5911 where a modulation signal transmitted to TRP #1 labeled 3902_1 by NR-UE 3901 is present".

In addition, the frequency band where NR-UE 3901 performs LBT is 5952, and "frequency band 5912 where a modulation signal transmitted to TRP #2 labeled 3902_2 by NR-UE 3901 is present" and "frequency band 5952 where NR-UE 3901 performs LBT" are the same, or "frequency band 5912 where a modulation signal transmitted to TRP #2 labeled 3902_2 by NR-UE 3901 is present" includes "frequency band 5952 where NR-UE 3901 performs LBT". "Frequency band 5952 where NR-UE 3901 performs LBT" is for NR-UE 3901 to determine whether to use "frequency band 5912 where a modulation signal transmitted to TRP #2 labeled 3902_2 by NR-UE 3901 is present".

FIG. 59B is an example different from FIG. 59A, and the horizontal axis represents frequency. Note that components that operate in the same manner as in FIGS. 57A and 59A are denoted by the same reference signs, and the description thereof will be omitted.

5911 is a frequency band where a modulation signal transmitted to TRP #1 labeled 3902_1 by NR-UE 3901 is present. 5912 is a frequency band where a modulation signal transmitted to TRP #2 labeled 3902_2 by NR-UE 3901 is present.

At this time, "frequency band 5901 for the A-th channel of IEEE 802.11ad/ay, which is the first standard" includes "frequency band 5911 where a modulation signal transmitted to TRP #1 labeled 3902_1 by NR-UE 3901 is present". "Frequency band 5902 for the B-th channel of IEEE 802.11ad/ay, which is the first standard" includes "frequency band 5912 where a modulation signal transmitted to TRP #2 labeled 3902_2 by NR-UE 3901 is present". Note that the example in this case is not limited to that in FIG. 59B.

The frequency band where NR-UE 3901 performs LBT is 5961, and "frequency band 5901 for the A-th channel of IEEE 802.11ad/ay, which is the first standard" and "frequency band 5961 where NR-UE 3901 performs LBT" may be the same.

In addition, "frequency band 5901 for the A-th channel of IEEE 802.1 1ad/ay, which is the first standard" may include "frequency band 5761 where NR-UE 3901 performs LBT", and "frequency band 5761 where NR-UE 3901 performs LBT" may include "frequency band 5911 where a modulation signal transmitted to TRP #1 labeled 3902_1 by NR-UE 3901 is present". "Frequency band 5961 where NR-UE 3901 performs LBT" is for NR-UE 3901 to determine whether to use "frequency band 5911 where a modulation signal transmitted to TRP #1 labeled 3902_1 by NR-UE 3901 is present".

The frequency band where NR-UE 3901 performs LBT is 5962, and "frequency band 5902 for the B-th channel of IEEE 802.11ad/ay, which is the first standard" and "frequency band 5962 where NR-UE 3901 performs LBT" may be the same.

In addition, "frequency band 5902 for the B-th channel of IEEE 802.11ad/ay, which is the first standard" may include "frequency band 5762 where NR-UE 3901 performs LBT", and "frequency band 5762 where NR-UE 3901 performs LBT" may include "frequency band 5912 where a modulation signal transmitted to TRP #2 labeled 3902_2 by NR-UE 3901 is present". "Frequency band 5962 where NR-UE 3901 performs LBT" is for NR-UE 3901 to determine whether to use "frequency band 5912 where a modulation signal transmitted to TRP #2 labeled 3902_2 by NR-UE 3901 is present".

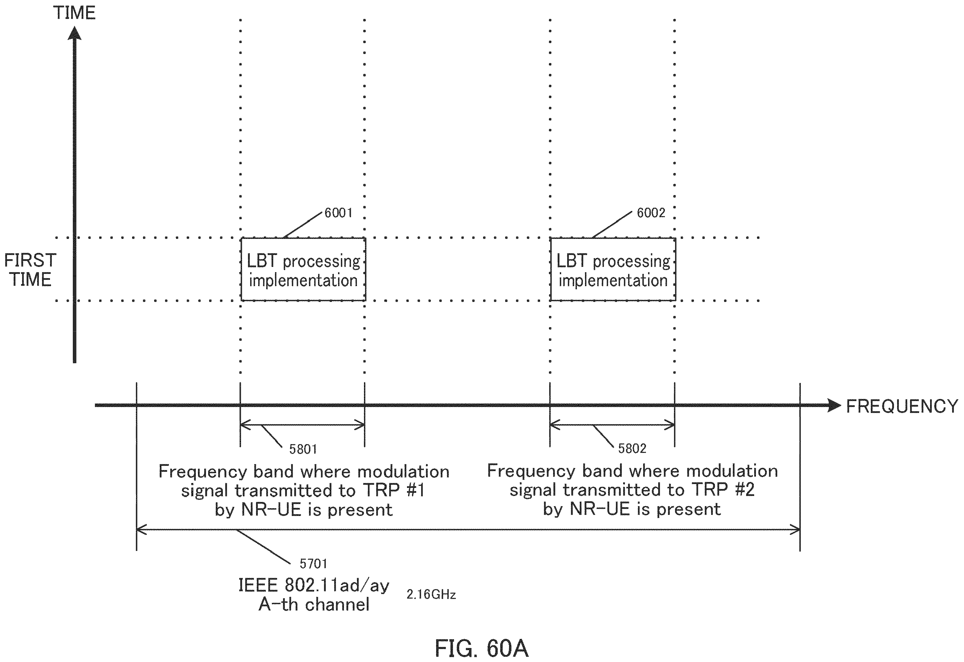

FIG. 60A illustrates an exemplary timing of LBT processing when frequency bands are arranged as in FIG. 58A, and components that operate in the same manner as in FIGS. 57A and 58A are denoted by the same reference signs. Note that the horizontal axis represents frequency and the vertical axis represents time in FIG. 60A.

A distinctive feature of FIG. 60A is that time for LBT processing implement 6001 is present for "frequency band 5801 where a modulation signal transmitted to TRP #1 labeled 3902_1 by NR-UE 3901 is present" in the first time, and time for LBT processing implement 6002 is present for "frequency band 5802 where a modulation signal transmitted to TRP #2 labeled 3902_2 by NR-UE 3901 is present" in the first time.

Note that examples of the frequency band for LBT processing implement 6001 and the frequency band for LBT processing implement 6002 are as described with reference to FIG. 58A.

This produces an effect that NR-UE 3901 can transmit a modulation signal to TRP #1 labeled 3902_1 and TRP #2 labeled 3902_2 with reduced interference.

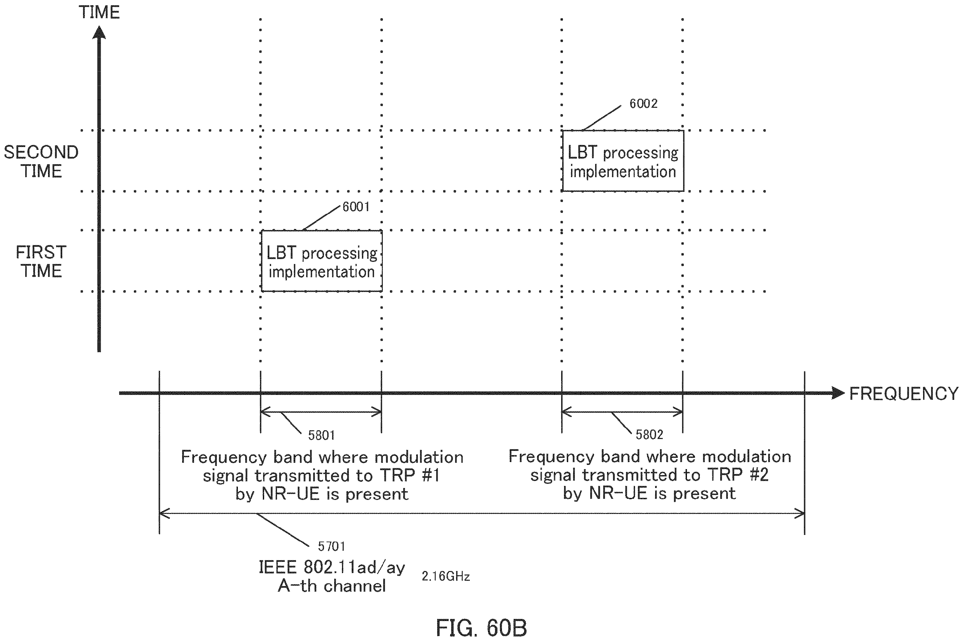

FIG. 60B illustrates an exemplary timing of LBT processing when frequency bands are arranged as in FIG. 58A, and components that operate in the same manner as in FIGS. 57A, 58A, and 60A are denoted by the same reference signs. Note that the horizontal axis represents frequency and the vertical axis represents time in FIG. 60B.

A distinctive feature of FIG. 60B is that time for LBT processing implement 6001 is present for "frequency band 5801 where a modulation signal transmitted to TRP #1 labeled 3902_1 by NR-UE 3901 is present" in the first time, and time for LBT processing implement 6002 is present for "frequency band 5802 where a modulation signal transmitted to TRP #2 labeled 3902_2 by NR-UE 3901 is present" in the second time.

Note that examples of the frequency band for LBT processing implement 6001 and the frequency band for LBT processing implement 6002 are as described with reference to FIG. 58A.

This produces an effect that NR-UE 3901 can transmit a modulation signal to TRP #1 labeled 3902_1 and TRP #2 labeled 3902_2 with reduced interference.

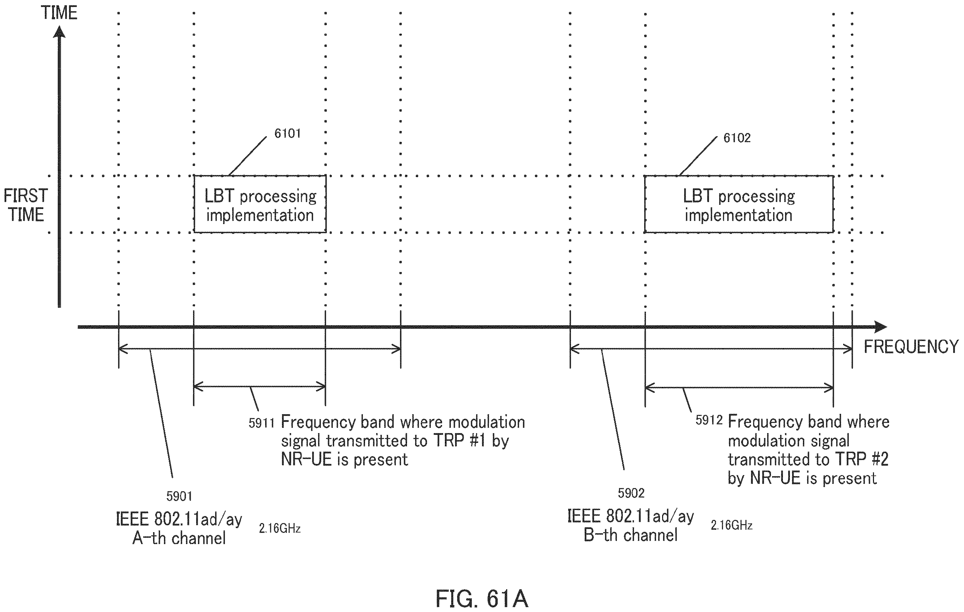

FIG. 61A illustrates an exemplary timing of LBT processing when frequency bands are arranged as in FIGS. 59A and 59B, and components that operate in the same manner as in FIG. 59A are denoted by the same reference signs. Note that the horizontal axis represents frequency and the vertical axis represents time in FIG. 61A.

A distinctive feature of FIG. 61A is that time for LBT processing implement 6101 is present for "frequency band 5911 where a modulation signal transmitted to TRP #1 labeled 3902_1 by NR-UE 3901 is present" in the first time, and time for LBT processing implement 6102 is present for "frequency band 5912 where a modulation signal transmitted to TRP #2 labeled 3902_2 by NR-UE 3901 is present" in the first time.

Note that examples of the frequency band for LBT processing implement 6101 and the frequency band for LBT processing implement 6102 are as described with reference to FIGS. 59A and 59B, and not limited to the example in FIG. 61A.

This produces an effect that NR-UE 3901 can transmit a modulation signal to TRP #1 labeled 3902_1 and TRP #2 labeled 3902_2 with reduced interference.

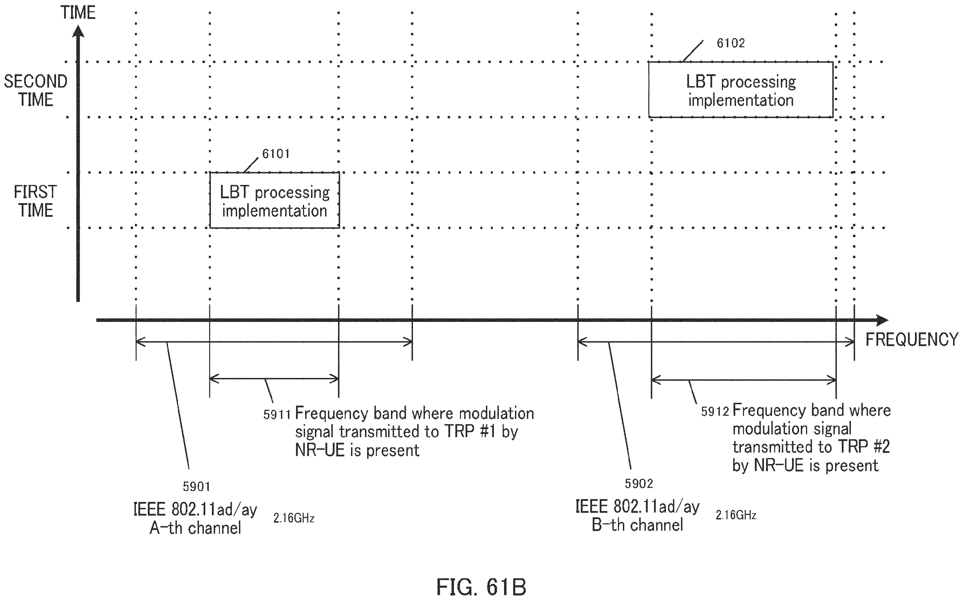

FIG. 61B illustrates an exemplary timing of LBT processing when frequency bands are arranged as in FIGS. 59A and 59B, and components that operate in the same manner as in FIGS. 59A and 61A are denoted by the same reference signs. Note that the horizontal axis represents frequency and the vertical axis represents time in FIG. 61B.

A distinctive feature of FIG. 61B is that time for LBT processing implement 6101 is present for "frequency band 5911 where a modulation signal transmitted to TRP #1 labeled 3902_1 by NR-UE 3901 is present" in the first time, and time for LBT processing implement 6102 is present for "frequency band 5912 where a modulation signal transmitted to TRP #2 labeled 3902_2 by NR-UE 3901 is present" in the second time.

Note that examples of the frequency band for LBT processing implement 6101 and the frequency band for LBT processing implement 6102 are as described with reference to FIGS. 59A and 59B, and not limited to the example in FIG. 61B.

This produces an effect that NR-UE 3901 can transmit a modulation signal to TRP #1 labeled 3902_1 and TRP #2 labeled 3902_2 with reduced interference.

Specifying the frequency bands as described above allows NR-UE 3901 to have an effect of suitably checking whether a (interference) signal of the first standard is present in "the direction in which a modulation signal transmitted by TRP #1 labeled 3902_1 is present" and "the direction in which a modulation signal transmitted by TRP #2 labeled 3902_2 is present".

Note that, when "AP 5102 and UE 5101" are gone (e.g., FIG. 51A) from the state of FIG. 55, for example, the communication state of TRP #1 labeled 3902_1 and NR-UE 3901 may be changed. To be more specific, TRP #1 labeled 3902_1 may transmit a modulation signal to NR-UE 3901. NR-UE 3901 may also transmit a modulation signal to TRP #1 labeled 3902_1.

It is assumed that, while NR-UE 3901 uses the first frequency (band) for transmitting a modulation signal to TRP #1 labeled 3902_1 in FIG. 51A, the state is changed to that of FIG. 51B and NR-UE 3901 no longer transmits a modulation signal to TRP #1 labeled 3902_1 using the first frequency (band). In this case, NR-UE 3901 may transmit a modulation signal to TRP #1 labeled 3902_1 using the second frequency (band) other than the first frequency (band) instead.

At this time, TRP #1 labeled 3902_1 and NR-UE 3901 may perform a sector sweep-related procedure in the second frequency (band) when in the state of FIG. 51B, or TRP #1 labeled 3902_1 and NR-UE 3901 may perform the sector sweep-related procedure in the second frequency (band) when still in the state of FIG. 51A.

Next, other specific operations at multiple TRP will be described.

FIG. 51A illustrates an exemplary communication state of TRP #1, TRP #2, and NR-UE. Note that, in FIG. 51A, components that operate in the same manner as in FIG. 39 are denoted by the same reference signs.

TRP #1 labeled 3902_1 and NR-UE 3901 perform communication with each other. To be more specific, TRP #1 labeled 3902_1 transmits a modulation signal to NR-UE 3901. NR-UE 3901 also transmits a modulation signal to TRP #1 labeled 3902_1.

TRP #2 labeled 3902_2 and NR-UE 3901 perform communication with each other. To be more specific, TRP #2 labeled 3902_2 transmits a modulation signal to NR-UE 3901.

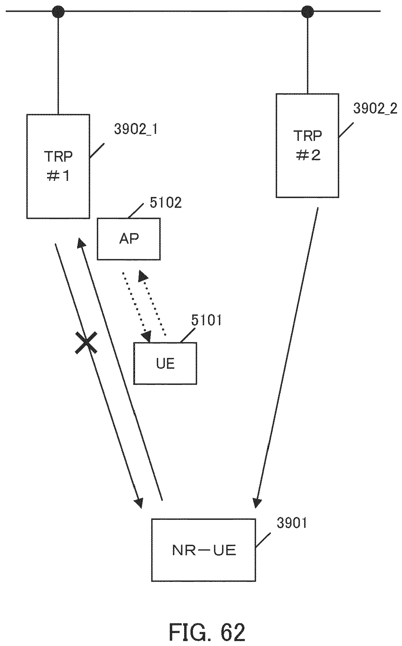

FIG. 62 illustrates an exemplary communication state of TRP #1, TRP #2, and NR-UE different from that in FIG. 51A. Note that, in FIG. 62, components that operate in the same manner as in FIG. 39 or FIG. 51A are denoted by the same reference signs.

TRP #2 labeled 3902_2 and NR-UE 3901 perform communication with each other. To be more specific, TRP #2 labeled 3902_2 transmits a modulation signal to NR-UE 3901.

AP 5102 and UE 5101 also perform communication with each other. To be more specific, AP 5102 transmits a modulation signal of the first standard to UE 5101. UE 5101 also transmits a modulation signal of the first standard to AP 5102.

TRP #1 labeled 3902_1 and NR-UE 3901 perform communication with each other.

At this time, TRP #1 labeled 3902_1 performs, for example, LBT processing such as the omni-directional LBT or directional LBT, and a modulation signal of the first standard is detected, for example; accordingly, TRP #1 labeled 3902_1 does not transmit a modulation signal to NR-UE 3901.

NR-UE 3901 also performs, for example, LBT processing such as the omni-directional LBT or directional LBT, and a modulation signal, such as a modulation signal of the first standard, is not detected, for example; accordingly, NR-UE 3901 transmits a modulation signal to TRP #1 labeled 3902_1.

Here, a description will be given of an operation when communication is started as "TRP #1, TRP #2, and NR-UE" do as described with reference to FIG. 51A, and "the state where AP 5102 and UE 5101 communicate with each other" occurs as in FIG. 62.

The communication state of TRP #1, TRP #2, and NR-UE is assumed to be the state as in FIG. 51A. At this time, for example, as in FIG. 52, TRP #1, TRP #2, and NR-UE perform sector sweep-related processing, i.e., TRP #1, TRP #2, and NR-UE perform processing of transmit beamforming and receive beamforming. Note that the detail has already been described, and thus the description thereof will be omitted.

As described above, NR-UE 3901 performs, for example, LBT processing such as the omni-directional LBT or directional LBT, and check if a signal is present. When no signal is present, NR-UE 3901 transmits a modulation signal to TRP #i labeled 3902_i. Note that i is 1 or 2, for example. The detail has already been described with reference to FIG. 53, and the description thereof will be thus omitted.

As described above, TRP #i labeled 3902_i performs, for example, LBT processing such as the omni-directional LBT or directional LBT, and check if a signal is present. When no signal is present, TRP #i labeled 3902_i transmits a modulation signal to NR-UE 3901. Note that i is 1 or 2, for example. The detail has already been described with reference to FIG. 54, and the description thereof will be thus omitted.

Thus, in the case of FIG. 51A, NR-UE 3901 performs, for example, LBT processing such as the omni-directional LBT or directional LBT, and no modulation signal of the first standard is detected, for example; accordingly, NR-UE 3901 transmits a modulation signal to TRP #1 labeled 3902_1.

TRP #1 labeled 3902_1 also performs, for example, LBT processing such as the omni-directional LBT or directional LBT, and a modulation signal, such as a modulation signal of the first standard, is not detected, for example; accordingly, TRP #1 labeled 3902_1 transmits a modulation signal to NR-UE 3901.

TRP #2 labeled 3902_2 also performs, for example, LBT processing such as the omni-directional LBT or directional LBT, and a modulation signal, such as a modulation signal of the first standard, is not detected, for example; accordingly, TRP #2 labeled 3902_2 transmits a modulation signal to NR-UE 3901.

When the state is as in FIG. 62 after FIG. 51A, TRP #1 labeled 3902_1 performs, for example, LBT processing such as the omni-directional LBT or directional LBT, and a modulation signal of the first standard is detected, for example; accordingly, TRP #1 labeled 3902_1 does not transmit a modulation signal to NR-UE 3901.

NR-UE 3901 also performs, for example, LBT processing such as the omni-directional LBT or directional LBT, and a modulation signal, such as a modulation signal of the first standard, is not detected, for example; accordingly, NR-UE 3901 transmits a modulation signal to TRP #1 labeled 3902_1.

TRP #2 labeled 3902_2 also performs, for example, LBT processing such as the omni-directional LBT or directional LBT, and a modulation signal, such as a modulation signal of the first standard, is not detected, for example; accordingly, TRP #2 labeled 3902_2 transmits a modulation signal to NR-UE 3901.

At this time, "NR-UE 3901 performs, for example, LBT processing such as the omni-directional LBT or directional LBT, and a modulation signal, such as a modulation signal of the first standard, is not detected; accordingly, NR-UE 3901 transmits a modulation signal to TRP #1 labeled 3902_1", which causes uplink communication by NR-UE 3901 and TRP #1 labeled 3902_1 and also causes uplink communication by TRP #2 labeled 3902_2 and NR-UE 3901, thereby producing an effect of enabling bi-directional communication in the TRPs and NR-UE.

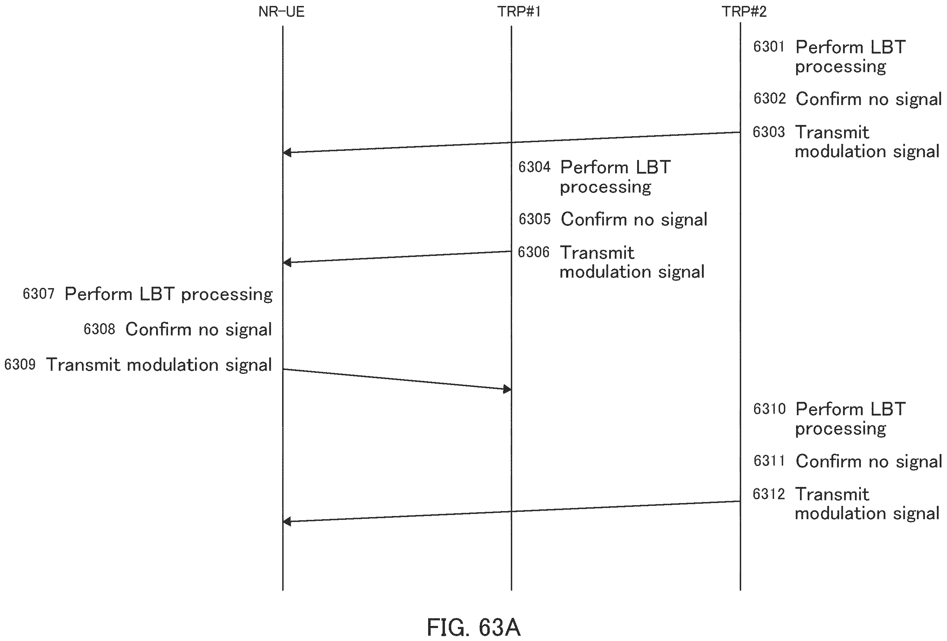

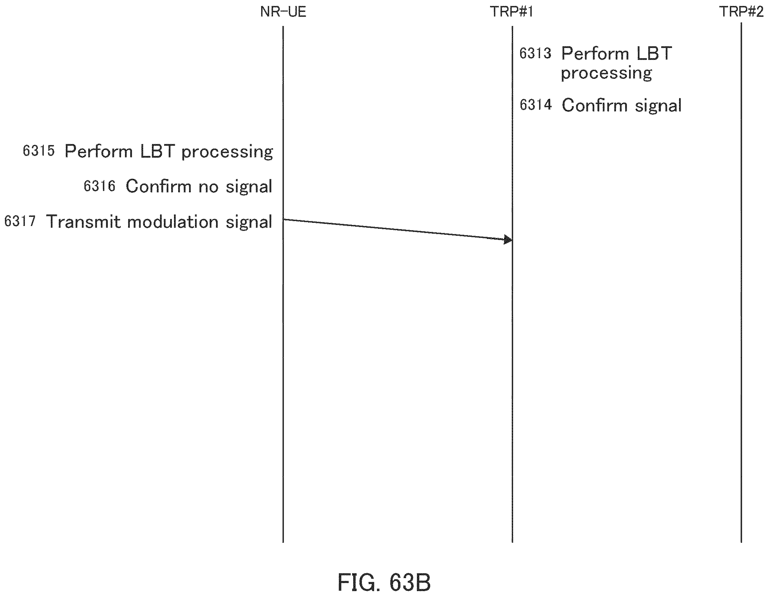

FIGS. 63A and 63B illustrate exemplary transition from FIG. 51A to FIG. 62. Note that FIG. 63B illustrates processing after the processing in FIG. 63A. Not all operations are illustrated in FIGS. 63A and 63B. For example, NR-UE, TRP #1, and TRP #2 may perform sector sweep processing, but it is not illustrated in FIGS. 63A and 63B. Processing other than the above may also be performed.

First, "TRP #1, TRP #2, and NR-UE" perform processing such as sector sweep as described above, and start communication as in FIG. 51A.

FIGS. 63A and 63B illustrate exemplary transition from FIG. 51A to FIG. 62. TRP #2 labeled 3902_2 performs LBT processing (6301). It is assumed that TRP #2 labeled 3902_2 confirms no signal of the first standard in the direction of NR-UE 3901, for example (6302). Thus, TRP #2 labeled 3902_2 transmits a modulation signal for downlink to NR-UE 3901 (6303).

NR-UE 3901 then receives the modulation signal for downlink transmitted by TRP #2 labeled 3902_2.

TRP #1 labeled 3902_1 performs LBT processing (6304). It is assumed that TRP #1 labeled 3902_1 confirms no signal of the first standard in the direction of NR-UE 3901, for example (6305). Thus, TRP #1 labeled 3902_1 transmits a modulation signal for downlink to NR-UE 3901 (6306).

NR-UE 3901 then receives the modulation signal for downlink transmitted by TRP #1 labeled 3902_1.

After that, NR-UE 3901 performs LBT processing (6307). It is assumed that NR-UE 3901 confirms no signal of the first standard in the direction of TRP #1 labeled 3902_1, for example (6308). Accordingly, NR-UE 3901 transmits a modulation signal for uplink to TRP #1 labeled 3902_1 (6309).

TRP #1 labeled 3902_1 then receives the modulation signal for uplink transmitted by NR-UE 3901.

Subsequently, TRP #2 labeled 3902_2 performs LBT processing (6310). It is assumed that TRP #2 labeled 3902_2 confirms no signal of the first standard in the direction of NR-UE 3901, for example (6311). Thus, TRP #2 labeled 3902_2 transmits a modulation signal for downlink to NR-UE 3901 (6312).

NR-UE 3901 then receives the modulation signal for downlink transmitted by TRP #2 labeled 3902_2.

Then, TRP #1 labeled 3902_1 performs LBT processing as in FIG. 63B (6313). It is assumed that TRP #1 labeled 3902_1 confirms a signal of the first standard in the direction of NR-UE 3901, for example (6314). Thus, TRP #1 labeled 3902_1 does not transmit a modulation signal for downlink.

After that, NR-UE 3901 performs LBT processing (6315). It is assumed that NR-UE 3901 confirms no signal of the first standard in the direction of TRP #1 labeled 3902_1, for example (6316). Accordingly, NR-UE 3901 transmits a modulation signal for uplink to TRP #1 labeled 3902_1 (6317).

TRP #1 labeled 3902_1 then receives the modulation signal for uplink transmitted by NR-UE 3901.

To enable transition from FIG. 51Ato FIG. 62 as illustrated in FIGS. 63A and 63B, TRP #1 labeled 3902_1 and TRP #2 labeled 3902_2 preferably share a connection state with NR-UE 3901, e.g., an uplink state of each TRP and a downlink state of each TRP, by performing communication in FIGS. 51A and 62.

Note that, when "AP 5102 and UE 5101" are gone (e.g., FIG. 51A) from the state of FIG. 62, for example, the communication state of TRP #1 labeled 3902_1 and NR-UE 3901 may be changed. To be more specific, TRP #1 labeled 3902_1 may transmit a modulation signal to NR-UE 3901. NR-UE 3901 may also transmit a modulation signal to TRP #1 labeled 3902_1.

It is assumed that, while TRP #1 labeled 3902_1 uses the first frequency (band) for transmitting a modulation signal to NR-UE 3901 in FIG. 51A, the state is changed to that of FIG. 62 and TRP #1 labeled 3902_1 no longer transmits a modulation signal to NR-UE 3901 using the first frequency (band). In this case, TRP #1 labeled 3902_1 may transmit a modulation signal to NR-UE 3901 using the second frequency (band) other than the first frequency (band) instead.

At this time, TRP #1 labeled 3902_1 and NR-UE 3901 may perform a sector sweep-related procedure in the second frequency (band) when in the state of FIG. 62, or TRP #1 labeled 3902_1 and NR-UE 3901 may perform the sector sweep-related procedure in the second frequency (band) when still in the state of FIG. 51A.

Next, still other specific operations at multiple TRP will be described.

FIG. 51A illustrates an exemplary communication state of TRP #1, TRP #2, and NR-UE. Note that, in FIG. 51A, components that operate in the same manner as in FIG. 39 are denoted by the same reference signs.

TRP #1 labeled 3902_1 and NR-UE 3901 perform communication with each other. To be more specific, TRP #1 labeled 3902_1 transmits a modulation signal to NR-UE 3901. NR-UE 3901 also transmits a modulation signal to TRP #1 labeled 3902_1.

TRP #2 labeled 3902_2 and NR-UE 3901 perform communication with each other. To be more specific, TRP #2 labeled 3902_2 transmits a modulation signal to NR-UE 3901.

FIG. 62 illustrates an exemplary communication state of TRP #1, TRP #2, and NR-UE different from that in FIG. 51A. Note that, in FIG. 62, components that operate in the same manner as in FIG. 39 or FIG. 51A are denoted by the same reference signs. The detail has already been described, and thus the description thereof will be omitted.

At this time, TRP #1 labeled 3902_1 performs, for example, LBT processing such as the omni-directional LBT or directional LBT, and a modulation signal of the first standard is detected, for example; accordingly, TRP #1 labeled 3902_1 does not transmit a modulation signal to NR-UE 3901.

TRP #2 labeled 3902_2 also performs, for example, LBT processing such as the omni-directional LBT or directional LBT, and a modulation signal, such as a modulation signal of the first standard, is not detected, for example; accordingly, TRP #2 labeled 3902_2 transmits a modulation signal to NR-UE 3901.

Here, a description will be given of an operation when communication is started as "TRP #1, TRP #2, and NR-UE" do as described with reference to FIG. 51A, and "the state where AP 5102 and UE 5101 communicate with each other" occurs as in FIG. 62.

The communication state of TRP #1, TRP #2, and NR-UE is assumed to be the state as in FIG. 51A. At this time, for example, as in FIG. 52, TRP #1, TRP #2, and NR-UE perform sector sweep-related processing, i.e., TRP #1, TRP #2, and NR-UE perform processing of transmit beamforming and receive beamforming. The detail has already been described, and thus the description thereof will be omitted.

As described above, NR-UE 3901 performs, for example, LBT processing such as the omni-directional LBT or directional LBT, and check if a signal is present. When no signal is present, NR-UE 3901 transmits a modulation signal to TRP #i labeled 3902_i. Note that i is 1 or 2, for example. The detail has already been described with reference to FIG. 53, and the description thereof will be thus omitted.

As described above, TRP #i labeled 3902_i performs, for example, LBT processing such as the omni-directional LBT or directional LBT, and check if a signal is present. When no signal is present, TRP #i labeled 3902_i transmits a modulation signal to NR-UE 3901. Note that i is 1 or 2, for example. The detail has already been described with reference to FIG. 54, and the description thereof will be thus omitted.

Thus, in the case of FIG. 51A, NR-UE 3901 performs, for example, LBT processing such as the omni-directional LBT or directional LBT, and no modulation signal of the first standard is detected, for example; accordingly, NR-UE 3901 transmits a modulation signal to TRP #1 labeled 3902_1.

TRP #1 labeled 3902_1 also performs, for example, LBT processing such as the omni-directional LBT or directional LBT, and a modulation signal, such as a modulation signal of the first standard, is not detected, for example; accordingly, TRP #1 labeled 3902_1 transmits a modulation signal to NR-UE 3901.

TRP #2 labeled 3902_2 also performs, for example, LBT processing such as the omni-directional LBT or directional LBT, and a modulation signal, such as a modulation signal of the first standard, is not detected, for example; accordingly, TRP #2 labeled 3902_2 transmits a modulation signal to NR-UE 3901.

When the state is as in FIG. 62 after FIG. 51A, TRP #1 labeled 3902_1 performs, for example, LBT processing such as the omni-directional LBT or directional LBT, and a modulation signal of the first standard is detected, for example; accordingly, TRP #1 labeled 3902_1 does not transmit a modulation signal to NR-UE 3901.

NR-UE 3901 also performs, for example, LBT processing such as the omni-directional LBT or directional LBT, and a modulation signal, such as a modulation signal of the first standard, is not detected, for example; accordingly, NR-UE 3901 transmits a modulation signal to TRP #1 labeled 3902_1.

TRP #2 labeled 3902_2 also performs, for example, LBT processing such as the omni-directional LBT or directional LBT, and a modulation signal, such as a modulation signal of the first standard, is not detected, for example; accordingly, TRP #2 labeled 3902_2 transmits a modulation signal to NR-UE 3901.

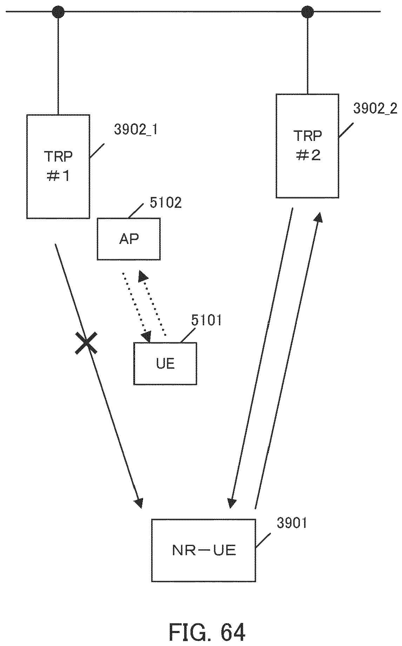

FIG. 64 illustrates an exemplary "communication state of TRP #1, TRP #2, and NR-UE" after the "communication state of TRP #1, TRP #2, and NR-UE" in FIG. 62. Note that, in FIG. 64, components that operate in the same manner as in FIG. 39 or FIG. 51B are denoted by the same reference signs.

In FIG. 51A, TRP #1 labeled 3902_1 performs, for example, LBT processing such as the omni-directional LBT or directional LBT, and a modulation signal, such as a modulation signal of the first standard, is not detected; accordingly, TRP #1 labeled 3902_1 transmits a modulation signal to NR-UE 3901. After that, the state is changed to that in FIG. 64, TRP #1 labeled 3902_1 performs, for example, LBT processing such as the omni-directional LBT or directional LBT, and a modulation signal, such as a modulation signal of the first standard, is detected in a direction of NR-UE 3901, for example; accordingly, TRP #1 labeled 3902_1 stops transmission of a modulation signal to NR-UE 3901 (see FIG. 62). Then, the state is transitioned from FIG. 62 to FIG. 64.

Thus, NR-UE 3901 also performs, for example, LBT processing such as the omni-directional LBT or directional LBT, and a modulation signal, such as a modulation signal of the first standard, is not detected in a direction of TRP #2 labeled 3902_2, for example; accordingly, NR-UE 3901 transmits a modulation signal to TRP #2 labeled 3902_2.

The transition from FIG. 51A to FIG. 62 has already been described with reference to FIGS. 63A and 63B, and the description thereof will be thus omitted.

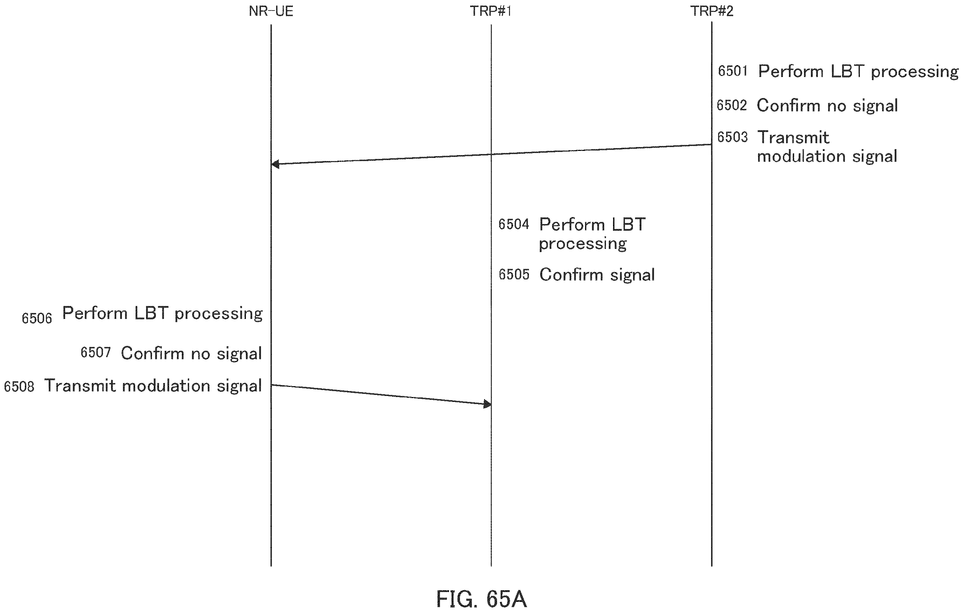

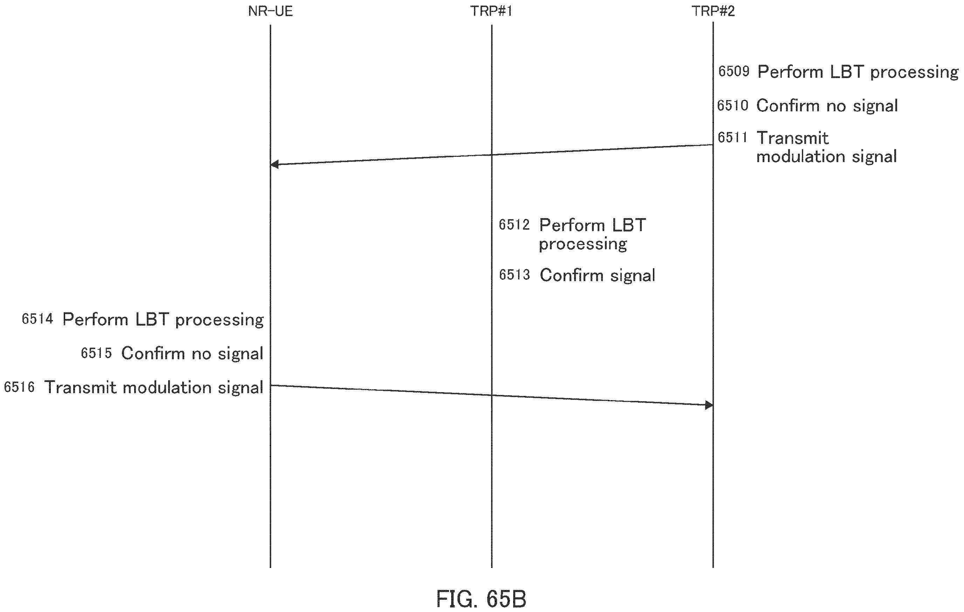

FIGS. 65A and 65B illustrate exemplary transition from FIG. 62 to FIG. 64. Note that FIG. 65B illustrates processing after the processing in FIG. 65A. Not all operations are illustrated in FIGS. 65A and 65B. For example, NR-UE, TRP #1, and TRP #2 may perform sector sweep processing, but it is not illustrated in FIGS. 65A and 65B. Processing other than the above may also be performed.

"TRP #1, TRP #2, and NR-UE" perform processing such as sector sweep as described above, and perform communication as in FIGS. 51Ato 62.

FIGS. 65A and 65B illustrate exemplary transition from FIG. 62 to FIG. 64. TRP #2 labeled 3902_2 performs LBT processing (6501). It is assumed that TRP #2 labeled 3902_2 confirms no signal of the first standard in the direction of NR-UE 3901, for example (6502). Thus, TRP #2 labeled 3902_2 transmits a modulation signal for downlink to NR-UE 3901 (6503).

NR-UE 3901 then receives the modulation signal for downlink transmitted by TRP #2 labeled 3902_2.

TRP #1 labeled 3902_1 performs LBT processing (6504). It is assumed that TRP #1 labeled 3902_1 confirms a signal of the first standard in the direction of NR-UE 3901, for example (6505). Thus, TRP #1 labeled 3902_1 does not transmit a modulation signal for downlink.

After that, NR-UE 3901 performs LBT processing (6506). It is assumed that NR-UE 3901 confirms no signal of the first standard in the direction of TRP #1 labeled 3902_1, for example (6507). Accordingly, NR-UE 3901 transmits a modulation signal for uplink to TRP #1 labeled 3902_1 (6508).

TRP #1 labeled 3902_1 then receives the modulation signal for uplink transmitted by NR-UE 3901.

Then, TRP #2 labeled 3902_2 performs LBT processing as in FIG. 65B (6509). It is assumed that TRP #2 labeled 3902_2 confirms no signal of the first standard in the direction of NR-UE 3901, for example (6510). Thus, TRP #2 labeled 3902_2 transmits a modulation signal for downlink to NR-UE 3901 (6511).

NR-UE 3901 then receives the modulation signal for downlink transmitted by TRP #2 labeled 3902_2.

TRP #1 labeled 3902_1 performs LBT processing (6512). It is assumed that TRP #1 labeled 3902_1 confirms a signal of the first standard in the direction of NR-UE 3901, for example (6513). Thus, TRP #1 labeled 3902_1 does not transmit a modulation signal for downlink.

After that, NR-UE 3901 performs LBT processing (6514). It is assumed that NR-UE 3901 confirms no signal of the first standard in (the direction of TRP #1 labeled 3902_1 and) the direction of TRP #2 labeled 3902_2, for example (6515). Accordingly, NR-UE 3901 transmits a modulation signal for uplink to TRP #2 labeled 3902_2 (6516).

TRP #2 labeled 3902_2 then receives the modulation signal for uplink transmitted by NR-UE 3901.

As described above, NR-UE 3901 performs communication with TRP #2 labeled 3902_2, and TRP #1 labeled 3902_1 does not perform radio communication with NR-UE 3901 accordingly as in FIG. 64, which allows TRP #1 labeled 3902_1 to select a communication counterpart flexibly, thereby producing an effect of possibly improving the system throughput.

Next, a frequency at which NR-UE 3901 performs LBT will be described.

A description will be given of a frequency at which NR-UE 3901 performs LBT in a case where "a frequency used by NR-UE 3901 to transmit a modulation signal to TRP #1 labeled 3902_1 in FIGS. 51A and 62" and "a frequency used by NR-UE 3901 to transmit a modulation signal to TRP #2 labeled 3902_2 in FIG. 64" are the same (common) or partially the same.

FIGS. 57A and 57B are examples for describing the frequency at which NR-UE 3901 performs LBT. Note that the example is not limited to the arrangement in FIGS. 57A and 57B. FIGS. 57A and 57B have already been described in detail, and the description thereof will be thus omitted.

Specifying the frequency bands as described above allows NR-UE 3901 to have an effect of suitably checking whether a (interference) signal of the first standard is present in "the direction in which a modulation signal transmitted by TRP #1 labeled 3902_1 is present" and "the direction in which a modulation signal transmitted by TRP #2 labeled 3902_2 is present".

A description will be given of a frequency at which NR-UE 3901 performs LBT in a case where "a frequency used by NR-UE 3901 to transmit a modulation signal to TRP #1 labeled 3902_1 in FIGS. 51A and 62" and "a frequency used by NR-UE 3901 to transmit a modulation signal to TRP #2 labeled 3902_2 in FIG. 64" are different from each other.

FIGS. 58A, 58B, 59A, and 59B are examples for describing the frequency at which NR-UE 3901 performs LBT. Note that FIGS. 58A, 58B, 59A, and 59B have already been described in detail, and the description thereof will be thus omitted.

Specifying the frequency bands as described above allows NR-UE 3901 to have an effect of suitably checking whether a (interference) signal of the first standard is present in "the direction in which a modulation signal transmitted by TRP #1 labeled 3902_1 is present" and "the direction in which a modulation signal transmitted by TRP #2 labeled 3902_2 is present".

FIG. 60A illustrates an exemplary timing of LBT processing when frequency bands are arranged as in FIG. 58A, and components that operate in the same manner as in FIGS. 57A and 58A are denoted by the same reference signs. Note that the horizontal axis represents frequency and the vertical axis represents time in FIG. 60A.

A distinctive feature of FIG. 60A is that time for LBT processing implement 6001 is present for "frequency band 5801 where a modulation signal transmitted to TRP #1 labeled 3902_1 by NR-UE 3901 is present" in the first time, and time for LBT processing implement 6002 is present for "frequency band 5802 where a modulation signal transmitted to TRP #2 labeled 3902_2 by NR-UE 3901 is present" in the first time.

Note that examples of the frequency band for LBT processing implement 6001 and the frequency band for LBT processing implement 6002 are as described with reference to FIG. 58A.

This produces an effect that NR-UE 3901 can transmit a modulation signal to TRP #1 labeled 3902_1 and TRP #2 labeled 3902_2 with reduced interference.

FIG. 60B illustrates an exemplary timing of LBT processing when frequency bands are arranged as in FIG. 58A, and components that operate in the same manner as in FIGS. 57A, 58A, and 60A are denoted by the same reference signs. Note that the horizontal axis represents frequency and the vertical axis represents time in FIG. 60B.

A distinctive feature of FIG. 60B is that time for LBT processing implement 6001 is present for "frequency band 5801 where a modulation signal transmitted to TRP #1 labeled 3902_1 by NR-UE 3901 is present" in the first time, and time for LBT processing implement 6002 is present for "frequency band 5802 where a modulation signal transmitted to TRP #2 labeled 3902_2 by NR-UE 3901 is present" in the second time.

Note that examples of the frequency band for LBT processing implement 6001 and the frequency band for LBT processing implement 6002 are as described with reference to FIG. 58A.

This produces an effect that NR-UE 3901 can transmit a modulation signal to TRP #1 labeled 3902_1 and TRP #2 labeled 3902_2 with reduced interference.

FIG. 61A illustrates an exemplary timing of LBT processing when frequency bands are arranged as in FIGS. 59A and 59B, and components that operate in the same manner as in FIG. 59A are denoted by the same reference signs. Note that the horizontal axis represents frequency and the vertical axis represents time in FIG. 61A.

A distinctive feature of FIG. 61A is that time for LBT processing implement 6101 is present for "frequency band 5911 where a modulation signal transmitted to TRP #1 labeled 3902_1 by NR-UE 3901 is present" in the first time, and time for LBT processing implement 6102 is present for "frequency band 5912 where a modulation signal transmitted to TRP #2 labeled 3902_2 by NR-UE 3901 is present" in the first time.

Note that examples of the frequency band for LBT processing implement 6101 and the frequency band for LBT processing implement 6102 are as described with reference to FIGS. 59A and 59B, and not limited to the example in FIG. 61A.

This produces an effect that NR-UE 3901 can transmit a modulation signal to TRP #1 labeled 3902_1 and TRP #2 labeled 3902_2 with reduced interference.

FIG. 61B illustrates an exemplary timing of LBT processing when frequency bands are arranged as in FIGS. 59A and 59B, and components that operate in the same manner as in FIGS. 59A and 61A are denoted by the same reference signs. Note that the horizontal axis represents frequency and the vertical axis represents time in FIG. 61B.

A distinctive feature of FIG. 61B is that time for LBT processing implement 6101 is present for "frequency band 5911 where a modulation signal transmitted to TRP #1 labeled 3902_1 by NR-UE 3901 is present" in the first time, and time for LBT processing implement 6102 is present for "frequency band 5912 where a modulation signal transmitted to TRP #2 labeled 3902_2 by NR-UE 3901 is present" in the second time.

Note that examples of the frequency band for LBT processing implement 6101 and the frequency band for LBT processing implement 6102 are as described with reference to FIGS. 59A and 59B, and not limited to the example in FIG. 61B.

This produces an effect that NR-UE 3901 can transmit a modulation signal to TRP #1 labeled 3902_1 and TRP #2 labeled 3902_2 with reduced interference.

Specifying the frequency bands as described above allows NR-UE 3901 to have an effect of suitably checking whether a (interference) signal of the first standard is present in "the direction in which a modulation signal transmitted by TRP #1 labeled 3902_1 is present" and "the direction in which a modulation signal transmitted by TRP #2 labeled 3902_2 is present".

Note that, when "AP 5102 and UE 5101" are gone (e.g., FIG. 51A) from the state of "FIG. 62 or FIG. 64", for example, the communication state of TRP #1 labeled 3902_1 and NR-UE 3901 may be changed. To be more specific, TRP #1 labeled 3902_1 may transmit a modulation signal to NR-UE 3901. NR-UE 3901 may also transmit a modulation signal to TRP #1 labeled 3902_1.

Next, still other specific operations at multiple TRP will be described.

FIG. 51A illustrates an exemplary communication state of TRP #1, TRP #2, and NR-UE. Note that, in FIG. 51A, components that operate in the same manner as in FIG. 39 are denoted by the same reference signs.

TRP #1 labeled 3902_1 and NR-UE 3901 perform communication with each other. To be more specific, TRP #1 labeled 3902_1 transmits a modulation signal to NR-UE 3901. NR-UE 3901 also transmits a modulation signal to TRP #1 labeled 3902_1.

TRP #2 labeled 3902_2 and NR-UE 3901 perform communication with each other. To be more specific, TRP #2 labeled 3902_2 transmits a modulation signal to NR-UE 3901.

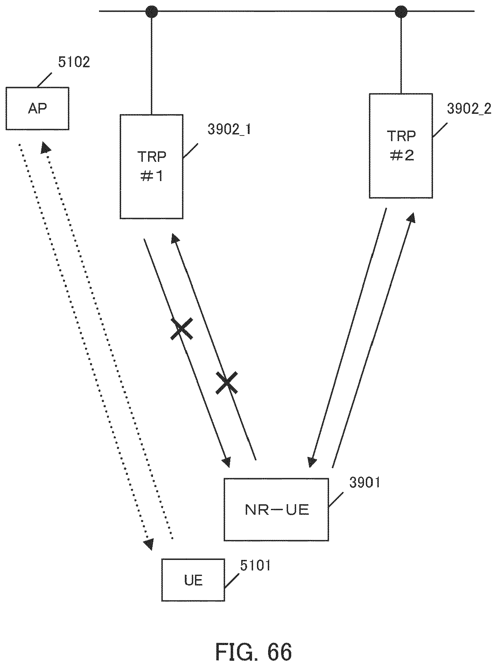

FIG. 66 illustrates an exemplary communication state of TRP #1, TRP #2, and NR-UE different from that in FIG. 51A. Note that, in FIG. 66, components that operate in the same manner as in FIG. 39 or FIG. 51A are denoted by the same reference signs.

TRP #2 labeled 3902_2 and NR-UE 3901 perform communication with each other. To be more specific, TRP #2 labeled 3902_2 transmits a modulation signal to NR-UE 3901. NR-UE 3901 also transmits a modulation signal to TRP #2 labeled 3902_2.

In addition, AP 5102 and UE 5101 perform communication with each other. To be more specific, AP 5102 transmits a modulation signal of the first standard to UE 5101. UE 5101 also transmits a modulation signal of the first standard to AP 5102.

At this time, TRP #1 labeled 3902_1 performs, for example, LBT processing such as the omni-directional LBT or directional LBT, and a modulation signal of the first standard is detected, for example; accordingly, TRP #1 labeled 3902_1 does not transmit a modulation signal to NR-UE 3901.

In addition, NR-UE 3901 performs, for example, LBT processing such as the omni-directional LBT or directional LBT, and a modulation signal of the first standard is detected, for example; accordingly, NR-UE 3901 does not transmit a modulation signal to TRP #1 labeled 3902_1.

Here, a description will be given of an operation when communication is started as "TRP #1, TRP #2, and NR-UE" do as described with reference to FIG. 51A, and "the state where AP 5102 and UE 5101 communicate with each other" occurs as in FIG. 66.

The communication state of TRP #1, TRP #2, and NR-UE is assumed to be the state as in FIG. 51A. At this time, for example, as in FIG. 52, TRP #1, TRP #2, and NR-UE perform sector sweep-related processing, i.e., TRP #1, TRP #2, and NR-UE perform processing of transmit beamforming and receive beamforming. The detail has already been described, and thus the description thereof will be omitted.

As described above, NR-UE 3901 performs, for example, LBT processing such as the omni-directional LBT or directional LBT, and check if a signal is present. When no signal is present, NR-UE 3901 transmits a modulation signal to TRP #i labeled 3902_i. Note that i is 1 or 2, for example. The detail has already been described with reference to FIG. 53, and the description thereof will be thus omitted.

As described above, TRP #i labeled 3902_i performs, for example, LBT processing such as the omni-directional LBT or directional LBT, and check if a signal is present. When no signal is present, TRP #i labeled 3902_i transmits a modulation signal to NR-UE 3901. Note that i is 1 or 2, for example. The detail has already been described with reference to FIG. 54, and the description thereof will be thus omitted.

Thus, in the case of FIG. 51A, NR-UE 3901 performs, for example, LBT processing such as the omni-directional LBT or directional LBT, and no modulation signal of the first standard is detected, for example; accordingly, NR-UE 3901 transmits a modulation signal to TRP #1 labeled 3902_1.

TRP #1 labeled 3902_1 also performs, for example, LBT processing such as the omni-directional LBT or directional LBT, and a modulation signal, such as a modulation signal of the first standard, is not detected, for example; accordingly, TRP #1 labeled 3902_1 transmits a modulation signal to NR-UE 3901.

TRP #2 labeled 3902_2 also performs, for example, LBT processing such as the omni-directional LBT or directional LBT, and a modulation signal, such as a modulation signal of the first standard, is not detected, for example; accordingly, TRP #2 labeled 3902_2 transmits a modulation signal to NR-UE 3901.

When the state is as in FIG. 66 after FIG. 51A, TRP #1 labeled 3902_1 performs, for example, LBT processing such as the omni-directional LBT or directional LBT, and a modulation signal of the first standard is detected, for example; accordingly, TRP #1 labeled 3902_1 does not transmit a modulation signal to NR-UE 3901.

In addition, NR-UE 3901 performs, for example, LBT processing such as the omni-directional LBT or directional LBT, and a modulation signal, such as a modulation signal of the first standard, is detected; accordingly, NR-UE 3901 does not transmit a modulation signal to TRP #1 labeled 3902_1.

TRP #2 labeled 3902_2 also performs, for example, LBT processing such as the omni-directional LBT or directional LBT, and a modulation signal, such as a modulation signal of the first standard, is not detected, for example; accordingly, TRP #2 labeled 3902_2 transmits a modulation signal to NR-UE 3901.

When the state is changed to that in FIG. 66, NR-UE 3901 performs, for example, LBT processing such as the omni-directional LBT or directional LBT, and a modulation signal, such as a modulation signal of the first standard, is detected in a direction of TRP #1 labeled 3902_1, for example; accordingly, NR-UE 3901 stops transmission of a modulation signal to TRP #1 labeled 3902_1.

NR-UE 3901 also performs, for example, LBT processing such as the omni-directional LBT or directional LBT, and a modulation signal, such as a modulation signal of the first standard, is not detected in a direction of TRP #2 labeled 3902_2, for example; accordingly, NR-UE 3901 transmits a modulation signal to TRP #2 labeled 3902_2.

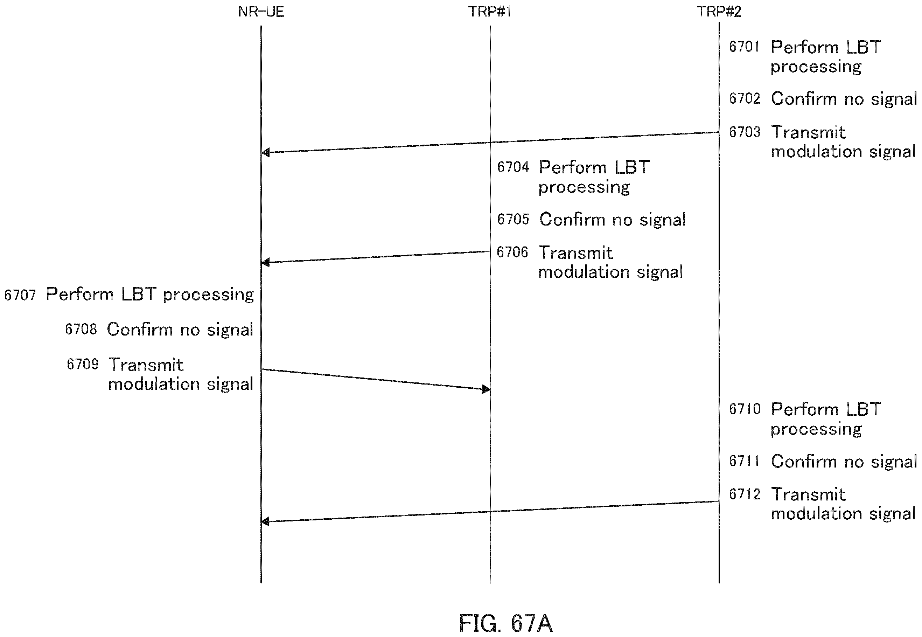

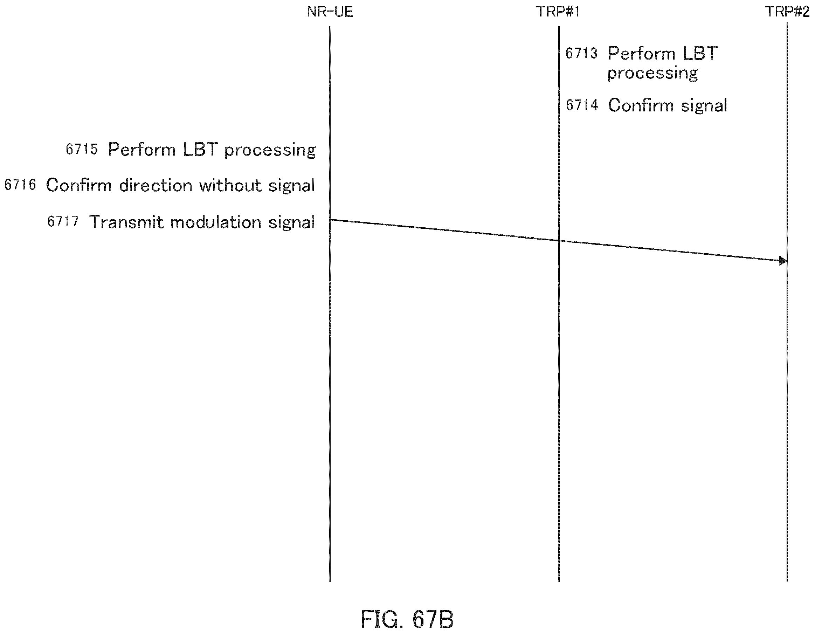

FIGS. 67A and 67B illustrate exemplary transition from FIG. 51A to FIG. 66. Note that FIG. 67B illustrates processing after the processing in FIG. 67A. Not all operations are illustrated in FIGS. 67A and 67B. For example, NR-UE, TRP #1, and TRP #2 may perform sector sweep processing, but it is not illustrated in FIGS. 67A and 67B. Processing other than the above may also be performed.

"TRP #1, TRP #2, and NR-UE" perform processing such as sector sweep as described above, and perform communication as in FIGS. 51A to 66.

FIGS. 67A and 67B illustrate exemplary transition from FIG. 51 to FIG. 66. TRP #2 labeled 3902_2 performs LBT processing (6701). It is assumed that TRP #2 labeled 3902_2 confirms no signal of the first standard in the direction of NR-UE 3901, for example (6702). Thus, TRP #2 labeled 3902_2 transmits a modulation signal for downlink to NR-UE 3901 (6703).

NR-UE 3901 then receives the modulation signal for downlink transmitted by TRP #2 labeled 3902_2.

TRP #1 labeled 3902_1 performs LBT processing (6704). It is assumed that TRP #1 labeled 3902_1 confirms no signal of the first standard in the direction of NR-UE 3901, for example (6705). Thus, TRP #1 labeled 3902_1 transmits a modulation signal for downlink to NR-UE 3901 (6706).

NR-UE 3901 then receives the modulation signal for downlink transmitted by TRP #2 labeled 3902_2.

After that, NR-UE 3901 performs LBT processing (6707). It is assumed that NR-UE 3901 confirms no signal of the first standard in the direction of TRP #1 labeled 3902_1, for example (6708). Accordingly, NR-UE 3901 transmits a modulation signal for uplink to TRP #1 labeled 3902_1 (6709).

TRP #1 labeled 3902_1 then receives the modulation signal for uplink transmitted by NR-UE 3901.

Subsequently, TRP #2 labeled 3902_2 performs LBT processing (6710). It is assumed that TRP #2 labeled 3902_2 confirms no signal of the first standard in the direction of NR-UE 3901, for example (6711). Thus, TRP #2 labeled 3902_2 transmits a modulation signal for downlink to NR-UE 3901 (6712).

NR-UE 3901 then receives the modulation signal for downlink transmitted by TRP #2 labeled 3902_2.

Then, TRP #1 labeled 3902_1 performs LBT processing as in FIG. 65B (6713). It is assumed that TRP #1 labeled 3902_1 confirms a signal of the first standard in the direction of NR-UE 3901, for example (6714). Thus, TRP #1 labeled 3902_1 does not transmit a modulation signal for downlink to NR-UE 3901.

After that, NR-UE 3901 performs LBT processing (6715). It is assumed that NR-UE 3901 confirms no signal of the first standard in the direction of TRP #2 labeled 3902_2, for example (6716). Accordingly, NR-UE 3901 transmits a modulation signal for uplink to TRP #2 labeled 3902_2 (6717).

TRP #2 labeled 3902_2 then receives the modulation signal for uplink transmitted by NR-UE 3901.

As described above, NR-UE 3901 performs communication with TRP #2 labeled 3902_2, and TRP #1 labeled 3902_1 does not perform radio communication with NR-UE 3901 accordingly as in FIG. 66, which allows TRP #1 labeled 3902_1 to select a communication counterpart flexibly, thereby producing an effect of possibly improving the system throughput.

Next, a frequency at which NR-UE 3901 performs LBT will be described.

A description will be given of a frequency at which NR-UE 3901 performs LBT in a case where "a frequency used by NR-UE 3901 to transmit a modulation signal to TRP #1 labeled 3902_1 in FIG. 51A" and "a frequency used by NR-UE 3901 to transmit a modulation signal to TRP #2 labeled 3902_2 in FIG. 66" are the same (common) or partially the same.

FIGS. 57A and 57B are examples for describing the frequency at which NR-UE 3901 performs LBT. Note that the example is not limited to the arrangement in FIGS. 57A and 57B. FIGS. 57A and 57B have already been described in detail, and the description thereof will be thus omitted.

Specifying the frequency bands as described above allows NR-UE 3901 to have an effect of suitably checking whether a (interference) signal of the first standard is present in "the direction in which a modulation signal transmitted by TRP #1 labeled 3902_1 is present" and "the direction in which a modulation signal transmitted by TRP #2 labeled 3902_2 is present".

A description will be given of a frequency at which NR-UE 3901 performs LBT in a case where "a frequency used by NR-UE 3901 to transmit a modulation signal to TRP #1 labeled 3902_1 in FIG. 51A" and "a frequency used by NR-UE 3901 to transmit a modulation signal to TRP #2 labeled 3902_2 in FIG. 66" are different from each other.

FIGS. 58A, 58B, 59A, and 59B are examples for describing the frequency at which NR-UE 3901 performs LBT. FIGS. 58A, 58B, 59A, and 59B have already been described in detail, and the description thereof will be thus omitted.

Specifying the frequency bands as described above allows NR-UE 3901 to have an effect of suitably checking whether a (interference) signal of the first standard is present in "the direction in which a modulation signal transmitted by TRP #1 labeled 3902_1 is present" and "the direction in which a modulation signal transmitted by TRP #2 labeled 3902_2 is present".

FIG. 60A illustrates an exemplary timing of LBT processing when frequency bands are arranged as in FIG. 58A, and components that operate in the same manner as in FIGS. 57A and 58A are denoted by the same reference signs. Note that the horizontal axis represents frequency and the vertical axis represents time in FIG. 60A.

A distinctive feature of FIG. 60A is that time for LBT processing implement 6001 is present for "frequency band 5801 where a modulation signal transmitted to TRP #1 labeled 3902_1 by NR-UE 3901 is present" in the first time, and time for LBT processing implement 6002 is present for "frequency band 5802 where a modulation signal transmitted to TRP #2 labeled 3902_2 by NR-UE 3901 is present" in the first time.

Note that examples of the frequency band for LBT processing implement 6001 and the frequency band for LBT processing implement 6002 are as described with reference to FIG. 58A.

This produces an effect that NR-UE 3901 can transmit a modulation signal to TRP #1 labeled 3902_1 and TRP #2 labeled 3902_2 with reduced interference.

FIG. 60B illustrates an exemplary timing of LBT processing when frequency bands are arranged as in FIG. 58A, and components that operate in the same manner as in FIGS. 57A, 58A, and 60A are denoted by the same reference signs. Note that the horizontal axis represents frequency and the vertical axis represents time in FIG. 60B.

A distinctive feature of FIG. 60B is that time for LBT processing implement 6001 is present for "frequency band 5801 where a modulation signal transmitted to TRP #1 labeled 3902_1 by NR-UE 3901 is present" in the first time, and time for LBT processing implement 6002 is present for "frequency band 5802 where a modulation signal transmitted to TRP #2 labeled 3902_2 by NR-UE 3901 is present" in the second time.

Note that examples of the frequency band for LBT processing implement 6001 and the frequency band for LBT processing implement 6002 are as described with reference to FIG. 58A.

This produces an effect that NR-UE 3901 can transmit a modulation signal to TRP #1 labeled 3902_1 and TRP #2 labeled 3902_2 with reduced interference.

FIG. 61A illustrates an exemplary timing of LBT processing when frequency bands are arranged as in FIGS. 59A and 59B, and components that operate in the same manner as in FIG. 59A are denoted by the same reference signs. Note that the horizontal axis represents frequency and the vertical axis represents time in FIG. 61A.

A distinctive feature of FIG. 61A is that time for LBT processing implement 6101 is present for "frequency band 5911 where a modulation signal transmitted to TRP #1 labeled 3902_1 by NR-UE 3901 is present" in the first time, and time for LBT processing implement 6102 is present for "frequency band 5912 where a modulation signal transmitted to TRP #2 labeled 3902_2 by NR-UE 3901 is present" in the first time.

Note that examples of the frequency band for LBT processing implement 6101 and the frequency band for LBT processing implement 6102 are as described with reference to FIGS. 59A and 59B, and not limited to the example in FIG. 61A.

This produces an effect that NR-UE 3901 can transmit a modulation signal to TRP #1 labeled 3902_1 and TRP #2 labeled 3902_2 with reduced interference.

FIG. 61B illustrates an exemplary timing of LBT processing when frequency bands are arranged as in FIGS. 59A and 59B, and components that operate in the same manner as in FIGS. 59A and 61A are denoted by the same reference signs. Note that the horizontal axis represents frequency and the vertical axis represents time in FIG. 61B.

A distinctive feature of FIG. 61B is that time for LBT processing implement 6101 is present for "frequency band 5911 where a modulation signal transmitted to TRP #1 labeled 3902_1 by NR-UE 3901 is present" in the first time, and time for LBT processing implement 6102 is present for "frequency band 5912 where a modulation signal transmitted to TRP #2 labeled 3902_2 by NR-UE 3901 is present" in the second time.

Note that examples of the frequency band for LBT processing implement 6101 and the frequency band for LBT processing implement 6102 are as described with reference to FIGS. 59A and 59B, and not limited to the example in FIG. 61B.

This produces an effect that NR-UE 3901 can transmit a modulation signal to TRP #1 labeled 3902_1 and TRP #2 labeled 3902_2 with reduced interference.

Specifying the frequency bands as described above allows NR-UE 3901 to have an effect of suitably checking whether a (interference) signal of the first standard is present in "the direction in which a modulation signal transmitted by TRP #1 labeled 3902_1 is present" and "the direction in which a modulation signal transmitted by TRP #2 labeled 3902_2 is present".

Note that, in the case of FIG. 66, TRP #1 labeled 3902_1 and NR-UE 3901 may perform, for example, communication for sector sweep to "determine transmit/receive beamforming for TRP #1 labeled 3902_1 and determine transmit/receive beamforming for NR-UE 3901". Thus, when "AP 5102 and UE 5101" are gone (e.g., FIG. 51A) from FIG. 66, for example, communication between TRP #1 labeled 3902_1 and NR-UE 3901 may be restarted. To be more specific, TRP #1 labeled 3902_1 may transmit a modulation signal to NR-UE 3901. NR-UE 3901 may also transmit a modulation signal to TRP #1 labeled 3902_1.

It is assumed that, while TRP #1 labeled 3902_1 uses the first frequency (band) for transmitting a modulation signal to NR-UE 3901 in FIG. 51A, the state is changed to that of FIG. 66 and TRP #1 labeled 3902_1 no longer transmits a modulation signal to NR-UE 3901 using the first frequency (band). In this case, TRP #1 labeled 3902_1 may transmit a modulation signal to NR-UE 3901 using the second frequency (band) other than the first frequency (band) instead.

At this time, TRP #1 labeled 3902_1 and NR-UE 3901 may perform a sector sweep-related procedure in the second frequency (band) when in the state of FIG. 66, or TRP #1 labeled 3902_1 and NR-UE 3901 may perform the sector sweep-related procedure in the second frequency (band) when still in the state of FIG. 51A.

It is assumed that, while NR-UE 3901 uses the third frequency (band) for transmitting a modulation signal to TRP #1 labeled 3902_1 in FIG. 51A, the state is changed to that of FIG. 66 and NR-UE 3901 no longer transmits a modulation signal to TRP #1 labeled 3902_1 using the third frequency (band). In this case, NR-UE 3901 may transmit a modulation signal to TRP #1 labeled 3902_1 using the fourth frequency (band) other than the third frequency (band) instead.

Note that the first frequency (band) and the third frequency (band) may be the same frequency (band) or may be different frequencies (bands). Further, the second frequency (band) and the fourth frequency (band) may be the same frequency (band) or may be different frequencies (bands).

At this time, TRP #1 labeled 3902_1 and NR-UE 3901 may perform a sector sweep-related procedure in the fourth frequency (band) when in the state of FIG. 66, or TRP #1 labeled 3902_1 and NR-UE 3901 may perform the sector sweep-related procedure in the fourth frequency (band) when still in the state of FIG. 51A.

In the above, a description has been given of examples of a method for NR-UE to perform LBT, a method for TRP to perform LBT, and a communication state of NR-UE and a plurality of TRPs in the case where NR-UE performs communication with a plurality of TRPs (multiple TRP). In the following, exemplary capability/capabilities information in performing these will be described.

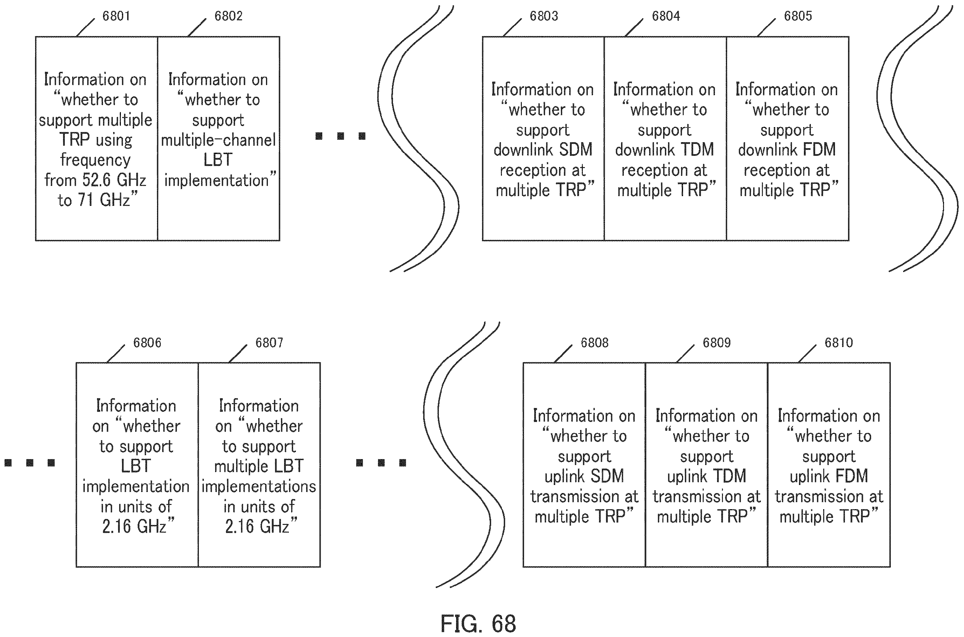

FIG. 68 illustrates an exemplary configuration of capability/capabilities information (information whether a terminal is capable (terminal capability)) that is transmitted to TRP by, for example, a terminal conforming to the NR standard, such as NR-UE 3901.

The capability/capabilities information transmitted to TRP by a terminal conforming to the NR standard includes at least one piece of the following information:

· Information 6801 on "whether to support multiple TRP using frequency from 52.6 GHz to 71 GHz";

· Information 6802 on "whether to support multiple-channel LBT implementation";

· Information 6803 on "whether to support downlink SDM reception at multiple TRP" ;

· Information 6804 on "whether to support downlink TDM reception at multiple TRP" ;

· Information 6805 on "whether to support downlink FDM reception at multiple TRP" ;

· Information 6806 on "whether to support LBT implementation in units of 2.16 GHz";

· Information 6807 on "whether to support multiple LBT implementations in units of 2.16 GHz";

· Information 6808 on "whether to support uplink SDM transmission at multiple TRP" ;

· Information 6809 on "whether to support uplink TDM transmission at multiple TRP"; and

· Information 6810 on "whether to support uplink FDM transmission at multiple TRP".

TRP such as TRP #1 labeled 3902_1 and TRP #2 labeled 3902_2 receives the capability/capabilities information transmitted by a terminal conforming to the NR standard.

It is assumed that the TRP obtains information 6801 on "whether to support multiple TRP using frequency from 52.6 GHz to 71 GHz" among the capability/capabilities information transmitted by the first terminal conforming to the NR standard. The TRP then determines, based on information 6801 on "whether to support multiple TRP using frequency from 52.6 GHz to 71 GHz", whether to perform communication based on multiple TRP, e.g., the multiple TRP described in the present specification, with the first terminal, and starts communication with the first terminal. Note that the determination "whether to perform communication based on multiple TRP" may be made by not the TRP but another apparatus connected to the TRP.

It is assumed that the TRP obtains information 6802 on "whether to support multiple-channel LBT implementation" among the capability/capabilities information transmitted by the first terminal conforming to the NR standard. The TRP then determines whether to perform multiple TRP described in the present specification, for example, based on the LBT method that the first terminal can perform, determines a communication method by multiple TRP, and starts communication with the first terminal. Note that the determination of "a communication method etc. by multiple TRP" may be made by not the TRP but another apparatus connected to the TRP.

It is assumed that the TRP obtains information 6803 on "whether to support downlink SDM reception at multiple TRP" among the capability/capabilities information transmitted by the first terminal conforming to the NR standard.

When the first terminal does not support the "downlink SDM reception", the TRP does not transmit a modulation signal based on "downlink SDM" to the first terminal. When the TRP transmits a modulation signal based on multiple TRP to the first terminal, the

TRP selects a method other than "downlink SDM".

When the first terminal supports the "downlink SDM reception", the TRP may transmit a modulation signal based on "downlink SDM" to the first terminal.

Note that these determinations etc. may be made by not the TRP but another apparatus connected to the TRP.

It is assumed that the TRP obtains information 6804 on "whether to support downlink TDM reception at multiple TRP" among the capability/capabilities information transmitted by the first terminal conforming to the NR standard.

When the first terminal does not support the "downlink TDM reception", the TRP does not transmit a modulation signal based on "downlink TDM" to the first terminal. When the TRP transmits a modulation signal based on multiple TRP to the first terminal, the TRP selects a method other than "downlink TDM".

When the first terminal supports the "downlink TDM reception", the TRP may transmit a modulation signal based on "downlink TDM" to the first terminal.

Note that these determinations etc. may be made by not the TRP but another apparatus connected to the TRP.

It is assumed that the TRP obtains information 6805 on "whether to support downlink FDM reception at multiple TRP" among the capability/capabilities information transmitted by the first terminal conforming to the NR standard.

When the first terminal does not support the "downlink FDM reception", the TRP does not transmit a modulation signal based on "downlink FDM" to the first terminal. When the TRP transmits a modulation signal based on multiple TRP to the first terminal, the TRP selects a method other than "downlink FDM".

When the first terminal supports the "downlink FDM reception", the TRP may transmit a modulation signal based on "downlink FDM" to the first terminal.

Note that these determinations etc. may be made by not the TRP but another apparatus connected to the TRP.

It is assumed that the TRP obtains information 6806 on "whether to support LBT implementation in units of 2.16 GHz" among the capability/capabilities information transmitted by the first terminal conforming to the NR standard.

When obtaining this information, the TRP can know whether the first terminal supports LBT implementation in units of 2.16 GHz, i.e., whether it supports LBT in units of IEEE 802.11ad/ay channel spacing.

When the first terminal supports LBT implementation in units of 2.16 GHz, the TRP can perform multiple TRP based on the IEEE 802.11ad/ay channel spacing, which has been described in the present embodiment, in communicating with the first terminal.

When the first terminal does not support LBT implementation in units of 2.16 GHz, the TRP can perform multiple TRP that is not based on the IEEE 802.11ad/ay channel spacing, which has been described in the present embodiment, in communicating with the first terminal.

It is assumed that the TRP obtains information 6807 on "whether to support multiple LBT implementations in units of 2.16 GHz" among the capability/capabilities information transmitted by the first terminal conforming to the NR standard.

When obtaining this information, the TRP can know whether the first terminal supports multiple LBT implementations in units of 2.16 GHz, i.e., whether it supports multiple LBTs in units of IEEE 802.11ad/ay channel spacing.

When the first terminal supports LBT implementation in units of 2.16 GHz, the TRP can perform multiple TRP using a plurality of IEEE 802.11ad/ay channels based on the IEEE 802.11ad/ay channel spacing, which has been described in the present embodiment, in communicating with the first terminal.

When the first terminal does not support LBT implementation in units of 2.16 GHz, the TRP does not perform multiple TRP using a plurality of IEEE 802.11ad/ay channels based on the IEEE 802.11ad/ay channel spacing, which has been described in the present embodiment, in communicating with the first terminal.

It is assumed that the TRP obtains information 6808 on "whether to support uplink SDM transmission at multiple TRP" among the capability/capabilities information transmitted by the first terminal conforming to the NR standard.

When the first terminal does not support the "uplink SDM transmission", the TRP does not perform transmission of a modulation signal causing "uplink SDM transmission" to the first terminal.

When the TRP transmits a modulation signal based on multiple TRP to the first terminal, the TRP transmits a modulation signal so that a method other than "uplink SDM transmission" is selectable.

When the first terminal supports the "uplink SDM transmission", the TRP may perform transmission of a modulation signal causing "uplink SDM transmission" to the first terminal.

Note that these determinations etc. may be made by not the TRP but another apparatus connected to the TRP.

It is assumed that the TRP obtains information 6809 on "whether to support uplink TDM transmission at multiple TRP" among the capability/capabilities information transmitted by the first terminal conforming to the NR standard.

When the first terminal does not support the "uplink TDM transmission", the TRP does not perform transmission of a modulation signal causing "uplink TDM transmission" to the first terminal.

When the TRP transmits a modulation signal based on multiple TRP to the first terminal, the TRP transmits a modulation signal so that a method other than "uplink TDM transmission" is selectable.

When the first terminal supports the "uplink TDM transmission", the TRP may perform transmission of a modulation signal causing "uplink TDM transmission" to the first terminal.

Note that these determinations etc. may be made by not the TRP but another apparatus connected to the TRP.

It is assumed that the TRP obtains information 6810 on "whether to support uplink FDM transmission at multiple TRP" among the capability/capabilities information transmitted by the first terminal conforming to the NR standard.

When the first terminal does not support the "uplink FDM transmission", the TRP does not perform transmission of a modulation signal causing "uplink FDM transmission" to the first terminal.

When the TRP transmits a modulation signal based on multiple TRP to the first terminal, the TRP transmits a modulation signal so that a method other than "uplink FDM transmission" is selectable.

When the first terminal supports the "uplink FDM transmission", the TRP may perform transmission of a modulation signal causing "uplink FDM transmission" to the first terminal.

Note that these determinations etc. may be made by not the TRP but another apparatus connected to the TRP.

As described above, multiple TRP can be realized in communication between "the TRPs and the terminal" by determining a method of multiple TRP based on the capability/capabilities information transmitted by the terminal, thereby producing an effect of improving a data transmission rate and improving data reception quality.

Note that the TRP receives the capability/capabilities information exemplified in FIG. 68 transmitted by the first terminal, determines multiple TRP exemplified in the present embodiment based on the information, and transmits a modulation signal based on the determined multiple TRP to the first terminal. Here, when "information on a scheme of multiple TRP to be performed (performing multiple TRP)", for example, is transmitted to a terminal such as the first terminal in the modulation signal transmitted by the TRP, it is possible to produce an effect of easily performing multiple TRP by "the terminal and the TRPs".

The "information on a scheme of multiple TRP to be performed (performing multiple TRP)" includes information "whether downlink SDM is performed, whether downlink TDM is performed, and whether downlink FDM is performed", information "whether uplink SDM is performed, whether uplink TDM is performed, and whether uplink FDM is performed", etc.

Note that, in the multiple TRP by "the terminal and the TRPs", "downlink SDM, downlink TDM, and downlink FDM" may be performed in parallel. "Uplink SDM, uplink TDM, and uplink FDM" may also be performed in parallel.

Note that examples of multiple TRP implementation and examples of LBT implementation have been described in the present embodiment, but the implementation method of multiple TRP and LBT is not limited to the examples. In addition, the contents described in the present embodiment can be performed in a frequency band other than the frequency band from 52.6 GHz to 71 GHz (both inclusive), and can be performed in either one of "a licensed band and an unlicensed band".

(Embodiment 6)

In some cases, radio systems using different radio communication schemes share "a licensed band and/or an unlicensed band". For example, the NR system in a frequency band from 52.6 GHz to 71 GHz (both inclusive) and a radio system of IEEE 802.11ad/ay sometimes share "a licensed band and/or an unlicensed band". A description will be given of exemplary operations in the case where radio systems using different radio communication schemes share "a licensed band and/or an unlicensed band". Note that operations described in the present embodiment are applicable to a case where a frequency (band) is shared.

In the present embodiment, a radio system of NR and a radio system of IEEE 802.11ad and/or IEEE 802.11ay are present in a certain space. In the following, IEEE 802.11ad and/or IEEE 802.11ay are sometimes referred to as the first standard.

The radio system of new radio (NR) includes a base station and a terminal. The base station of NR may be referred to as g Node B (gNB). The terminal of NR may be referred to as user equipment (UE). Note that they may be referred to as another name. In the following, the terminal of NR is sometimes referred to as "NR-UE".

The radio system specified in the first standard includes a base station and a terminal. The base station specified in the first standard may be referred to as an access point (AP). The terminal specified in the first standard may be referred to as UE.

Next, one distinctive communication method in the radio system of NR will be described.

FIGS. 39A, 39B, and 39C illustrate exemplary implementation of multiple TRP (also referred to as multiple TX/RX points, or multiple transmission/reception points). Note that the detail has already been described, and thus the description thereof will be omitted.

Note that, although FIGS. 39A, 39B, and 39C have been described as exemplary multiple TRP, the present disclosure is not limited to these, and the NR-UE may perform communication with three or more TRPs. In this case, the NR-UE may transmit modulation signals to three or more TRPs, and the NR-UE may receive modulation signals transmitted by three or more TRPs.

Although it is called TRP in FIGS. 39A, 39B, and 39C, the TRP may be a base station, gNB, e Node B (eNB), repeater, etc. The TRP may be other than these examples. This may apply to the other drawings.

A description will be given of the point that the "modulation signal transmitted to TRP #1 labeled 3902_1 by NR-UE 3901" and the "modulation signal transmitted to TRP #2 labeled 3902_2 by NR-UE 3901" are subjected to any of "spatial multiplexing (spatial division multiplexing (SDM))", "frequency division multiplexing (FDM)", and "time division multiplexing (TDM)".

(A) and (B) of FIG. 40 illustrate an example where the "modulation signal transmitted to TRP #1 labeled 3902_1 by NR-UE 3901" and the "modulation signal transmitted to TRP #2 labeled 3902_2 by NR-UE 3901" are subjected to SDM or FDM. The detail has already been described, and thus the description thereof will be omitted.

(A) and (B) of FIG. 41 illustrate an example different from (A) and (B) of FIG. 40 where the "modulation signal transmitted to TRP #1 labeled 3902_1 by NR-UE 3901" and the "modulation signal transmitted to TRP #2 labeled 3902_2 by NR-UE 3901" are subjected to SDM or FDM. The detail has already been described, and thus the description thereof will be omitted.

(A) and (B) of FIG. 42 illustrate an example where the "modulation signal transmitted to TRP #1 labeled 3902_1 by NR-UE 3901" and the "modulation signal transmitted to TRP #2 labeled 3902_2 by NR-UE 3901" are subjected to TDM or FDM. The detail has already been described, and thus the description thereof will be omitted.

Note that the example of SDM, TDM, and FDM is not limited to the "example in (A) and (B) of FIG. 40", "example in (A) and (B) of FIG. 41", and "example in (A) and (B) of FIG. 42".

SDM such as the "SDM at multiple TRP as in (A) and (B) of FIG. 40" and the "SDM at multiple TRP as in (A) and (B) of FIG. 41" is sometimes referred to as "uplink SDM at multiple TRP" below.

TDM such as the "TDM at multiple TRP as in (A) and (B) of FIG. 42" is sometimes referred to as "uplink TDM at multiple TRP" below.

FDM such as the "FDM at multiple TRP as in (A) and (B) of FIG. 40", the "FDM at multiple TRP as in (A) and (B) of FIG. 41", and the "FDM at multiple TRP as in (A) and (B) of FIG. 42" is sometimes referred to as "uplink FDM at multiple TRP" below.

Next, a description will be given of the point that the "modulation signal transmitted by TRP #1 labeled 3902_1" and the "modulation signal transmitted by TRP #2 labeled 3902_2" are subjected to "spatial multiplexing (spatial division multiplexing (SDM))", "frequency division multiplexing (FDM)", and "time division multiplexing (TDM)".

(A) and (B) of FIG. 43 illustrate an example where the "modulation signal transmitted to NR-UE 3901 by TRP #1 labeled 3902_1" and the "modulation signal transmitted to NR-UE 3901 by TRP #2 labeled 3902_2" are subjected to SDM or FDM. The detail has already been described, and thus the description thereof will be omitted.

(A) and (B) of FIG. 44 illustrate an example different from (A) and (B) of FIG. 43 where the "modulation signal transmitted to NR-UE 3901 by TRP #1 labeled 3902_1" and the "modulation signal transmitted to NR-UE 3901 by TRP #2 labeled 3902_2" are subjected to SDM or FDM. The detail has already been described, and thus the description thereof will be omitted.

(A) and (B) of FIG. 45 illustrate an example where the "modulation signal transmitted to NR-UE 3901 by TRP #1 labeled 3902_1" and the "modulation signal transmitted to NR-UE 3901 by TRP #2 labeled 3902_2" are subjected to TDM or FDM. The detail has already been described, and thus the description thereof will be omitted.

Note that the example of SDM, TDM, and FDM is not limited to the "example in (A) and (B) of FIG. 43", "example in (A) and (B) of FIG. 44", and "example in (A) and (B) of FIG. 45".

SDM such as the "SDM at multiple TRP as in (A) and (B) of FIG. 43" and the "SDM at multiple TRP as in (A) and (B) of FIG. 44" is sometimes referred to as "downlink SDM at multiple TRP" below.

TDM such as the "TDM at multiple TRP as in (A) and (B) of FIG. 45" is sometimes referred to as "downlink TDM at multiple TRP" below.

FDM such as the "FDM at multiple TRP as in (A) and (B) of FIG. 43", the "FDM at multiple TRP as in (A) and (B) of FIG. 44", and the "FDM at multiple TRP as in (A) and (B) of FIG. 45" is sometimes referred to as "downlink FDM at multiple TRP" below.

FIG. 46 illustrates an exemplary configuration of the gNB and NR-UE, for example. The detail has already been described, and thus the description thereof will be omitted.

FIG. 47 illustrates another exemplary configuration of the gNB and NR-UE. In FIG. 47, the components that operate in the same manner as in FIG. 46 are denoted by the same reference signs, and the descriptions thereof will be omitted. The detail has already been described, and thus the description thereof will be omitted.

Note that FIGS. 46 and 47 illustrating "a configuration of the gNB and a configuration of the NR-UE" are merely examples and the configurations are not limited to these.

The transmission/reception panel antenna (x705_1 to x705_M) in FIG. 46 may be composed of a single antenna or a plurality of antennas. In addition, the transmission/reception panel antenna (x705_1 to x705_M) may be composed of a single antenna element or a plurality of antenna elements. A configuration of the transmission/reception panel antenna (x705_1 to x705_M) is not limited to the configuration described in the present embodiment, and may be the configuration described in the other embodiments, for example.

The transmission/reception antenna (x805_1 to x805_m) in FIG. 47 may be composed of a single antenna or a plurality of antennas. In addition, the transmission/reception antenna (x805_1 to x805_m) may be composed of a single antenna element or a plurality of antenna elements. A configuration of the transmission/reception antenna (x805_1 to x805_m) is not limited to the configuration described in the present embodiment.

Note that, in a case where transmission/reception panel antenna i labeled x705_i in FIG. 46 shares, for example, the transmission panel antenna with the configuration in FIG. 3 and the reception panel antenna with the configuration in FIG. 4, transmission antenna 306_1 in FIG. 3 and reception antenna 401_1 in FIG. 4 are shared to configure a single antenna, and multiplier 304_1 and multiplier 403_1 are connected to the shared antenna.

Likewise, transmission antenna 306_2 in FIG. 3 and reception antenna 401_2 in FIG. 4 are shared to configure a single antenna, and multiplier 304_2 and multiplier 403_2 are connected to the shared antenna. In addition, transmission antenna 306_3 in FIG. 3 and reception antenna 401_3 in FIG. 4 are shared to configure a single antenna, and multiplier 304_3 and multiplier 403_3 are connected to the shared antenna. Then, transmission antenna 306_4 in FIG. 3 and reception antenna 401_4 in FIG. 4 are shared to configure a single antenna, and multiplier 304_4 and multiplier 403_4 are connected to the shared antenna.

Regarding Omni-Directional Antenna:

In a case where the gNB and NR-UE have the configuration in FIG. 46, signal reception is performed by using one or more of "transmission/reception panel antenna 1 labeled x705_1 to transmission/reception panel antenna M labeled x705_M".

In each of "transmission/reception panel antenna 1 labeled x705_1 to transmission/reception panel antenna M labeled x705_M", certain receive beamforming (reception directivity control) is configured for antennas composing the transmission/reception panel antenna.

Note that not all antennas composing the transmission/reception panel antenna need to be used for signal reception, and the configuration of receive beamforming (reception directivity control) may or may not be fixed in time.

The method of using the transmission/reception panel antenna in omni-directional reception is not limited to the above example.

In a case where the gNB and NR-UE have the configuration in FIG. 47, signal reception is performed by using one or more of "transmission/reception antenna 1 labeled x805_1 to transmission/reception antenna m labeled x805_m".

In each of "transmission/reception antenna 1 labeled x805_1 to transmission/reception antenna m labeled x805_m", certain receive beamforming (reception directivity control) is configured for antennas composing the transmission/reception antenna.

Note that not all antennas composing the transmission/reception antenna need to be used for signal reception.

The method of using the transmission/reception antenna in omni-directional reception is not limited to the above example.

Regarding Directional Antenna:

In a case where the gNB and NR-UE have the configuration in FIG. 46, signal reception is performed by using one of "transmission/reception panel antenna 1 labeled x705_1 to transmission/reception panel antenna M labeled x705_M".

In detecting a signal in the directional reception, each transmission panel antenna performs, for example, four types of receive beamforming (reception directivity control).

In detecting a signal in the directional reception, the gNB and NR-UE perform, for example, receive beamforming (reception directivity control) according to the first parameter, receive beamforming (reception directivity control) according to the second parameter, receive beamforming (reception directivity control) according to the third parameter, and receive beamforming (reception directivity control) according to the fourth parameter in transmission/reception panel antenna 1 labeled x705_1.

Further, in detecting a signal in the directional reception, the gNB and NR-UE perform receive beamforming (reception directivity control) according to the fifth parameter, receive beamforming (reception directivity control) according to the sixth parameter, receive beamforming (reception directivity control) according to the seventh parameter, and receive beamforming (reception directivity control) according to the eighth parameter in transmission/reception panel antenna 2 labeled x705_2.

Thus, in detecting a signal in the directional reception, receive beamforming (reception directivity control) according to the $(4 \times i - 3)$-th parameter, receive beamforming (reception directivity control) according to the $(4 \times i - 2)$-th parameter, receive beamforming (reception directivity control) according to the $(4 \times i - 1)$-th parameter, and receive beamforming (reception directivity control) according to the $(4 \times i)$-th parameter are performed in transmission/reception panel antenna i labeled x705_i. Note that i is an integer from 1 to M (both inclusive).

Then, the gNB and NR-UE perform receive beamforming (reception directivity control) according to the first parameter, and confirm whether a signal is present. Accordingly, the gNB and NR-UE use transmission/reception panel antenna 1 labeled x705_1.

The gNB and NR-UE perform receive beamforming (reception directivity control) according to the second parameter, and confirm whether a signal is present. Accordingly, the gNB and NR-UE use transmission/reception panel antenna 1 labeled x705_1.

The gNB and NR-UE perform receive beamforming (reception directivity control) according to the third parameter, and confirm whether a signal is present. Accordingly, the gNB and NR-UE use transmission/reception panel antenna 1 labeled x705_1.

The gNB and NR-UE perform receive beamforming (reception directivity control) according to the fourth parameter, and confirm whether a signal is present. Accordingly, the gNB and NR-UE use transmission/reception panel antenna 1 labeled x705_1.

The gNB and NR-UE perform receive beamforming (reception directivity control) according to the fifth parameter, and confirm whether a signal is present. Accordingly, the gNB and NR-UE use transmission/reception panel antenna 2 labeled x705_2.

The gNB and NR-UE perform receive beamforming (reception directivity control) according to the sixth parameter, and confirm whether a signal is present. Accordingly, the gNB and NR-UE use transmission/reception panel antenna 2 labeled x705_2.

The gNB and NR-UE perform receive beamforming (reception directivity control) according to the seventh parameter, and confirm whether a signal is present. Accordingly, the gNB and NR-UE use transmission/reception panel antenna 2 labeled x705_2.

The gNB and NR-UE perform receive beamforming (reception directivity control) according to the eighth parameter, and confirm whether a signal is present. Accordingly, the gNB and NR-UE use transmission/reception panel antenna 2 labeled x705_2.

Thus, the gNB and NR-UE perform receive beamforming (reception directivity control) according to the $(4 \times i - 3)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i - 2)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i - 1)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i)$-th parameter, and confirm whether a signal is present. Accordingly, the gNB and NR-UE use transmission/reception panel antenna i labeled x705_i.

Note that i is an integer from 1 to M (both inclusive).

Another example will be described. In a case where the gNB and NR-UE have the configuration in FIG. 47, signal reception is performed by using one or more of "transmission/reception antenna 1 labeled x805_1 to transmission/reception antenna m labeled x805_m" and performing receive beamforming (reception directivity control).

In detecting a signal in the directional reception, g types of receive beamforming (reception directivity control) are performed by using one or more of "transmission/reception antenna 1 labeled x805_1 to transmission/reception antenna m labeled x805_m". Note that g is an integer equal to or greater than 2.

The gNB and NR-UE perform receive beamforming (reception directivity control) according to the first parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the second parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the third parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the fourth parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the fifth parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the sixth parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the seventh parameter by using one or more of "transmission/reception antenna 1 labeled x805_1 to transmission/reception antenna m labeled x805_m", and confirm whether a signal is detected.

The gNB and NR-UE perform receive beamforming (reception directivity control) according to the eighth parameter by using one or more of "transmission/reception antenna 1 labeled x805_1 to transmission/reception antenna m labeled x805_m", and confirm whether a signal is detected.

Thus, the gNB and NR-UE perform receive beamforming (reception directivity control) according to the i-th parameter by using one or more of "transmission/reception antenna 1 labeled x805_1 to transmission/reception antenna m labeled x805_m", and confirm whether a signal is detected. Note that i is an integer from 1 to g (both inclusive).

Next, specific operations of an initial access at multiple TRP will be described. Note that the "initial access" may be referred to as LBT assistance, assistance, or simply as an "access". The "initial access" may be referred to as another name.

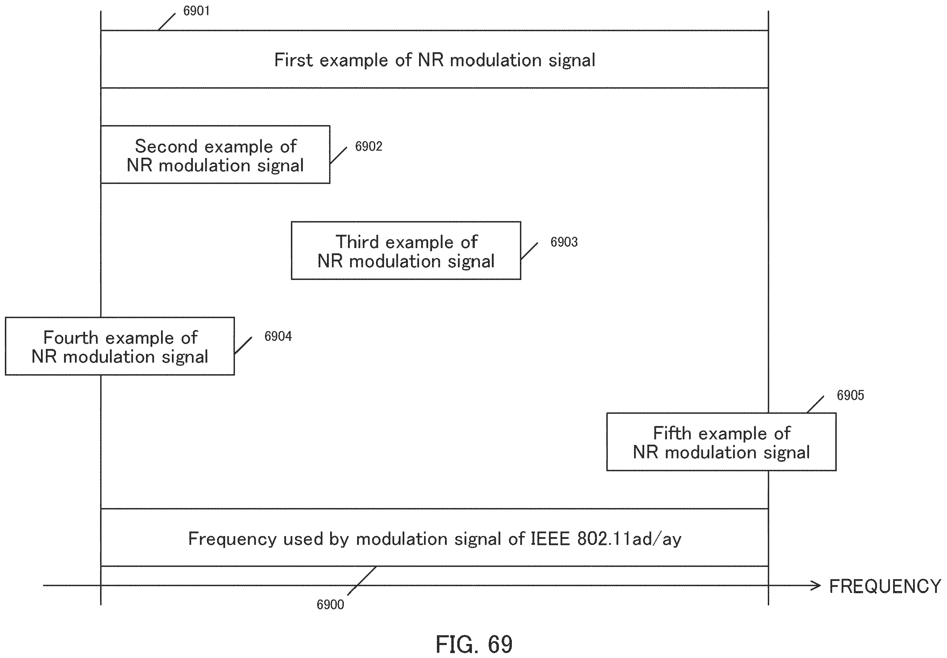

FIG. 69 illustrates relationships between a frequency used "for transmitting a modulation signal to a first-standard UE by AP" and frequencies used "for transmitting a modulation signal to NR-UE by gNB". Note that the horizontal axis represents frequency in FIG. 69.

In FIG. 69, 6900 indicates a "frequency used by a modulation signal of IEEE 802.11ad and/or IEEE 802.11ay". Note that "frequency 6900 used by a modulation signal of IEEE 802.11ad and/or IEEE 802.11ay" may be composed of a 2.16 GHz (or 4.32 GHz, 6.48 GHz, or 8.64 GHz) band, for example. Note that the modulation signal of IEEE 802.11ad and/or IEEE 802.11ay may use another frequency besides "frequency 6900 used by a modulation signal of IEEE 802.11ad and/or IEEE 802.11ay" when channel bonding or channel aggregation is used, for example.

At this time, "first example of NR modulation signal" 6901, "second example of NR modulation signal" 6902, "third example of NR modulation signal" 6903, "fourth example of NR modulation signal" 6904, and "fifth example of NR modulation signal" 6905 are illustrated in FIG. 69 as frequencies used by a modulation signal transmitted to NR-UE by gNB.

For example, "first example of NR modulation signal" 6901 has the same frequency bandwidth as that of "frequency 6900 used by a modulation signal of IEEE 802.11ad and/or IEEE 802.11ay".

As another example, "frequency 6900 used by a modulation signal of IEEE 802.11ad and/or IEEE 802.11ay" includes "second example of NR modulation signal" 6902 and "third example of NR modulation signal" 6903.

As still another example, frequencies of "fourth example of NR modulation signal" 6904 and "fifth example of NR modulation signal" 6905 partially overlap with "frequency 6900 used by a modulation signal of IEEE 802.11ad and/or IEEE 802.11ay".

Note that, in "X-th example of NR modulation signal" 690X, the NR modulation signal may use another frequency besides "X-th example of NR modulation signal" 690X using channel aggregation, for example. At this time, X is an integer from 1 to 5 (both inclusive).

A method of using frequencies of "a modulation signal of IEEE 802.11ad and/or IEEE 802.11ay" and "NR modulation signals" as in FIG. 69 may also be applied in Embodiment 5.

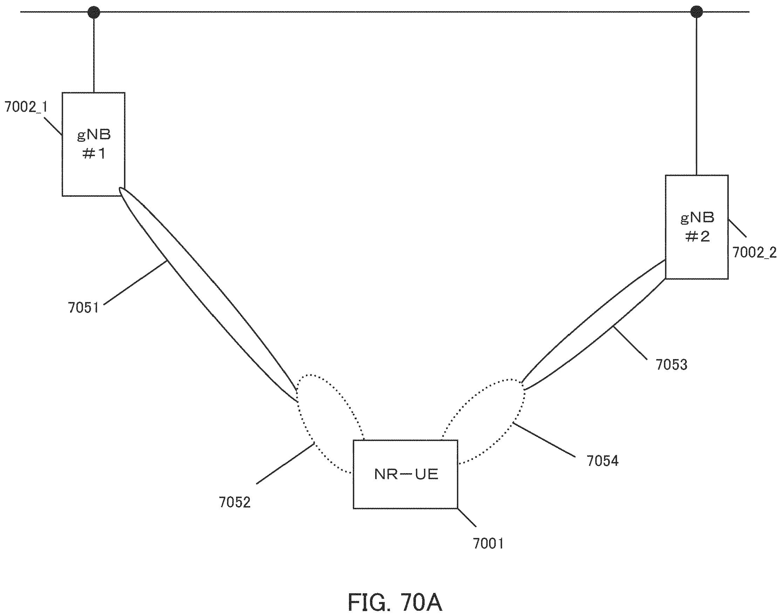

FIG. 70A illustrates an exemplary communication state of gNB #1, gNB #2, and NR-UE.

For example, gNB #1 labeled 7002_1 transmits a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69. In addition, gNB #2 labeled 7002_2 transmits a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69, for example. Thus, the "frequency used by a modulation signal transmitted by gNB #1 labeled 7002_1" and the "frequency used by a modulation signal transmitted by gNB #2 labeled 7002_2" may be the same or different from each other.

Then, gNB #1 labeled 7002_1 transmits a modulation signal using at least transmit beam 7051, and gNB #2 labeled 7002_2 transmits a modulation signal using at least transmit beam 7053.

At this time, when communication is established, NR-UE 7001 generates receive beam 7052 and receives the modulation signal transmitted from gNB #1 labeled 7002_1. NR-UE 7001 also generates receive beam 7054 and receives the modulation signal transmitted from gNB #2 labeled 7002_2.

Note that NR-UE 7001 transmits modulation signals to gNB #1 labeled 7002_1 and gNB #2 labeled 7002_2, but it is not illustrated in FIG. 70A. Further, gNB #1 labeled 7002_1 and gNB #2 labeled 7002_2 may communicate with each other.

FIG. 70A enables "downlink SDM at multiple TRP", "downlink TDM at multiple TRP", and "downlink FDM at multiple TRP".

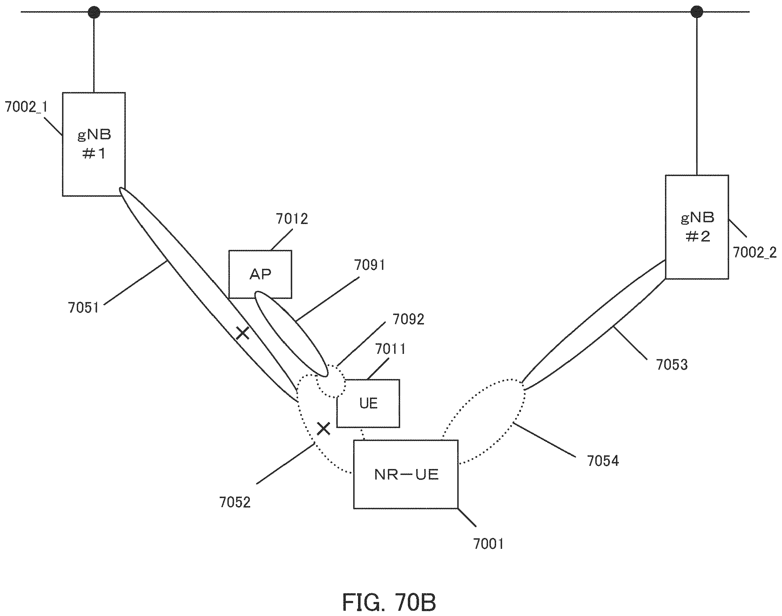

FIG. 70B illustrates an exemplary communication state of gNB #1, gNB #2, and NR-UE and an exemplary state of AP and UE. Note that components that operate in the same manner as in FIG. 70A are denoted by the same reference signs, and the description thereof will be omitted.

For example, gNB #1 labeled 7002_1 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69. In addition, gNB #2 labeled 7002_2 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69, for example. Thus, the "frequency used by a modulation signal transmitted by gNB #1 labeled 7002_1" and the "frequency used by a modulation signal transmitted by gNB #2 labeled 7002_2" may be the same or different from each other.

AP 7012 and UE 7011 perform communication with each other. For example, AP 7012 transmits a modulation signal of the first standard to UE 7011 using, for example, "frequency 6900 used by a modulation signal of IEEE 802.11ad and/or IEEE 802.11ay" in FIG. 69. At this time, AP 7012 uses transmit beam 7091, and UE 7011 uses receive beam 7092.

NR-UE 7001 performs receive sweeping for access to detect gNB to access, for example. To be more specific, NR-UE 7001 performs signal detection by, for example, switching reception antennas and/or switching receive beams.

In the case of FIG. 70B, NR-UE 7001 accesses gNB #2 labeled 7002_2 since it does not affect the first standard apparatuses. Meanwhile, NR-UE 7001 does not access gNB #1 labeled 7002_1 since it would receive a modulation signal transmitted from AP 701 by receive beam 5052.

Thus, gNB #2 labeled 7002_2 transmits a modulation signal using at least transmit beam 7053. At this time, NR-UE 7001 generates receive beam 7054 and receives the modulation signal transmitted from gNB #2 labeled 7002_2.

Note that NR-UE 7001 transmits a modulation signal to gNB #2 labeled 7002_2, but it is not illustrated in FIG. 70B. Further, gNB #1 labeled 7002_1 and gNB #2 labeled 7002_2 may communicate with each other.

UE 7011 transmits a modulation signal to AP 7012, but it is not illustrated in FIG. 70B.

Although FIGS. 70A and 70B illustrate gNB, the gNB may be a base station, gNB, e Node B (eNB), repeater, TRP, etc. The gNB may be other than these examples. This may apply to the other drawings.

Introducing such a mechanism enables control of "whether to perform multiple-TRP" while considering coexistence, thereby producing the effect of improving frequency utilization efficiency.

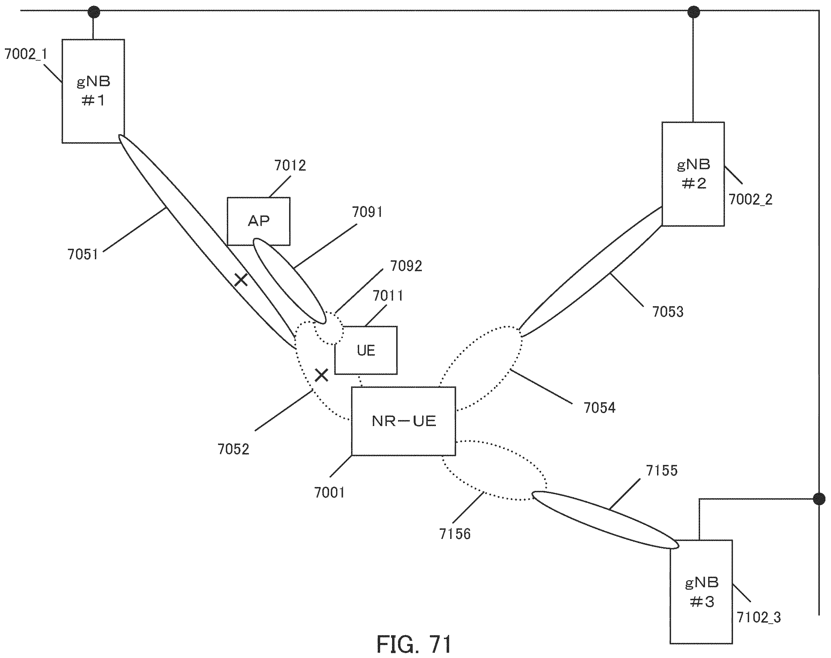

FIG. 71 illustrates an exemplary communication state of gNB #1, gNB #2, and NR-UE and an exemplary state of AP and UE. Note that components that operate in the same manner as in FIGS. 70A and 70B are denoted by the same reference signs, and the description thereof will be omitted.

For example, gNB #1 labeled 7002_1 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69.

In addition, gNB #2 labeled 7002_2 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69, for example.

For example, gNB #3 labeled 7102_3 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69.

Thus, the "frequency used by a modulation signal transmitted by gNB #1 labeled 7002_1" and the "frequency used by a modulation signal transmitted by gNB #2 labeled 7002_2" may be the same or different from each other.

The "frequency used by a modulation signal transmitted by gNB #1 labeled 7002_1" and the "frequency used by a modulation signal transmitted by gNB #3 labeled 7102_3" may be the same or different from each other.

The "frequency used by a modulation signal transmitted by gNB #2 labeled 7002_2" and the "frequency used by a modulation signal transmitted by gNB #3 labeled 7102_3" may be the same or different from each other.

AP 7012 and UE 7011 perform communication with each other. For example, AP 7012 transmits a modulation signal of the first standard to UE 7011 using, for example, "frequency 6900 used by a modulation signal of IEEE 802.11ad and/or IEEE 802.11ay" in FIG. 69. At this time, AP 7012 uses transmit beam 7091, and UE 7011 uses receive beam 7092.

NR-UE 7001 performs receive sweeping for access to detect gNB to access, for example. To be more specific, NR-UE 7001 performs signal detection by, for example, switching reception antennas and/or switching receive beams.

In the case of FIG. 71, NR-UE 7001 does not access gNB #1 labeled 7002_1 since it would receive a modulation signal transmitted from AP 701 by receive beam 5052.

Meanwhile, NR-UE 7001 accesses gNB #2 labeled 7002_2 since it does not affect the first standard apparatuses. In addition, NR-UE 7001 accesses gNB #3 labeled 7102_3 since it does not affect the first standard apparatuses.

Thus, gNB #2 labeled 7002_2 transmits a modulation signal using at least transmit beam 7053. At this time, NR-UE 7001 generates receive beam 7054 and receives the modulation signal transmitted from gNB #2 labeled 7002_2. In addition, gNB #3 labeled 7102_3 transmits a modulation signal using at least transmit beam 7155. At this time, NR-UE 7001 generates receive beam 7156 and receives the modulation signal transmitted from gNB #3 labeled 7102_3.

Note that NR-UE 7001 transmits a modulation signal to gNB #2 labeled 7002_2, but it is not illustrated in FIG. 70B. NR-UE 7001 transmits a modulation signal to gNB #3 labeled 7102_3, but it is not illustrated in FIG. 70B.

Further, gNB #1 labeled 7002_1 and gNB #2 labeled 7002_2 may communicate with each other, gNB #1 labeled 7002_1 and gNB #3 labeled 7102_3 may communicate with each other, and gNB #2 labeled 7002_2 and gNB #3 labeled 7102_3 may communicate with each other.

UE 7011 transmits a modulation signal to AP 7012, but it is not illustrated in FIG. 70B.

Introducing such a mechanism enables control of "whether to perform multiple-TRP" while considering coexistence, thereby producing the effect of improving frequency utilization efficiency.

FIG. 71 enables "downlink SDM at multiple TRP", "downlink TDM at multiple TRP", and "downlink FDM at multiple TRP".

As described above, NR-UE selects gNB allowing for multiple-TRP while first standard apparatuses are present, and this makes it possible to perform multiple-TRP while first standard apparatuses are present, thereby producing effects of enhancing a data transmission rate and improving data quality.

Next, other specific operations of the initial access at multiple TRP will be described.

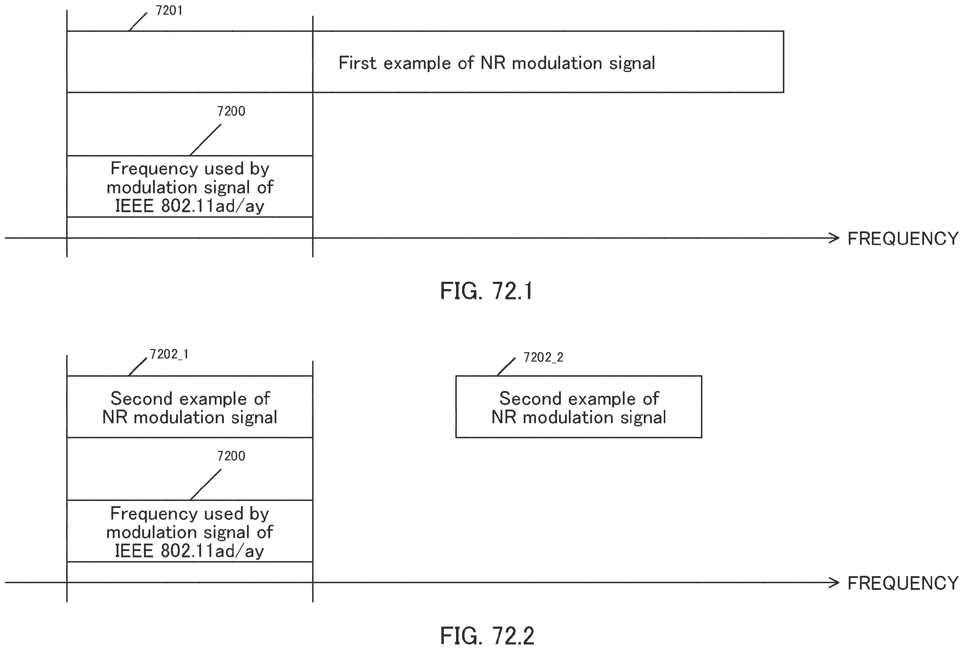

FIG. 72.1 illustrates a relationship between a frequency used "for transmitting a modulation signal to a first-standard UE by AP" and a frequency used "for transmitting a modulation signal to NR-UE by gNB". Note that the horizontal axis represents frequency in FIG. 72.1.

In FIG. 72.1, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "first example of NR modulation signal" 7201 is illustrated in FIG. 72.1 as a frequency used by a modulation signal transmitted to NR-UE by gNB. Note that the NR modulation signal may use part of "first example of NR modulation signal" 7201, and it may use the frequency continuously or discretely. The NR modulation signal may also use a frequency other than "first example of NR modulation signal" 7201.

FIG. 72.2 illustrates a relationship between a frequency used "for transmitting a modulation signal to a first-standard UE by AP" and frequencies used "for transmitting a modulation signal to NR-UE by gNB". Note that the horizontal axis represents frequency in FIG. 72.2.

In FIG. 72.2, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "second examples of NR modulation signal" 7202_1 and 7202_2 are illustrated in FIG. 72.2 as frequencies used by a modulation signal transmitted to NR-UE by gNB. Note that the gNB uses at least both "second examples of NR modulation signal" 7202_1 and 7202_2 when transmitting a modulation signal to the NR-UE.

The NR modulation signal may use part of "second example of NR modulation signal" 7202_1, and it may use the frequency continuously or discretely. In addition, the NR modulation signal may use part of "second example of NR modulation signal" 7202_2, and it may use the frequency continuously or discretely.

The NR modulation signal may also use a frequency other than "second examples of NR modulation signal" 7202_1 and 7202_2.

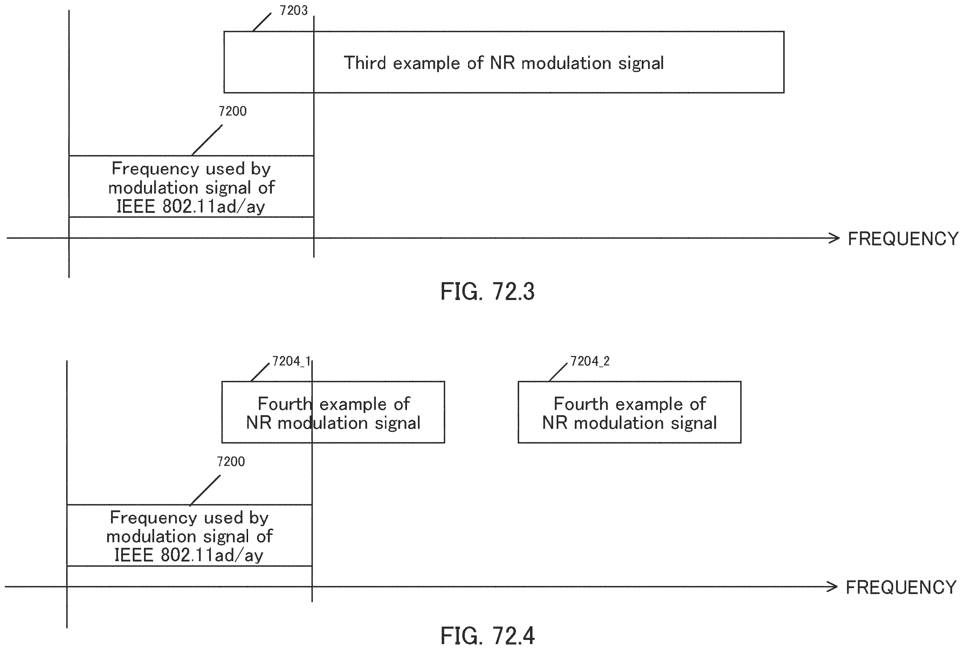

FIG. 72.3 illustrates a relationship between a frequency used "for transmitting a modulation signal to a first-standard UE by AP" and a frequency used "for transmitting a modulation signal to NR-UE by gNB". Note that the horizontal axis represents frequency in FIG. 72.3.

In FIG. 72.3, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "third example of NR modulation signal" 7203 is illustrated in FIG. 72.3 as a frequency used by a modulation signal transmitted to NR-UE by gNB. Note that the NR modulation signal may use part of "third example of NR modulation signal" 7203, and it may use the frequency continuously or discretely. The NR modulation signal may also use a frequency other than "third example of NR modulation signal" 7203.

FIG. 72.4 illustrates a relationship between a frequency used "for transmitting a modulation signal to a first-standard UE by AP" and frequencies used "for transmitting a modulation signal to NR-UE by gNB". Note that the horizontal axis represents frequency in FIG. 72.4.

In FIG. 72.4, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "fourth examples of NR modulation signal" 7204_1 and 7204_2 are illustrated in FIG. 72.4 as frequencies used by a modulation signal transmitted to NR-UE by gNB. Note that the gNB uses at least both "fourth examples of NR modulation signal" 7204_1 and 7204_2 when transmitting a modulation signal to the NR-UE.

The NR modulation signal may use part of "second example of NR modulation signal" 7204_1, and it may use the frequency continuously or discretely. In addition, the NR modulation signal may use part of "second example of NR modulation signal" 7204_2, and it may use the frequency continuously or discretely.

The NR modulation signal may also use a frequency other than "second examples of NR modulation signal" 7204_1 and 7204_2.

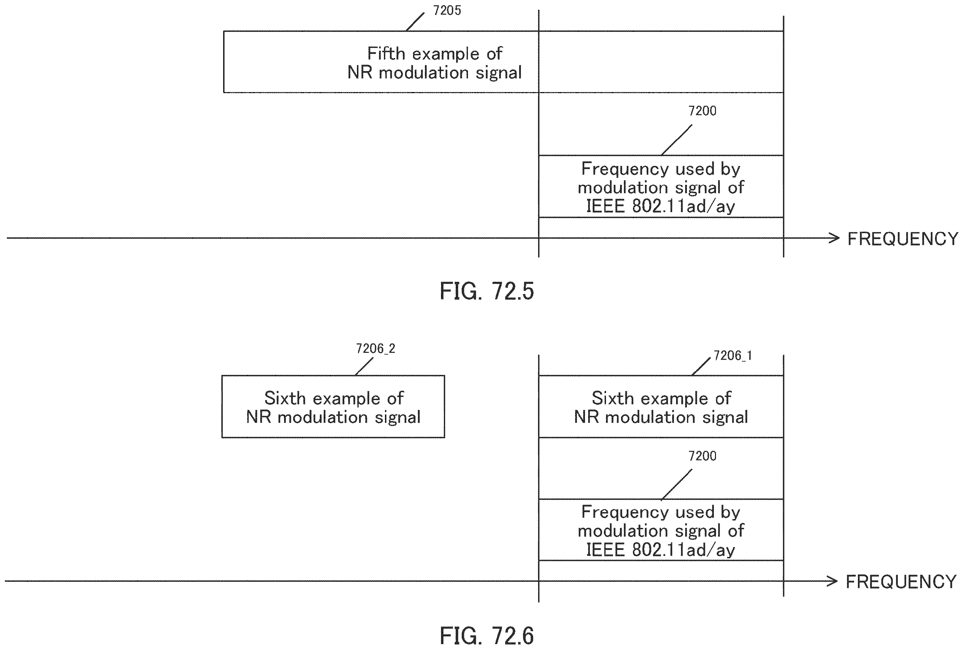

FIG. 72.5 illustrates a relationship between a frequency used "for transmitting a modulation signal to a first-standard UE by AP" and a frequency used "for transmitting a modulation signal to NR-UE by gNB". Note that the horizontal axis represents frequency in FIG. 72.5.

In FIG. 72.5, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "fifth example of NR modulation signal" 7205 is illustrated in FIG. 72.5 as a frequency used by a modulation signal transmitted to NR-UE by gNB. Note that the NR modulation signal may use part of "fifth example of NR modulation signal" 7205, and it may use the frequency continuously or discretely. The NR modulation signal may also use a frequency other than "fifth example of NR modulation signal" 7205.

FIG. 72.6 illustrates a relationship between a frequency used "for transmitting a modulation signal to a first-standard UE by AP" and frequencies used "for transmitting a modulation signal to NR-UE by gNB". Note that the horizontal axis represents frequency in FIG. 72.6.

In FIG. 72.6, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "sixth examples of NR modulation signal" 7206_1 and 7206_2 are illustrated in FIG. 72.6 as frequencies used by a modulation signal transmitted to NR-UE by gNB.

Note that the gNB uses at least both "second examples of NR modulation signal" 7202_1 and 7202_2 when transmitting a modulation signal to the NR-UE.

The NR modulation signal may use part of "sixth example of NR modulation signal" 7206_1, and it may use the frequency continuously or discretely. In addition, the NR modulation signal may use part of "sixth example of NR modulation signal" 7206_2, and it may use the frequency continuously or discretely.

The NR modulation signal may also use a frequency other than "sixth examples of NR modulation signal" 7206_1 and 7206_2.

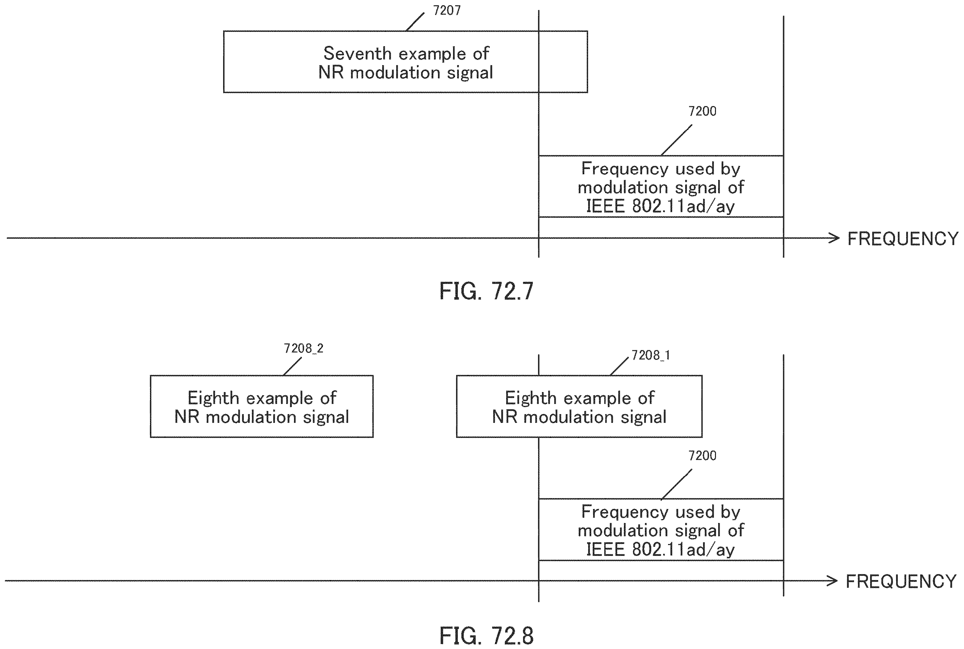

FIG. 72.7 illustrates a relationship between a frequency used "for transmitting a modulation signal to a first-standard UE by AP" and a frequency used "for transmitting a modulation signal to NR-UE by gNB". Note that the horizontal axis represents frequency in FIG. 72.7.

In FIG. 72.7, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "seventh example of NR modulation signal" 7207 is illustrated in FIG. 72.7 as a frequency used by a modulation signal transmitted to NR-UE by gNB. Note that the NR modulation signal may use part of "seventh example of NR modulation signal" 7207, and it may use the frequency continuously or discretely. The NR modulation signal may also use a frequency other than "seventh example of NR modulation signal" 7207.

FIG. 72.8 illustrates a relationship between a frequency used "for transmitting a modulation signal to a first-standard UE by AP" and frequencies used "for transmitting a modulation signal to NR-UE by gNB". Note that the horizontal axis represents frequency in FIG. 72.8.

In FIG. 72.8, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "fourth examples of NR modulation signal" 7208_1 and 7208_2 are illustrated in FIG. 72.8 as frequencies used by a modulation signal transmitted to NR-UE by gNB. Note that the gNB uses at least both "second examples of NR modulation signal" 7208_1 and 7208_2 when transmitting a modulation signal to the NR-UE.

The NR modulation signal may use part of "eighth example of NR modulation signal" 7208_1, and it may use the frequency continuously or discretely. In addition, the NR modulation signal may use part of "eighth example of NR modulation signal" 7208_2, and it may use the frequency continuously or discretely.

The NR modulation signal may also use a frequency other than "eighth examples of NR modulation signal" 7208_1 and 7208_2.

FIG. 72.9 illustrates a relationship between a frequency used "for transmitting a modulation signal to a first-standard UE by AP" and a frequency used "for transmitting a modulation signal to NR-UE by gNB". Note that the horizontal axis represents frequency in FIG. 72.9.

In FIG. 72.9, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "ninth example of NR modulation signal" 7209 is illustrated in FIG. 72.9 as a frequency used by a modulation signal transmitted to NR-UE by gNB. Note that the NR modulation signal may use part of "ninth example of NR modulation signal" 7209, and it may use the frequency continuously or discretely. The NR modulation signal may also use a frequency other than "ninth example of NR modulation signal" 7209.

FIG. 72.10 illustrates a relationship between a frequency used "for transmitting a modulation signal to a first-standard UE by AP" and frequencies used "for transmitting a modulation signal to NR-UE by gNB". Note that the horizontal axis represents frequency in FIG. 72.10.

In FIG. 72.10, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "tenth examples of NR modulation signal" 7210_1 and 7210_2 are illustrated in FIG. 72.10 as frequencies used by a modulation signal transmitted to NR-UE by gNB. Note that the gNB uses at least both "tenth examples of NR modulation signal" 7210_1 and 7210_2 when transmitting a modulation signal to the NR-UE.

The NR modulation signal may use part of "tenth example of NR modulation signal" 7210_1, and it may use the frequency continuously or discretely. In addition, the NR modulation signal may use part of "tenth example of NR modulation signal" 7210_2, and it may use the frequency continuously or discretely.

The NR modulation signal may also use a frequency other than "tenth examples of NR modulation signal" 7210_1 and 7210_2.

FIG. 72.11 illustrates a relationship between a frequency used "for transmitting a modulation signal to a first-standard UE by AP" and frequencies used "for transmitting a modulation signal to NR-UE by gNB". Note that the horizontal axis represents frequency in FIG. 72.11.

In FIG. 72.11, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "eleventh examples of NR modulation signal" 7211_1 and 7211_2 are illustrated in FIG. 72.11 as frequencies used by a modulation signal transmitted to NR-UE by gNB. Note that the gNB uses at least both "eleventh examples of NR modulation signal" 7211_1 and 7211_2 when transmitting a modulation signal to the NR-UE.

The NR modulation signal may use part of "eleventh example of NR modulation signal" 7211_1, and it may use the frequency continuously or discretely. In addition, the NR modulation signal may use part of "eleventh example of NR modulation signal" 7211_2, and it may use the frequency continuously or discretely.

The NR modulation signal may also use a frequency other than "eleventh examples of NR modulation signal" 7211_1 and 7211_2.

FIG. 72.12 illustrates a relationship between a frequency used "for transmitting a modulation signal to a first-standard UE by AP" and frequencies used "for transmitting a modulation signal to NR-UE by gNB". Note that the horizontal axis represents frequency in FIG. 72.12.

In FIG. 72.12, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "twelfth examples of NR modulation signal" 7212_1 and 7212_2 are illustrated in FIG. 72.12 as frequencies used by a modulation signal transmitted to NR-UE by gNB. Note that the gNB uses at least both "twelfth examples of NR modulation signal" 7212_1 and 7212_2 when transmitting a modulation signal to the NR-UE.

The NR modulation signal may use part of "twelfth example of NR modulation signal" 7212_1, and it may use the frequency continuously or discretely. In addition, the NR modulation signal may use part of "twelfth example of NR modulation signal" 7212_2, and it may use the frequency continuously or discretely.

The NR modulation signal may also use a frequency other than "twelfth examples of NR modulation signal" 7212_1 and 7212_2.

FIG. 72.13 illustrates a relationship between a frequency used "for transmitting a modulation signal to a first-standard UE by AP" and frequencies used "for transmitting a modulation signal to NR-UE by gNB". Note that the horizontal axis represents frequency in FIG. 72.13.

In FIG. 72.13, 7200 indicates a "frequency used by a modulation signal of IEEE 802.11ad and/or IEEE 802.11ay". Note that "frequency 7200 used by a modulation signal of IEEE 802.11ad and/or IEEE 802.11ay" may be composed of a 2.16 GHz (or 4.32 GHz, 6.48 GHz, or 8.64 GHz) band, for example. The modulation signal of IEEE 802.11ad and/or IEEE 802.11ay may use another frequency besides "frequency 7200 used by a modulation signal of IEEE 802.11ad and/or IEEE 802.11ay" when channel bonding or channel aggregation is used, for example.

At this time, "thirteenth examples of NR modulation signal" 7213_1 and 7213_2 are illustrated in FIG. 72.13 as frequencies used by a modulation signal transmitted to NR-UE by gNB. Note that the gNB uses at least both "thirteenth examples of NR modulation signal" 7213_1 and 7213_2 when transmitting a modulation signal to the NR-UE.

The NR modulation signal may use part of "thirteenth example of NR modulation signal" 7213_1, and it may use the frequency continuously or discretely. In addition, the NR modulation signal may use part of "thirteenth example of NR modulation signal" 7213_2, and it may use the frequency continuously or discretely.

The NR modulation signal may also use a frequency other than "thirteenth examples of NR modulation signal" 7213_1 and 7213_2.

A method of using frequencies of "a modulation signal of IEEE 802.11ad and/or IEEE 802.11ay" and "NR modulation signals" as in FIGS. 72.1, 72.2, 72.3, 72.4, 72.5, 72.6, 72.7, 72.8, 72.9, 72.10, 72.11, 72.12, and 72.13 may also be applied in Embodiment 5.

FIG. 73 illustrates an exemplary communication state of gNB #1, gNB #2, and NR-UE and an exemplary state of AP and UE. Note that components that operate in the same manner as in FIGS. 70A and 70B are denoted by the same reference signs, and the description thereof will be omitted.

For example, gNB #1 labeled 7002_1 can transmit a modulation signal using any of "X-th example of NR modulation signal" 720X in FIG. 72.X. Note that X is any of 1, 3, 5, 7, and 9.

As another example, gNB #1 labeled 7002_1 can transmit a modulation signal using any of "Y-th examples of NR modulation signal" 720Y_1 and 720Y_2 in FIG. 72.Y and "1Z-th examples of NR modulation signal" 721Z_1 and 721Z_2 in FIG. 72.1Z. Note that Y is any of 2, 4, 6, and 8, and Z is any of 0, 1, 2, and 3.

For example, gNB #2 labeled 7002_2 can transmit a modulation signal using any of "X-th example of NR modulation signal" 720X in FIG. 72.X. Note that X is any of 1, 3, 5, 7, and 9.

As another example, gNB #2 labeled 7002_2 can transmit a modulation signal using any of "Y-th examples of NR modulation signal" 720Y_1 and 720Y_2 in FIG. 72.Y and "1Z-th examples of NR modulation signal" 721Z_1 and 721Z_2 in FIG. 72.1Z. Note that Y is any of 2, 4, 6, and 8, and Z is any of 0, 1, 2, and 3.

The "frequency used by a modulation signal transmitted by gNB #1 labeled 7002_1" and the "frequency used by a modulation signal transmitted by gNB #2 labeled 7002_2" may be the same or different from each other.

AP 7012 and UE 7011 perform communication with each other. For example, AP 7012 transmits a modulation signal of the first standard to UE 7011 using, for example, "frequency 7200 used by a modulation signal of IEEE 802.11ad and/or IEEE 802.11ay" in FIGS. 72.1, 72.2, 72.3, 72.4, 72.5, 72.6, 72.7, 72.8, 72.9, 72.10, 72.11, 72.12, and 72.13. At this time, AP 7012 uses transmit beam 7091, and UE 7011 uses receive beam 7092.

NR-UE 7001 performs receive sweeping for access to detect gNB to access, for example. To be more specific, NR-UE 7001 performs signal detection by, for example, switching reception antennas and/or switching receive beams.

Operations in this case in FIG. 73 will be described.

Case 1:

For example, gNB #1 labeled 7002_1 can transmit a modulation signal using any of "X-th example of NR modulation signal" 720X in FIG. 72.X. Note that X is any of 1, 3, 5, 7, and 9.

For example, gNB #2 labeled 7002_2 can transmit a modulation signal using any of "X-th example of NR modulation signal" 720X in FIG. 72.X. Note that X is any of 1, 3, 5, 7, and 9. Alternatively, gNB #2 labeled 7002_2 can transmit a modulation signal using any of "Y-th examples of NR modulation signal" 720Y_1 and 720Y_2 in FIG. 72.Y and "1Z-th examples of NR modulation signal" 721Z_1 and 721Z_2 in FIG. 72.1Z. Note that Y is any of 2, 4, 6, and 8, and Z is any of 0, 1, 2, and 3.

In the case of FIG. 73, NR-UE 7001 accesses gNB #2 labeled 7002_2 since it does not affect the first standard apparatuses. Thus, gNB #2 labeled 7002_2 can use any of "X-th example of NR modulation signal" 720X in FIG. 72.X when transmitting a modulation signal to NR-UE 7001. Note that X is any of 1, 3, 5, 7, and 9. Alternatively, gNB #2 labeled 7002_2 can use any of "Y-th examples of NR modulation signal" 720Y_1 and 720Y_2 in FIG. 72.Y and "1Z-th examples of NR modulation signal" 721Z_1 and 721Z_2 in FIG. 72.1Z when transmitting a modulation signal to NR-UE 7001. Note that Y is any of 2, 4, 6, and 8, and Z is any of 0, 1, 2, and 3.

Note that, when gNB #2 labeled 7002_2 uses any of "X-th example of NR modulation signal" 720X in FIG. 72.X in transmitting a modulation signal to NR-UE 7001, it may use part of "X-th example of NR modulation signal" 720X in FIG. 72.X, for example. (That is, FDM may be performed such as orthogonal frequency division multiple access (OFDMA) and FDM based on a multi-carrier scheme utilizing a single-carrier scheme.) As another method, TDM may be performed.

When gNB #2 labeled 7002_2 uses any of "Y-th examples of NR modulation signal" 720Y_1 and 720Y_2 in FIG. 72.Y and "1Z-th examples of NR modulation signal" 721Z_1 and 721Z_2 in FIG. 72.1Z in transmitting a modulation signal to NR-UE 7001, it may use part of ""Y-th examples of NR modulation signal" 720Y_1 and 720Y_2 in FIG. 72.Y and "1Z-th examples of NR modulation signal" 721Z_1 and 721Z_2 in FIG. 72.1Z", for example. (That is, FDM may be performed such as OFDMA and FDM based on a multi-carrier scheme utilizing a single-carrier scheme.) As another method, TDM may be performed.

Thus, gNB #2 labeled 7002_2 transmits a modulation signal using at least transmit beam 7053. At this time, NR-UE 7001 generates receive beam 7054 and receives the modulation signal transmitted from gNB #2 labeled 7002_2.

Meanwhile, NR-UE 7001 receives, by receive beam 5052, a modulation signal in "frequency 7200 used by a modulation signal of IEEE 802.11ad and/or IEEE 802.11ay in FIG. 72.X" transmitted by AP 701. Note that X is any of 1, 3, 5, 7, and 9.

Thus, gNB #1 labeled 7002_1 uses, for example, any of "X-th example of NR modulation signal" 720X in FIG. 72.X when transmitting a modulation signal, and when gNB #1 labeled 7002_1 transmits a modulation signal to NR-UE 7001, the modulation signal addressed to NR-UE 7001 uses a frequency belonging to "X-th example of NR modulation signal" 720X but not overlapping with "frequency 7200 used by a modulation signal of IEEE 802.11ad and/or IEEE 802. 1 lay in FIG. 72.X". (That is, FDM may be performed such as OFDMA and FDM based on a multi-carrier scheme utilizing a single-carrier scheme.)

At this time, gNB #1 labeled 7002_1 transmits a modulation signal using at least transmit beam 7051. At this time, NR-UE 7001 generates receive beam 7052 and receives the modulation signal transmitted from gNB #1 labeled 7002_1.

In this case, NR-UE 7001 performs receive beam sweeping for access to access gNB #1 labeled 7002_1, and at this time, NR-UE 7001 makes a frequency allocation request so that gNB #1 labeled 7002_1 transmits a modulation signal addressed to NR-UE 7001 using the frequency described above.

Note that NR-UE 7001 transmits a modulation signal to gNB #2 labeled 7002_2, but it is not illustrated in FIG. 73. NR-UE 7001 also transmits a modulation signal to gNB #1 labeled 7002_1, but it is not illustrated in FIG. 73. Further, gNB #1 labeled 7002_1 and gNB #2 labeled 7002_2 may communicate with each other.

UE 7011 transmits a modulation signal to AP 7012, but it is not illustrated in FIG. 73.

Case 2:

For example, gNB #1 labeled 7002_1 can transmit a modulation signal using any of "Y-th examples of NR modulation signal" 720Y_1 and 720Y_2 in FIG. 72.Y Note that Y is any of 2, 4, 6, and 8.

For example, gNB #2 labeled 7002_2 can transmit a modulation signal using any of "X-th example of NR modulation signal" 720X in FIG. 72.X. Note that X is any of 1, 3, 5, 7, and 9. Alternatively, gNB #2 labeled 7002_2 can transmit a modulation signal using any of "Y-th examples of NR modulation signal" 720Y_1 and 720Y_2 in FIG. 72.Y and "1Z-th examples of NR modulation signal" 721Z_1 and 721Z_2 in FIG. 72.1Z. Note that Y is any of 2, 4, 6, and 8, and Z is any of 0, 1, 2, and 3.

In the case of FIG. 73, NR-UE 7001 accesses gNB #2 labeled 7002_2 since it does not affect the first standard apparatuses. Thus, gNB #2 labeled 7002_2 can use any of "X-th example of NR modulation signal" 720X in FIG. 72.X when transmitting a modulation signal to NR-UE 7001. Note that X is any of 1, 3, 5, 7, and 9. Alternatively, gNB #2 labeled 7002_2 can use any of "Y-th examples of NR modulation signal" 720Y_1 and 720Y_2 in FIG. 72.Y and "1Z-th examples of NR modulation signal" 721Z_1 and 721Z_2 in FIG. 72.1Z when transmitting a modulation signal to NR-UE 7001. Note that Y is any of 2, 4, 6, and 8, and Z is any of 0, 1, 2, and 3.

Note that, when gNB #2 labeled 7002_2 uses any of "X-th example of NR modulation signal" 720X in FIG. 72.X in transmitting a modulation signal to NR-UE 7001, it may use part of "X-th example of NR modulation signal" 720X in FIG. 72.X, for example. (That is, FDM may be performed such as OFDMA and FDM based on a multi-carrier scheme utilizing a single-carrier scheme.) As another method, TDM may be performed.

When gNB #2 labeled 7002_2 uses any of "Y-th examples of NR modulation signal" 720Y_1 and 720Y_2 in FIG. 72.Y and "1Z-th examples of NR modulation signal" 721Z_1 and 721Z_2 in FIG. 72.1Z in transmitting a modulation signal to NR-UE 7001, it may use part of ""Y-th examples of NR modulation signal" 720Y_1 and 720Y_2 in FIG. 72.Y and "1Z-th examples of NR modulation signal" 721Z_1 and 721Z_2 in FIG. 72.1Z", for example. (That is, FDM may be performed such as OFDMA and FDM based on a multi-carrier scheme utilizing a single-carrier scheme.) As another method, TDM may be performed.

Thus, gNB #2 labeled 7002_2 transmits a modulation signal using at least transmit beam 7053. At this time, NR-UE 7001 generates receive beam 7054 and receives the modulation signal transmitted from gNB #2 labeled 7002_2.

Meanwhile, NR-UE 7001 receives, by receive beam 5052, a modulation signal in "frequency 7200 used by a modulation signal of IEEE 802.11ad and/or IEEE 802.11ay in FIG. 72.Y" transmitted by AP 701. Note that Y is any of 2, 4, 6, and 8.

Thus, gNB #1 labeled 7002_1 uses, for example, any of "Y-th examples of NR modulation signal" 720Y_1 and 720Y_2 in FIG. 72.Y when transmitting a modulation signal.

When gNB #1 labeled 7002_1 transmits a modulation signal to NR-UE 7001, the modulation signal addressed to NR-UE 7001 uses a frequency belonging to "Y-th examples of NR modulation signal" 720Y_1 and 720Y_2 but not overlapping with "frequency 7200 used by a modulation signal of IEEE 802.11ad and/or IEEE 802.11ay in FIG. 72.X". (That is, FDM may be performed such as OFDMA and FDM based on a multi-carrier scheme utilizing a single-carrier scheme.)

At this time, gNB #1 labeled 7002_1 transmits a modulation signal using at least transmit beam 7051. At this time, NR-UE 7001 generates receive beam 7052 and receives the modulation signal transmitted from gNB #1 labeled 7002_1.

In this case, NR-UE 7001 performs receive beam sweeping for access to access gNB #1 labeled 7002_1, and at this time, NR-UE 7001 makes a frequency allocation request so that gNB #1 labeled 7002_1 transmits a modulation signal addressed to NR-UE 7001 using the frequency described above.

Note that NR-UE 7001 transmits a modulation signal to gNB #2 labeled 7002_2, but it is not illustrated in FIG. 73. NR-UE 7001 also transmits a modulation signal to gNB #1 labeled 7002_1, but it is not illustrated in FIG. 73. Further, gNB #1 labeled 7002_1 and gNB #2 labeled 7002_2 may communicate with each other.

UE 7011 transmits a modulation signal to AP 7012, but it is not illustrated in FIG. 73.

Case 3:

For example, gNB #1 labeled 7002_1 can transmit a modulation signal using any of "1Z-th examples of NR modulation signal" 721Z_1 and 721Z_2 in FIG. 72.1Z. Note that Z is any of 0, 1, 2, and 3.

For example, gNB #2 labeled 7002_2 can transmit a modulation signal using any of "X-th example of NR modulation signal" 720X in FIG. 72.X. Note that X is any of 1, 3, 5, 7, and 9. Alternatively, gNB #2 labeled 7002_2 can transmit a modulation signal using any of "Y-th examples of NR modulation signal" 720Y_1 and 720Y_2 in FIG. 72.Y and "1Z-th examples of NR modulation signal" 721Z_1 and 721Z_2 in FIG. 72.1Z. Note that Y is any of 2, 4, 6, and 8, and Z is any of 0, 1, 2, and 3.

In the case of FIG. 73, NR-UE 7001 accesses gNB #2 labeled 7002_2 since it does not affect the first standard apparatuses. Thus, gNB #2 labeled 7002_2 can use any of "X-th example of NR modulation signal" 720X in FIG. 72.X when transmitting a modulation signal to NR-UE 7001. Note that X is any of 1, 3, 5, 7, and 9. Alternatively, gNB #2 labeled 7002_2 can use any of "Y-th examples of NR modulation signal" 720Y_1 and 720Y_2 in FIG. 72.Y and "1Z-th examples of NR modulation signal" 721Z_1 and 721Z_2 in FIG. 72.1Z when transmitting a modulation signal to NR-UE 7001. Note that Y is any of 2, 4, 6, and 8, and Z is any of 0, 1, 2, and 3.

Note that, when gNB #2 labeled 7002_2 uses any of "X-th example of NR modulation signal" 720X in FIG. 72.X in transmitting a modulation signal to NR-UE 7001, it may use part of "X-th example of NR modulation signal" 720X in FIG. 72.X, for example. (That is, FDM may be performed such as OFDMA and FDM based on a multi-carrier scheme utilizing a single-carrier scheme.) As another method, TDM may be performed.

When gNB #2 labeled 7002_2 uses any of "Y-th examples of NR modulation signal" 720Y_1 and 720Y_2 in FIG. 72.Y and "1Z-th examples of NR modulation signal" 721Z_1 and 721Z_2 in FIG. 72.1Z in transmitting a modulation signal to NR-UE 7001, it may use part of ""Y-th examples of NR modulation signal" 720Y_1 and 720Y_2 in FIG. 72.Y and "1Z-th examples of NR modulation signal" 721Z_1 and 721Z_2 in FIG. 72.1Z", for example. (That is, FDM may be performed such as OFDMA and FDM based on a multi-carrier scheme utilizing a single-carrier scheme.) As another method, TDM may be performed.

Thus, gNB #2 labeled 7002_2 transmits a modulation signal using at least transmit beam 7053. At this time, NR-UE 7001 generates receive beam 7054 and receives the modulation signal transmitted from gNB #2 labeled 7002_2.

Meanwhile, NR-UE 7001 receives, by receive beam 5052, a modulation signal in "frequency 7200 used by a modulation signal of IEEE 802.11ad and/or IEEE 802.11ay in FIG. 72.1Z" transmitted by AP 701. Note that Z is any of 0, 1, 2, and 3.

Thus, gNB #1 labeled 7002_1 uses, for example, any of "1Z-th examples of NR modulation signal" 721Z _1 and 721Z_2 in FIG. 72.1Z when transmitting a modulation signal, and when gNB #1 labeled 7002_1 transmits a modulation signal to NR-UE 7001, the modulation signal addressed to NR-UE 7001 uses a frequency belonging to "1Z-th examples of NR modulation signal" 721Z _1 and 721Z_2 but not overlapping with "frequency 7200 used by a modulation signal of IEEE 802.11ad and/or IEEE 802.11ay in FIG. 72.X". (That is, FDM may be performed such as OFDMA and FDM based on a multi-carrier scheme utilizing a single-carrier scheme.)

At this time, gNB #1 labeled 7002_1 transmits a modulation signal using at least transmit beam 7051. At this time, NR-UE 7001 generates receive beam 7052 and receives the modulation signal transmitted from gNB #1 labeled 7002_1.

In this case, NR-UE 7001 performs receive beam sweeping for access to access gNB #1 labeled 7002_1, and at this time, NR-UE 7001 makes a frequency allocation request so that gNB #1 labeled 7002_1 transmits a modulation signal addressed to NR-UE 7001 using the frequency described above.

Note that NR-UE 7001 transmits a modulation signal to gNB #2 labeled 7002_2, but it is not illustrated in FIG. 73. NR-UE 7001 also transmits a modulation signal to gNB #1 labeled 7002_1, but it is not illustrated in FIG. 73. Further, gNB #1 labeled 7002_1 and gNB #2 labeled 7002_2 may communicate with each other.

UE 7011 transmits a modulation signal to AP 7012, but it is not illustrated in FIG. 73.

Operations as in Case 1, Case 2, and Case 3 enable "downlink SDM at multiple TRP", "downlink TDM at multiple TRP", and "downlink FDM at multiple TRP" in FIG. 73.

Introducing such a mechanism enables control of "whether to perform multiple-TRP" while considering coexistence, thereby producing the effect of improving frequency utilization efficiency.

Although FIG. 73 illustrates gNB, the gNB may be a base station, gNB, e Node B (eNB), repeater, TRP, etc. The gNB may be other than these examples. This may apply to the other drawings.

Next, a description will be given of exemplary "downlink FDM at multiple TRP" when the initial access described above is performed.

"FIGS. 74A, 74B, 74C, 74D, 74E, 74F, 74G, and 74H" illustrate exemplary communication states of NR-UE 7001 in "FIGS. 70A, 70B, 71, 73, etc.", and illustrate exemplary states of "downlink FDM at multiple TRP". Note that "FIGS. 74A, 74B, 74C, 74D, 74E, 74F, 74G, and 74H" illustrate "frequency 7200 used by a modulation signal of IEEE 802.11ad and/or IEEE 802.11ay" illustrated in "FIGS. 72.1, 72.2, 72.3, 72.4, 72.5, 72.6, 72.7, 72.8, 72.9, 72.10, 72.11, 72.12, and 72.13". The horizontal axes represent frequency and the vertical axes represent time in "FIGS. 74A, 74B, 74C, 74D, 74E, 74F, 74G, and 74H".

In FIG. 74A, "NR-UE 7001-addressed data frame 7401_1 transmitted by gNB #1 labeled 7002_1" and "NR-UE 7001-addressed data frame 7401_2 transmitted by gNB #2 labeled 7002_2" are present at least in first time 7400_1. In addition, only "NR-UE 7001-addressed data frame 7401_2 transmitted by gNB #2 labeled 7002_2" is present in "frequency 7200 used by a modulation signal of IEEE 802.11ad and/or IEEE 802.11ay". This realizes "downlink FDM at multiple TRP".

In FIG. 74B, "NR-UE 7001-addressed data frame 7401_2 transmitted by gNB #2 labeled 7002_2" is present in "frequency 7200 used by a modulation signal of IEEE 802.11ad and/or IEEE 802.11ay" in second time 7400_2. In addition, "NR-UE 7001-addressed data frame 7401_1 transmitted by gNB #1 labeled 7002_1" is present in third time 7400_3. This realizes "downlink FDM at multiple TRP".

In FIG. 74C, "NR-UE 7001-addressed data frame 7401_1 transmitted by gNB #1 labeled 7002_1" and "NR-UE 7001-addressed data frame 7401_2 transmitted by gNB #2 labeled 7002_2" are present at least in fourth time 7400_4. In addition, only "NR-UE 7001-addressed data frame 7401_2 transmitted by gNB #2 labeled 7002_2" is present in "frequency 7200 used by a modulation signal of IEEE 802.11ad and/or IEEE 802.11ay". This realizes "downlink FDM at multiple TRP".

In FIG. 74D, "NR-UE 7001-addressed data frame 7401_2 transmitted by gNB #2 labeled 7002_2" is present in "frequency 7200 used by a modulation signal of IEEE 802.11ad and/or IEEE 802.11ay" in fifth time 7400_5. In addition, "NR-UE 7001-addressed data frame 7401_1 transmitted by gNB #1 labeled 7002_1" is present in sixth time 7400_6. This realizes "downlink FDM at multiple TRP".

In FIG. 74E, "NR-UE 7001-addressed data frame 7401_A transmitted by gNB #A labeled 7002_A" and "NR-UE 7001-addressed data frame 7401_B transmitted by gNB #B labeled 7002_B" are present at least in seventh time 7400_7. In addition, "NR-UE 7001-addressed data frame 7401_A transmitted by gNB #A labeled 7002_A" and "NR-UE 7001-addressed data frame 7401_B transmitted by gNB #B labeled 7002_B" are present in "frequency 7200 used by a modulation signal of IEEE 802.11ad and/or IEEE 802.11ay". Note that "A= 1 and B = 2" or "A= 2 and B = 1". This realizes "downlink FDM at multiple TRP".

In FIG. 74F, "NR-UE 7001-addressed data frame 7401_B transmitted by gNB #B labeled 7002_B" is present in "frequency 7200 used by a modulation signal of IEEE 802.11ad and/or IEEE 802.11ay" in eighth time 7400_8. In addition, "NR-UE 7001-addressed data frame 7401_A transmitted by gNB #A labeled 7002_A" is present in "frequency 7200 used by a modulation signal of IEEE 802.11ad and/or IEEE 802.11ay" in ninth time 7400_9. Note that "A = 1 and B = 2" or "A = 2 and B = 1". This realizes "downlink FDM at multiple TRP".

In FIG. 74G, "NR-UE 7001-addressed data frame 7401_A transmitted by gNB #A labeled 7002_A" and "NR-UE 7001-addressed data frame 7401_B transmitted by gNB #B labeled 7002_B" are present at least in tenth time 7400_7. In addition, neither "NR-UE 7001-addressed data frame 7401_A transmitted by gNB #A labeled 7002_A" nor "NR-UE 7001-addressed data frame 7401_B transmitted by gNB #B labeled 7002_B" is present in "frequency 7200 used by a modulation signal of IEEE 802.11ad and/or IEEE 802.11ay". Note that "A= 1 and B = 2" or "A= 2 and B = 1". This realizes "downlink FDM at multiple TRP".

In FIG. 74H, "NR-UE 7001-addressed data frame 7401_B transmitted by gNB #B labeled 7002_B" is present in eleventh time 7400_11 without being included in "frequency 7200 used by a modulation signal of IEEE 802.11ad and/or IEEE 802.11ay". In addition, "NR-UE 7001-addressed data frame 7401_A transmitted by gNB #A labeled 7002_A" is present in twelfth time 7400_12 without being included in "frequency 7200 used by a modulation signal of IEEE 802.11ad and/or IEEE 802.11ay". Note that "A= 1 and B = 2" or "A= 2 and B = 1". This realizes "downlink FDM at multiple TRP".

"NR-UE 7001-addressed data frame 7401_1 transmitted by gNB #1 labeled 7002_1", "NR-UE 7001-addressed data frame 7401_2 transmitted by gNB #2 labeled 7002_2", "NR-UE 7001-addressed data frame 7401_A transmitted by gNB #A labeled 7002_A", and "NR-UE 7001-addressed data frame 7401_B transmitted by gNB #B labeled 7002_B" may include any one or more of a "physical downlink shared channel (PDSCH)", "physical downlink control channel (PDCCH)", "physical uplink shared channel (PUSCH)", and "physical uplink control channel (PUCCH)".

For the initial access by NR-UE 7001 in "FIGS. 70A, 70B, 71, 73, etc.", NR-UE 7001 performs receive sweeping for access to detect gNB to access, for example. To be more specific, NR-UE 7001 performs signal detection by, for example, switching reception antennas and/or switching receive beams. This is called "initial sensing". Methods of the initial sensing will be described below.

Note that NR-UE 7001 obtains a result of the initial sensing and determines gNB to access based on the result. When a plurality of gNBs are to be accessed in particular, it will be multiple-TRP.

FIG. 75 illustrates relationships in frequency and time when NR-UE 7001 in "FIGS. 70A, 70B, 71, 73, etc." performs initial sensing. Note that the horizontal axis represents frequency and the vertical axis represents time.

The first standard defines six channels each having a bandwidth of 2.16 GHz in the 60 GHz band. The six channels are referred to as "first channel 7500_1 of IEEE 802.11ad and/or IEEE 802.11ay", "second channel 7500_2 of IEEE 802.11ad and/or IEEE 802.11ay", "third channel 7500_3 of IEEE 802.1ad and/or IEEE 802.1 1ay", "fourth channel 7500_4 of IEEE 802.11ad and/or IEEE 802.11ay", "fifth channel 7500_5 of IEEE 802.11ad and/or IEEE 802.11ay", and "sixth channel 7500_6 of IEEE 802.11ad and/or IEEE 802.11ay", and they are as illustrated in FIG. 75.

NR-UE 7001 performs initial sensing 7501_1 in "first channel 7500_1 of IEEE 802.11ad and/or IEEE 802.11ay" in the first time as illustrated in FIG. 75.

NR-UE 7001 performs initial sensing 7501_2 in "second channel 7500_2 of IEEE 802.11ad and/or IEEE 802.11ay" in the second time as illustrated in FIG. 75.

NR-UE 7001 performs initial sensing 7501_3 in "third channel 7500_3 of IEEE 802.11ad and/or IEEE 802.11ay" in the third time as illustrated in FIG. 75.

NR-UE 7001 performs initial sensing 7501_4 in "fourth channel 7500_4 of IEEE 802.11ad and/or IEEE 802.11ay" in the fourth time as illustrated in FIG. 75.

NR-UE 7001 performs initial sensing 7501_5 in "fifth channel 7500_5 of IEEE 802.11ad and/or IEEE 802.11ay" in the fifth time as illustrated in FIG. 75.

NR-UE 7001 performs initial sensing 7501_6 in "sixth channel 7500_6 of IEEE 802.11ad and/or IEEE 802.11ay" in the sixth time as illustrated in FIG. 75.

This allows the NR-UE to perform initial sensing in a plurality of channels among "channels of IEEE 802.11ad and/or IEEE 802.11ay".

Note that, although FIG. 75 illustrates an example where the NR-UE performs initial sensing in six channels, the same can be implemented when initial sensing is performed in two or more channels.

In addition, the order of "channels of IEEE 802.11ad and/or IEEE 802.11ay" where the NR-UE performs initial sensing is not limited to the example of FIG. 75, and the same can be implemented in any order.

Further the "first time" to the "sixth time" for performing initial sensing in FIG. 75 need not be arranged as in the example of FIG. 75, and the "X-th time" and the "Y-th time" may partially overlap in time with each other. Note that X and Y are any of 1, 2, 3, 4, 5, and 6, and $X \neq Y$

It is assumed that six channels of "first channel 7500_1 of IEEE 802.11ad and/or IEEE 802.11ay" to "sixth channel 7500_6 of IEEE 802.11ad and/or IEEE 802.11ay" can be used in the first country/region, four channels of "first channel 7500_1 of IEEE 802. 11ad and/or IEEE 802.11ay" to "fourth channel 7500_4 of IEEE 802.11ad and/or IEEE 802.11ay" can be used in the second country/region, and three channels of "second channel 7500_2 of IEEE 802. 11 ad and/or IEEE 802.11ay" to "fourth channel 7500_4 of IEEE 802. 11 ad and/or IEEE 802.11ay" can be used in the third country/region.

In this case, the NR-UE can perform initial sensing in maximum six channels (the number of channels may be six channels or less) in the first country/region, maximum four channels (the number of channels may be four channels or less) in the second country/region, and maximum three channels (the number of channels may be three channels or less) in the third country/region.

In a case where the NR-UE is UE supporting the "first country/region, second country/region, and third country/region", the number of channels or maximum number of channels where initial sensing can be performed may be changed for each country/region.

In FIG. 75, a frequency bandwidth for initial sensing 7501_A only needs to be 2.16 GHz or less. In addition, the sensing may be performed with frequency division and/or time division in initial sensing 7501_A. Note that A is an integer from 1 to 6 (both inclusive).

Incidentally, LBT for a plurality of channels (of IEEE 802.11ad/ay) can be performed by replacing "initial sensing 7501_A" with "LBT" in the above description using FIG. 75 and NR-UE, gNB, and TRP performing LBT described in Embodiment 5, etc. Note that A is an integer from 1 to 6 (both inclusive). In this case, it is implemented by regarding the description of "initial sensing" as the description of "LBT" in the above description.

This makes it possible to access gNB considering the existence of first-standard apparatuses, thereby enabling multiple-TRP considering coexistence and producing the effect of improving frequency utilization efficiency.

FIG. 76 illustrates relationships in frequency and time different from FIG. 75 when NR-UE 7001 in "FIGS. 70A, 70B, 71, 73, etc." performs initial sensing. Note that, in FIG. 76, the components that operate in the same manner as in FIG. 75 are denoted by the same reference signs, and the detailed descriptions thereof will be omitted. The horizontal axis represents frequency and the vertical axis represents time.

NR-UE 7001 performs initial sensing 7601_1 in "first channel 7500_1 of IEEE 802.11ad and/or IEEE 802.11ay" and "second channel 7500_2 of IEEE 802.11ad and/or IEEE 802.11ay" in the first time as illustrated in FIG. 76.

NR-UE 7001 performs initial sensing 7601_2 in "third channel 7500_3 of IEEE 802.11ad and/or IEEE 802.11ay" and "fourth channel 7500_4 of IEEE 802.11ad and/or IEEE 802.11ay" in the second time as illustrated in FIG. 76.

NR-UE 7001 performs initial sensing 7601_3 in "fifth channel 7500_5 of IEEE 802.11ad and/or IEEE 802. Hay" and "sixth channel 7500_6 of IEEE 802.1 1ad and/or IEEE 802.11ay" in the third time as illustrated in FIG. 76.

This allows the NR-UE to perform initial sensing in a plurality of channels among "channels of IEEE 802.11ad and/or IEEE 802.11ay".

Note that, although FIG. 76 illustrates an example where the NR-UE performs initial sensing in six channels, the same can be implemented when initial sensing is performed in two or more channels.

In addition, the order of "channels of IEEE 802.11ad and/or IEEE 802.11ay" where the NR-UE performs initial sensing is not limited to the example of FIG. 76, and the same can be implemented in any order.

Further the "first time" to the "third time" for performing initial sensing in FIG. 76 need not be arranged as in the example of FIG. 76, and the "X-th time" and the "Y-th time" may partially overlap in time with each other. Note that X and Y are any of 1, 2, and 3, and X≠Y.

FIG. 75 illustrates an example where initial sensing is performed in units of one channel of "channels of IEEE 802.11ad and/or IEEE 802.11ay", and FIG. 76 illustrates an example where initial sensing is performed in units of two channels of "channels of IEEE 802.11ad and/or IEEE 802.11ay", but initial sensing in a plurality of channels of "channels of IEEE 802.11ad and/or IEEE 802.11ay" is possible as in FIGS. 75 and 76 as long as the NR-UE performs initial sensing in units of six channels or less of "channels of IEEE 802.11ad and/or IEEE 802.11ay".

Further, although FIG. 76 illustrates an example where initial sensing is performed in units of two channels of "channels of IEEE 802.11ad and/or IEEE 802.1 1ay", for example, a configuration method of the units of two channels is not limited to the method of FIG. 76, and initial sensing may be performed in units of discrete two channels of "channels of IEEE 802.11ad and/or IEEE 802.11ay", for example.

In addition, for a case where initial sensing is performed in units of six channels or less of "channels of IEEE 802.11ad and/or IEEE 802.11ay", "channels of IEEE 802.11ad and/or IEEE 802.11ay" may be aggregated in any method.

It is assumed that six channels of "first channel 7500_1 of IEEE 802.11ad and/or IEEE 802.11ay" to "sixth channel 7500_6 of IEEE 802. Had and/or IEEE 802.11ay" can be used in the first country/region, four channels of "first channel 7500_1 of IEEE 802. 11ad and/or IEEE 802.11ay" to "fourth channel 7500_4 of IEEE 802.11ad and/or IEEE 802.11ay" can be used in the second country/region, and three channels of "second channel 7500_2 of IEEE 802.11ad and/or IEEE 802.11ay" to "fourth channel 7500_4 of IEEE 802.11ad and/or IEEE 802.11ay" can be used in the third country/region.

In this case, the NR-UE can perform initial sensing in maximum six channels (the number of channels may be six channels or less) in the first country/region, maximum four channels (the number of channels may be four channels or less) in the second country/region, and maximum three channels (the number of channels may be three channels or less) in the third country/region.

In a case where the NR-UE is UE supporting the "first country/region, second country/region, and third country/region", the number of channels or maximum number of channels where initial sensing can be performed may be changed for each country/region.

In FIG. 76, a frequency bandwidth for initial sensing 7601_B only needs to be 4.32 GHz (= 2.16 GHz + 2.16 GHz) or less. In addition, the sensing may be performed with frequency division and/or time division in initial sensing 7601_B. Note that B is an integer from 1 to 3 (both inclusive).

Incidentally, LBT for a plurality of channels (of IEEE 802.11ad/ay) can be performed by replacing "initial sensing 7601_B" with "LBT" in the above description using FIG. 76 and NR-UE, gNB, and TRP performing LBT described in Embodiment 5, etc. Note that B is an integer from 1 to 3 (both inclusive). In this case, it is implemented by regarding the description of "initial sensing" as the description of "LBT" in the above description.

This makes it possible to access gNB considering the existence of first-standard apparatuses, thereby enabling multiple-TRP considering coexistence and producing the effect of improving frequency utilization efficiency.

As another method, a frequency used for NR-UE 7001 in "FIGS. 70A, 70B, 71, 73, etc." to communicate with a plurality of gNBs (perform multiple-TRP) may be determined in advance.

FIG. 77 illustrates an example where a frequency used for NR-UE 7001 in "FIGS. 70A, 70B, 71, 73, etc." to communicate with a plurality of gNBs (perform multiple-TRP) is determined in advance. Note that, in FIG. 77, the components that operate in the same manner as in FIG. 75 are denoted by the same reference signs, and the detailed descriptions thereof will be omitted. The horizontal axis represents frequency and the vertical axis represents time.

NR-UE 7001 determines to perform initial sensing in "first channel 7500_1 of IEEE 802.11ad and/or IEEE 802.11ay" and "second channel 7500_2 of IEEE 802.11ad and/or IEEE 802.11ay" in the first time as illustrated in FIG. 77. NR-UE 7001 then performs initial sensing 7701_1 in "first channel 7500_1 of IEEE 802.11ad and/or IEEE 802. 11ay" and "second channel 7500_2 of IEEE 802.11ad and/or IEEE 802.11ay"

NR-UE 7001 detects a plurality of gNBs to communicate using "first channel 7500_1 of IEEE 802.11ad and/or IEEE 802.11ay" and/or "second channel 7500_2 of IEEE 802.11ad and/or IEEE 802.11 ay", and NR-UE 7001 performs communication with the plurality of gNBs, for example. (That is, multiple-TRP is performed.)

After that, NR-UE 7001 determines to change a frequency for performing initial sensing. For example, NR-UE 7001 determines to perform initial sensing in "third channel 7500_3 of IEEE 802.11ad and/or IEEE 802.11ay", "fourth channel 7500_4 of IEEE 802.11ad and/or IEEE 802.11ay", and "fifth channel 7500_5 of IEEE 802.11ad and/or IEEE 802.11ay" in the second time as illustrated in FIG. 77.

NR-UE 7001 then performs initial sensing 7701_2 in "third channel 7500_3 of IEEE 802.11ad and/or IEEE 802.11ay", "fourth channel 7500_4 of IEEE 802.11ad and/or IEEE 802.1 1ay", and "fifth channel 7500_5 of IEEE 802.11ad and/or IEEE 802.11ay".

NR-UE 7001 detects a plurality of gNBs to communicate using "third channel 7500_3 of IEEE 802.11ad and/or IEEE 802.11ay", "fourth channel 7500_4 of IEEE 802.11ad and/or IEEE 802.11ay", and "fifth channel 7500_5 of IEEE 802.11ad and/or IEEE 802.11ay", and NR-UE 7001 performs communication with the plurality of gNBs, for example. (That is, multiple-TRP is performed.)

This allows the NR-UE to perform initial sensing in a plurality of channels among "channels of IEEE 802.11ad and/or IEEE 802.11ay".

Note that, although FIG. 77 illustrates an example where the NR-UE performs initial sensing in six channels, the same can be implemented when initial sensing is performed in two or more channels.

Further the "first time" and the "second time" for performing initial sensing in FIG. 77 need not be arranged as in the example of FIG. 77.

FIG. 77 illustrates an example where initial sensing is performed in units of two channels of "channels of IEEE 802.11ad and/or IEEE 802.11ay" and an example where initial sensing is performed in units of three channels of "channels of IEEE 802.11ad and/or IEEE 802.1 1ay", but initial sensing in a plurality of channels of "channels of IEEE 802.11ad and/or IEEE 802.11ay" is possible as in FIG. 77 as long as the NR-UE performs initial sensing in units of six channels or less of "channels of IEEE 802.11ad and/or IEEE 802.11ay".

Further, although FIG. 77 illustrates an example where initial sensing is performed in units of two channels of "channels of IEEE 802.11ad and/or IEEE 802.11ay" and in units of three channels of "channels of IEEE 802.11ad and/or IEEE 802.11ay", for example, configuration methods of the units of two channels and the units of three channels are not limited to the methods of FIG. 77, and initial sensing may be performed in units of discrete two or three channels of "channels of IEEE 802.11ad and/or IEEE 802.1 1ay", for example.

In addition, for a case where initial sensing is performed in units of six channels or less of "channels of IEEE 802.11ad and/or IEEE 802.11ay", "channels of IEEE 802.11ad and/or IEEE 802.11ay" may be aggregated in any method.

It is assumed that six channels of "first channel 7500_1 of IEEE 802.11ad and/or IEEE 802.11ay" to "sixth channel 7500_6 of IEEE 802.11ad and/or IEEE 802.11ay" can be used in the first country/region, four channels of "first channel 7500_1 of IEEE 802.11ad and/or IEEE 802.11ay" to "fourth channel 7500_4 of IEEE 802.11ad and/or IEEE 802.11ay" can be used in the second country/region, and three channels of "second channel 7500_2 of IEEE 802.11ad and/or IEEE 802.11ay" to "fourth channel 7500_4 of IEEE 802.11ad and/or IEEE 802.11ay" can be used in the third country/region.

In this case, the NR-UE can perform initial sensing in maximum six channels (the number of channels may be six channels or less) in the first country/region, maximum four channels (the number of channels may be four channels or less) in the second country/region, and maximum three channels (the number of channels may be three channels or less) in the third country/region.

In a case where the NR-UE is UE supporting the "first country/region, second country/region, and third country/region", the number of channels or maximum number of channels where initial sensing can be performed may be changed for each country/region.

In FIG. 77, a frequency bandwidth for initial sensing 7701_1 only needs to be 4.32 GHz (= 2.16 GHz + 2.16 GHz) or less. In addition, the sensing may be performed with frequency division and/or time division in initial sensing 7701_1.

Further, in FIG. 77, a frequency bandwidth for initial sensing 7701_2 only needs to be 6.48 GHz (= 2.16 GHz + 2.16 GHz + 2.16 GHz) or less. In addition, the sensing may be performed with frequency division and/or time division in initial sensing 7701_2.

Incidentally, LBT for a plurality of channels (of IEEE 802.11ad/ay) can be performed by replacing "initial sensing 7701_B" with "LBT" in the above description using

FIG. 77 and NR-UE, gNB, and TRP performing LBT described in Embodiment 5, etc. Note that B is an integer from 1 to 2 (both inclusive). In this case, it is implemented by regarding the description of "initial sensing" as the description of "LBT" in the above description.

This makes it possible to access gNB considering the existence of first-standard apparatuses, thereby enabling multiple-TRP considering coexistence and producing the effect of improving frequency utilization efficiency.

Next, other specific operations of the initial access at multiple TRP will be described.

FIG. 70B illustrates an exemplary communication state of gNB #1, gNB #2, and NR-UE and an exemplary state of AP and UE. Note that components that operate in the same manner as in FIG. 70A are denoted by the same reference signs, and the description thereof will be omitted.

For example, gNB #1 labeled 7002_1 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69. In addition, gNB #2 labeled 7002_2 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69, for example. Thus, the "frequency used by a modulation signal transmitted by gNB #1 labeled 7002_1" and the "frequency used by a modulation signal transmitted by gNB #2 labeled 7002_2" may be the same or different from each other.

AP 7012 and UE 7011 perform communication with each other. For example, AP 7012 transmits a modulation signal of the first standard to UE 7011 using, for example, "frequency 6900 used by a modulation signal of IEEE 802.11ad and/or IEEE 802.11ay" in FIG. 69. At this time, AP 7012 uses transmit beam 7091, and UE 7011 uses receive beam 7092.

NR-UE 7001 performs receive sweeping for access to detect gNB to access, for example. To be more specific, NR-UE 7001 performs signal detection by, for example, switching reception antennas and/or switching receive beams.

In the case of FIG. 70B, NR-UE 7001 accesses gNB #2 labeled 7002_2 since it does not affect the first standard apparatuses. Meanwhile, NR-UE 7001 does not access gNB #1 labeled 7002_1 since it would receive a modulation signal transmitted from AP 701 by receive beam 5052.

Thus, gNB #2 labeled 7002_2 transmits a modulation signal using at least transmit beam 7053. At this time, NR-UE 7001 generates receive beam 7054 and receives the modulation signal transmitted from gNB #2 labeled 7002_2.

Note that NR-UE 7001 transmits a modulation signal to gNB #2 labeled 7002_2, but it is not illustrated in FIG. 70B. Further, gNB #1 labeled 7002_1 and gNB #2 labeled 7002_2 may communicate with each other.

UE 7011 transmits a modulation signal to AP 7012, but it is not illustrated in FIG. 70B.

FIG. 78 illustrates an exemplary communication state of gNB #1, gNB #2, and NR-UE and an exemplary state of AP and UE. Note that components that operate in the same manner as in FIGS. 70A and 70B are denoted by the same reference signs, and the description thereof will be omitted.

For example, gNB #1 labeled 7002_1 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69. In addition, gNB #1 labeled 7002_1 can perform communication using the first frequency (band). Note that frequency range (FR) 1 and/or FR 2 may be considered as the first frequency (band). FR 1 is a "frequency from 450 MHz to 6 GHz", and FR 2 is a "frequency from 24.25 GHz to 52.6 GHz".

In addition, gNB #2 labeled 7002_2 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69, for example.

AP 7012 and UE 7011 perform communication with each other. For example, AP 7012 transmits a modulation signal of the first standard to UE 7011 using, for example, "frequency 6900 used by a modulation signal of IEEE 802.11ad and/or IEEE 802.11ay" in FIG. 69. At this time, AP 7012 uses transmit beam 7091, and UE 7011 uses receive beam 7092.

NR-UE 7001 performs receive sweeping for access to detect gNB to access, for example. To be more specific, NR-UE 7001 performs signal detection by, for example, switching reception antennas and/or switching receive beams.

In the case of FIG. 78, NR-UE 7001 does not perform an access to gNB #1 labeled 7002_1 for transmitting a modulation signal by gNB #1 labeled 7002_1 using transmit beam 7501 since it would receive a modulation signal transmitted from AP 701 by receive beam 5052.

NR-UE 7001 accesses gNB #1 labeled 7002_1 using the first frequency (band) to communicate with gNB #1 labeled 7002_1 using the first frequency (band). Accordingly, gNB #1 labeled 7002_1 transmits a modulation signal using the first frequency (band), and NR-UE 7001 receives the modulation signal transmitted by gNB #1 labeled 7002_1 using the first frequency (band).

At this time, gNB #1 labeled 7002_1 may transmit a modulation signal using transmit beam 7801. In addition, NR-UE 7001 may receive, using receive beam 7802, the modulation signal transmitted by gNB #1 labeled 7002_1 using the first frequency (band).

Meanwhile, NR-UE 7001 accesses gNB #2 labeled 7002_2 since it does not affect the first standard apparatuses.

Thus, gNB #2 labeled 7002_2 transmits a modulation signal using at least transmit beam 7053. At this time, NR-UE 7001 generates receive beam 7054 and receives the modulation signal transmitted from gNB #2 labeled 7002_2.

Note that NR-UE 7001 also transmits a modulation signal to gNB #1 labeled 7002_1, but it is not illustrated in FIG. 78. NR-UE 7001 also transmits a modulation signal to gNB #2 labeled 7002_2, but it is not illustrated in FIG. 78.

Further, gNB #1 labeled 7002_1 and gNB #2 labeled 7002_2 may communicate with each other. UE 7011 transmits a modulation signal to AP 7012, but it is not illustrated in FIG. 78.

Introducing such a mechanism enables control of "whether to perform multiple-TRP" while considering coexistence, thereby producing the effect of improving frequency utilization efficiency. FIG. 78 enables "downlink FDM at multiple TRP".

As described above, NR-UE selects a frequency allowing for multiple-TRP while first standard apparatuses are present, and this makes it possible to perform multiple-TRP while first standard apparatuses are present, thereby producing effects of enhancing a data transmission rate and improving data quality.

In contrast to the state of FIG. 78, the state as in FIG. 79 is also possible where neither AP 7012 nor UE 7011 is present. Note that, in FIG. 79, the components that operate in the same manner as in FIGS. 70B and 78 are denoted by the same reference signs, and the descriptions thereof will be omitted.

NR-UE 7001 performs receive sweeping for access to detect gNB to access, for example. To be more specific, NR-UE 7001 performs signal detection by, for example, switching reception antennas and/or switching receive beams.

In the case of FIG. 79, NR-UE 7001 accesses gNB #1 labeled 7002_1 since it does not affect the first standard apparatuses.

Thus, gNB #1 labeled 7002_1 transmits a modulation signal using at least transmit beam 7051. At this time, NR-UE 7001 generates receive beam 7052 and receives the modulation signal transmitted from gNB #1 labeled 7002_1.

NR-UE 7001 accesses gNB #1 labeled 7002_1 using the first frequency (band) to communicate with gNB #1 labeled 7002_1 using the first frequency (band). Accordingly, gNB #1 labeled 7002_1 transmits a modulation signal using the first frequency (band), and NR-UE 7001 receives the modulation signal transmitted by gNB #1 labeled 7002_1 using the first frequency (band).

At this time, gNB #1 labeled 7002_1 may transmit a modulation signal using transmit beam 7801. In addition, NR-UE 7001 may receive, using receive beam 7802, the modulation signal transmitted by gNB #1 labeled 7002_1 using the first frequency (band).

Meanwhile, NR-UE 7001 accesses gNB #2 labeled 7002_2 since it does not affect the first standard apparatuses.

Thus, gNB #2 labeled 7002_2 transmits a modulation signal using at least transmit beam 7053. At this time, NR-UE 7001 generates receive beam 7054 and receives the modulation signal transmitted from gNB #2 labeled 7002_2.

Note that NR-UE 7001 also transmits a modulation signal to gNB #1 labeled 7002_1, but it is not illustrated in FIG. 79. NR-UE 7001 also transmits a modulation signal to gNB #2 labeled 7002_2, but it is not illustrated in FIG. 79.

Further, gNB #1 labeled 7002_1 and gNB #2 labeled 7002_2 may communicate with each other.

Introducing such a mechanism enables control of "whether to perform multiple-TRP" while considering coexistence, thereby producing the effect of improving frequency utilization efficiency. FIG. 79 enables "downlink FDM at multiple TRP".

As described above, NR-UE selects a frequency allowing for multiple-TRP, and this makes it possible to communicate with more gNBs than the first, thereby producing effects of enhancing a data transmission rate and improving data quality.

The number of gNBs for the NR-UE to access in an unlicensed band of 52.6 GHz or higher is changed between the case where the first-standard apparatuses are present as in FIG. 78 and the case where the first-standard apparatuses are present as in FIG. 79, thereby producing the effect of enhancing a data transmission rate while ensuring data quality. Further, data communication by FR 1 and/or FR 2 can be secured, resulting in stable data communication.

Although FIGS. 78 and 79 illustrate gNB, the gNB may be a base station, gNB, e Node B (eNB), repeater, TRP, etc. The gNB may be other than these examples. This may apply to the other drawings.

Next, another example will be described.

FIG. 80 illustrates an exemplary communication state of gNB #1, gNB #2, and NR-UE and an exemplary state of AP and UE. Note that components that operate in the same manner as in FIGS. 70A, 70B and 78 are denoted by the same reference signs, and the description thereof will be omitted.

For example, gNB #1 labeled 7002_1 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69.

In addition, gNB #2 labeled 7002_2 can transmit a modulation signal using any of "first example of NR modulation signal" 6901, "second example of NR modulation signal" 6902, "third example of NR modulation signal" 6903, "fourth example of NR modulation signal" 6904, and "fifth example of NR modulation signal" 6905 in FIG. 69, for example.

gNB #N labeled 8002_N can perform communication using the first frequency (band). Note that frequency range (FR) 1 and/or FR 2 may be considered as the first frequency (band). FR 1 is a "frequency from 450 MHz to 6 GHz", and FR 2 is a "frequency from 24.25 GHz to 52.6 GHz".

AP 7012 and UE 7011 perform communication with each other. For example, AP 7012 transmits a modulation signal of the first standard to UE 7011 using, for example, "frequency 6900 used by a modulation signal of IEEE 802.11ad and/or IEEE 802.11ay" in FIG. 69. At this time, AP 7012 uses transmit beam 7091, and UE 7011 uses receive beam 7092.

NR-UE 7001 performs receive sweeping for access to detect gNB to access, for example. To be more specific, NR-UE 7001 performs signal detection by, for example, switching reception antennas and/or switching receive beams.

In addition, NR-UE 7001 performs signal detection for whether it is possible to access gNB in the first frequency (band).

In the case of FIG. 80, NR-UE 7001 does not perform an access to gNB #1 labeled 7002_1 for transmitting a modulation signal by gNB #1 labeled 7002_1 using transmit beam 7501 since it would receive a modulation signal transmitted from AP 701 by receive beam 5052.

Meanwhile, NR-UE 7001 accesses gNB #2 labeled 7002_2 since it does not affect the first standard apparatuses.

Thus, gNB #2 labeled 7002_2 transmits a modulation signal using at least transmit beam 7053. At this time, NR-UE 7001 generates receive beam 7054 and receives the modulation signal transmitted from gNB #2 labeled 7002_2.

NR-UE 7001 accesses gNB #N labeled 8002_N using the first frequency (band) to communicate with gNB #N labeled 8002_N using the first frequency (band). Accordingly, gNB #N labeled 8002_N transmits a modulation signal using the first frequency (band), and NR-UE 7001 receives the modulation signal transmitted by gNB #N labeled 8002_N using the first frequency (band).

At this time, gNB #N labeled 8002_N may transmit a modulation signal using transmit beam 8001. In addition, NR-UE 7001 may receive, using receive beam 8002, the modulation signal transmitted by gNB #N labeled 8002_N using the first frequency (band).

Note that NR-UE 7001 also transmits a modulation signal to gNB #1 labeled 7002_1, but it is not illustrated in FIG. 80. NR-UE 7001 also transmits a modulation signal to gNB #2 labeled 7002_2, but it is not illustrated in FIG. 80. In addition, NR-UE 7001 transmits a modulation signal to gNB #N labeled 8002_N, but it is not illustrated in FIG. 80.

Further, gNB #1 labeled 7002_1 and gNB #2 labeled 7002_2 may communicate with each other. gNB #1 labeled 7002_1 and gNB #2 labeled 7002_2 may communicate with gNB #N labeled 8002_N.

UE 7011 transmits a modulation signal to AP 7012, but it is not illustrated in FIG. 80.

Introducing such a mechanism enables control of "whether to perform multiple-TRP" while considering coexistence, thereby producing the effect of improving frequency utilization efficiency. FIG. 80 enables "downlink FDM at multiple TRP". As described above, NR-UE selects a frequency allowing for multiple-TRP while first standard apparatuses are present, and this makes it possible to perform multiple-TRP while first standard apparatuses are present, thereby producing effects of enhancing a data transmission rate and improving data quality.

In contrast to the state of FIG. 80, the state as in FIG. 81 is also possible where neither AP 7012 nor UE 7011 is present. Note that, in FIG. 81, the components that operate in the same manner as in FIGS. 70A, 70B, 78, and 80 are denoted by the same reference signs, and the descriptions thereof will be omitted.

NR-UE 7001 performs receive sweeping for access to detect gNB to access, for example. To be more specific, NR-UE 7001 performs signal detection by, for example, switching reception antennas and/or switching receive beams.

In addition, NR-UE 7001 performs signal detection for whether it is possible to access gNB in the first frequency (band).

In the case of FIG. 81, NR-UE 7001 accesses gNB #1 labeled 7002_1 since it does not affect the first standard apparatuses.

Thus, gNB #1 labeled 7002_1 transmits a modulation signal using at least transmit beam 7051. At this time, NR-UE 7001 generates receive beam 7052 and receives the modulation signal transmitted from gNB #1 labeled 7002_1.

Meanwhile, NR-UE 7001 accesses gNB #2 labeled 7002_2 since it does not affect the first standard apparatuses.

Thus, gNB #2 labeled 7002_2 transmits a modulation signal using at least transmit beam 7053. At this time, NR-UE 7001 generates receive beam 7054 and receives the modulation signal transmitted from gNB #2 labeled 7002_2.

NR-UE 7001 accesses gNB #N labeled 8002_N using the first frequency (band) to communicate with gNB #N labeled 8002_N using the first frequency (band). Accordingly, gNB #N labeled 8002_N transmits a modulation signal using the first frequency (band), and NR-UE 7001 receives the modulation signal transmitted by gNB #N labeled 8002_N using the first frequency (band).

At this time, gNB #N labeled 8002_N may transmit a modulation signal using transmit beam 8001. In addition, NR-UE 7001 may receive, using receive beam 8002, the modulation signal transmitted by gNB #N labeled 8002_N using the first frequency (band).

Note that NR-UE 7001 also transmits a modulation signal to gNB #1 labeled 7002_1, but it is not illustrated in FIG. 80. NR-UE 7001 also transmits a modulation signal to gNB #2 labeled 7002_2, but it is not illustrated in FIG. 80. In addition, NR-UE 7001 transmits a modulation signal to gNB #N labeled 8002_N, but it is not illustrated in FIG. 80.

Further, gNB #1 labeled 7002_1 and gNB #2 labeled 7002_2 may communicate with each other. gNB #1 labeled 7002_1 and gNB #2 labeled 7002_2 may communicate with gNB #N labeled 8002_N.

Introducing such a mechanism enables control of "whether to perform multiple-TRP" while considering coexistence, thereby producing the effect of improving frequency utilization efficiency. FIG. 81 enables "downlink FDM at multiple TRP".

As described above, NR-UE selects a frequency allowing for multiple-TRP, and this makes it possible to communicate with more gNBs than the first, thereby producing effects of enhancing a data transmission rate and improving data quality.

The number of gNBs for the NR-UE to access in an unlicensed band of 52.6 GHz or higher is changed between the case where the first-standard apparatuses are present as in FIG. 80 and the case where the first-standard apparatuses are present as in FIG. 81, thereby producing the effect of enhancing a data transmission rate while ensuring data quality. Further, data communication by FR 1 and/or FR 2 can be secured, resulting in stable data communication.

Although FIGS. 80 and 81 illustrate gNB, the gNB may be a base station, gNB, e Node B (eNB), repeater, TRP, etc. The gNB may be other than these examples. This may apply to the other drawings.

Still another example will be described.

FIG. 82 illustrates an exemplary communication state ofgNB #1, gNB #2, gNB #N, and NR-UE.

gNB #1 labeled 8002_1 can perform communication using the first frequency (band). Note that frequency range (FR) 1 and/or FR 2 may be considered as the first frequency (band). FR 1 is a "frequency from 450 MHz to 6 GHz", and FR 2 is a "frequency from 24.25 GHz to 52.6 GHz".

"gNB #2 labeled 8202_2, gNB #3 labeled 82002_3, ..., gNB #Z labeled 82002_Z", i.e., gNB #i labeled 8202_i can perform NR communication (e.g., communication in an unlicensed band of 52.6 GHz or higher). Note that i is an integer from 2 to Z (both inclusive), where Z is 2 or an integer of 3 or more.

In addition, "gNB #2 labeled 8202_2, gNB #3 labeled 82002_3, ..., gNB #Z labeled 82002_Z" communicate with gNB #1 labeled 8002_1, and for example, "gNB #2 labeled 8202_2, gNB #3 labeled 82002_3, ..., gNB #Z labeled 82002_Z" transmit information of an operating NR channel to gNB #1 labeled 8002_1. Note that the specific operations will be described later.

FIG. 83 illustrates relationships between "six channels of the first standard each having a bandwidth of 2.16 GHz in the 60 GHz" and "NR channels". Note that, in FIG. 83, "first channel 7500_1 of IEEE 802.11ad and/or IEEE 802.1 1ay", "second channel 7500_2 of IEEE 802.11ad and/or IEEE 802.11ay", "third channel 7500_3 of IEEE 802.11ad and/or IEEE 802.11ay", "fourth channel 7500_4 of IEEE 802. 11 ad and/or IEEE 802.11ay", "fifth channel 7500_5 of IEEE 802.11ad and/or IEEE 802.11ay", and "sixth channel 7500_6 of IEEE 802.11ad and/or IEEE 802.11ay" that operate in the same manner as in FIG. 75 are denoted by the same reference signs.

As illustrated in FIG. 83, "first channel 7500_1 of IEEE 802.11ad and/or IEEE 802.11ay" includes "NR channel 9 to channel 16 labeled 8302".

"Second channel 7500_2 of IEEE 802.11ad and/or IEEE 802.11ay" includes "NR channel 17 to channel 24 labeled 8303".

"Third channel 7500_3 of IEEE 802.11ad and/or IEEE 802.11ay" includes "NR channel 25 to channel 32 labeled 8304".

"Fourth channel 7500_4 of IEEE 802.11ad and/or IEEE 802.11ay" includes "NR channel 33 to channel 40 labeled 8305".

"Fifth channel 7500_5 of IEEE 802.11ad and/or IEEE 802.11ay" includes "NR channel 41 to channel 48 labeled 8306".

"Sixth channel 7500_6 of IEEE 802.11ad and/or IEEE 802.11ay" includes "NR channel 49 to channel 56 labeled 8307".

In addition, "NR channel 1 to channel 8 labeled 8301" and "NR channel 57 to channel 64 labeled 8308" are not included in a channel of IEEE 802.11ad and/or IEEE 802.11ay.

Note that FIG. 83 is merely an example, and the configuration of NR channels may be other than that in FIG. 83. For example, NR channel 32 may be configured to be included in a plurality of channels of IEEE 802. 11ad and/or IEEE 802.11ay. To be more specific, NR channel 32 may be configured to be included in "third channel 7500_3 of IEEE 802.11ad and/or IEEE 802.11ay" and "fourth channel 7500_4 of IEEE 802.11ad and/or IEEE 802. Hay".

In the following, a description will be given of an exemplary specific operation in FIG. 82 when the relationships between "six channels of the first standard each having a bandwidth of 2.16 GHz in the 60 GHz" and "NR channels" are as in FIG. 83.

For example, gNB #2 labeled 8202_2 in FIG. 82 is capable of transmitting a modulation signal of "NR channel 14 to channel 20" in FIG. 83. At this time, gNB #2 labeled 8202_2 transmits, to gNB #1 labeled 8202_1, information of "capable of transmitting a modulation signal of "NR channel 14 to channel 20" in FIG. 83".

gNB #3 labeled 8202_3 in FIG. 82 is capable of transmitting a modulation signal of "NR channel 18 to channel 32" in FIG. 83. At this time, gNB #3 labeled 8202_3 transmits, to gNB #1 labeled 8202_1, information of "capable of transmitting a modulation signal of "NR channel 18 to channel 32" in FIG. 83".

gNB #Z labeled 8202_Z in FIG. 82 is capable of transmitting a modulation signal of "NR channel 50 to channel 64" in FIG. 83. At this time, gNB #Z labeled 8202_Z transmits, to gNB #1 labeled 8202_1, information of "capable of transmitting a modulation signal of "NR channel 50 to channel 64" in FIG. 83".

Then, gNB #1 labeled 8202_1 in FIG. 82 transmits, to NR-UE 8201, a modulation signal of "FR 1 or FR 2" including information of a "frequency used for transmitting a modulation signal by gNB #i labeled 8202_i". Note that i is an integer from 2 to Z (both inclusive). At this time, the modulation signal of "FR 1 or FR 2" may include information of a "frequency used by gNB #i labeled 8202_i" and may include information of "gNB information and a frequency used by the gNB".

For example, gNB #1 labeled 8202_1 may generate transmit beam 8251 for transmitting a modulation signal, and NR-UE 8201 may generate receive beam 8252 for receiving a modulation signal.

From information corresponding to the information of a "frequency used for transmitting a modulation signal by gNB #i labeled 8202_i" transmitted by gNB #1 labeled 8202_1, NR-UE 8201 determines a frequency for performing receive sweeping for access to detect gNB to access, for example, and performs the receive sweeping for access for the determined frequency. To be more specific, NR-UE 7001 performs signal detection by, for example, switching reception antennas and/or switching receive beams.

When a plurality of gNBs are detected, NR-UE 8201 may start communication with the plurality of gNBs for multiple-TRP.

For example, in FIG. 82, NR-UE 8201 starts communication with gNB #2 labeled 8202_2 and gNB #3 labeled 8202_3 as a result of initial access.

At this time, gNB #2 labeled 8202_2 uses any of frequencies where "NR channel 14 to channel 20" in FIG. 83 are present when transmitting a modulation signal to NR-UE 8201. In addition, gNB #3 labeled 8202_3 uses any of frequencies where "NR channel 18 to channel 32" in FIG. 83 are present when transmitting a modulation signal to NR-UE 8201.

This enables "downlink SDM at multiple TRP", "downlink TDM at multiple TRP", and "downlink FDM at multiple TRP".

Note that, in FIG. 82, gNB #2 labeled 8202_2 generates transmit beam 8299_2 when transmitting a modulation signal, gNB #3 labeled 8202_3 generates transmit beam 8299_3 when transmitting a modulation signal, ..., gNB #Z labeled 8202_Z generates transmit beam 8299_Z when transmitting a modulation signal.

Note that NR-UE 8201 sometimes transmits a modulation signal to gNB #i labeled 8202_i, but it is not illustrated in FIG. 82. Note that i is an integer from 1 to Z (both inclusive). In addition, gNBs in FIG. 82 may communicate with each other.

Introducing such a mechanism enables control of "whether to perform multiple-TRP" while considering coexistence, thereby producing the effect of improving frequency utilization efficiency.

As described above, NR-UE selects a frequency allowing for multiple-TRP while first standard apparatuses are present, and this makes it possible to perform multiple-TRP while first standard apparatuses are present, thereby producing effects of enhancing a data transmission rate and improving data quality.

In contrast to the state of FIG. 82, the state as in FIG. 84 is also possible where AP 7012 and UE 7011 are present. Note that, in FIG. 84, the components that operate in the same manner as in FIG. 82 are denoted by the same reference signs, and the descriptions thereof will be omitted.

AP 8412 and UE 8411 perform communication with each other. For example, AP 8412 transmits a modulation signal of the first standard to UE 8411 using, for example, "first channel 7500_1 of IEEE 802.11ad and/or IEEE 802.11ay" in FIG. 83. At this time, AP 8412 uses transmit beam 8491, and UE 8411 uses receive beam 8492.

NR-UE 8201 performs receive sweeping for access to detect gNB to access, for example. To be more specific, NR-UE 8201 performs signal detection by, for example, switching reception antennas and/or switching receive beams.

At this time, NR-UE 8201 obtains information of "frequencies used by "gNB #2 labeled 8202_2 to gNB #Z labeled 8202_Z" for modulation signal transmission" from gNB #1 labeled 8202_1.

Thus, a frequency for performing receive sweeping for access is determined based on the information for NR-UE 8201 to detect gNB to access.

This allows gNB and/or NR-UE to have information of relationships between "NR channels where gNB transmits a modulation signal" and "channels of IEEE 802.1 1ad and/or IEEE 802.11ay".

For example, in FIG. 84, in a case where there is only gNB(s) using "NR channel 1 to channel 8 in FIG. 83" and/or "NR channel 57 to channel 64 in FIG. 83", NR-UE 8201 performs receive sweeping for access for "NR channel 1 to channel 8 in FIG. 83" and/or "NR channel 57 to channel 64 in FIG. 83". At this time, NR-UE 8201 can select gNB to access without considering a modulation signal transmitted by AP 8412 or UE 8411.

As another example, in FIG. 84, in a case where there are only gNBs using "NR channel 9 to channel 16 in FIG. 83" and "NR channel 57 to channel 64 in FIG. 83", NR-UE 8201 performs receive sweeping for access for "NR channel 9 to channel 16 in FIG. 83" and "NR channel 57 to channel 64 in FIG. 83". At this time, NR-UE 8201 can select gNB to access by performing receive sweeping for access considering "first channel 7500_1 of IEEE 802.11ad and/or IEEE 802.11ay" used by AP 8412 or UE 8411 for communication.

This enables "downlink SDM at multiple TRP", "downlink TDM at multiple TRP", and "downlink FDM at multiple TRP".

Note that, in FIG. 84, gNB #2 labeled 8202_2 generates transmit beam 8299_2 when transmitting a modulation signal, gNB #3 labeled 8202_3 generates transmit beam 8299_3 when transmitting a modulation signal, ..., gNB #Z labeled 8202_Z generates transmit beam 8299_Z when transmitting a modulation signal.

NR-UE 8201 sometimes transmits a modulation signal to gNB #i labeled 8202_i, but it is not illustrated in FIG. 84. Note that i is an integer from 1 to Z (both inclusive). In addition, gNBs in FIG. 84 may communicate with each other. UE 8411 transmits a modulation signal to AP 8412, but it is not illustrated in FIG. 84.

Introducing such a mechanism enables control of "whether to perform multiple-TRP" while considering coexistence, thereby producing the effect of improving frequency utilization efficiency.

As described above, NR-UE selects a frequency allowing for multiple-TRP while first standard apparatuses are present, and this makes it possible to perform multiple-TRP while first standard apparatuses are present, thereby producing effects of enhancing a data transmission rate and improving data quality.

Although FIGS. 82 and 84 illustrate gNB, the gNB may be a base station, gNB, e Node B (eNB), repeater, TRP, etc. The gNB may be other than these examples. This may apply to the other drawings.

In the above, a description has been given of examples of a communication state in a method for NR-UE to perform initial access in the case where NR-UE performs communication with a plurality of gNBs (multiple TRP). In the following, exemplary capability/capabilities information in performing these will be described.

FIG. 85 illustrates an exemplary configuration of capability/capabilities information (information whether a terminal is capable (terminal capability)) that is transmitted to gNB by, for example, a terminal conforming to the NR standard, such as NR-UE.

The capability/capabilities information transmitted to gNB by a terminal conforming to the NR standard includes at least one piece of the following information.

· Information 6801 on "whether to support multiple TRP using frequency from 52.6 GHz to 71 GHz";

· Information 6803 on "whether to support downlink SDM reception at multiple TRP" ;

· Information 6804 on "whether to support downlink TDM reception at multiple TRP" ;

· Information 6805 on "whether to support downlink FDM reception at multiple TRP" ;

· Information 6808 on "whether to support uplink SDM transmission at multiple TRP" ;

· Information 6809 on "whether to support uplink TDM transmission at multiple TRP" ;

· Information 6810 on "whether to support uplink FDM transmission at multiple TRP" ;

· Information 8501 on "whether to support multiple-channel initial sensing implementation";

· Information 8502 on "whether to support initial sensing implementation in units of 2.16 GHz"; and

· Information 8503 on "whether to support multiple initial sensing implementations in units of 2.16 GHz"

Then, gNB receives the capability/capabilities information transmitted by a terminal conforming to the NR standard.

Note that, in FIG. 85, the same pieces of capability/capabilities information as those in FIG. 68 are denoted by the same reference signs, and the descriptions thereof will be omitted since they have already been described. ("TRP" in the description may be replaced with "gNB".)

It is assumed that gNB obtains information 8501 on "whether to support multiple-channel initial sensing implementation" among the capability/capabilities information transmitted by the first terminal conforming to the NR standard. The gNB then determines whether to perform multiple TRP described in the present specification, for example, based on the initial sensing method that the first terminal can perform, determines a communication method by multiple TRP, and starts communication with the first terminal. Note that the determination of "a communication method etc. by multiple TRP" may be made by not the gNB but another apparatus connected to the gNB.

It is assumed that the gNB obtains information 8502 on "whether to support initial sensing implementation in units of 2.16 GHz" among the capability/capabilities information transmitted by the first terminal conforming to the NR standard.

When obtaining this information, the gNB can know whether the first terminal supports initial sensing implementation in units of 2.16 GHz, i.e., whether it supports initial sensing in units of IEEE 802.11ad/ay channel spacing.

When the first terminal supports initial sensing implementation in units of 2.16 GHz, the gNB can perform multiple TRP based on the IEEE 802.11ad/ay channel spacing, which has been described in the present embodiment, in communicating with the first terminal.

When the first terminal does not support initial sensing implementation in units of 2.16 GHz, the gNB can perform multiple TRP not based on the IEEE 802.11ad/ay channel spacing, which has been described in the present embodiment, in communicating with the first terminal.

It is assumed that the gNB obtains information 8503 on "whether to support multiple initial sensing implementations in units of 2.16 GHz" among the capability/capabilities information transmitted by the first terminal conforming to the NR standard.

When obtaining this information, the gNB can know whether the first terminal supports multiple initial sensing implementations in units of 2.16 GHz, i.e., whether it supports multiple times of initial sensing in units of IEEE 802.1 1ad/ay channel spacing.

When the first terminal supports initial sensing implementation in units of 2.16 GHz, the gNB can perform multiple TRP using a plurality of IEEE 802.11ad/ay channels based on the IEEE 802.11ad/ay channel spacing, which has been described in the present embodiment, in communicating with the first terminal.

When the first terminal does not support initial sensing implementation in units of 2.16 GHz, the gNB does not perform multiple TRP using a plurality of IEEE 802.11ad/ay channels based on the IEEE 802.11ad/ay channel spacing, which has been described in the present embodiment, in communicating with the first terminal.

As described above, multiple TRP can be realized in communication between "the gNBs and the terminal" by determining a method of multiple TRP based on the capability/capabilities information transmitted by the terminal, thereby producing an effect of improving a data transmission rate and improving data reception quality.

Note that the gNB receives the capability/capabilities information exemplified in FIG. 85 transmitted by the first terminal, determines multiple TRP exemplified in the present embodiment based on the information, and transmits a modulation signal based on the determined multiple TRP to the first terminal. Here, when "information on a scheme of multiple TRP to be performed (performing multiple TRP)", for example, is transmitted to a terminal such as the first terminal in the modulation signal transmitted by the gNB, it is possible to produce an effect of easily performing multiple TRP by "the terminal and the gNBs".

The "information on a scheme of multiple TRP to be performed (performing multiple TRP)" includes information "whether downlink SDM is performed, whether downlink TDM is performed, and whether downlink FDM is performed", information "whether uplink SDM is performed, whether uplink TDM is performed, and whether uplink FDM is performed", etc.

Note that, in the multiple TRP by "the terminal and the gNBs", "downlink SDM, downlink TDM, and downlink FDM" may be performed in parallel. "Uplink SDM, uplink TDM, and uplink FDM" may also be performed in parallel.

Note that examples of multiple TRP implementation and examples of initial sensing implementation have been described in the present embodiment, but the implementation method of multiple TRP and initial sensing is not limited to the examples. In addition, the contents described in the present embodiment can be performed in a frequency band other than the frequency band from 52.6 GHz to 71 GHz (both inclusive), and can be performed in either one of "a licensed band and an unlicensed band".

(Embodiment 7)

In the present embodiment, a description will be given of exemplary "communication of TRP and NR-UE" other than those described in FIGS. 39A, 39B, and 39C, with reference to FIGS. 86A, 86B, 86C, 86D, 86E, and 86F.

FIG. 86A illustrates a variation of "communication of TRPs and NR-UE" in FIG. 39A. Note that, in FIG. 86A, components that operate in the same manner as in FIG. 39A are denoted by the same reference signs, and the description thereof will be partially omitted.

As already described in other embodiments, NR-UE 3901 transmits modulation signals to "TRP #1 labeled 3902_1 and TRP #2 labeled 3902_2". "TRP #1 labeled 3902_1 and TRP #2 labeled 3902_2" also transmit modulation signals to NR-UE 3901. Note that the detailed operations have already been described, and thus the description thereof will be omitted.

Then, NR-UE 3901 performs communication with "TRP #1 labeled 3902_1 and/or TRP #2 labeled 3902_2", and "TRP #1 labeled 3902_1 and/or TRP #2 labeled 3902_2" perform power transmission to NR-UE 3901. (8601_1 and 8601_2 in FIG. 86A) This allows NR-UE 3901 to perform charging.

FIG. 87 illustrates an exemplary configuration of "TRP #1 labeled 3902_1 and TRP #2 labeled 3902_2" in FIG. 86A.

"TRP #1 labeled 3902_1 and TRP #2 labeled 3902_2" include communication apparatus 8701 and power transmitter 8702 as in FIG. 87. Note that communication apparatus 8701 is an apparatus related to communication. The detailed operations have already been described, and thus the description thereof will be omitted. Operations related to communication of communication apparatus 8701, however, are not limited to the operations described above.

For example, communication apparatus 8701 outputs control signal 8711. At this time, control signal 8711 includes control information related to a power transmission operation such as performing power transmission and stopping power transmission.

Power transmitter 8702 takes control signal 8711 as input and operates based on the control information related to power transmission included in control signal 8711.

When control signal 8711 includes information of "performing power transmission", for example, power transmitter 8702 performs power transmission. Note that the power transmission may be performed using radio waves or may be performed using light, for example. When transmitting power using radio waves, power transmitter 8702 may include an antenna for power transmission. When transmitting power using light, power transmitter 8702 may include an emitter.

In addition, power transmitter 8702 may output state information 8712 including information on a power transmission state. At this time, communication apparatus 8701 may take state information 8712 as input and transmit the information of a power transmission state to NR-UE 3901 based on state information 8712.

Note that, as described in other embodiments, "TRP #1 labeled 3902_1 and TRP #2 labeled 3902_2" have a function of performing communication by wire or radio, and "TRP #1 labeled 3902_1 and TRP #2 labeled 3902_2" may directly communicate with each other or indirectly communicate via another apparatus. The communication method is not limited thereto.

FIG. 88A illustrates an exemplary configuration of NR-UE 3901 in FIG. 86A. NR-UE 3901 includes communication apparatus 8801, power receiver 8802, and battery 8830 as in FIG. 88A. Note that communication apparatus 8801 is an apparatus related to communication. The detailed operations have already been described, and thus the description thereof will be omitted. Operations related to communication of communication apparatus 8801, however, are not limited to the operations described above.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by "TRP #1 labeled 3902_1 and/or TRP #2 labeled 3902_2" and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

Battery 8830 performs charging by signal 8821 outputted from power receiver 8802.

In addition, power receiver 8802 may output state information 8812 including information on a power reception state. At this time, communication apparatus 8701 may take state information 8812 as input and transmit the information of a power reception state to "TRP #1 labeled 3902_1 and/or TRP #2 labeled 3902_2" based on state information 8812.

Battery 8830 supplies power (voltage and current) to communication apparatus 8801 and power receiver 8802 (8822).

A description will be given of exemplary information included in a modulation signal transmitted by "NR-UE 3901" and exemplary information included in a modulation signal transmitted by "TRP #1 labeled 3902_1 and TRP #2 labeled 3902_2" in the state of FIG. 86A.

FIG. 89 illustrates exemplary information included in a modulation signal transmitted by "NR-UE 3901". As illustrated in FIG. 89, a modulation signal transmitted by "NR-UE 3901" includes, for example, charging request information (power transmission request information) 8901, location information 8902, battery level information 8903, and power reception state information 8904.

Charging request information 8901 is information for "NR-UE 3901 to make a charging request to TRP etc.". Thus, the TRP etc. knows that "NR-UE 3901 has requested charging" by obtaining this information.

Note that power transmission request information may replace charging request information 8901. The power transmission request information is information for "NR-UE 3901 to make a power transmission request to TRP etc.". Thus, the TRP etc. knows that "NR-UE has requested power transmission" by obtaining this information.

Location information 8902 includes location information obtained by "NR-UE 3901" estimating its location, for example. TRP etc. selects an apparatus such as TRP to be used for power transmission and performs direction control for power transmission, for example, by obtaining this information.

Battery level information 8903 includes information of a battery level (remaining power) of a battery mounted on "NR-UE 3901". TRP etc. can know the battery level of "NR-UE 3901" and control power transmission duration by obtaining this information.

Power reception state information 8904 includes information of a power reception state in "NR-UE 3901", for example, whether "NR-UE 3901" is receiving power and information of electric energy in "NR-UE 3901" by power reception. By obtaining this information, TRP etc. can know the "power reception state of NR-UE" and control a power transmission method, for example, based on this information.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004.

Power transmission apparatus information 9001 includes information of the power transmission apparatus itself (e.g., identification (ID) of the power transmission apparatus). Thus, NR-UE can obtain the information of the power transmission apparatus actually transmitting power by obtaining this information.

"Power transmission location information and/or power transmission direction information 9002" includes location information of the power transmission apparatus and/or information on the direction in which power transmission is performed. NR-UE may perform direction control so that the NR-UE effectively performs power reception, by obtaining this information.

Power transmission information 9003 includes information on how the power transmission apparatus performs power transmission (e.g., whether it performs power transmission by radio waves or light). NR-UE performs power reception in a power reception method according to the power transmission method by obtaining this information. In a case where the NR-UE supports both power reception by radio waves and power reception by light, for example, the NR-UE selects whether it performs power reception by radio waves or light based on power transmission information 9003. In a case where the NR-UE supports either one of power reception by radio waves and power reception by light, the NR-UE determines whether to perform power reception after obtaining power transmission information 9003.

Power transmission state information 9004 includes information on a power transmission state, for example, information of electric energy of power transmission and information on the duration for performing power transmission. NR-UE may control power reception duration, a power reception method, etc. by obtaining this information.

As described above, communication with NR-UE that possibly moves allows sharing information on power transmission and charging, and this produces an effect of transmitting power and charging effectively.

FIG. 88B illustrates an exemplary configuration of NR-UE 3901 in FIG. 86A different from that in FIG. 88A. Note that, in FIG. 88B, the components that operate in the same manner as in FIG. 88A are denoted by the same reference signs, and already-described components will not be described. NR-UE 3901 includes communication apparatus 8801, power receiver 8802, battery 8830, and apparatus 8850 as in FIG. 88B. Note that communication apparatus 8801 is an apparatus related to communication. The detailed operations have already been described, and thus the description thereof will be omitted. Operations related to communication of communication apparatus 8801, however, are not limited to the operations described above.

A difference from FIG. 88A is that apparatus 8850 is present in FIG. 88B. For example, apparatus 8850 may be a moving apparatus based on electricity such as an "electric car, electric bike (e-bike), electric bicycle, moving robot, electric scooter, battery-assisted bicycle, and battery-assisted scooter", and may also be a "display apparatus such as a display, projector, head mounted display, augmented reality (AR) glasses, AR headset, virtual reality (VR) glasses, VR headset, mixed reality (MR) glasses, and MR headset". Apparatus 8850, however, is not limited to these examples and only needs to be an apparatus that operates using electricity.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by "TRP #1 labeled 3902_1 and/or TRP #2 labeled 3902_2" and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

Battery 8830 performs charging by signal 8821 outputted from power receiver 8802.

In addition, power receiver 8802 may output state information 8812 including information on a power reception state. At this time, communication apparatus 8701 may take state information 8812 as input and transmit the information of a power reception state to "TRP #1 labeled 3902_1 and/or TRP #2 labeled 3902_2" based on state information 8812.

Battery 8830 supplies power (voltage and current) to communication apparatus 8801, power receiver 8802, and apparatus 8850 (8822).

Apparatus 8850 and communication apparatus 8801 may transmit/receive information each other (8899).

A description will be given of exemplary information included in a modulation signal transmitted by "NR-UE 3901" with the configuration in FIG. 88B and exemplary information included in a modulation signal transmitted by "TRP #1 labeled 3902_1 and TRP #2 labeled 3902_2" in the state of FIG. 86A.

FIG. 89 illustrates exemplary information included in a modulation signal transmitted by "NR-UE 3901" with the configuration in FIG. 88B. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 88C illustrates an exemplary configuration of NR-UE 3901 in FIG. 86A different from those in FIGS. 88A and 88B. Note that, in FIG. 88C, the components that operate in the same manner as in FIGS. 88A and 88B are denoted by the same reference signs, and already-described components will not be described. NR-UE 3901 includes communication apparatus 8801, power receiver 8802, first battery 8831, second battery 8832, and apparatus 8850 as in FIG. 88C. Note that communication apparatus 8801 is an apparatus related to communication. The detailed operations have already been described, and thus the description thereof will be omitted. Operations related to communication of communication apparatus 8801, however, are not limited to the operations described above.

A difference from FIGS. 88A and 88B is that there are first battery 8831 for "communication apparatus 8801 and power receiver 8802" and second battery 8832 for apparatus 8850 in FIG. 88C.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by "TRP #1 labeled 3902_1 and/or TRP #2 labeled 3902_2" and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

In the case of FIG. 88C, for example, when power receiver 8802 determines to charge first battery 8831, first battery 8831 performs charging by signal 8821 outputted from charger 8802.

For example, when power receiver 8802 determines to charge second battery 8832, second battery 8832 performs charging by signal 8823 outputted from charger 8802.

Power receiver 8802 may output state information 8812 including information on a power reception state. At this time, communication apparatus 8701 may take state information 8812 as input and transmit the information of a power reception state to "TRP #1 labeled 3902_1 and/or TRP #2 labeled 3902_2" based on state information 8812.

First battery 8831 supplies power (voltage and current) to communication apparatus 8801 and power receiver 8802 (8822).

Second battery 8832 supplies power (voltage and current) to apparatus 8850 (8824).

Apparatus 8850 and communication apparatus 8801 may transmit/receive information each other (8899).

A description will be given of exemplary information included in a modulation signal transmitted by "NR-UE 3901" with the configuration in FIG. 88C and exemplary information included in a modulation signal transmitted by "TRP #1 labeled 3902_1 and TRP #2 labeled 3902_2" in the state of FIG. 86A.

FIG. 89 illustrates exemplary information included in a modulation signal transmitted by "NR-UE 3901" with the configuration in FIG. 88C. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 86B illustrates a variation of "communication of TRPs and NR-UE" in FIG. 39B. Note that, in FIG. 86B, components that operate in the same manner as in FIG. 39B are denoted by the same reference signs, and the description thereof will be partially omitted.

As already described in other embodiments, NR-UE 3901 transmits modulation signals to "TRP #1 labeled 3902_1 and TRP #2 labeled 3902_2". In addition, "TRP #1 labeled 3902_1" transmits a modulation signal to NR-UE 3901. Note that the detailed operations have already been described, and thus the description thereof will be omitted.

Then, NR-UE 3901 performs communication with "TRP #1 labeled 3902_1 and/or TRP #2 labeled 3902_2", and "TRP #1 labeled 3902_1 and/or TRP #2 labeled 3902_2" perform power transmission to NR-UE 3901. (8601_1 and 8601_2 in FIG. 86B) This allows NR-UE 3901 to perform charging.

FIG. 87 illustrates an exemplary configuration of "TRP #1 labeled 3902_1 and TRP #2 labeled 3902_2" in FIG. 86B. Note that FIG. 87 has already been described, and thus the description thereof will be omitted.

FIG. 88A illustrates an exemplary configuration of NR-UE 3901 in FIG. 86B. NR-UE 3901 includes communication apparatus 8801, power receiver 8802, and battery 8830 as in FIG. 88A. Note that communication apparatus 8801 is an apparatus related to communication. The detailed operations have already been described, and thus the description thereof will be omitted. FIG. 88A has already been described, and thus the description thereof will be omitted.

A description will be given of exemplary information included in a modulation signal transmitted by "NR-UE 3901" and exemplary information included in a modulation signal transmitted by "TRP #1 labeled 3902_1 and TRP #2 labeled 3902_2" in the state of FIG. 86B.

FIG. 89 illustrates exemplary information included in a modulation signal transmitted by "NR-UE 3901" with the configuration in FIG. 88A. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces an effect of transmitting power and charging effectively.

FIG. 88B illustrates an exemplary configuration of NR-UE 3901 in FIG. 86B different from that in FIG. 88A. Note that, in FIG. 88B, the components that operate in the same manner as in FIG. 88A are denoted by the same reference signs, and already-described components will not be described. NR-UE 3901 includes communication apparatus 8801, power receiver 8802, battery 8830, and apparatus 8850 as in FIG. 88B. Note that communication apparatus 8801 is an apparatus related to communication. The detailed operations have already been described, and thus the description thereof will be omitted. Operations related to communication of communication apparatus 8801, however, are not limited to the operations described above. Note that the detail has already been described, and thus the description thereof will be omitted.

A description will be given of exemplary information included in a modulation signal transmitted by "NR-UE 3901" with the configuration in FIG. 88B and exemplary information included in a modulation signal transmitted by "TRP #1 labeled 3902_1 and TRP #2 labeled 3902_2" in the state of FIG. 86B.

FIG. 89 illustrates exemplary information included in a modulation signal transmitted by "NR-UE 3901" with the configuration in FIG. 88B. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 88C illustrates an exemplary configuration of NR-UE 3901 in FIG. 86B different from those in FIGS. 88A and 88B. Note that, in FIG. 88C, the components that operate in the same manner as in FIGS. 88A and 88B are denoted by the same reference signs, and already-described components will not be described. NR-UE 3901 includes communication apparatus 8801, power receiver 8802, first battery 8831, second battery 8832, and apparatus 8850 as in FIG. 88C. Note that communication apparatus 8801 is an apparatus related to communication. The detailed operations have already been described, and thus the description thereof will be omitted. Operations related to communication of communication apparatus 8801, however, are not limited to the operations described above. Note that the detail has already been described, and thus the description thereof will be omitted.

A description will be given of exemplary information included in a modulation signal transmitted by "NR-UE 3901" with the configuration in FIG. 88C and exemplary information included in a modulation signal transmitted by "TRP #1 labeled 3902_1 and TRP #2 labeled 3902_2" in the state of FIG. 86B.

FIG. 89 illustrates exemplary information included in a modulation signal transmitted by "NR-UE 3901" with the configuration in FIG. 88C. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 86C illustrates a variation of "communication of TRPs and NR-UE" in FIG. 39C. Note that, in FIG. 86C, components that operate in the same manner as in FIG. 39C are denoted by the same reference signs, and the description thereof will be partially omitted.

As already described in other embodiments, NR-UE 3901 transmits a modulation signal to "TRP #1 labeled 3902_1". "TRP #1 labeled 3902_1 and TRP #2 labeled 3902_2" also transmit modulation signals to NR-UE 3901. Note that the detailed operations have already been described, and thus the description thereof will be omitted.

Then, NR-UE 3901 performs communication with "TRP #1 labeled 3902_1 and/or TRP #2 labeled 3902_2", and "TRP #1 labeled 3902_1 and/or TRP #2 labeled 3902_2" perform power transmission to NR-UE 3901. (8601_1 and 8601_2 in FIG. 86C) This allows NR-UE 3901 to perform charging.

FIG. 87 illustrates an exemplary configuration of "TRP #1 labeled 3902_1 and TRP #2 labeled 3902_2" in FIG. 86C. Note that FIG. 87 has already been described, and thus the description thereof will be omitted.

FIG. 88A illustrates an exemplary configuration of NR-UE 3901 in FIG. 86C. NR-UE 3901 includes communication apparatus 8801, power receiver 8802, and battery 8830 as in FIG. 88A. Note that communication apparatus 8801 is an apparatus related to communication. The detailed operations have already been described, and thus the description thereof will be omitted. FIG. 88A has already been described, and thus the description thereof will be omitted.

A description will be given of exemplary information included in a modulation signal transmitted by "NR-UE 3901" and exemplary information included in a modulation signal transmitted by "TRP #1 labeled 3902_1 and TRP #2 labeled 3902_2" in the state of FIG. 86C.

FIG. 89 illustrates exemplary information included in a modulation signal transmitted by "NR-UE 3901" with the configuration in FIG. 88A. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces an effect of transmitting power and charging effectively.

FIG. 88B illustrates an exemplary configuration of NR-UE 3901 in FIG. 86C different from that in FIG. 88A. Note that, in FIG. 88B, the components that operate in the same manner as in FIG. 88A are denoted by the same reference signs, and already-described components will not be described. NR-UE 3901 includes communication apparatus 8801, power receiver 8802, battery 8830, and apparatus 8850 as in FIG. 88B. Note that communication apparatus 8801 is an apparatus related to communication. The detailed operations have already been described, and thus the description thereof will be omitted. Operations related to communication of communication apparatus 8801, however, are not limited to the operations described above. Note that the detail has already been described, and thus the description thereof will be omitted.

A description will be given of exemplary information included in a modulation signal transmitted by "NR-UE 3901" with the configuration in FIG. 88B and exemplary information included in a modulation signal transmitted by "TRP #1 labeled 3902_1 and TRP #2 labeled 3902_2" in the state of FIG. 86C.

FIG. 89 illustrates exemplary information included in a modulation signal transmitted by "NR-UE 3901" with the configuration in FIG. 88B. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 88C illustrates an exemplary configuration of NR-UE 3901 in FIG. 86C different from those in FIGS. 88A and 88B. Note that, in FIG. 88C, the components that operate in the same manner as in FIGS. 88A and 88B are denoted by the same reference signs, and already-described components will not be described. NR-UE 3901 includes communication apparatus 8801, power receiver 8802, first battery 8831, second battery 8832, and apparatus 8850 as in FIG. 88C. Note that communication apparatus 8801 is an apparatus related to communication. The detailed operations have already been described, and thus the description thereof will be omitted. Operations related to communication of communication apparatus 8801, however, are not limited to the operations described above. Note that the detail has already been described, and thus the description thereof will be omitted.

A description will be given of exemplary information included in a modulation signal transmitted by "NR-UE 3901" with the configuration in FIG. 88C and exemplary information included in a modulation signal transmitted by "TRP #1 labeled 3902_1 and TRP #2 labeled 3902_2" in the state of FIG. 86C.

FIG. 89 illustrates exemplary information included in a modulation signal transmitted by "NR-UE 3901" with the configuration in FIG. 88C. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 86D illustrates a variation of "communication of TRPs and NR-UE" in FIG. 39A. Note that, in FIG. 86D, components that operate in the same manner as in FIG. 39A are denoted by the same reference signs, and the description thereof will be partially omitted.

As already described in other embodiments, NR-UE 3901 transmits modulation signals to "TRP #1 labeled 3902_1 and TRP #2 labeled 3902_2". "TRP #1 labeled 3902_1 and TRP #2 labeled 3902_2" also transmit modulation signals to NR-UE 3901. Note that the detailed operations have already been described, and thus the description thereof will be omitted.

Example 1:

NR-UE 3901 performs communication with "TRP #1 labeled 3902_1 and/or TRP #2 labeled 3902_2".

"TRP #1 labeled 3902_1, TRP #2 labeled 3902_2, or another apparatus" instructs power transmission apparatus 8610 to transmit power based on information obtained from NR-UE 3901 through the communication, and power transmission apparatus 8610 performs power transmission. Note that another apparatus is not illustrated in FIG. 86D. Power transmission apparatus 8610 does not have a function of communicating with NR-UE 3901 directly.

NR-UE 3901 performs charging along with the power transmission by power transmission apparatus 8610 (8611 in FIG. 86D).

Example 2:

NR-UE 3901 performs communication with "TRP #1 labeled 3902_1 and/or TRP #2 labeled 3902_2". Power transmission apparatus 8610 obtains information obtained from NR-UE 3901 through the communication by performing communication, and determines whether to perform power transmission. When determining to perform power transmission, power transmission apparatus 8610 performs power transmission. Note that power transmission apparatus 8610 does not have a function of communicating with NR-UE 3901 directly.

NR-UE 3901 performs charging along with the power transmission by power transmission apparatus 8610 (8611 in FIG. 86D).

Note that, in FIG. 86D, "TRP #1 labeled 3902_1, TRP #2 labeled 3902_2, power transmission apparatus 8610, and another apparatus" may have a function of communicating by wire or radio, and this enables communication among these four apparatuses. The communication method is not limited thereto, however.

In addition, "TRP #1 labeled 3902_1 and TRP #2 labeled 3902_2" may have a function of transmitting power to NR-UE 3901 (FIG. 87) or may not have the function.

FIG. 88A illustrates an exemplary configuration of NR-UE 3901 in FIG. 86D. NR-UE 3901 includes communication apparatus 8801, power receiver 8802, and battery 8830 as in FIG. 88A. Note that communication apparatus 8801 is an apparatus related to communication. The detailed operations have already been described, and thus the description thereof will be omitted. Operations related to communication of communication apparatus 8801, however, are not limited to the operations described above.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by power transmission apparatus 8610 and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

Battery 8830 performs charging by signal 8821 outputted from power receiver 8802.

In addition, power receiver 8802 may output state information 8812 including information on a power reception state. At this time, communication apparatus 8701 may take state information 8812 as input and transmit the information of a power reception state to "TRP #1 labeled 3902_1 and/or TRP #2 labeled 3902_2" based on state information 8812.

Battery 8830 supplies power (voltage and current) to communication apparatus 8801 and power receiver 8802 (8822).

A description will be given of exemplary information included in a modulation signal transmitted by "NR-UE 3901" and exemplary information included in a modulation signal transmitted by "TRP #1 labeled 3902_1 and TRP #2 labeled 3902_2" in the state of FIG. 86D.

FIG. 89 illustrates exemplary information included in a modulation signal transmitted by "NR-UE 3901" with the configuration in FIG. 88A. As illustrated in FIG. 89, a modulation signal transmitted by "NR-UE 3901" includes, for example, charging request information (power transmission request information) 8901, location information 8902, battery level information 8903, and power reception state information 8904.

Charging request information 8901 is information for "NR-UE 3901 to make a charging request to a power transmission apparatus etc. via TRP". Thus, the TRP etc. knows that "NR-UE 3901 has requested charging" by obtaining this information.

Note that power transmission request information may replace charging request information 8901. The power transmission request information is information for "NR-UE 3901 to make a power transmission request to a power transmission apparatus etc. via TRP". Thus, the TRP etc. knows that "NR-UE has requested power transmission" by obtaining this information.

Location information 8902 includes location information obtained by "NR-UE 3901" estimating its location, for example. TRP etc. selects an apparatus such as a power transmission apparatus to be used for power transmission and performs direction control for power transmission, for example, by obtaining this information.

Battery level information 8903 includes information of a battery level (remaining power) of a battery mounted on "NR-UE 3901". TRP etc. can know the battery level of "NR-UE 3901" and control power transmission duration by obtaining this information.

Power reception state information 8904 includes information of a power reception state in "NR-UE 3901", for example, whether "NR-UE 3901" is receiving power and information of electric energy in "NR-UE 3901" by power reception. By obtaining this information, TRP etc. can know the "power reception state of NR-UE" and control a power transmission method, for example, based on this information.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces an effect of transmitting power and charging effectively.

FIG. 88B illustrates an exemplary configuration of NR-UE 3901 in FIG. 86D different from that in FIG. 88A. Note that, in FIG. 88B, the components that operate in the same manner as in FIG. 88A are denoted by the same reference signs, and already-described components will not be described. NR-UE 3901 includes communication apparatus 8801, power receiver 8802, battery 8830, and apparatus 8850 as in FIG. 88B. Note that communication apparatus 8801 is an apparatus related to communication. The detailed operations have already been described, and thus the description thereof will be omitted. Operations related to communication of communication apparatus 8801, however, are not limited to the operations described above. Already-described contents will not be described.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by power transmission apparatus 8610 and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

Battery 8830 performs charging by signal 8821 outputted from power receiver 8802.

In addition, power receiver 8802 may output state information 8812 including information on a power reception state. At this time, communication apparatus 8701 may take state information 8812 as input and transmit the information of a power reception state to "TRP #1 labeled 3902_1 and/or TRP #2 labeled 3902_2" based on state information 8812.

Battery 8830 supplies power (voltage and current) to communication apparatus 8801, power receiver 8802, and apparatus 8850 (8822).

Apparatus 8850 and communication apparatus 8801 may transmit/receive information each other (8899).

A description will be given of exemplary information included in a modulation signal transmitted by "NR-UE 3901" with the configuration in FIG. 88B and exemplary information included in a modulation signal transmitted by "TRP #1 labeled 3902_1 and TRP #2 labeled 3902_2" in the state of FIG. 86D.

FIG. 89 illustrates exemplary information included in a modulation signal transmitted by "NR-UE 3901" with the configuration in FIG. 88B. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 88C illustrates an exemplary configuration of NR-UE 3901 in FIG. 86D different from those in FIGS. 88A and 88B. Note that, in FIG. 88C, the components that operate in the same manner as in FIGS. 88A and 88B are denoted by the same reference signs, and already-described components will not be described. NR-UE 3901 includes communication apparatus 8801, power receiver 8802, first battery 8831, second battery 8832, and apparatus 8850 as in FIG. 88C. Note that communication apparatus 8801 is an apparatus related to communication. The detailed operations have already been described, and thus the description thereof will be omitted. Operations related to communication of communication apparatus 8801, however, are not limited to the operations described above. Already-described contents will not be described.

A difference from FIGS. 88A and 88B is that there are first battery 8831 for "communication apparatus 8801 and power receiver 8802" and second battery 8832 for apparatus 8850 in FIG. 88C.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by power transmission apparatus 8610 and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

In the case of FIG. 88C, for example, when power receiver 8802 determines to charge first battery 8831, first battery 8831 performs charging by signal 8821 outputted from charger 8802.

For example, when power receiver 8802 determines to charge second battery 8832, second battery 8832 performs charging by signal 8823 outputted from charger 8802.

Power receiver 8802 may output state information 8812 including information on a power reception state. At this time, communication apparatus 8701 may take state information 8812 as input and transmit the information of a power reception state to "TRP #1 labeled 3902_1 and/or TRP #2 labeled 3902_2" based on state information 8812.

First battery 8831 supplies power (voltage and current) to communication apparatus 8801 and power receiver 8802 (8822).

Second battery 8832 supplies power (voltage and current) to apparatus 8850 (8824).

Apparatus 8850 and communication apparatus 8801 may transmit/receive information each other (8899).

A description will be given of exemplary information included in a modulation signal transmitted by "NR-UE 3901" with the configuration in FIG. 88C and exemplary information included in a modulation signal transmitted by "TRP #1 labeled 3902_1 and TRP #2 labeled 3902_2" in the state of FIG. 86B.

FIG. 89 illustrates exemplary information included in a modulation signal transmitted by "NR-UE 3901" with the configuration in FIG. 88C. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 86E illustrates a variation of "communication of TRPs and NR-UE" in FIG. 39B. Note that, in FIG. 86E, components that operate in the same manner as in FIG. 39B are denoted by the same reference signs, and the description thereof will be partially omitted.

As already described in other embodiments, NR-UE 3901 transmits modulation signals to "TRP #1 labeled 3902_1 and TRP #2 labeled 3902_2". In addition, "TRP #1 labeled 3902_1" transmits a modulation signal to NR-UE 3901. Note that the detailed operations have already been described, and thus the description thereof will be omitted.

Example 1:

NR-UE 3901 performs communication with "TRP #1 labeled 3902_1 and/or TRP #2 labeled 3902_2". "TRP #1 labeled 3902_1, TRP #2 labeled 3902_2, or another apparatus" instructs power transmission apparatus 8610 to transmit power based on information obtained from NR-UE 3901 through the communication, and power transmission apparatus 8610 performs power transmission. Note that another apparatus is not illustrated in FIG. 86E. Power transmission apparatus 8610 does not have a function of communicating with NR-UE 3901 directly.

NR-UE 3901 performs charging along with the power transmission by power transmission apparatus 8610 (8611 in FIG. 86E).

Example 2:

NR-UE 3901 performs communication with "TRP #1 labeled 3902_1 and/or TRP #2 labeled 3902_2". Power transmission apparatus 8610 obtains information obtained from NR-UE 3901 through the communication by performing communication, and determines whether to perform power transmission. When determining to perform power transmission, power transmission apparatus 8610 performs power transmission. Note that power transmission apparatus 8610 does not have a function of communicating with NR-UE 3901 directly.

NR-UE 3901 performs charging along with the power transmission by power transmission apparatus 8610 (8611 in FIG. 86E).

Note that, in FIG. 86E, "TRP #1 labeled 3902_1, TRP #2 labeled 3902_2, power transmission apparatus 8610, and another apparatus" may have a function of communicating by wire or radio, and this enables communication among these four apparatuses. The communication method is not limited thereto, however.

In addition, "TRP #1 labeled 3902_1 and TRP #2 labeled 3902_2" may have a function of transmitting power to NR-UE 3901 (FIG. 87) or may not have the function.

FIG. 88A illustrates an exemplary configuration of NR-UE 3901 in FIG. 86E. NR-UE 3901 includes communication apparatus 8801, power receiver 8802, and battery 8830 as in FIG. 88A. Note that communication apparatus 8801 is an apparatus related to communication. The detailed operations have already been described, and thus the description thereof will be omitted. FIG. 88A has already been described, and thus the description thereof will be omitted.

A description will be given of exemplary information included in a modulation signal transmitted by "NR-UE 3901" and exemplary information included in a modulation signal transmitted by "TRP #1 labeled 3902_1 and TRP #2 labeled 3902_2" in the state of FIG. 86E.

FIG. 89 illustrates exemplary information included in a modulation signal transmitted by "NR-UE 3901" with the configuration in FIG. 88A. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces an effect of transmitting power and charging effectively.

FIG. 88B illustrates an exemplary configuration of NR-UE 3901 in FIG. 86E different from that in FIG. 88A. Note that, in FIG. 88B, the components that operate in the same manner as in FIG. 88A are denoted by the same reference signs, and already-described components will not be described. NR-UE 3901 includes communication apparatus 8801, power receiver 8802, battery 8830, and apparatus 8850 as in FIG. 88B. Note that communication apparatus 8801 is an apparatus related to communication. The detailed operations have already been described, and thus the description thereof will be omitted. Operations related to communication of communication apparatus 8801, however, are not limited to the operations described above. Note that the detail has already been described, and thus the description thereof will be omitted.

A description will be given of exemplary information included in a modulation signal transmitted by "NR-UE 3901" with the configuration in FIG. 88B and exemplary information included in a modulation signal transmitted by "TRP #1 labeled 3902_1 and TRP #2 labeled 3902_2" in the state of FIG. 86E.

FIG. 89 illustrates exemplary information included in a modulation signal transmitted by "NR-UE 3901" with the configuration in FIG. 88B. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 88C illustrates an exemplary configuration of NR-UE 3901 in FIG. 86E different from those in FIGS. 88A and 88B. Note that, in FIG. 88C, the components that operate in the same manner as in FIGS. 88A and 88B are denoted by the same reference signs, and already-described components will not be described. NR-UE 3901 includes communication apparatus 8801, power receiver 8802, first battery 8831, second battery 8832, and apparatus 8850 as in FIG. 88C. Note that communication apparatus 8801 is an apparatus related to communication. The detailed operations have already been described, and thus the description thereof will be omitted. Operations related to communication of communication apparatus 8801, however, are not limited to the operations described above. Note that the detail has already been described, and thus the description thereof will be omitted.

A description will be given of exemplary information included in a modulation signal transmitted by "NR-UE 3901" with the configuration in FIG. 88C and exemplary information included in a modulation signal transmitted by "TRP #1 labeled 3902_1 and TRP #2 labeled 3902_2" in the state of FIG. 86E.

FIG. 89 illustrates exemplary information included in a modulation signal transmitted by "NR-UE 3901" with the configuration in FIG. 88C. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 86F illustrates a variation of "communication of TRPs and NR-UE" in FIG. 39C. Note that, in FIG. 86F, components that operate in the same manner as in FIG. 39C are denoted by the same reference signs, and the description thereof will be partially omitted.

As already described in other embodiments, NR-UE 3901 transmits a modulation signal to "TRP #1 labeled 3902_1". "TRP #1 labeled 3902_1 and TRP #2 labeled 3902_2" also transmit modulation signals to NR-UE 3901. Note that the detailed operations have already been described, and thus the description thereof will be omitted.

Example 1:

NR-UE 3901 performs communication with "TRP #1 labeled 3902_1 and/or TRP #2 labeled 3902_2". "TRP #1 labeled 3902_1, TRP #2 labeled 3902_2, or another apparatus" instructs power transmission apparatus 8610 to transmit power based on information obtained from NR-UE 3901 through the communication, and power transmission apparatus 8610 performs power transmission. Note that another apparatus is not illustrated in FIG. 86F. Power transmission apparatus 8610 does not have a function of communicating with NR-UE 3901 directly.

NR-UE 3901 performs charging along with the power transmission by power transmission apparatus 8610 (8611 in FIG. 86F).

Example 2:

NR-UE 3901 performs communication with "TRP #1 labeled 3902_1 and/or TRP #2 labeled 3902_2". Power transmission apparatus 8610 obtains information obtained from NR-UE 3901 through the communication by performing communication, and determines whether to perform power transmission. When determining to perform power transmission, power transmission apparatus 8610 performs power transmission. Note that power transmission apparatus 8610 does not have a function of communicating with NR-UE 3901 directly.

NR-UE 3901 performs charging along with the power transmission by power transmission apparatus 8610 (8611 in FIG. 86F).

Note that, in FIG. 86F, "TRP #1 labeled 3902_1, TRP #2 labeled 3902_2, power transmission apparatus 8610, and another apparatus" may have a function of communicating by wire or radio, and this enables communication among these four apparatuses. The communication method is not limited thereto, however.

In addition, "TRP #1 labeled 3902_1 and TRP #2 labeled 3902_2" may have a function of transmitting power to NR-UE 3901 (FIG. 87) or may not have the function.

FIG. 88Aillustrates an exemplary configuration of NR-UE 3901 in FIG. 86F. NR-UE 3901 includes communication apparatus 8801, power receiver 8802, and battery 8830 as in FIG. 88A. Note that communication apparatus 8801 is an apparatus related to communication. The detailed operations have already been described, and thus the description thereof will be omitted.

FIG. 88A has already been described, and thus the description thereof will be omitted.

A description will be given of exemplary information included in a modulation signal transmitted by "NR-UE 3901" and exemplary information included in a modulation signal transmitted by "TRP #1 labeled 3902_1 and TRP #2 labeled 3902_2" in the state of FIG. 86F.

FIG. 89 illustrates exemplary information included in a modulation signal transmitted by "NR-UE 3901" with the configuration in FIG. 88A. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces an effect of transmitting power and charging effectively.

FIG. 88B illustrates an exemplary configuration of NR-UE 3901 in FIG. 86F different from that in FIG. 88A. Note that, in FIG. 88B, the components that operate in the same manner as in FIG. 88A are denoted by the same reference signs, and already-described components will not be described. NR-UE 3901 includes communication apparatus 8801, power receiver 8802, battery 8830, and apparatus 8850 as in FIG. 88B. Note that communication apparatus 8801 is an apparatus related to communication. The detailed operations have already been described, and thus the description thereof will be omitted. Operations related to communication of communication apparatus 8801, however, are not limited to the operations described above. Note that the detail has already been described, and thus the description thereof will be omitted.

A description will be given of exemplary information included in a modulation signal transmitted by "NR-UE 3901" with the configuration in FIG. 88B and exemplary information included in a modulation signal transmitted by "TRP #1 labeled 3902_1 and TRP #2 labeled 3902_2" in the state of FIG. 86F.

FIG. 89 illustrates exemplary information included in a modulation signal transmitted by "NR-UE 3901" with the configuration in FIG. 88B. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 88C illustrates an exemplary configuration of NR-UE 3901 in FIG. 86F different from those in FIGS. 88A and 88B. Note that, in FIG. 88C, the components that operate in the same manner as in FIGS. 88A and 88B are denoted by the same reference signs, and already-described components will not be described. NR-UE 3901 includes communication apparatus 8801, power receiver 8802, first battery 8831, second battery 8832, and apparatus 8850 as in FIG. 88C. Note that communication apparatus 8801 is an apparatus related to communication. The detailed operations have already been described, and thus the description thereof will be omitted. Operations related to communication of communication apparatus 8801, however, are not limited to the operations described above. Note that the detail has already been described, and thus the description thereof will be omitted.

A description will be given of exemplary information included in a modulation signal transmitted by "NR-UE 3901" with the configuration in FIG. 88C and exemplary information included in a modulation signal transmitted by "TRP #1 labeled 3902_1 and TRP #2 labeled 3902_2" in the state of FIG. 86F.

FIG. 89 illustrates exemplary information included in a modulation signal transmitted by "NR-UE 3901" with the configuration in FIG. 88C. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1 and/or TRP #2 labeled 3902_2" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

In the following, a description will be given of exemplary "communication of TRP and NR-UE" other than those in "FIGS. 86A, 86B, 86C, 86D, 86E, and 86F".

FIG. 91A illustrates exemplary "communication of TRP and NR-UE". Note that, in FIG. 91A, components that operate in the same manner as in FIGS. 39A, 86A, etc. are denoted by the same reference signs, and the description thereof will be partially omitted.

As already described in other embodiments, NR-UE 3901 transmits a modulation signal to "TRP #1 labeled 3902_1". In addition, "TRP #1 labeled 3902_1" transmits a modulation signal to NR-UE 3901. Note that the detailed operations have already been described, and thus the description thereof will be omitted.

Then, NR-UE 3901 performs communication with "TRP #1 labeled 3902_1", and "TRP #1 labeled 3902_1" performs power transmission to NR-UE 3901. (8601_1 in FIG. 91A) This allows NR-UE 3901 to perform charging.

FIG. 87 illustrates an exemplary configuration of "TRP #1 labeled 3902_1" in FIG. 91A.

"TRP #1 labeled 3902_1" includes communication apparatus 8701 and power transmitter 8702 as in FIG. 87. Note that communication apparatus 8701 is an apparatus related to communication. The detailed operations have already been described, and thus the description thereof will be omitted. Operations related to communication of communication apparatus 8701, however, are not limited to the operations described above.

For example, communication apparatus 8701 outputs control signal 8711. At this time, control signal 8711 includes control information related to a power transmission operation such as performing power transmission and stopping power transmission.

Power transmitter 8702 takes control signal 8711 as input and operates based on the control information related to power transmission included in control signal 8711.

When control signal 8711 includes information of "performing power transmission", for example, power transmitter 8702 performs power transmission. Note that the power transmission may be performed using radio waves or may be performed using light, for example. When transmitting power using radio waves, power transmitter 8702 may include an antenna for power transmission. When transmitting power using light, power transmitter 8702 may include an emitter.

In addition, power transmitter 8702 may output state information 8712 including information on a power transmission state. At this time, communication apparatus 8701 may take state information 8712 as input and transmit the information of a power transmission state to NR-UE 3901 based on state information 8712.

FIG. 88A illustrates an exemplary configuration of NR-UE 3901 in FIG. 91A. NR-UE 3901 includes communication apparatus 8801, power receiver 8802, and battery 8830 as in FIG. 88A. Note that communication apparatus 8801 is an apparatus related to communication. The detailed operations have already been described, and thus the description thereof will be omitted. Operations related to communication of communication apparatus 8801, however, are not limited to the operations described above.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by "TRP #1 labeled 3902_1" and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

Battery 8830 performs charging by signal 8821 outputted from power receiver 8802.

In addition, power receiver 8802 may output state information 8812 including information on a power reception state. At this time, communication apparatus 8701 may take state information 8812 as input and transmit the information of a power reception state to "TRP #1 labeled 3902_1" based on state information 8812.

Battery 8830 supplies power (voltage and current) to communication apparatus 8801 and power receiver 8802 (8822).

A description will be given of exemplary information included in a modulation signal transmitted by "NR-UE 3901" with the configuration in FIG. 88A and exemplary information included in a modulation signal transmitted by "TRP #1 labeled 3902_1" in the state of FIG. 91A.

FIG. 89 illustrates exemplary information included in a modulation signal transmitted by "NR-UE 3901" with the configuration in FIG. 88A. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1". As illustrated in FIG. 90, a modulation signal transmitted by "TRP #1 labeled 3902_1" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 88B illustrates an exemplary configuration of NR-UE 3901 in FIG. 91A different from that in FIG. 88A. Note that, in FIG. 88B, the components that operate in the same manner as in FIG. 88A are denoted by the same reference signs, and already-described components will not be described. NR-UE 3901 includes communication apparatus 8801, power receiver 8802, battery 8830, and apparatus 8850 as in FIG. 88B. Note that communication apparatus 8801 is an apparatus related to communication. The detailed operations have already been described, and thus the description thereof will be omitted. Operations related to communication of communication apparatus 8801, however, are not limited to the operations described above.

A difference from FIG. 88A is that apparatus 8850 is present in FIG. 88B. For example, apparatus 8850 may be a moving apparatus based on electricity such as an "electric car, electric bike (e-bike), electric bicycle, moving robot, electric scooter, battery-assisted bicycle, and battery-assisted scooter", and may also be a "display apparatus such as a display, projector, head mounted display, AR glasses, AR headset, VR glasses, VR headset, mixed reality (MR) glasses, and MR headset". Apparatus 8850, however, is not limited to these examples and only needs to be an apparatus that operates using electricity.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by "TRP #1 labeled 3902_1" and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

Battery 8830 performs charging by signal 8821 outputted from power receiver 8802.

In addition, power receiver 8802 may output state information 8812 including information on a power reception state. At this time, communication apparatus 8701 may take state information 8812 as input and transmit the information of a power reception state to "TRP #1 labeled 3902_1 and/or TRP #2 labeled 3902_2" based on state information 8812.

Battery 8830 supplies power (voltage and current) to communication apparatus 8801, power receiver 8802, and apparatus 8850 (8822).

Apparatus 8850 and communication apparatus 8801 may transmit/receive information each other (8899).

A description will be given of exemplary information included in a modulation signal transmitted by "NR-UE 3901" with the configuration in FIG. 88B and exemplary information included in a modulation signal transmitted by "TRP #1 labeled 3902_1" in the state of FIG. 91A.

FIG. 89 illustrates exemplary information included in a modulation signal transmitted by "NR-UE 3901" with the configuration in FIG. 88B. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1". As illustrated in FIG. 90, a modulation signal transmitted by "TRP #1 labeled 3902_1" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 88C illustrates an exemplary configuration of NR-UE 3901 in FIG. 91A different from those in FIGS. 88A and 88B. Note that, in FIG. 88C, the components that operate in the same manner as in FIGS. 88A and 88B are denoted by the same reference signs, and already-described components will not be described. NR-UE 3901 includes communication apparatus 8801, power receiver 8802, first battery 8831, second battery 8832, and apparatus 8850 as in FIG. 88C. Note that communication apparatus 8801 is an apparatus related to communication. The detailed operations have already been described, and thus the description thereof will be omitted. Operations related to communication of communication apparatus 8801, however, are not limited to the operations described above.

A difference from FIGS. 88A and 88B is that there are first battery 8831 for "communication apparatus 8801 and power receiver 8802" and second battery 8832 for apparatus 8850 in FIG. 88C.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by "TRP #1 labeled 3902_1" and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

In the case of FIG. 88C, for example, when power receiver 8802 determines to charge first battery 8831, first battery 8831 performs charging by signal 8821 outputted from charger 8802.

For example, when power receiver 8802 determines to charge second battery 8832, second battery 8832 performs charging by signal 8823 outputted from charger 8802.

Power receiver 8802 may output state information 8812 including information on a power reception state. At this time, communication apparatus 8701 may take state information 8812 as input and transmit the information of a power reception state to "TRP #1 labeled 3902_1" based on state information 8812.

First battery 8831 supplies power (voltage and current) to communication apparatus 8801 and power receiver 8802 (8822).

Second battery 8832 supplies power (voltage and current) to apparatus 8850 (8824).

Apparatus 8850 and communication apparatus 8801 may transmit/receive information each other (8899).

A description will be given of exemplary information included in a modulation signal transmitted by "NR-UE 3901" with the configuration in FIG. 88C and exemplary information included in a modulation signal transmitted by "TRP #1 labeled 3902_1" in the state of FIG. 91A.

FIG. 89 illustrates exemplary information included in a modulation signal transmitted by "NR-UE 3901" with the configuration in FIG. 88C. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1". As illustrated in FIG. 90, a modulation signal transmitted by "TRP #1 labeled 3902_1" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 91B illustrates exemplary "communication of TRP and NR-UE". Note that, in FIG. 91B, components that operate in the same manner as in FIGS. 39A, 86D, etc. are denoted by the same reference signs, and the description thereof will be partially omitted.

As already described in other embodiments, NR-UE 3901 transmits a modulation signal to "TRP #1 labeled 3902_1". In addition, "TRP #1 labeled 3902_1" transmits a modulation signal to NR-UE 3901. Note that the detailed operations have already been described, and thus the description thereof will be omitted.

Example 1:

NR-UE 3901 performs communication with "TRP #1 labeled 3902_1". "TRP #1 labeled 3902_1 or another apparatus" instructs power transmission apparatus 8610 to transmit power based on information obtained from NR-UE 3901 through the communication, and power transmission apparatus 8610 performs power transmission. Note that another apparatus is not illustrated in FIG. 91B. Power transmission apparatus 8610 does not have a function of communicating with NR-UE 3901 directly.

NR-UE 3901 performs charging along with the power transmission by power transmission apparatus 8610 (8611 in FIG. 91B).

Example 2:

NR-UE 3901 performs communication with "TRP # labeled 3902_1". Power transmission apparatus 8610 obtains information obtained from NR-UE 3901 through the communication by performing communication, and determines whether to perform power transmission. When determining to perform power transmission, power transmission apparatus 8610 performs power transmission. Note that power transmission apparatus 8610 does not have a function of communicating with NR-UE 3901 directly.

NR-UE 3901 performs charging along with the power transmission by power transmission apparatus 8610 (8611 in FIG. 91B).

Note that, in FIG. 91B, "TRP #1 labeled 3902_1, power transmission apparatus 8610, and another apparatus" may have a function of communicating by wire or radio, and this enables communication among these three apparatuses. The communication method is not limited thereto, however.

In addition, "TRP #1 labeled 3902_1" may have a function of transmitting power to NR-UE 3901 (FIG. 87) or may not have the function.

FIG. 88A illustrates an exemplary configuration of NR-UE 3901 in FIG. 91B. NR-UE 3901 includes communication apparatus 8801, power receiver 8802, and battery 8830 as in FIG. 88A. Note that communication apparatus 8801 is an apparatus related to communication. The detailed operations have already been described, and thus the description thereof will be omitted. Operations related to communication of communication apparatus 8801, however, are not limited to the operations described above.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by power transmission apparatus 8610 and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

Battery 8830 performs charging by signal 8821 outputted from power receiver 8802.

In addition, power receiver 8802 may output state information 8812 including information on a power reception state. At this time, communication apparatus 8701 may take state information 8812 as input and transmit the information of a power reception state to "TRP #1 labeled 3902_1" based on state information 8812.

Battery 8830 supplies power (voltage and current) to communication apparatus 8801 and power receiver 8802 (8822).

A description will be given of exemplary information included in a modulation signal transmitted by "NR-UE 3901" and exemplary information included in a modulation signal transmitted by "TRP #1 labeled 3902_1" in the state of FIG. 91B.

FIG. 89 illustrates exemplary information included in a modulation signal transmitted by "NR-UE 3901" with the configuration in FIG. 88A. As illustrated in FIG. 89, a modulation signal transmitted by "NR-UE 3901" includes, for example, charging request information (power transmission request information) 8901, location information 8902, battery level information 8903, and power reception state information 8904.

Charging request information 8901 is information for "NR-UE 3901 to make a charging request to a power transmission apparatus etc. via TRP". Thus, the TRP etc. knows that "NR-UE 3901 has requested charging" by obtaining this information.

Note that power transmission request information may replace charging request information 8901. The power transmission request information is information for "NR-UE 3901 to make a power transmission request to a power transmission apparatus etc. via TRP". Thus, the TRP etc. knows that "NR-UE has requested power transmission" by obtaining this information.

Location information 8902 includes location information obtained by "NR-UE 3901" estimating its location, for example. TRP etc. selects an apparatus such as a power transmission apparatus to be used for power transmission and performs direction control for power transmission, for example, by obtaining this information.

Battery level information 8903 includes information of a battery level (remaining power) of a battery mounted on "NR-UE 3901". TRP etc. can know the battery level of "NR-UE 3901" and control power transmission duration by obtaining this information.

Power reception state information 8904 includes information of a power reception state in "NR-UE 3901", for example, whether "NR-UE 3901" is receiving power and information of electric energy in "NR-UE 3901" by power reception. By obtaining this information, TRP etc. can know the "power reception state of NR-UE" and control a power transmission method, for example, based on this information.

FIG. 90 illustrates exemplary information included in a modulation signal transmitted by "TRP #1 labeled 3902_1". As illustrated in FIG. 90, a modulation signal transmitted by "TRP #1 labeled 3902_1" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces an effect of transmitting power and charging effectively.

FIG. 88B illustrates an exemplary configuration of NR-UE 3901 in FIG. 91B different from that in FIG. 88A. Note that, in FIG. 88B, the components that operate in the same manner as in FIG. 88A are denoted by the same reference signs, and already-described components will not be described. NR-UE 3901 includes communication apparatus 8801, power receiver 8802, battery 8830, and apparatus 8850 as in FIG. 88B. Note that communication apparatus 8801 is an apparatus related to communication. The detailed operations have already been described, and thus the description thereof will be omitted. Operations related to communication of communication apparatus 8801, however, are not limited to the operations described above. Already-described contents will not be described.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by power transmission apparatus 8610 and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

Battery 8830 performs charging by signal 8821 outputted from power receiver 8802.

In addition, power receiver 8802 may output state information 8812 including information on a power reception state. At this time, communication apparatus 8701 may take state information 8812 as input and transmit the information of a power reception state to "TRP #1 labeled 3902_1" based on state information 8812.

Battery 8830 supplies power (voltage and current) to communication apparatus 8801, power receiver 8802, and apparatus 8850 (8822).

Apparatus 8850 and communication apparatus 8801 may transmit/receive information each other (8899).

A description will be given of exemplary information included in a modulation signal transmitted by "NR-UE 3901" with the configuration in FIG. 88B and exemplary information included in a modulation signal transmitted by "TRP #1 labeled 3902_1" in the state of FIG. 91B.

FIG. 89 illustrates exemplary information included in a modulation signal transmitted by "NR-UE 3901" with the configuration in FIG. 88B. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1 and/or TRP #2 labeled 3902_2". As illustrated in FIG. 90, a modulation signal transmitted by "TRP #1 labeled 3902_1" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

FIG. 88C illustrates an exemplary configuration of NR-UE 3901 in FIG. 91B different from those in FIGS. 88A and 88B. Note that, in FIG. 88C, the components that operate in the same manner as in FIGS. 88A and 88B are denoted by the same reference signs, and already-described components will not be described. NR-UE 3901 includes communication apparatus 8801, power receiver 8802, first battery 8831, second battery 8832, and apparatus 8850 as in FIG. 88C. Note that communication apparatus 8801 is an apparatus related to communication. The detailed operations have already been described, and thus the description thereof will be omitted. Operations related to communication of communication apparatus 8801, however, are not limited to the operations described above. Already-described contents will not be described.

A difference from FIGS. 88A and 88B is that there are first battery 8831 for "communication apparatus 8801 and power receiver 8802" and second battery 8832 for apparatus 8850 in FIG. 88C.

For example, communication apparatus 8801 outputs control signal 8811. At this time, control signal 8811 includes control information related to a power reception operation such as performing power reception and stopping power reception.

Power receiver 8802 takes control signal 8811 as input and operates based on the control information related to power reception included in control signal 8811.

When control signal 8811 includes information of "performing power reception", for example, power receiver 8802 receives a signal of power transmission transmitted by power transmission apparatus 8610 and performs an operation for power reception. Note that the power transmission may be performed using radio waves or may be performed using light, for example. When the power transmission is performed using radio waves, power receiver 8802 may include an antenna for power reception. When the power transmission is performed using light, power receiver 8802 may include a light receiver.

In the case of FIG. 88C, for example, when power receiver 8802 determines to charge first battery 8831, first battery 8831 performs charging by signal 8821 outputted from charger 8802.

For example, when power receiver 8802 determines to charge second battery 8832, second battery 8832 performs charging by signal 8823 outputted from charger 8802.

Power receiver 8802 may output state information 8812 including information on a power reception state. At this time, communication apparatus 8701 may take state information 8812 as input and transmit the information of a power reception state to "TRP #1 labeled 3902_1" based on state information 8812.

First battery 8831 supplies power (voltage and current) to communication apparatus 8801 and power receiver 8802 (8822).

Second battery 8832 supplies power (voltage and current) to apparatus 8850 (8824).

Apparatus 8850 and communication apparatus 8801 may transmit/receive information each other (8899).

A description will be given of exemplary information included in a modulation signal transmitted by "NR-UE 3901" with the configuration in FIG. 88C and exemplary information included in a modulation signal transmitted by "TRP #1 labeled 3902_1" in the state of FIG. 91B.

FIG. 89 illustrates exemplary information included in a modulation signal transmitted by "NR-UE 3901" with the configuration in FIG. 88C. As illustrated in FIG. 89, a modulation signal transmitted by "NR-UE 3901" includes, for example, charging request information (power transmission request information) 8901, location information 8902, battery level information 8903, and power reception state information 8904. Note that the detail has already been described, and thus the description thereof will be omitted.

FIG. 90 illustrates exemplary information included in a modulation signal transmitted by "TRP #1 labeled 3902_1". As illustrated in FIG. 90, a modulation signal transmitted by "TRP #1 labeled 3902_1" includes, for example, power transmission apparatus information 9001, "power transmission location information and/or power transmission direction information 9002", power transmission information 9003, and power transmission state information 9004. Note that the detail has already been described, and thus the description thereof will be omitted.

As described above, communication with NR-UE that possibly moves allows sharing information on power transmission and charging, and this produces effects of transmitting power and charging effectively and operating the apparatus intermittently.

Note that, although the term "power transmission apparatus" is used here, the apparatus is not limited to be called this way, and it may be called, for example, a power feeding apparatus, power supply apparatus, etc.

Further, a terminal (e.g., NR-UE) includes a "battery, first battery, and second battery" as in the configuration in FIGS. 88A, 88B, and 88C, for example, but the batteries are not limited to be called a "battery, first battery, and second battery" and may be called a secondary battery, storage battery, battery, etc.

The present embodiment has been described using TRP, but the same can be implemented by replacing the TRP with any of a "base station, gNB, repeater, terminal, access point, broadcasting station, e Node B (eNB), node, server, satellite, etc.". Thus, the TRP in the present embodiment may be referred to as a "base station, gNB, repeater, terminal, access point, broadcasting station, e Node B (eNB), node, server, satellite, etc.".

Further, the present embodiment has been described using NR-UE, but the same can be implemented by replacing the NR-UE with any of "communication equipment/broadcasting equipment such as a terminal, mobile phone, smartphone, tablet, laptop PC, PC, personal computer, home appliance (household electrical machinery equipment), factory apparatus, Internet of Things (IoT) equipment, etc., and a moving device exemplified above". Thus, the NR-UE in the present embodiment may be referred to as "communication equipment/broadcasting equipment such as a terminal, mobile phone, smartphone, tablet, laptop PC, PC, personal computer, home appliance (household electrical machinery equipment), factory apparatus, Internet of Things (IoT) equipment, etc., and a moving device exemplified above".

The TRP that performs power transmission (feeding or power supply) described in the present embodiment may perform operations of a "TRP, base station, gNB, communication apparatus", etc. described in the other embodiments.

In addition, the NR-UE that performs power reception (charging) described in the present embodiment may perform operations of "NR-UE, terminal, communication apparatus", etc. described in the other embodiments.

(Supplement 1)

It is needless to say that the embodiments described in the present specification may be implemented while combined with each other or combined with other contents.

Further, the embodiments and other contents are merely examples. For example, even though the "modulation scheme, error correction coding scheme (error correction code, code length, coding rate, and the like for use), control information, and the like" are illustrated as the examples, it is possible to implement the embodiments with a similar configuration even when a "modulation scheme, error correction coding scheme (error correction code, code length, coding rate, and the like for use), control information, and the like" different from those in the examples are applied.

Regarding the modulation scheme, the embodiments and other contents described in the present specification can be implemented also by using modulation schemes other than the modulation schemes described in the present specification. For example, amplitude phase shift keying (APSK) (e.g., 16APSK, 64APSK, 128APSK, 256APSK, 1024APSK, 4096APSK), pulse amplitude modulation (PAM) (e.g., 4PAM, 8PAM, 16PAM, 64PAM, 128PAM, 256PAM, 1024PAM, 4096PAM), phase shift keying (PSK) (e.g., BPSK, QPSK, 8PSK, 16PSK, 64PSK, 128PSK, 256PSK, 1024PSK, 4096PSK), quadrature amplitude modulation (QAM) (e.g., 4QAM, 8QAM, 16QAM, 64QAM, 128QAM, 256QAM, 1024QAM, 4096QAM), or the like may be applied, or uniform mapping and non-uniform mapping may be applied for each of the modulation schemes. The number of signal points in in-phase (I)-quadrature (phase) (Q) is not limited to those in the examples above, and may be an integer equal to or greater than 3.

In addition, the method of arranging signal points (e.g., 2, 4, 8, 16, 64, 128, 256, or 1024 signal points) on the I-Q plane (modulation scheme with 2, 4, 8, 16, 64, 128, 256, 1024, or other numbers of signal points) is not particularly limited to the signal point arrangement methods of the modulation schemes described in the present specification. Thus, the function of outputting an in-phase component and a quadrature component based on a plurality of bits is a function in a mapper, and performing a matrix operation (e.g., precoding) to perform MIMO transmission and phase changing for a baseband signal after the outputting function is one of the effective functions of the present disclosure.

In addition, when "∀" and "∃" are present in the present specification, "∀" represents a universal quantifier, and "∃" represents an existential quantifier.

Further, when the present specification describes a complex plane, the unit of phase, such as, e.g., an argument, is "radian".

The use of the complex plane allows representation of complex numbers in polar form as a representation of the complex numbers using polar coordinates. Letting a point (a, b) on the complex plane correspond to a complex number z = a + jb (where both of "a" and "b" are real numbers and "j" is an imaginary unit), $a = r \times \cos\theta$ and $b = r \times \sin\theta$ when this point is expressed as $[r, \theta]$ with the polar coordinates.

[1]

$$r = \sqrt{a^2 + b^2} \quad \text{... (Equation 1)}$$

holds true. The character "r" is the absolute value of z ($r = |z|$) and $\theta$ is the argument. Then, z = a + jb is expressed as $r \times e^{j\theta}$.

In the present specification, the "terminal, base station, access point, gateway, etc." may each have a configuration in which a reception apparatus and an antenna of which are separate from each other. For example, the reception apparatus includes an interface for inputting, through a cable, a signal received by the antenna or a signal received by the antenna and subjected to frequency conversion, and the reception apparatus performs subsequent processing. Further, the data and information obtained by the reception apparatus are then converted into a video and sound, and displayed on a display (monitor), or outputted from a speaker in the case of sound. Further, the data and information obtained by the reception apparatus may be subjected to signal processing relevant to the video and sound (such signal processing does not have to be performed), and outputted from an RCA terminal (a video terminal and a sound terminal), universal serial bus (USB), high-definition multimedia interface (HDMI) (registered trademark), digital terminal, or the like provided in the reception apparatus.

It is contemplated herein that the transmission apparatus and/or transmitter is included in, for example, communication equipment/broadcasting equipment such as a broadcasting station, base station, access point, terminal, mobile phone, smartphone, tablet, laptop PC, server, PC, personal computer, television, home appliance (household electrical machinery equipment), factory apparatus, and Internet of Things (IoT) equipment or the like, g Node B (gNB), repeater, node, car (e.g., electric car, etc.), bicycle (e.g., electric bicycle, etc.), motorcycle (e.g., electric motorcycle, etc.), ship, satellite, airplane, drone, mobile equipment, robot, or transmission (Tx)/reception (Rx) point (TRP). Meanwhile, it is contemplated that the reception apparatus and/or receiver is included in, for example, communication equipment such as a radio, terminal, personal computer, mobile phone, access point, and base station, communication equipment/broadcasting equipment such as a smartphone, tablet, laptop PC, server, PC, personal computer, television, home appliance (household electrical machinery equipment), factory apparatus, and Internet of Things (IoT) equipment or the like, g Node B (gNB), repeater, node, car (e.g., electric car, etc.), bicycle (e.g., electric bicycle, etc.), motorcycle (e.g., electric motorcycle, etc.), ship, satellite, airplane, drone, mobile equipment, robot, or transmission (Tx)/reception (Rx) point (TRP). Further, it is considered that the transmission apparatus and the reception apparatus in the present disclosure are devices having a communication function, and the devices are configured to be capable of connecting via a certain interface to an apparatus for executing an application of a television, a radio, a personal computer, a mobile phone, or the like. Further, it is considered that the communication apparatus in the present specification is included in, for example, communication equipment/broadcasting equipment such as a broadcasting station, base station, access point, terminal, mobile phone, smartphone, tablet, laptop PC, server, PC, personal computer, television, home appliance (household electrical machinery equipment), factory apparatus, and Internet of Things (IoT) equipment or the like, g Node B (gNB), repeater, node, car (e.g., electric car, etc.), bicycle (e.g., electric bicycle, etc.), motorcycle (e.g., electric motorcycle, etc.), ship, satellite, airplane, drone, mobile equipment, robot, or transmission (Tx)/reception (Rx) point (TRP).

In addition, symbols other than a data symbol (for example, a reference signal (preamble, unique word, postamble, reference symbol, pilot symbol, pilot signal, and the like), a control information symbol, a sector sweep, etc.) may be mapped in any manner in a frame in the present embodiments. Although the present specification uses the terms "reference signal", "control information symbol", and "sector sweep", the important part is the function itself. The sector sweep may be replaced by a sector-level sweep, for example.

It is contemplated that the reference signal and/or a signal relevant to sector sweep are, for example, known symbols modulated using PSK modulation by the transmitter and receiver (alternatively, the receiver may be capable of knowing a symbol transmitted by the transmitter by synchronization by the receiver), non-zero power signals, zero power signals, signals known to the transmitter and receiver, or the like. The receiver performs, using these signals, frequency synchronization, time synchronization, channel estimation (estimation of channel state information (CSI)) (for each modulation signal), signal detection, estimation of a reception state, estimation of a transmission state, or the like.

Further, the control information symbol is also a symbol for transmitting information (e.g., a modulation scheme, an error correction coding scheme, and a coding rate of the error correction coding scheme; configuration information in a higher layer; a modulation and coding scheme (MCS); a frame configuration; channel information; information on a using frequency band; information on the number of using channels; and the like used for communication) that needs to be transmitted to a communication counterpart to achieve communication (of an application or the like) other than data communication.

The transmission apparatus and/or reception apparatus sometimes need to be notified of a transmission method (MIMO, single-input single-output (SISO), multiple-input single-output (MISO), single-input multiple-output (SIMO), space-time block code, interleaving scheme, MCS, etc.), modulation scheme, and error correction coding scheme. This description may be omitted in some of the embodiments.

The terms such as "precoding", "precoding weight", etc. are sometimes used in the present specification, but they may be called in any manner and the important part is the signal processing itself in the present disclosure.

Regarding both the transmission panel antenna of the transmission apparatus and the reception panel antenna of the reception apparatus, a single antenna illustrated in the drawings may be composed of one antenna or a plurality of antennas.

Further, in the explanation of the embodiments and the like, the transmission panel antenna and the reception panel antenna may be described separately; however, a configuration of "transmission/reception panel antenna" serving as both of the transmission panel antenna and the reception panel antenna may be used.

In addition, the transmission panel antenna, reception panel antenna, and transmission/reception panel antenna may be referred to, for example, as an antenna port. The transmission panel antenna, reception panel antenna, and transmission/reception panel antenna may be referred to as another name, and a method of configuring the transmission panel antenna with one or more antennas or a plurality of antennas is conceivable. Additionally, a method of configuring the reception panel antenna with one or more antennas or a plurality of antennas is conceivable. Also, a method of configuring the transmission/reception panel antenna with one or more antennas or a plurality of antennas is conceivable. Further, an apparatus may be configured for each transmission panel antenna, an apparatus may be configured for each reception panel antenna, and an apparatus may be configured for each transmission/reception panel antenna. That is, it may be regarded as a multiple transmitter (TX)/receiver (RX) point (TRP).

The antenna port may be a logical antenna (antenna group) composed of one or more physical antennas. That is, the antenna port does not necessarily refer to one physical antenna, but may refer to an array antenna or the like composed of a plurality of antennas. For example, the number of physical antennas composing the antenna port is not specified, but the number of physical antennas may be specified as the minimum unit in which a terminal station is capable of transmitting a reference signal. Further, the antenna port may also be specified as a unit or a minimum unit for multiplication by a precoding vector or a weight of a precoding matrix.

There are a plurality of methods of generating a modulation signal by a single-carrier scheme in the present specification, and the present embodiments can be implemented by using any of the schemes. For example, examples of the single-carrier scheme include "discrete Fourier transform (DFT)-spread orthogonal frequency division multiplexing (OFDM)" (DFT-S OFDM), "trajectory constrained DFT-spread OFDM", "constrained DFT-spread OFDM" (constrained DFT-S OFDM), "OFDM based single carrier (SC)", "single carrier (SC)-frequency division multiple access (FDMA)", "guard interval DFT-spread OFDM", a time-domain implementation single carrier scheme (e.g., single carrier (SC)-QAM), and the like.

In the present specification, the ID of the transmission panel antenna and the ID of beamforming are described separately from each other; however, an ID may be assigned without distinguishing between the two.

For example, "ID 0 of beamforming by using transmission panel antenna #1" may be referred to as ID ♭0, "ID 1 of beamforming by using transmission panel antenna #1" may be referred to as ID b1, "ID 0 of beamforming by using transmission panel antenna #2" may be referred to as ID ♭2, "ID 1 of beamforming by using transmission panel antenna #2" may be referred to as ID b3, and so forth.

Thus, a signal for sector sweep may be generated based on the IDs, and the base station and the terminal may transmit information including the IDs.

It has been indicated above that the waveforms of the modulation signal transmitted by the communication apparatus herein may be either the single-carrier scheme or the multi-carrier scheme such as OFDM. In a case of using the multi-carrier scheme such as OFDM, a frame also includes a symbol on the frequency axis.

In the present specification, a "sector sweep reference signal transmitted by a base station" described in the embodiments and drawings such as FIGS. 10, 11, and 12, for example, may be included in a "synchronization signal (SS) block", "physical broadcast channel (PBCH) block", or SS/PBCH block. In this case, it need not be called the "sector sweep reference signal". In addition, a "feedback signal transmitted by a base station and feedback signal group transmitted by a base station" described in the embodiments and drawings such as FIGS. 10, etc., for example, may be included in a "synchronization signal (SS) block", "physical broadcast channel (PBCH) block", or SS/PBCH block. In this case, it need not be called the "feedback signal and feedback signal group".

Although it has been explained that a sector sweep reference signal includes the ID of a transmission panel antenna when a base station transmits the sector sweep reference signal, the sector sweep reference signal may include the ID of a sector antenna and/or information of an antenna port number as "the ID of a transmission panel antenna". Likewise, although it has been explained that a sector sweep reference signal includes the ID of a transmission panel antenna when a terminal transmits the sector sweep reference signal, the sector sweep reference signal may include the ID of a sector antenna and/or information of an antenna port number as "the ID of a transmission panel antenna".

The configurations of the transmission panel antenna and the reception panel antenna of the communication apparatus in the present disclosure are not limited to the configurations in FIGS. 3 and 4. The transmission panel antenna and the reception panel antenna may be composed of one or more antennas and/or antenna elements and may be composed of two or more antennas and/or antenna elements.

Additionally, the antennas illustrated in FIGS. 3 and 4 may be composed of one or more antennas and/or antenna elements or may be composed of two or more antennas and/or antenna elements.

In the present specification, the embodiments have been described using OFDM as an example of multi-carrier schemes, but the embodiments in the present specification can be similarly implemented using another multi-carrier scheme.

By way of example, multi-carrier transmission may be implemented by assigning a "single-carrier scheme using a single frequency band" and assigning a "single-carrier scheme using one or more frequency bands" to the frequency band described in the present specification.

As another example, multi-carrier transmission may be implemented by assigning one or more carriers or two or more carriers to the frequency band described in the present specification. Note that the multi-carrier transmission scheme is not limited to the above examples.

In the present specification, a "sector sweep reference signal transmitted by a base station" described in the embodiments and drawings such as FIGS. 10, 11, and 12, for example, may be included in a "synchronization signal (SS) block", "physical broadcast channel (PBCH) block", or SS/PBCH block. In this case, it need not be called the "sector sweep reference signal".

In addition, a "feedback signal transmitted by a base station and feedback signal group transmitted by a base station" described in the embodiments and drawings such as FIGS. 10, etc., for example, may be included in a "synchronization signal (SS) block", "physical broadcast channel (PBCH) block", or SS/PBCH block. In this case, it need not be called the "feedback signal and feedback signal group".

Although it has been explained that a sector sweep reference signal includes the ID of a transmission panel antenna when a base station transmits the sector sweep reference signal, the sector sweep reference signal may include the ID of a sector antenna and/or information of an antenna port number as "the ID of a transmission panel antenna".

Likewise, although it has been explained that a sector sweep reference signal includes the ID of a transmission panel antenna when a terminal transmits the sector sweep reference signal, the sector sweep reference signal may include the ID of a sector antenna and/or information of an antenna port number as "the ID of a transmission panel antenna".

The configurations of the transmission panel antenna and the reception panel antenna of the communication apparatus in the present disclosure are not limited to the configurations in FIGS. 3 and 4. The transmission panel antenna and the reception panel antenna may be composed of one or more antennas and/or antenna elements and may be composed of two or more antennas and/or antenna elements.

Additionally, the antennas illustrated in FIGS. 3 and 4 may be composed of one or more antennas and/or antenna elements or may be composed of two or more antennas and/or antenna elements.

In the present specification, the embodiments have been described using OFDM as an example of multi-carrier schemes, but the embodiments in the present specification can be similarly implemented using another multi-carrier scheme.

By way of example, multi-carrier transmission may be implemented by assigning a "single-carrier scheme using a single frequency band" and assigning a "single-carrier scheme using one or more frequency bands" to the frequency band described in the present specification.

As another example, multi-carrier transmission may be implemented by assigning one or more carriers or two or more carriers to the frequency band described in the present specification.

Note that the multi-carrier transmission scheme is not limited to the above examples.

In the present specification, a "sector sweep reference signal transmitted by a base station" described in the embodiments and drawings such as FIGS. 10, 11, and 12, for example, may be included in a "physical downlink control channel (PDCCH)". In this case, it need not be called the "sector sweep reference signal".

For example, it is assumed that information A is present as one piece of information in PDCCH. It is also assumed that a "sector sweep reference signal subjected to beamforming #1", "sector sweep reference signal subjected to beamforming #2", ..., "sector sweep reference signal subjected to beamforming #N" are present as the "sector sweep reference signals transmitted by a base station". Note that N is an integer equal to or greater than 1 or an integer equal to or greater than 2.

At this time, information A is included in the ""sector sweep reference signal subjected to beamforming #1", "sector sweep reference signal subjected to beamforming #2", ..., "sector sweep reference signal subjected to beamforming #N"". This produces an effect that a terminal is more likely to obtain information A.

A "sector sweep reference signal transmitted by a terminal" described in the embodiments of the present specification may be included in a "physical uplink control channel (PUCCH)". In this case, it need not be called the "sector sweep reference signal".

For example, it is assumed that information B is present as one piece of information in PUCCH. It is also assumed that a "sector sweep reference signal subjected to beamforming $1", "sector sweep reference signal subjected to beamforming $2", ..., "sector sweep reference signal subjected to beamforming $M" are present as the "sector sweep reference signals transmitted by a terminal". Note that M is an integer equal to or greater than 1 or an integer equal to or greater than 2.

At this time, information B is included in the ""sector sweep reference signal subjected to beamforming $1", "sector sweep reference signal subjected to beamforming $2", ..., "sector sweep reference signal subjected to beamforming $M"". This produces an effect that a base station is more likely to obtain information B.

Note that, in the present specification, "sections of describing configurations and operations of a base station" may be considered as "configurations and operations of a terminal, AP, or repeater". Likewise, "sections of describing configurations and operations of a terminal" may be considered as "configurations and operations of a base station, AP, or repeater".

In the present specification, a server may provide an application related to processing relevant to the reception apparatus and the receiver, and the terminal may implement the functions of the reception apparatus described in the present specification by installing this application. Note that the application may be provided to the terminal by connection of a communication apparatus including the transmission apparatus described in the present specification to the server via a network, or the application may be provided to the terminal by connection of a communication apparatus having another transmission function to the server via the network.

Likewise, in the present specification, a server may provide an application related to processing relevant to the transmission apparatus and the transmitter, and the communication apparatus may implement the functions of the transmission apparatus described in the present specification by installing this application. Note that a method can be envisaged in which this communication apparatus is provided with the application by connection of another communication apparatus to the server via the network.

Note that the present disclosure is not limited to the embodiments and can be implemented with various modifications. For example, the embodiments are performed by a communication apparatus in the description, but the present invention is not limited to this and the communication methods can be realized by software.

In addition, a program for performing the above communication methods may be stored in read only memory (ROM) in advance, for example, and the program may be executed by a central processor unit (CPU).

Further, a program for performing the communication method may be stored in a computer-readable storage medium, and the program stored in the storage medium may be recorded in a random access memory (RAM) of the computer so that the computer operates according to the program.

Each configuration in the each of the embodiments described above can be typically realized by a large scale integration (LSI), which is an integrated circuit. The LSI may be individually formed as chips, or one chip may be formed so as to include a part or all of the configurations in each embodiment. The LSI here may be referred to as an integrated circuit (IC), a system LSI, a super LSI, or an ultra LSI depending on a difference in the degree of integration. In addition, the technique of implementing an integrated circuit is not limited to the LSI and may be realized by using a dedicated circuit or a general-purpose processor. A field programmable gate array (FPGA) that can be programmed after the manufacture of the LSI or a reconfigurable processor in which the connections and the settings of circuit cells disposed inside the LSI can be reconfigured may be used.

Note that at least one of the FPGA and the CPU may be configured to download all or some of software required for implementing the communication methods described in the present disclosure by radio communication or wired communication. Further, at least one of the FPGA and the CPU may be configured to download all or some of software for updating by radio communication or wired communication. Then, the downloaded software may be stored in storage, and at least one of the FPGA and the CPU may be operated based on the stored software to execute the digital signal processing described in the present disclosure.

The device including at least one of the FPGA and the CPU may be connected to a communication modem by radio or wire, and the communication methods described in the present disclosure may be implemented by the device and the communication modem.

For example, a communication apparatus such as the base station, AP, and terminal described in the present specification may include at least one of the FPGA and the CPU, and the communication apparatus may include an interface for externally obtaining software for operating at least one of the FPGA and the CPU. Further, the communication apparatus may include storage for storing the externally-obtained software, and the FPGA and/or the CPU may be operated based on the stored software to implement the signal processing described in the present disclosure.

If future integrated circuit technology replaces LSIs as a result of the advancement of semiconductor technology or other derivative technology, the functional blocks could be integrated using the future integrated circuit technology. Biotechnology can also be applied.

The present disclosure is widely applicable to radio systems for transmitting different modulation signals from a plurality of antennas, respectively. It is also applicable to the case of using MIMO transmission in wired communication systems with a plurality of transmission points (e.g., power line communication (PLC) system, optical communication system, and digital subscriber line (DSL) system). The communication apparatus may be referred to as a radio apparatus.

The "data", "data symbol", and "data frame" may be, for example, a physical downlink shared channel (PDSCH) or a physical uplink shared channel (PUSCH).

In the present disclosure, a description has been given of an example where an NR apparatus detects "a signal transmitted by a first standard apparatus" by performing LBT, the NR apparatus may detect a signal transmitted by an apparatus of another standard by performing LBT.

Further, in the present disclosure, a description has been given of an example where an NR apparatus detects "a signal transmitted by a first standard apparatus", the NR apparatus may detect a signal transmitted by an apparatus of another standard.

In the present disclosure, an NR apparatus may detect "a sector sweep signal and/or a signal related to sector sweep implementation" transmitted by another NR apparatus by performing LBT.

For example, NR-UE in the drawings of the present specification may detect a modulation signal transmitted by a "TRP not involved in communication in the drawings and/or NR-UE not related to the drawings" by LBT and perform operations in the present specification.

Further, a TRP in the drawings of the present specification may detect a modulation signal transmitted by a "TRP not involved in communication in the drawings and/or NR-UE not related to the drawings" by LBT and perform operations in the present specification.

Note that the same can be implemented by replacing "LBT" with "initial access" in the above description.

In the present disclosure, it has been explained that the gNB and NR-UE form transmit beams, but not all the transmit beams need to be the same polarization. In a case where the gNB and NR-UE can generate transmit beam #1, transmit beam #2, transmit beam #3, and so forth, it may be configured so that transmit beam #1 is the first polarization, transmit beam #2 is the second polarization other than the first polarization, and so forth.

In addition, it has been explained that the gNB and NR-UE form receive beams, but not all the receive beams need to be the same polarization. In a case where the gNB and NR-UE can generate receive beam #1, receive beam #2, receive beam #3, and so forth, it may be configured so that receive beam #1 is the first polarization, receive beam #2 is the second polarization other than the first polarization, and so forth.

It has been explained that the gNB and NR-UE form transmit beams in the present disclosure, and the polarization of a transmit beam may be changed as time passes. For example, the first polarization is used for transmit beam #1 at the beginning and may be later changed to the second polarization other than the first polarization.

In addition, it has been explained that the gNB and NR-UE form receive beams, and the polarization of a receive beam may be changed as time passes. For example, the first polarization is used for receive beam #1 at the beginning and may be later changed to the second polarization other than the first polarization.

Although it has been explained that "an NR apparatus (gNB or NR-UE) does not transmit or stands by to transmit a modulation signal when detecting a signal in LBT" in the present disclosure, the NR apparatus (gNB or NR-UE) may transmit a modulation signal when detecting a signal in LBT as long as the modulation signal is a short-period modulation signal that is less likely to interfere "an apparatus of another system such as the first standard or another NR apparatus" (e.g., a signal including control information and a reference signal such as DMRS, PTRS, and another RS signal).

Although it has been explained that "an NR apparatus (gNB or NR-UE) does not transmit or stands by to transmit a modulation signal in a direction with a signal detected in LBT" in the present disclosure, the NR apparatus (gNB or NR-UE) may transmit a modulation signal in a direction with a signal detected in LBT as long as the modulation signal is a short-period modulation signal that is less likely to interfere "an apparatus of another system such as the first standard or another NR apparatus" (e.g., a signal including control information and a reference signal such as DMRS, PTRS, and another RS signal).

The gNB and NR-UE may detect signals in a plurality of directions in a single reception period in the LBT processing (note that they may detect signals in a plurality of directions in a plurality of reception periods, and the example has been described in an embodiment of the present disclosure. At this time, time division multiplexing (TDM) is performed on the signals in a plurality of methods in some cases.). Note that, when the signals in a plurality of directions are detected, the frequency (bands) of the plurality of signals may be the same or different from each other.

When the gNB and NR-UE detect a signal in the first direction and a signal in the second direction in a single reception period, for example, the frequency (band) of the signal in the first direction may be the same as or different from the frequency (band) of the signal in the second direction. Note that the gNB and NR-UE generate receive beam #1 for detecting the signal in the first direction and generate receive beam #2 for detecting the signal in the second direction, for example.

At this time, the case where the frequency (band) of the signal in the first direction is the same as the frequency (band) of the signal in the second direction produces an effect of spatial multiplexing (spatial division multiplexing (SDM)), and the case where the frequency (band) of the signal in the first direction is different from the frequency (band) of the signal in the second direction produces an effect of frequency division multiplexing (FDM).

Note that the gNB and/or NR-UE may control so that the relationship between the signal in the first direction and the signal in the second direction is any one of "spatial multiplexing (spatial division multiplexing (SDM))", "frequency division multiplexing (FDM)", and "time division multiplexing (TDM)". Further, the gNB and/or NR-UE may switch the relationship between the signal in the first direction and the signal in the second direction so that it is any one of "spatial multiplexing (spatial division multiplexing (SDM))", "frequency division multiplexing (FDM)", and "time division multiplexing (TDM)" as time passes.

It is assumed that the gNB and NR-UE perform LBT and do not use two or more directions for communication. At this time, the gNB and NR-UE may detect signals in a plurality of directions from "the two or more directions" in a single reception period (note that they may detect signals in a plurality of directions from "the two or more directions" in a plurality of reception periods, and the example has been described in an embodiment of the present disclosure. At this time, time division multiplexing (TDM) is sometimes performed since there are signals in a plurality of directions from "the two or more directions" in a plurality of reception periods.).

For example, the gNB and NR-UE perform the LBT processing and determine not to use the first direction and the second direction for communication. Then, the gNB and NR-UE may detect a signal in the first direction and a signal in the second direction in a single reception period. At this time, the frequency (band) of the signal in the first direction may be the same as or different from the frequency (band) of the signal in the second direction. Note that the gNB and NR-UE generate receive beam #1 for detecting the signal in the first direction and generate receive beam #2 for detecting the signal in the second direction, for example.

At this time, the case where the frequency (band) of the signal in the first direction is the same as the frequency (band) of the signal in the second direction produces an effect of spatial multiplexing (spatial division multiplexing (SDM)), and the case where the frequency (band) of the signal in the first direction is different from the frequency (band) of the signal in the second direction produces an effect of frequency division multiplexing (FDM).

Note that the gNB and/or NR-UE may control so that the relationship between the signal in the first direction and the signal in the second direction is any one of "spatial multiplexing (spatial division multiplexing (SDM))", "frequency division multiplexing (FDM)", and "time division multiplexing (TDM)". Further, the gNB and/or NR-UE may switch the relationship between the signal in the first direction and the signal in the second direction so that it is any one of "spatial multiplexing (spatial division multiplexing (SDM))", "frequency division multiplexing (FDM)", and "time division multiplexing (TDM)" as time passes.

In addition, after the LBT processing, the gNB and NR-UE may simultaneously transmit modulation signals in a plurality of directions in which communication can be performed (note that they may transmit modulation signals in a plurality of directions in a plurality of reception periods, and the example has been described in an embodiment of the present disclosure. At this time, time division multiplexing (TDM) is performed on the modulation signals in a plurality of methods in some cases.).

For example, it is assumed that the gNB and NR-UE determine that communication can be performed in the first direction and the second direction by the LBT processing. In this case, when the gNB and NR-UE transmit the first modulation signal from the first direction and the second modulation signal from the second direction, the first modulation signal and the second modulation signal may be present in the same time period. Note that the first modulation signal and the second modulation signal may be signals addressed to the same terminal or may be signals addressed to different terminals. Note that the gNB and NR-UE generate transmit beam #1 for transmitting a signal in the first direction and generate transmit beam #2 for transmitting a signal in the second direction, for example.

The frequency (band) of the first modulation signal may be the same as or different from the frequency (band) of the second modulation signal. At this time, the case where the frequency (band) of the first modulation signal is the same as the frequency (band) of the second modulation signal produces an effect of spatial multiplexing (spatial division multiplexing (SDM)), and the case where the frequency (band) of the first modulation signal is different from the frequency (band) of the second modulation signal produces an effect of frequency division multiplexing (FDM).

Note that the gNB and/or NR-UE may control so that the relationship between the first modulation signal and the second modulation signal is any one of "spatial multiplexing (spatial division multiplexing (SDM))", "frequency division multiplexing (FDM)", and "time division multiplexing (TDM)". Further, the gNB and/or NR-UE may switch the relationship between the first modulation signal and the second modulation signal so that it is any one of "spatial multiplexing (spatial division multiplexing (SDM))", "frequency division multiplexing (FDM)", and "time division multiplexing (TDM)" as time passes.

As another example, it is assumed that the gNB and NR-UE perform the LBT processing and do not use two or more directions for communication. At this time, the gNB and NR-UE may perform signal detection in "the two or more directions" and simultaneously transmit modulation signals in two or more directions in transmitting modulation signals in two or more directions (note that it need not be simultaneous, and the example has been described in an embodiment of the present disclosure. In this case, time division multiplexing (TDM) is performed in some cases.).

For example, it is assumed that the gNB and NR-UE perform the LBT processing and do not perform communication in the first direction and the second direction. Then, the gNB and NR-UE may perform signal detection in the first direction and the second direction and simultaneously transmit modulation signals in the first direction and the second direction. Note that the signal in the first direction and the signal in the second direction may be signals addressed to the same terminal or may be signals addressed to different terminals. Note that the gNB and NR-UE generate transmit beam #1 for transmitting a signal in the first direction and generate transmit beam #2 for transmitting a signal in the second direction, for example.

The frequency (band) of the signal in the first direction may be the same as or different from the frequency (band) of the signal in the second direction. The case where the frequency (band) of the signal in the first direction is the same as the frequency (band) of the signal in the second direction produces an effect of spatial multiplexing (spatial division multiplexing (SDM)), and the case where the frequency (band) of the signal in the first direction is different from the frequency (band) of the signal in the second direction produces an effect of frequency division multiplexing (FDM).

Note that the gNB and/or NR-UE may control so that the relationship between the signal in the first direction and the signal in the second direction is any one of "spatial multiplexing (spatial division multiplexing (SDM))", "frequency division multiplexing (FDM)", and "time division multiplexing (TDM)". Further, the gNB and/or NR-UE may switch the relationship between the signal in the first direction and the signal in the second direction so that it is any one of "spatial multiplexing (spatial division multiplexing (SDM))", "frequency division multiplexing (FDM)", and "time division multiplexing (TDM)" as time passes.

That is, a receive beam generated by the gNB (or NR-UE) for the LBT and a transmit beam in which the gNB (or NR-UE) transmits the modulation signal during communication are related to each other. For example, when the gNB (or NR-UE) detects a signal in receive beam #1, the gNB (or NR-UE) does not transmit a modulation signal (does not start communication) in transmit beam #1. Meanwhile, when the gNB (or NR-UE) detects no signal in receive beam #1, the gNB (or NR-UE) transmits a modulation signal (starts communication).

The "bandwidth of a signal transmitted/received by gNB or NR-UE" may be the same as or different from the "bandwidth of a signal transmitted/received by a first standard apparatus".

In the present disclosure, LBT may be referred to as a "channel access procedure" or "part of channel access procedure".

The unlicensed band may be referred to as a shared spectrum.

In a case where an apparatus of NR such as gNB and NR-UE transmits a synchronization signal block (SSB), the SSB may include the sector sweep reference signal described in the present specification.

Communication in which a plurality of channels are aggregated may be referred to as channel aggregation. Communication in which a plurality of carriers are aggregated may be referred to as carrier aggregation. All or some of the above-described first channel of NR to fifth channel of NR may be aggregated (channel aggregation) and used for communication. The first standard is not limited to IEEE 802.11ad or IEEE 802.11ay. The first standard may be, for example, IEEE 802.11aj. Omni-directional LBT may also be referred to as quasi-omni-directional LBT.

Note that "A and/or B" in the present specification may be interpreted as "A and B" or may also be interpreted as "A or B".

The disclosure of Japanese Patent Application No. 2021-097517, filed on June 10, 2021, including the specification, drawings and abstract, is incorporated herein by reference in its entirety.

Industrial Applicability

The present disclosure is widely applicable to radio systems for transmitting modulation signals from one or more antennas, and is suitable for the application to, for example, a communication system using a single carrier and a communication system using a multi-carrier transmission scheme such as OFDM. The present disclosure is also applicable to wired communication systems such as a power line communication (PLC) system, an optical communication system, and a digital subscriber line (DSL) system.

Reference Signs List

100 Control signal
101_i i-th data
102_i i-th transmitter
103_i i-th modulation signal
104 First processor
105_j j-th transmission signal
106_j Transmission panel antenna j
151_i Reception panel antenna i
152_i i-th received signal
153 Second processor
154 j-th signal-processing-subjected signal
155_j j-th receiver
156_j j-th control data
157_j j-th data
158 Third processor
200 Control signal
201 Data
202 Data symbol generator
203 Data symbol modulation signal
204 Sector sweep reference signal generator
205 Sector sweep reference signal
206 Other-signal generator
207 Other signals
251 Processor
252 Frame configuration-based modulation signal
300 Control signal
301 Transmission signal
302 Distributor
303_1 First transmission signal
303_2 Second transmission signal
303_3 Third transmission signal
303_4 Fourth transmission signal
304_1, 304_2, 304_3, 304_4 Multiplier
305_1 Coefficient-multiplication-subjected first transmission signal
305_2 Coefficient-multiplication-subjected second transmission signal
305_3 Coefficient-multiplication-subjected third transmission signal
305_4 Coefficient-multiplication-subjected fourth transmission signal
306_1, 306_2, 306_3, 306_4 Antenna
400 Control signal
401_1, 401_2, 401_3, 401_4 Antenna
402_1 First received signal
402_2 Second received signal
402_3 Third received signal
402_4 Fourth received signal
403_1, 403_2, 403_3, 403_4 Multiplier
404_1 Coefficient-multiplication-subjected first received signal
404_2 Coefficient-multiplication-subjected second received signal
404_3 Coefficient-multiplication-subjected third received signal
404_4 Coefficient-multiplication-subjected fourth received signal
405 Coupler/combiner
406 Modulation signal
501 Constellation mapper
502 Serial/parallel converter
503 IFFT
601 Rx FE processing
602 FFT
603 Parallel/serial converter
604 Demapper
701 Rx FE processing
702 CP removal
703 FFT
704 Tone demapping
705 FDE
706 DFT
707 Demapper

801 Rx FE processing
802 Down-sampling and match filtering
803 TDE
804 CP removal
805 Demapper
901_1 Base station #1
902_1 Terminal #1
902_2 Terminal #2
902_3 Terminal #3
1000 Modulation signal
1001, 1801_1, 1801_2, 1851_1, 1851_2, 2401_1 to 2401_3, 3601_1, 3601_2, 4101_3,
4201_3 Sector sweep reference signal
1002, 1802_1 Feedback signal
1003, 1803_1, 1803_2, 1803_3, 1852_1, 1852_2, 1852_3 Data-symbol-included frame
1101_pi Sector sweep reference signal in transmission panel antenna i for frequency bp
1201_j Reference signal according to j-th parameter in transmission panel antenna i for frequency bp
1301_1 to 1301_8 Terminal "sector sweep reference signal" first transmission period to terminal "sector sweep reference signal" eighth transmission period
1401_i Terminal #i "sector sweep reference signal"
1501_xi Sector sweep reference signal in terminal #i transmission panel antenna xi
1511_j Reference signal according to j-th parameter in transmission panel antenna xi
1601_11 to 1601_K4 Feedback signal first transmission period for frequency ♭1 to feedback signal fourth transmission period for frequency bK
1611_i Terminal #i-addressed feedback signal
1701_11 to 1701_K4 Modulation signal (slot) first transmission period for frequency ♭1 to modulation signal (slot) fourth transmission period for frequency bK
1711 to 1716, 3011_1 to 3011_6 Terminal #1-addressed modulation signal (slot) to terminal #6-addressed modulation signal (slot)
1802_1, 1802_2 Feedback signal
1803_1, 1803_2, 1803_3, 1803_4 Data-symbol-included frame
1852_1, 1852_2, 1852_3, 1852_4 Data-symbol-included frame
2001_1 to 2001_6, 2501_1 to 2501_6, 3111_1 to 3111_6 Terminal #1 transmission frame to terminal #6 transmission frame
2701_1 Terminal "sector sweep reference signal"
2801_1 to 2801_K "Sector sweep reference signal" for frequency ♭1 to "sector sweep reference signal" for frequency bK
2811_1 to 2801_6 Terminal #1 "sector sweep reference signal" to terminal #6 "sector sweep reference signal"
2901_1 to 2901_K Feedback signal for frequency ♭1 to feedback signal for frequency bK
3001_1 to 3001_K Modulation signal (slot) for frequency ♭1 to modulation signal (slot) for frequency ♭K
2811_2, 2811 _3 Terminal #2 "sector sweep reference signal", terminal #3 "sector sweep reference signal"
3401_1 to 3401_M Sector sweep reference signal in transmission panel antenna 1 to sector sweep reference signal in transmission panel antenna M
3501_1 to 3501_4 Reference signal according to first parameter in transmission panel antenna i to reference signal according to fourth parameter in transmission panel antenna i
3401_xi Sector sweep reference signal in transmission panel antenna xi
3701_1 to 3701_4 Reference signal according to first parameter in transmission panel antenna xi to reference signal according to fourth parameter in transmission panel antenna xi
3801_1 to 3801_4 First terminal-addressed feedback signal to fourth terminal-addressed feedback signal
3901_1 to 3901_4 First terminal-addressed modulation signal (slot) to fourth terminal-addressed modulation signal (slot)
4301_1 to 4301_K Sector sweep reference signal in frequency ♭1 to sector sweep reference signal in frequency bK
4401_1 to 4401_H Reference signal according to first parameter for frequency bp to reference signal according to H-th parameter for frequency bp
4511_1 to 4511_G Reference signal according to first parameter to reference signal according to G-th parameter
4611_1 to 4611_F Reference signal according to first parameter to reference signal according to F-th parameter

## Claims

1. A terminal, comprising:

   a communicator that performs radio communication with a plurality of transmission/reception points based on a first communication scheme; and
   a controller that determines a transmission/reception point to perform radio communication with among the plurality of transmission/reception points based on detection of a signal of radio communication in accordance with a second communication scheme.

2. The terminal according to claim 1, wherein the controller detects a signal that is based on the second communication scheme in listen-before-talk (LBT).

**3.** The terminal according to claim 2, wherein,

a frequency band in the second communication scheme includes at least a first frequency band and a second frequency band in the first communication scheme, and
the controller performs the LBT at least in the first frequency band and the second frequency band.

**4.** The terminal according to claim 3, wherein, the communicator:

performs radio communication with a first transmission/reception point among the plurality of transmission/reception points using at least the first frequency band; and
performs radio communication with a second transmission/reception point among the plurality of transmission/reception points using at least the second frequency band.

**5.** The terminal according to claim 1, wherein the controller detects a signal that is based on the second communication scheme in initial access.

**6.** The terminal according to claim 5, wherein the controller detects the signal that is based on the second communication scheme in each of a plurality of channels in the second communication scheme.

**7.** The terminal according to claim 1, wherein the controller switches radio communication from a first transmission/reception point to a second transmission/reception point among the plurality of transmission/reception points on the basis of detection of a signal that is based on the second communication scheme.

**8.** The terminal according to claim 1, wherein,

the first communication scheme is a communication scheme related to radio communication in the plurality of transmission/reception points, and
the second communication scheme is a communication scheme not related to radio communication in the plurality of transmission/reception points.

**9.** A radio system in which a first transmission/reception point and a second transmission/reception point are associated to perform radio communication with a terminal, wherein,
the first transmission/reception point and the second transmission/reception point each comprise:

a communicator that performs radio communication with the terminal based on a first communication scheme; and
a controller that determines radio communication with the terminal based on detection of a signal of radio communication in accordance with a second communication scheme.

**10.** A communication method, comprising:

performing, by a terminal, radio communication with a plurality of transmission/reception points based on a first communication scheme; and
determining, by the terminal, a transmission/reception point to perform radio communication with among the plurality of transmission/reception points based on detection of a signal of radio communication in accordance with a second communication scheme.

**11.** A communication method of a radio system in which a first transmission/reception point and a second transmission/reception point are associated to perform radio communication with a terminal, the method comprising:

performing, by each of the first transmission/reception point and the second transmission/reception point, radio communication with the terminal based on a first communication scheme; and
determining, by each of the first transmission/reception point and the second transmission/reception point, radio communication with the terminal based on detection of a signal of radio communication in accordance with a second communication scheme.

101_1
FIRST TRANSMITTER
102_1
101_N
102_N
N-TH TRANSMITTER
199
103_1
103_N
FIRST PROCESSOR
104
105_1
105_M
TRANSMISSION PANEL ANTENNA 1
106_1
106_M
TRANSMISSION PANEL ANTENNA M
155_1
153
151_1
156_1
FIRST RECEIVER
154_1
152_1
RECEPTION PANEL ANTENNA 1
100
THIRD PROCESSOR
154_n
SECOND PROCESSOR
157_1
155_n
151_m
156_n
n-TH RECEIVER
152_m
RECEPTION PANEL ANTENNA m
157_n
158

FIG. 1A

199
101_1
FIRST TRANSMITTER
103_1
FIRST PROCESSOR
105_1
TRANSMISSION PANEL ANTENNA 1
102_1
106_1
106_M
102_M
101_N
M-TH TRANSMITTER
103_M
105_M
TRANSMISSION PANEL ANTENNA M
155_1
104
153
151_1
156_1
FIRST RECEIVER
154_1
152_1
RECEPTION PANEL ANTENNA 1
100
154_m
THIRD PROCESSOR
SECOND PROCESSOR
157_1
155_m
151_m
156_m
m-TH RECEIVER
152_m
RECEPTION PANEL ANTENNA m
157_m
158

FIG. 1B

TRANSMISSION PANEL ANTENNA 1
TRANSMISSION PANEL ANTENNA M
RECEPTION PANEL ANTENNA 1
RECEPTION PANEL ANTENNA m
106_1
106_M
151_1
151_m
152_1
152_m
103_1
103_M
FIRST TRANSMITTER
M-TH TRANSMITTER
102_1
102_M
FIRST RECEIVER
m-TH RECEIVER
155_1
155_m
157_1
157_m
156_1
156_m
THIRD PROCESSOR
158
101_1
101_N
100

FIG. 1C

DATA SYMBOL GENERATOR
SECTOR SWEEP REFERENCE SIGNAL GENERATOR
OTHER-SIGNAL GENERATOR
PROCESSOR
200
201
202
203
204
205
206
207
251
252


FIG. 2

306_1
306_2
306_3
306_4
305_1
305_2
305_3
305_4
304_1
304_2
304_3
304_4
MULTIPLIER
MULTIPLIER
MULTIPLIER
MULTIPLIER
303_1
303_2
303_3
303_4
302
DISTRIBUTOR
301
300

FIG. 3

401_1
401_2
401_3
401_4
402_1
402_2
402_3
402_4
403_1
403_2
403_3
403_4
MULTIPLIER
MULTIPLIER
MULTIPLIER
MULTIPLIER
404_1
404_2
404_3
404_4
405
COUPLER/
COMBINER
406
400

FIG. 4

501
502
503
Constellation mapper
SERIAL/PARALLEL CONVERTER
IFFT

FIG. 5

601
Rx FE processing
602
FFT
603
PARALLEL/SERIAL CONVERTER
604
Demapper

FIG. 6

701
Rx FE processing
702
CP Removal
703
FFT
704
Tone demapping
705
FDE
706
DFT
707
Demapper

FIG. 7

801
Rx FE processing
802
Down-sampling and match filtering
803
TDE
804
CP removal
805
Demapper

FIG. 8

902_3
TERMINAL #3
902_2
TERMINAL #2
902_1
TERMINAL #1
902_4
TERMINAL #4
902_5
TERMINAL #5
901_1
BASE STATION #1
902_6
TERMINAL #6

FIG. 9

EXEMPLARY MODULATION SIGNAL
1000 TRANSMITTED BY BASE STATION:
FREQUENCY
TIME
1001
SECTOR SWEEP REFERENCE SIGNAL
1002
FEEDBACK SIGNAL
1003
DATA-SYMBOL-INCLUDED FRAME
t0
t1
t2
t3
t4
t5
TERMINAL RESPONSE PERIOD

FIG. 10

FREQUENCY
TIME
FREQUENCY BAND ♭K
FREQUENCY BAND ♭2
FREQUENCY BAND ♭1
1101_K1
1101_21
1101_11
1101_K2
1101_22
1101_12
1101_KM
1101_2M
1101_1M
SECTOR SWEEP REFERENCE SIGNAL IN TRANSMISSION PANEL ANTENNA 1 FOR FREQUENCY ♭K
SECTOR SWEEP REFERENCE SIGNAL IN TRANSMISSION PANEL ANTENNA 1 FOR FREQUENCY ♭2
SECTOR SWEEP REFERENCE SIGNAL IN TRANSMISSION PANEL ANTENNA 1 FOR FREQUENCY ♭1
SECTOR SWEEP REFERENCE SIGNAL IN TRANSMISSION PANEL ANTENNA 2 FOR FREQUENCY ♭K
SECTOR SWEEP REFERENCE SIGNAL IN TRANSMISSION PANEL ANTENNA 2 FOR FREQUENCY ♭2
SECTOR SWEEP REFERENCE SIGNAL IN TRANSMISSION PANEL ANTENNA 2 FOR FREQUENCY ♭1
SECTOR SWEEP REFERENCE SIGNAL IN TRANSMISSION PANEL ANTENNA M FOR FREQUENCY ♭K
SECTOR SWEEP REFERENCE SIGNAL IN TRANSMISSION PANEL ANTENNA M FOR FREQUENCY ♭2
SECTOR SWEEP REFERENCE SIGNAL IN TRANSMISSION PANEL ANTENNA M FOR FREQUENCY ♭1
FIRST TIME PERIOD
SECOND TIME PERIOD
M-TH TIME PERIOD

FIG. 11

1101_pi
SECTOR SWEEP REFERENCE SIGNAL IN TRANSMISSION PANEL ANTENNA i FOR FREQUENCY ♭p
1201_1
REFERENCE SIGNAL ACCORDING TO FIRST PARAMETER IN TRANSMISSION PANEL ANTENNA i FOR FREQUENCY ♭p
1201_2
REFERENCE SIGNAL ACCORDING TO SECOND PARAMETER IN TRANSMISSION PANEL ANTENNA i FOR FREQUENCY ♭p
1201_3
REFERENCE SIGNAL ACCORDING TO THIRD PARAMETER IN TRANSMISSION PANEL ANTENNA i FOR FREQUENCY ♭p
1201_4
REFERENCE SIGNAL ACCORDING TO FOURTH PARAMETER IN TRANSMISSION PANEL ANTENNA i FOR FREQUENCY ♭p
TIME

FIG. 12

TIME
t0
t1
t2
1001
SECTOR SWEEP REFERENCE SIGNAL
1301_1
TERMINAL "SECTOR SWEEP REFERENCE SIGNAL" FIRST TRANSMISSION PERIOD
1301_2
TERMINAL "SECTOR SWEEP REFERENCE SIGNAL" SECOND TRANSMISSION PERIOD
1301_3
TERMINAL "SECTOR SWEEP REFERENCE SIGNAL" THIRD TRANSMISSION PERIOD
1301_4
TERMINAL "SECTOR SWEEP REFERENCE SIGNAL" FOURTH TRANSMISSION PERIOD

FIG. 13

FREQUENCY
TIME
t1
t2
1301_1
TERMINAL "SECTOR SWEEP REFERENCE SIGNAL" FIRST TRANSMISSION PERIOD
1301_2
TERMINAL "SECTOR SWEEP REFERENCE SIGNAL" SECOND TRANSMISSION PERIOD
1301_3
TERMINAL "SECTOR SWEEP REFERENCE SIGNAL" THIRD TRANSMISSION PERIOD
1301_4
TERMINAL "SECTOR SWEEP REFERENCE SIGNAL" FOURTH TRANSMISSION PERIOD
FREQUENCY BAND ♭K
TERMINAL #1 "SECTOR SWEEP REFERENCE SIGNAL"
1401_1
TERMINAL #6 "SECTOR SWEEP REFERENCE SIGNAL"
1401_6
FREQUENCY BAND ♭2
TERMINAL #4 "SECTOR SWEEP REFERENCE SIGNAL"
1401_4
TERMINAL #3 "SECTOR SWEEP REFERENCE SIGNAL"
1401_3
TERMINAL #5 "SECTOR SWEEP REFERENCE SIGNAL"
1401_5
FREQUENCY BAND ♭1
TERMINAL #2 "SECTOR SWEEP REFERENCE SIGNAL"
1401_2


FIG. 14

1401_i
TERMINAL #i "SECTOR SWEEP REFERENCE SIGNAL"
1501_1
SECTOR SWEEP REFERENCE SIGNAL IN TERMINAL #i TRANSMISSION PANEL ANTENNA 1
1501_2
SECTOR SWEEP REFERENCE SIGNAL IN TERMINAL #i TRANSMISSION PANEL ANTENNA 2
1501_M
SECTOR SWEEP REFERENCE SIGNAL IN TERMINAL #i TRANSMISSION PANEL ANTENNA M
TIME

FIG. 15A

1501_xi
SECTOR SWEEP REFERENCE SIGNAL IN TERMINAL #i TRANSMISSION PANEL ANTENNA xi

1511_1
REFERENCE SIGNAL ACCORDING TO FIRST PARAMETER IN TRANSMISSION PANEL ANTENNA xi

1511_2
REFERENCE SIGNAL ACCORDING TO SECOND PARAMETER IN TRANSMISSION PANEL ANTENNA xi

1511_3
REFERENCE SIGNAL ACCORDING TO THIRD PARAMETER IN TRANSMISSION PANEL ANTENNA xi

1511_4
REFERENCE SIGNAL ACCORDING TO FOURTH PARAMETER IN TRANSMISSION PANEL ANTENNA xi

TIME

FIG. 15B

FEEDBACK SIGNAL
1002
FREQUENCY
FREQUENCY BAND ♭K
FREQUENCY BAND ♭2
FREQUENCY BAND ♭1
1601_K1
FEEDBACK SIGNAL FIRST TRANSMISSION PERIOD FOR FREQUENCY ♭K
1601_K2
FEEDBACK SIGNAL SECOND TRANSMISSION PERIOD FOR FREQUENCY ♭K
1601_K3
FEEDBACK SIGNAL THIRD TRANSMISSION PERIOD FOR FREQUENCY ♭K
1601_K4
FEEDBACK SIGNAL FOURTH TRANSMISSION PERIOD FOR FREQUENCY ♭K
1601_21
FEEDBACK SIGNAL FIRST TRANSMISSION PERIOD FOR FREQUENCY ♭2
1601_22
FEEDBACK SIGNAL SECOND TRANSMISSION PERIOD FOR FREQUENCY ♭2
1601_23
FEEDBACK SIGNAL THIRD TRANSMISSION PERIOD FOR FREQUENCY ♭2
1601_24
FEEDBACK SIGNAL FOURTH TRANSMISSION PERIOD FOR FREQUENCY ♭2
FEEDBACK SIGNAL FIRST TRANSMISSION PERIOD FOR FREQUENCY ♭1
FEEDBACK SIGNAL SECOND TRANSMISSION PERIOD FOR FREQUENCY ♭1
FEEDBACK SIGNAL THIRD TRANSMISSION PERIOD FOR FREQUENCY ♭1
FEEDBACK SIGNAL FOURTH TRANSMISSION PERIOD FOR FREQUENCY ♭1
1601_11
1601_12
1601_13
1601_14
t2
FIRST TRANSMISSION PERIOD
SECOND TRANSMISSION PERIOD
THIRD TRANSMISSION PERIOD
FOURTH TRANSMISSION PERIOD
t3
TIME

FIG. 16A

FEEDBACK SIGNAL
1002
FREQUENCY
1611_1
FREQUENCY BAND ♭K
TERMINAL #1-ADDRESSED FEEDBACK SIGNAL
TERMINAL #6-ADDRESSED FEEDBACK SIGNAL
1611_6
1611_3
FREQUENCY BAND ♭2
TERMINAL #4-ADDRESSED FEEDBACK SIGNAL
1611_2
TERMINAL #3-ADDRESSED FEEDBACK SIGNAL
TERMINAL #5-ADDRESSED FEEDBACK SIGNAL
1611_4
1611_5
FREQUENCY BAND ♭1
TERMINAL #2-ADDRESSED FEEDBACK SIGNAL
TIME
t2
FIRST TRANSMISSION PERIOD
SECOND TRANSMISSION PERIOD
THIRD TRANSMISSION PERIOD
FOURTH TRANSMISSION PERIOD
t3

FIG. 16B

DATA-SYMBOL-INCLUDED FRAME
1003
FREQUENCY
FREQUENCY BAND ♭K
FREQUENCY BAND ♭2
FREQUENCY BAND ♭1
1701_K1
MODULATION SIGNAL (SLOT) FIRST TRANSMISSION PERIOD FOR FREQUENCY ♭K
1701_K2
MODULATION SIGNAL (SLOT) SECOND TRANSMISSION PERIOD FOR FREQUENCY ♭K
1701_K3
MODULATION SIGNAL (SLOT) THIRD TRANSMISSION PERIOD FOR FREQUENCY ♭K
1701_K4
MODULATION SIGNAL (SLOT) FOURTH TRANSMISSION PERIOD FOR FREQUENCY ♭K
1701_21
MODULATION SIGNAL (SLOT) FIRST TRANSMISSION PERIOD FOR FREQUENCY ♭2
1701_22
MODULATION SIGNAL (SLOT) SECOND TRANSMISSION PERIOD FOR FREQUENCY ♭2
1701_23
MODULATION SIGNAL (SLOT) THIRD TRANSMISSION PERIOD FOR FREQUENCY ♭2
1701_24
MODULATION SIGNAL (SLOT) FOURTH TRANSMISSION PERIOD FOR FREQUENCY ♭2
MODULATION SIGNAL (SLOT) FIRST TRANSMISSION PERIOD FOR FREQUENCY ♭1
1701_11
MODULATION SIGNAL (SLOT) SECOND TRANSMISSION PERIOD FOR FREQUENCY ♭1
1701_12
MODULATION SIGNAL (SLOT) THIRD TRANSMISSION PERIOD FOR FREQUENCY ♭1
1701_13
MODULATION SIGNAL (SLOT) FOURTH TRANSMISSION PERIOD FOR FREQUENCY ♭1
1701_14
TIME
t4
t5
FIRST TRANSMISSION PERIOD
SECOND TRANSMISSION PERIOD
THIRD TRANSMISSION PERIOD
FOURTH TRANSMISSION PERIOD

FIG. 17A

DATA-SYMBOL-INCLUDED FRAME
1003
FREQUENCY
1711
TERMINAL #1-ADDRESSED MODULATION SIGNAL (SLOT)
1716
TERMINAL #6-ADDRESSED MODULATION SIGNAL (SLOT)
FREQUENCY BAND ♭K
1714
TERMINAL #4-ADDRESSED MODULATION SIGNAL (SLOT)
1713
TERMINAL #3-ADDRESSED MODULATION SIGNAL (SLOT)
1715
TERMINAL #5-ADDRESSED MODULATION SIGNAL (SLOT)
FREQUENCY BAND ♭2
1712
TERMINAL #2-ADDRESSED MODULATION SIGNAL (SLOT)
FREQUENCY BAND ♭1
TIME
t4
FIRST TRANSMISSION PERIOD
SECOND TRANSMISSION PERIOD
THIRD TRANSMISSION PERIOD
FOURTH TRANSMISSION PERIOD
t5

FIG. 17B

(A) MODULATION SIGNAL TRANSMISSION STATE OF BASE STATION:
(B) MODULATION SIGNAL TRANSMISSION STATE OF TERMINAL:
TIME
TIME
1801_1
SECTOR SWEEP REFERENCE SIGNAL
1851_1
SECTOR SWEEP REFERENCE SIGNAL
1802_1
FEEDBACK SIGNAL
1803_1
DATA-SYMBOL-INCLUDED FRAME
1852_1
DATA-SYMBOL-INCLUDED FRAME
1803_2
DATA-SYMBOL-INCLUDED FRAME
1852_2
DATA-SYMBOL-INCLUDED FRAME

FIG. 18

(A) MODULATION SIGNAL TRANSMISSION STATE OF BASE STATION:
...
1803_3
DATA-SYMBOL-INCLUDED FRAME
1801_2
SECTOR SWEEP REFER-ENCE SIGNAL
1802_2
FEED-BACK SIGNAL
1803_4
DATA-SYMBOL-INCLUDED FRAME
...
TIME
(B) MODULATION SIGNAL TRANSMISSION STATE OF TERMINAL:
...
1852_3
DATA-SYMBOL-INCLUDED FRAME
1851_2
SECTOR SWEEP REFER-ENCE SIGNAL
1852_4
DATA-SYMBOL-INCLUDED FRAME
...
TIME

FIG. 19

DATA-SYMBOL-INCLUDED FRAME
1852_i
FREQUENCY
2001_1
TERMINAL #1 TRANSMISSION FRAME
FREQUENCY BAND ♭K
FREQUENCY BAND ♭2
FREQUENCY BAND ♭1
TIME
FIRST TRANSMISSION PERIOD
SECOND TRANSMISSION PERIOD
THIRD TRANSMISSION PERIOD
FOURTH TRANSMISSION PERIOD

FIG. 20A

DATA-SYMBOL-INCLUDED FRAME
1852_i
FREQUENCY
FREQUENCY BAND ♭K
FREQUENCY BAND ♭2
FREQUENCY BAND ♭1
2001_2
TERMINAL #2 TRANSMISSION FRAME
TIME
FIRST TRANSMISSION PERIOD
SECOND TRANSMISSION PERIOD
THIRD TRANSMISSION PERIOD
FOURTH TRANSMISSION PERIOD

FIG. 20B

DATA-SYMBOL-INCLUDED FRAME
1852_i
FREQUENCY
FREQUENCY BAND ♭K
FREQUENCY BAND ♭2
FREQUENCY BAND ♭1
2001_3
TERMINAL #3 TRANSMISSION FRAME
TIME
FIRST TRANSMISSION PERIOD
SECOND TRANSMISSION PERIOD
THIRD TRANSMISSION PERIOD
FOURTH TRANSMISSION PERIOD

FIG. 20C

DATA-SYMBOL-INCLUDED FRAME
1852_i
FREQUENCY
FREQUENCY BAND ♭K
FREQUENCY BAND ♭2
FREQUENCY BAND ♭1
2001_4
TERMINAL #4 TRANSMISSION FRAME
TIME
FIRST TRANSMISSION PERIOD
SECOND TRANSMISSION PERIOD
THIRD TRANSMISSION PERIOD
FOURTH TRANSMISSION PERIOD

FIG. 20D

DATA-SYMBOL-INCLUDED FRAME
1852_i
FREQUENCY
FREQUENCY BAND ♭K
FREQUENCY BAND ♭2
FREQUENCY BAND ♭1
2001_5
TERMINAL #5 TRANSMISSION FRAME
TIME
FIRST TRANSMISSION PERIOD
SECOND TRANSMISSION PERIOD
THIRD TRANSMISSION PERIOD
FOURTH TRANSMISSION PERIOD

FIG. 20E

DATA-SYMBOL-INCLUDED FRAME
1852_i
FREQUENCY
2001_6
TERMINAL #6 TRANSMISSION FRAME
FREQUENCY BAND ♭K
FREQUENCY BAND ♭2
FREQUENCY BAND ♭1
TIME
FIRST TRANSMISSION PERIOD
SECOND TRANSMISSION PERIOD
THIRD TRANSMISSION PERIOD
FOURTH TRANSMISSION PERIOD

FIG. 20F

TIME
t0
t1
t2
1001
SECTOR SWEEP REFERENCE SIGNAL
x2701_1
TERMINAL "SECTOR SWEEP REFERENCE SIGNAL"

FIG. 21

FREQUENCY
TERMINAL “SECTOR SWEEP REFERENCE SIGNAL”
x2701_1
FREQUENCY BAND ♭K
“SECTOR SWEEP REFERENCE SIGNAL” FOR FREQUENCY ♭K
x2801_K
FREQUENCY BAND ♭7
“SECTOR SWEEP REFERENCE SIGNAL” FOR FREQUENCY ♭7
x2801_7
FREQUENCY BAND ♭6
“SECTOR SWEEP REFERENCE SIGNAL” FOR FREQUENCY ♭6
x2801_6
FREQUENCY BAND ♭5
“SECTOR SWEEP REFERENCE SIGNAL” FOR FREQUENCY ♭5
x2801_5
FREQUENCY BAND ♭4
“SECTOR SWEEP REFERENCE SIGNAL” FOR FREQUENCY ♭4
x2801_4
FREQUENCY BAND ♭3
“SECTOR SWEEP REFERENCE SIGNAL” FOR FREQUENCY ♭3
x2801_3
FREQUENCY BAND ♭2
“SECTOR SWEEP REFERENCE SIGNAL” FOR FREQUENCY ♭2
x2801_2
FREQUENCY BAND ♭1
“SECTOR SWEEP REFERENCE SIGNAL” FOR FREQUENCY ♭1
x2801_1
t1
t2
TIME

FIG. 22A

FREQUENCY
TIME
t1
t2
x2701_1
x2811_1
x2811_6
x2811_4
x2811_5
x2811_3
x2811_2
TERMINAL “SECTOR SWEEP REFERENCE SIGNAL”
TERMINAL #1 “SECTOR SWEEP REFERENCE SIGNAL”
TERMINAL #6 “SECTOR SWEEP REFERENCE SIGNAL”
TERMINAL #4 “SECTOR SWEEP REFERENCE SIGNAL”
TERMINAL #5 “SECTOR SWEEP REFERENCE SIGNAL”
TERMINAL #3 “SECTOR SWEEP REFERENCE SIGNAL”
TERMINAL #2 “SECTOR SWEEP REFERENCE SIGNAL”
FREQUENCY BAND ♭K
FREQUENCY BAND ♭7
FREQUENCY BAND ♭6
FREQUENCY BAND ♭5
FREQUENCY BAND ♭4
FREQUENCY BAND ♭3
FREQUENCY BAND ♭2
FREQUENCY BAND ♭1


FIG. 22B

TIME
FREQUENCY
t2
t3
1002
FEEDBACK SIGNAL
x2901_K
x2901_7
x2901_6
x2901_5
x2901_4
x2901_3
x2901_2
x2901_1
FEEDBACK SIGNAL FOR FREQUENCY ♭K
FEEDBACK SIGNAL FOR FREQUENCY ♭7
FEEDBACK SIGNAL FOR FREQUENCY ♭6
FEEDBACK SIGNAL FOR FREQUENCY ♭5
FEEDBACK SIGNAL FOR FREQUENCY ♭4
FEEDBACK SIGNAL FOR FREQUENCY ♭3
FEEDBACK SIGNAL FOR FREQUENCY ♭2
FEEDBACK SIGNAL FOR FREQUENCY ♭1
FREQUENCY BAND ♭K
FREQUENCY BAND ♭7
FREQUENCY BAND ♭6
FREQUENCY BAND ♭5
FREQUENCY BAND ♭4
FREQUENCY BAND ♭3
FREQUENCY BAND ♭2
FREQUENCY BAND ♭1


FIG. 23A

FREQUENCY
TIME
t2
t3
1002
FEEDBACK SIGNAL
x2911_1
TERMINAL #1-ADDRESSED FEEDBACK SIGNAL
x2911_6
TERMINAL #6-ADDRESSED FEEDBACK SIGNAL
x2911_4
TERMINAL #4-ADDRESSED FEEDBACK SIGNAL
x2911_5
TERMINAL #5-ADDRESSED FEEDBACK SIGNAL
x2911_3
TERMINAL #3-ADDRESSED FEEDBACK SIGNAL
x2911_2
TERMINAL #2-ADDRESSED FEEDBACK SIGNAL
FREQUENCY BAND ♭K
FREQUENCY BAND ♭7
FREQUENCY BAND ♭6
FREQUENCY BAND ♭5
FREQUENCY BAND ♭4
FREQUENCY BAND ♭3
FREQUENCY BAND ♭2
FREQUENCY BAND ♭1

FIG. 23B

1003
DATA-SYMBOL-INCLUDED FRAME
x3001_K
MODULATION SIGNAL (SLOT) FOR FREQUENCY ♭K
x3001_7
MODULATION SIGNAL (SLOT) FOR FREQUENCY ♭7
x3001_6
MODULATION SIGNAL (SLOT) FOR FREQUENCY ♭6
x3001_5
MODULATION SIGNAL (SLOT) FOR FREQUENCY ♭5
x3001_4
MODULATION SIGNAL (SLOT) FOR FREQUENCY ♭4
x3001_3
MODULATION SIGNAL (SLOT) FOR FREQUENCY ♭3
x3001_2
MODULATION SIGNAL (SLOT) FOR FREQUENCY ♭2
x3001_1
MODULATION SIGNAL (SLOT) FOR FREQUENCY ♭1
FREQUENCY
FREQUENCY BAND ♭K
FREQUENCY BAND ♭7
FREQUENCY BAND ♭6
FREQUENCY BAND ♭5
FREQUENCY BAND ♭4
FREQUENCY BAND ♭3
FREQUENCY BAND ♭2
FREQUENCY BAND ♭1
t4
t5
TIME


FIG. 24A

FREQUENCY
TIME
t4
t5
1003
DATA-SYMBOL-INCLUDED FRAME
x3011_1
x3011_6
x3011_4
x3011_5
x3011_3
x3011_2
TERMINAL #1-ADDRESSED MODULATION SIGNAL (SLOT)
TERMINAL #6-ADDRESSED MODULATION SIGNAL (SLOT)
TERMINAL #4-ADDRESSED MODULATION SIGNAL (SLOT)
TERMINAL #5-ADDRESSED MODULATION SIGNAL (SLOT)
TERMINAL #3-ADDRESSED MODULATION SIGNAL (SLOT)
TERMINAL #2-ADDRESSED MODULATION SIGNAL (SLOT)
FREQUENCY BAND ♭K
FREQUENCY BAND ♭7
FREQUENCY BAND ♭6
FREQUENCY BAND ♭5
FREQUENCY BAND ♭4
FREQUENCY BAND ♭3
FREQUENCY BAND ♭2
FREQUENCY BAND ♭1

FIG. 24B

1852_i
x3111_1
DATA-SYMBOL-INCLUDED FRAME
TERMINAL #1 TRANSMISSION FRAME
FREQUENCY
TIME
FREQUENCY BAND ♭K
FREQUENCY BAND ♭7
FREQUENCY BAND ♭6
FREQUENCY BAND ♭5
FREQUENCY BAND ♭4
FREQUENCY BAND ♭3
FREQUENCY BAND ♭2
FREQUENCY BAND ♭1


FIG. 25A

FREQUENCY
TIME
1852_i
x3111_2
DATA-SYMBOL-INCLUDED FRAME
TERMINAL #2 TRANSMISSION FRAME
FREQUENCY BAND ♭K
FREQUENCY BAND ♭7
FREQUENCY BAND ♭6
FREQUENCY BAND ♭5
FREQUENCY BAND ♭4
FREQUENCY BAND ♭3
FREQUENCY BAND ♭2
FREQUENCY BAND ♭1


FIG. 25B

FREQUENCY
TIME
1852_i
x3111_3
DATA-SYMBOL-INCLUDED FRAME
TERMINAL #3 TRANSMISSION FRAME
FREQUENCY BAND ♭K
FREQUENCY BAND ♭7
FREQUENCY BAND ♭6
FREQUENCY BAND ♭5
FREQUENCY BAND ♭4
FREQUENCY BAND ♭3
FREQUENCY BAND ♭2
FREQUENCY BAND ♭1


FIG. 25C

1852_i
x3111_4
DATA-SYMBOL-INCLUDED FRAME
TERMINAL #4 TRANSMISSION FRAME
TIME
FREQUENCY
FREQUENCY BAND b K
FREQUENCY BAND b 7
FREQUENCY BAND b 6
FREQUENCY BAND b 5
FREQUENCY BAND b 4
FREQUENCY BAND b 3
FREQUENCY BAND b 2
FREQUENCY BAND b 1

FIG. 25D

FREQUENCY
TIME
1852_i
DATA-SYMBOL-INCLUDED FRAME
x3111_5
TERMINAL #5 TRANSMISSION FRAME
FREQUENCY BAND ♭K
FREQUENCY BAND ♭7
FREQUENCY BAND ♭6
FREQUENCY BAND ♭5
FREQUENCY BAND ♭4
FREQUENCY BAND ♭3
FREQUENCY BAND ♭2
FREQUENCY BAND ♭1


FIG. 25E

TIME
1852_i
x3111_6
DATA-SYMBOL-INCLUDED FRAME
TERMINAL #6 TRANSMISSION FRAME
FREQUENCY
FREQUENCY BAND ♭K
FREQUENCY BAND ♭7
FREQUENCY BAND ♭6
FREQUENCY BAND ♭5
FREQUENCY BAND ♭4
FREQUENCY BAND ♭3
FREQUENCY BAND ♭2
FREQUENCY BAND ♭1

FIG. 25F

902_1
TERMINAL #1
902_2
TERMINAL #2
902_3
TERMINAL #3
901_1
BASE STATION #1

FIG. 26

TIME
x3401_1
SECTOR SWEEP REFERENCE SIGNAL IN TRANSMISSION PANEL ANTENNA 1
x3401_2
SECTOR SWEEP REFERENCE SIGNAL IN TRANSMISSION PANEL ANTENNA 2
x3401_M
SECTOR SWEEP REFERENCE SIGNAL IN TRANSMISSION PANEL ANTENNA M


FIG. 27

x3401_i
SECTOR SWEEP REFERENCE SIGNAL IN TRANSMISSION PANEL ANTENNA i
x3501_1
REFERENCE SIGNAL ACCORDING TO FIRST PARAMETER IN TRANSMISSION PANEL ANTENNA i
x3501_2
REFERENCE SIGNAL ACCORDING TO SECOND PARAMETER IN TRANSMISSION PANEL ANTENNA i
x3501_3
REFERENCE SIGNAL ACCORDING TO THIRD PARAMETER IN TRANSMISSION PANEL ANTENNA i
x3501_4
REFERENCE SIGNAL ACCORDING TO FOURTH PARAMETER IN TRANSMISSION PANEL ANTENNA i
TIME

FIG. 28

1301_1
TERMINAL "SECTOR SWEEP REFERENCE SIGNAL" FIRST TRANSMISSION PERIOD
1301_2
TERMINAL "SECTOR SWEEP REFERENCE SIGNAL" SECOND TRANSMISSION PERIOD
1301_3
TERMINAL "SECTOR SWEEP REFERENCE SIGNAL" THIRD TRANSMISSION PERIOD
1301_4
TERMINAL "SECTOR SWEEP REFERENCE SIGNAL" FOURTH TRANSMISSION PERIOD
TERMINAL #1
SECTOR SWEEP REFERENCE SIGNAL
x3601_1
x3601_2
TERMINAL #2
SECTOR SWEEP REFERENCE SIGNAL
TIME
t1
t2

FIG. 29

x3401_xi
SECTOR SWEEP REFERENCE SIGNAL IN TRANSMISSION PANEL ANTENNA xi
x3701_1
REFERENCE SIGNAL ACCORDING TO FIRST PARAMETER IN TRANSMISSION PANEL ANTENNA xi
x3701_2
REFERENCE SIGNAL ACCORDING TO SECOND PARAMETER IN TRANSMISSION PANEL ANTENNA xi
x3701_3
REFERENCE SIGNAL ACCORDING TO THIRD PARAMETER IN TRANSMISSION PANEL ANTENNA xi
x3701_4
REFERENCE SIGNAL ACCORDING TO FOURTH PARAMETER IN TRANSMISSION PANEL ANTENNA xi
TIME

FIG. 30

TIME
t3
t2
1002
FEEDBACK SIGNAL
x3801_1
FIRST TERMINAL-ADDRESSED FEEDBACK SIGNAL
x3801_2
SECOND TERMINAL-ADDRESSED FEEDBACK SIGNAL
x3801_3
THIRD TERMINAL-ADDRESSED FEEDBACK SIGNAL
x3801_4
FOURTH TERMINAL-ADDRESSED FEEDBACK SIGNAL

FIG. 31

TIME
t5
t4
1003
DATA-SYMBOL-INCLUDED FRAME
x3901_1
FIRST TERMINAL-ADDRESSED MODULATION SIGNAL (SLOT)
x3901_2
SECOND TERMINAL-ADDRESSED MODULATION SIGNAL (SLOT)
x3901_3
THIRD TERMINAL-ADDRESSED MODULATION SIGNAL (SLOT)
x3901_4
FOURTH TERMINAL-ADDRESSED MODULATION SIGNAL (SLOT)

FIG. 32

1852_i
DATA-SYMBOL-INCLUDED FRAME
TERMINAL #1
FRAME
x4001_1
x4001_2
TERMINAL #2
FRAME
TIME
FIRST TIME PERIOD
SECOND TIME PERIOD
THIRD TIME PERIOD
FOURTH TIME PERIOD

FIG. 33

TIME
FREQUENCY
SECTOR SWEEP REFERENCE SIGNAL IN FREQUENCY ♭K
SECTOR SWEEP REFERENCE SIGNAL IN FREQUENCY ♭2
SECTOR SWEEP REFERENCE SIGNAL IN FREQUENCY ♭1
x4301_K
x4301_2
x4301_1
FREQUENCY BAND ♭K
FREQUENCY BAND ♭2
FREQUENCY BAND ♭1
...

FIG. 34

x4301_p
SECTOR SWEEP REFERENCE SIGNAL IN FREQUENCY ♭p
x4401_1
REFERENCE SIGNAL ACCORDING TO FIRST PARAMETER FOR FREQUENCY ♭p
x4401_2
REFERENCE SIGNAL ACCORDING TO SECOND PARAMETER FOR FREQUENCY ♭p
x4401_H
REFERENCE SIGNAL ACCORDING TO H-th PARAMETER FOR FREQUENCY ♭p
TIME

FIG. 35

1401_i
TERMINAL #i
"SECTOR SWEEP REFERENCE SIGNAL"
x4511_1
REFERENCE SIGNAL ACCORDING TO FIRST PARAMETER
x4511_2
REFERENCE SIGNAL ACCORDING TO SECOND PARAMETER
x4511_G
REFERENCE SIGNAL ACCORDING TO G-th PARAMETER
TIME

FIG. 36

x3601_i
SECTOR SWEEP REFERENCE SIGNAL
x4611_1
REFERENCE SIGNAL ACCORDING TO FIRST PARAMETER
x4611_2
REFERENCE SIGNAL ACCORDING TO SECOND PARAMETER
x4611_F
REFERENCE SIGNAL ACCORDING TO F-th PARAMETER
TIME

FIG. 37

gNB
for NR
AP
for IEEE
802.11ad/ay
UE
for NR
UE
for IEEE
802.11ad/ay

FIG. 38

TRP
#1
3902_1
TRP
#2
3902_2
NR−UE
3901

FIG. 39A

TRP
#1
3902_1
TRP
#2
3902_2
NR−UE
3901

FIG. 39B

TRP
#1
3902_1
TRP
#2
3902_2
NR-UE
3901

FIG. 39C

4001_1
(A)
NR-UE
TRANSMISSION
TRP #1-ADDRESSED
MODULATION SIGNAL
TIME
FIRST TIME
4001_2
(B)
NR-UE
TRANSMISSION
TRP #2-ADDRESSED
MODULATION SIGNAL
TIME
FIRST TIME

FIG. 40

4001_1
(A) NR-UE TRANSMISSION
TRP #1-ADDRESSED MODULATION SIGNAL
TIME
FIRST TIME
4001_2
(B) NR-UE TRANSMISSION
TRP #2-ADDRESSED MODULATION SIGNAL
TIME
FIRST TIME

FIG. 41

(A)
NR-UE TRANSMISSION
4001_1
TRP #1-ADDRESSED MODULATION SIGNAL
TIME
FIRST TIME
SECOND TIME
(B)
NR-UE TRANSMISSION
4001_2
TRP #2-ADDRESSED MODULATION SIGNAL
TIME
FIRST TIME
SECOND TIME


FIG. 42

(A) TRP #1 TRANSMISSION
4301_1
NR-UE-ADDRESSED MODULATION SIGNAL
TIME
FIRST TIME
(B) TRP #2 TRANSMISSION
4301_2
NR-UE-ADDRESSED MODULATION SIGNAL
TIME
FIRST TIME

FIG. 43

(A) TRP #1 TRANSMISSION
4301_1
NR-UE-ADDRESSED MODULATION SIGNAL
TIME
FIRST TIME
(B) TRP #2 TRANSMISSION
4301_2
NR-UE-ADDRESSED MODULATION SIGNAL
TIME
FIRST TIME

FIG. 44

(A)
TRP #1 TRANSMISSION
4301_1
NR-UE-ADDRESSED MODULATION SIGNAL
FIRST TIME
SECOND TIME
TIME
(B)
TRP #2 TRANSMISSION
4301_2
NR-UE-ADDRESSED MODULATION SIGNAL
FIRST TIME
SECOND TIME
TIME

FIG. 45

x705_1
TRANSMISSION/
RECEPTION PANEL
ANTENNA 1
x705_M
TRANSMISSION/
RECEPTION PANEL
ANTENNA M
x702_1
x702_M
TRANSMISSION/
RECEPTION APPARATUS
x703
x700
x701
x704

FIG. 46

x805_1
TRANSMISSION/
RECEPTION
ANTENNA 1
x805_m
TRANSMISSION/
RECEPTION
ANTENNA m
x802_1
x802_m
TRANSMISSION/
RECEPTION APPARATUS
x703
x700
x701
x704

FIG. 47

START
xS5501
Signal detected in omni-directional detection?
YES
xS5502
Stand by
NO
xS5503
Start communication

FIG. 48

START
xS5701
Signal detected in directional detection?
NO
YES
xS5702
Stand by
xS5703
Start communication

FIG. 49

START
xS5801
Signal detected in directional detection?
NO
YES
xS5804
Start communication
xS5802
Determine beamforming parameter to be used
xS5803
Start communication or stand by

FIG. 50

TRP
#1
3902_1
TRP
#2
3902_2
NR−UE
3901

FIG. 51A

TRP
#1
3902_1
TRP
#2
3902_2
5102
AP
5101
UE
NR−UE
3901

FIG. 51B

TIME
TIME
5201
SECTOR SWEEP–RELATED COMMUNICATION PERIOD
TRP #i
NR–UE

FIG. 52

TIME
TIME
5302
MODULATION SIGNAL TRANSMISSION PERIOD
5301
LBT IMPLEMENTATION PERIOD
TRP#i
NR-UE

FIG. 53

NR-UE
TRP#i
TIME
TIME
5401
LBT
IMPLEMENTATION
PERIOD
5402
MODULATION
SIGNAL
TRANSMISSION
PERIOD

FIG. 54

TRP
#1
3902_1
TRP
#2
3902_2
5102
AP
5101
UE
3901
NR−UE

FIG. 55

NR-UE
TRP#1
TRP#2
5601 Transmit modulation signal
5602 Transmit modulation signal
5603 Perform LBT processing
5604 Confirm no signal
5604 Transmit modulation signal
5605 Transmit modulation signal
5606 Transmit modulation signal
5607 Perform LBT processing
5608 Confirm signal
5609 Perform LBT processing
5610 Confirm no signal
5611 Transmit modulation signal


FIG. 56A

NR-UE
TRP#1
TRP#2
5601 Transmit modulation signal
5602 Transmit modulation signal
5651 Perform first LBT processing
5652 Perform second LBT processing
5653 Check signal
5654 Transmit modulation signal
5605 Transmit modulation signal
5606 Transmit modulation signal
5655 Perform first LBT processing
5656 Perform second LBT processing
5657 Check signal
5658 Transmit modulation signal

FIG. 56B

FREQUENCY
5751
Frequency band where LBT is performed
5702
Frequency band where modulation signal transmitted by NR-UE is present
2.16GHz
5701
IEEE 802.11ad/ay A-th channel

FIG. 57A

FREQUENCY
Frequency band where LBT is performed
5752
5702
Frequency band where modulation signal transmitted by NR-UE is present
2.16GHz
5701
IEEE 802.11ad/ay A-th channel

FIG. 57B

FREQUENCY
Frequency band where LBT is performed
5851
Frequency band where LBT is performed
5852
5801
Frequency band where modulation signal transmitted to TRP #1 by NR-UE is present
5802
Frequency band where modulation signal transmitted to TRP #2 by NR-UE is present
2.16GHz
5701
IEEE 802.11ad/ay A-th channel

FIG. 58A

FREQUENCY
5853
Frequency band where LBT is performed
5802
Frequency band where modulation signal transmitted to TRP #2 by NR-UE is present
5801
Frequency band where modulation signal transmitted to TRP #1 by NR-UE is present
2.16GHz
5701
IEEE 802.11ad/ay A-th channel

FIG. 58B

FREQUENCY
5952
Frequency band where LBT is performed
5912
Frequency band where modulation signal transmitted to TRP #2 by NR-UE is present
2.16GHz
5902
IEEE 802.11ad/ay B-th channel
5951
Frequency band where LBT is performed
5911
Frequency band where modulation signal transmitted to TRP #1 by NR-UE is present
2.16GHz
5901
IEEE 802.11ad/ay A-th channel

FIG. 59A

FREQUENCY
5962
Frequency band where LBT is performed
5812
Frequency band where modulation signal transmitted to TRP #2 by NR-UE is present
2.16GHz
5902
IEEE 802.11ad/ay B-th channel
5961
Frequency band where LBT is performed
5911
Frequency band where modulation signal transmitted to TRP #1 by NR-UE is present
2.16GHz
5901
IEEE 802.11ad/ay A-th channel

FIG. 59B

TIME
FIRST TIME
6001
6002
LBT processing implementation
LBT processing implementation
FREQUENCY
5801
5802
Frequency band where modulation signal transmitted to TRP #1 by NR-UE is present
Frequency band where modulation signal transmitted to TRP #2 by NR-UE is present
5701
IEEE 802.11ad/ay A-th channel
2.16GHz

FIG. 60A

TIME
SECOND TIME
FIRST TIME
6002
LBT processing implementation
6001
LBT processing implementation
FREQUENCY
5801
5802
Frequency band where modulation signal transmitted to TRP #1 by NR-UE is present
Frequency band where modulation signal transmitted to TRP #2 by NR-UE is present
5701
IEEE 802.11ad/ay A-th channel
2.16GHz


FIG. 60B

TIME
FIRST TIME
FREQUENCY
6101
LBT processing implementation
6102
LBT processing implementation
5911 Frequency band where modulation signal transmitted to TRP #1 by NR-UE is present
5912 Frequency band where modulation signal transmitted to TRP #2 by NR-UE is present
2.16GHz
2.16GHz
5901
IEEE 802.11ad/ay A-th channel
5902
IEEE 802.11ad/ay B-th channel


FIG. 61A

FREQUENCY
TIME
SECOND TIME
FIRST TIME
6102
LBT processing implementation
6101
LBT processing implementation
5912 Frequency band where modulation signal transmitted to TRP #2 by NR-UE is present
2.16GHz
5902
IEEE 802.11ad/ay B-th channel
5911 Frequency band where modulation signal transmitted to TRP #1 by NR-UE is present
2.16GHz
5901
IEEE 802.11ad/ay A-th channel

FIG. 61B

TRP
#1
3902_1
TRP
#2
3902_2
5102
AP
5101
UE
NR−UE
3901

FIG. 62

NR-UE
TRP#1
TRP#2
6301 Perform LBT processing
6302 Confirm no signal
6303 Transmit modulation signal
6304 Perform LBT processing
6305 Confirm no signal
6306 Transmit modulation signal
6307 Perform LBT processing
6308 Confirm no signal
6309 Transmit modulation signal
6310 Perform LBT processing
6311 Confirm no signal
6312 Transmit modulation signal

FIG. 63A

TRP#2
TRP#1
NR-UE
6313 Perform LBT processing
6314 Confirm signal
6315 Perform LBT processing
6316 Confirm no signal
6317 Transmit modulation signal

FIG. 63B

TRP
#1
3902_1
TRP
#2
3902_2
5102
AP
5101
UE
NR−UE
3901

FIG. 64

NR-UE
TRP#1
TRP#2
6501 Perform LBT processing
6502 Confirm no signal
6503 Transmit modulation signal
6504 Perform LBT processing
6505 Confirm signal
6506 Perform LBT processing
6507 Confirm no signal
6508 Transmit modulation signal

FIG. 65A

NR-UE
TRP#1
TRP#2
6509 Perform LBT processing
6510 Confirm no signal
6511 Transmit modulation signal
6512 Perform LBT processing
6513 Confirm signal
6514 Perform LBT processing
6515 Confirm no signal
6516 Transmit modulation signal

FIG. 65B

5102
AP
TRP
#1
3902_1
TRP
#2
3902_2
NR−UE
3901
UE
5101

FIG. 66

NR-UE
TRP#1
TRP#2
6701 Perform LBT processing
6702 Confirm no signal
6703 Transmit modulation signal
6704 Perform LBT processing
6705 Confirm no signal
6706 Transmit modulation signal
6707 Perform LBT processing
6708 Confirm no signal
6709 Transmit modulation signal
6710 Perform LBT processing
6711 Confirm no signal
6712 Transmit modulation signal


FIG. 67A

NR-UE
TRP#1
TRP#2
6713 Perform LBT processing
6714 Confirm signal
6715 Perform LBT processing
6716 Confirm direction without signal
6717 Transmit modulation signal

FIG. 67B

6801
Information on "whether to support multiple TRP using frequency from 52.6 GHz to 71 GHz"
6802
Information on "whether to support multiple-channel LBT implementation"
6803
Information on "whether to support downlink SDM reception at multiple TRP"
6804
Information on "whether to support downlink TDM reception at multiple TRP"
6805
Information on "whether to support downlink FDM reception at multiple TRP"
6806
Information on "whether to support LBT implementation in units of 2.16 GHz"
6807
Information on "whether to support multiple LBT implementations in units of 2.16 GHz"
6808
Information on "whether to support uplink SDM transmission at multiple TRP"
6809
Information on "whether to support uplink TDM transmission at multiple TRP"
6810
Information on "whether to support uplink FDM transmission at multiple TRP"

FIG. 68

6901
First example of NR modulation signal
Second example of NR modulation signal
6902
Third example of NR modulation signal
6903
Fourth example of NR modulation signal
6904
6905
Fifth example of NR modulation signal
Frequency used by modulation signal of IEEE 802.11ad/ay
FREQUENCY
6900


FIG. 69

7002_2
gNB
#2
7053
7054
7001
NR−UE
7052
7051
gNB
#1
7002_1

FIG. 70A

7002_2
gNB
#2
7053
7054
7001
NR−UE
7092
7011
UE
7091
7012
AP
7052
7051
gNB
#1
7002_1

FIG. 70B

7002_1
gNB
#1
7012
AP
7091
7051
7092
7011
UE
7052
NR−UE
7001
gNB
#2
7002_2
7053
7054
7155
7156
gNB
#3
7102_3

FIG. 71

7201
First example of NR modulation signal
7200
Frequency used by modulation signal of IEEE 802.11ad/ay
FREQUENCY
7202_1
Second example of NR modulation signal
7202_2
Second example of NR modulation signal
7200
Frequency used by modulation signal of IEEE 802.11ad/ay
FREQUENCY

FIG. 72.1

FIG. 72.2

7203
Third example of NR modulation signal
7200
Frequency used by modulation signal of IEEE 802.11ad/ay
FREQUENCY
7204_1
Fourth example of NR modulation signal
7204_2
Fourth example of NR modulation signal
7200
Frequency used by modulation signal of IEEE 802.11ad/ay
FREQUENCY

FIG. 72.3

FIG. 72.4

7205
Fifth example of
NR modulation signal
7200
Frequency used by
modulation signal of
IEEE 802.11ad/ay
FREQUENCY
FIG. 72.5
7206_2
Sixth example of
NR modulation signal
7206_1
Sixth example of
NR modulation signal
7200
Frequency used by
modulation signal of
IEEE 802.11ad/ay
FREQUENCY
FIG. 72.6

7207
Seventh example of NR modulation signal
7200
Frequency used by modulation signal of IEEE 802.11ad/ay
FREQUENCY
7208_2
Eighth example of NR modulation signal
7208_1
Eighth example of NR modulation signal
7200
Frequency used by modulation signal of IEEE 802.11ad/ay
FREQUENCY

FIG. 72.7

FIG. 72.8

7209
Ninth example of NR modulation signal
7200
Frequency used by modulation signal of IEEE 802.11ad/ay
FREQUENCY

FIG. 72.9

7210_2
Tenth example of NR modulation signal
7210_1
Tenth example of NR modulation signal
7200
Frequency used by modulation signal of IEEE 802.11ad/ay
FREQUENCY

FIG. 72.10

7211_2
Eleventh example of NR modulation signal
7211_1
Eleventh example of NR modulation signal
7200
Frequency used by modulation signal of IEEE 802.11ad/ay
FREQUENCY

FIG. 72.11

7212_1
Twelfth example of NR modulation signal
7212_2
Twelfth example of NR modulation signal
7200
Frequency used by modulation signal of IEEE 802.11ad/ay
FREQUENCY

FIG. 72.12

Thirteenth example of NR modulation signal
7213_1
7200
Frequency used by modulation signal of IEEE 802.11ad/ay
7213_2
Thirteenth example of NR modulation signal
FREQUENCY


FIG. 72.13

7002_2
gNB #2
7053
7054
7001
NR−UE
7092
7011
UE
7091
7012
AP
7052
7051
gNB #1
7002_1


FIG. 73

TIME
7401_2
NR-UE-addressed data frame transmitted by gNB #2
7401_1
NR-UE-addressed data frame transmitted by gNB #1
7400_1
FIRST TIME
FREQUENCY
7200
Frequency used by modulation signal of IEEE 802.11ad/ay

FIG. 74A

TIME
7401_1
NR-UE-addressed data frame transmitted by gNB #1
7400_3
THIRD TIME
7400_2
SECOND TIME
7401_2
NR-UE-addressed data frame transmitted by gNB #2
FREQUENCY
7200 Frequency used by modulation signal of IEEE 802.11ad/ay

FIG. 74B

TIME
7401_1
NR-UE-addressed data frame transmitted by gNB #1
7401_2
NR-UE-addressed data frame transmitted by gNB #2
7400_4
FOURTH TIME
FREQUENCY
7200
Frequency used by modulation signal of IEEE 802.11ad/ay

FIG. 74C

TIME
7401_1
NR-UE-addressed data frame transmitted by gNB #1
7400_6
SIXTH TIME
7400_5
FIFTH TIME
7401_2
NR-UE-addressed data frame transmitted by gNB #2
FREQUENCY
7200 Frequency used by modulation signal of IEEE 802.11ad/ay

FIG. 74D

TIME
7401_A
NR-UE-addressed data frame transmitted by gNB #A
7401_B
NR-UE-addressed data frame transmitted by gNB #B
7400_7
SEVENTH TIME
FREQUENCY
7200 Frequency used by modulation signal of IEEE 802.11ad/ay

FIG. 74E

TIME
7401_A
NR-UE-addressed data frame transmitted by gNB #A
7400_9
NINTH TIME
7400_8
EIGHTH TIME
7401_B
NR-UE-addressed data frame transmitted by gNB #B
FREQUENCY
7200
Frequency used by modulation signal of IEEE 802.11ad/ay

FIG. 74F

TIME
7401_A
NR-UE-addressed data frame transmitted by gNB #A
7401_B
NR-UE-addressed data frame transmitted by gNB #B
7400_10
TENTH TIME
FREQUENCY
7200
Frequency used by modulation signal of IEEE 802.11ad/ay

FIG. 74G

TIME
7401_A
NR-UE-addressed data frame transmitted by gNB #A
7400_12
TWELFTH TIME
7401_B
NR-UE-addressed data frame transmitted by gNB #B
7400_11
ELEVENTH TIME
FREQUENCY
7200 Frequency used by modulation signal of IEEE 802.11ad/ay

FIG. 74H

TIME
SIXTH TIME
FIFTH TIME
FOURTH TIME
THIRD TIME
SECOND TIME
FIRST TIME
7501_6
INITIAL SENSING
7501_5
INITIAL SENSING
7501_4
INITIAL SENSING
7501_3
INITIAL SENSING
7501_2
INITIAL SENSING
7501_1
INITIAL SENSING
FREQUENCY
2.16GHz
7500_1
IEEE 802.11ad/ay
FIRST CHANNEL
2.16GHz
7500_2
IEEE 802.11ad/ay
SECOND CHANNEL
2.16GHz
7500_3
IEEE 802.11ad/ay
THIRD CHANNEL
2.16GHz
7500_4
IEEE 802.11ad/ay
FOURTH CHANNEL
2.16GHz
7500_5
IEEE 802.11ad/ay
FIFTH CHANNEL
2.16GHz
7500_6
IEEE 802.11ad/ay
SIXTH CHANNEL

FIG. 75

TIME
7601_3
THIRD TIME
7601_2
INITIAL SENSING
SECOND TIME
7601_1
INITIAL SENSING
FIRST TIME
INITIAL SENSING
FREQUENCY
2.16GHz
7500_1
IEEE 802.11ad/ay
FIRST CHANNEL
2.16GHz
7500_2
IEEE 802.11ad/ay
SECOND CHANNEL
2.16GHz
7500_3
IEEE 802.11ad/ay
THIRD CHANNEL
2.16GHz
7500_4
IEEE 802.11ad/ay
FOURTH CHANNEL
2.16GHz
7500_5
IEEE 802.11ad/ay
FIFTH CHANNEL
2.16GHz
7500_6
IEEE 802.11ad/ay
SIXTH CHANNEL

FIG. 76

FREQUENCY
TIME
SECOND TIME
FIRST TIME
INITIAL SENSING
7701_2
INITIAL SENSING
7701_1
PERFORM MULTIPLE TRP
2.16GHz
7500_1
IEEE 802.11ad/ay
FIRST CHANNEL
2.16GHz
7500_2
IEEE 802.11ad/ay
SECOND CHANNEL
2.16GHz
7500_3
IEEE 802.11ad/ay
THIRD CHANNEL
2.16GHz
7500_4
IEEE 802.11ad/ay
FOURTH CHANNEL
2.16GHz
7500_5
IEEE 802.11ad/ay
FIFTH CHANNEL
2.16GHz
7500_6
IEEE 802.11ad/ay
SIXTH CHANNEL

FIG. 77

7002_2
gNB
#2
7053
7054
7001
NR−UE
7092
7011
UE
7052
7091
7012
AP
7802
7051
gNB
#1
7801
7002_1

FIG. 78

7002_2
gNB
#2
7053
7054
7001
NR−UE
7052
7802
7051
gNB
#1
7801
7002_1

FIG. 79

7002_1
gNB
#1
7051
7012
AP
7091
7052
7092
7011
UE
gNB
#2
7002_2
7053
7054
NR−UE
7001
8001
8002_N
gNB
#N
8002

FIG. 80

7002_1
gNB
#1
7051
gNB
#2
7002_2
7052
7011
UE
7053
7054
NR−UE
8001
8002_N
7001
8002
gNB
#N

FIG. 81

gNB #1
8202_1
gNB #2
8202_2
gNB #3
8202_3
gNB #Z
8202_Z
8251
8299_2
8299_3
8299_Z
8252
8201
NR−UE

FIG. 82

8301
NR CHANNEL 1 to CHANNEL 8
8302
NR CHANNEL 9 to CHANNEL 16
8303
NR CHANNEL 17 to CHANNEL 24
8304
NR CHANNEL 25 to CHANNEL 32
8305
NR CHANNEL 33 to CHANNEL 40
8306
NR CHANNEL 41 to CHANNEL 48
8307
NR CHANNEL 49 to CHANNEL 56
8308
NR CHANNEL 57 to CHANNEL 64
FREQUENCY
2.16GHz
7500_1
IEEE 802.11ad/ay
FIRST CHANNEL
2.16GHz
7500_2
IEEE 802.11ad/ay
SECOND CHANNEL
2.16GHz
7500_3
IEEE 802.11ad/ay
THIRD CHANNEL
2.16GHz
7500_4
IEEE 802.11ad/ay
FOURTH CHANNEL
2.16GHz
7500_5
IEEE 802.11ad/ay
FIFTH CHANNEL
2.16GHz
7500_6
IEEE 802.11ad/ay
SIXTH CHANNEL
FIG. 83

gNB #2
8202_2
gNB #3
8202_3
gNB #Z
8202_Z
gNB #1
8202_1
8251
8299_2
8299_3
8299_Z
AP
8492
8412
8491
UE
8411
8201
8252
NR−UE

FIG. 84

6801
Information on "whether to support multiple TRP using frequency from 52.6 GHz to 71 GHz"
6803
Information on "whether to support downlink SDM reception at multiple TRP"
6804
Information on "whether to support downlink TDM reception at multiple TRP"
6805
Information on "whether to support downlink FDM reception at multiple TRP"
6808
Information on "whether to support uplink SDM transmission at multiple TRP"
6809
Information on "whether to support uplink TDM transmission at multiple TRP"
6810
Information on "whether to support uplink FDM transmission at multiple TRP"
8501
Information on "whether to support multiple-channel initial sensing implementation
8502
Information on "whether to support initial sensing implementation in units of 2.16 GHz"
8503
Information on "whether to support multiple initial sensing implementations in units of 2.16 GHz"

FIG. 85

TRP
#1
3902_1
TRP
#2
3902_2
8601_1
8601_2
NR−UE
3901

FIG. 86A

TRP
#1
3902_1
TRP
#2
3902_2
8601_1
8601_2
NR−UE
3901

FIG. 86B

TRP
#1
3902_1
TRP
#2
3902_2
8601_1
8601_2
NR−UE
3901

FIG. 86C

POWER
TRANSMISSION
APPARATUS
8610
8611
TRP
#2
3902_2
TRP
#1
3902_1
NR−UE
3901

FIG. 86D

POWER
TRANSMISSION
APPARATUS
8610
8611
TRP
#2
3902_2
TRP
#1
3902_1
NR−UE
3901

FIG. 86E

POWER TRANSMISSION APPARATUS
8610
8611
TRP #2
3902_2
TRP #1
3902_1
NR−UE
3901

FIG. 86F

8701
COMMUNICATION APPARATUS
8711
8712
POWER TRANSMITTER
8702

FIG. 87

8801
COMMUNICATION APPARATUS
8830
BATTERY
8811
8812
8822
8821
POWER RECEIVER
8802

FIG. 88A

8801
COMMUNICATION APPARATUS
8830
BATTERY
8811
8812
8899
8822
POWER RECEIVER
8802
8821
8850
APPARATUS

FIG. 88B

8801
COMMUNICATION APPARATUS
8831
FIRST BATTERY
8811
8812
8899
8822
8821
POWER RECEIVER
8802
8823
8850
8824
SECOND BATTERY
APPARATUS
8832

FIG. 88C

| CHARGING REQUEST INFORMATION (POWER TRANSMISSION REQUEST INFORMATION) 8901 | LOCATION INFORMATION 8902 | BATTERY LEVEL INFORMATION 8903 | POWER RECEPTION STATE INFORMATION 8904 |
|---|---|---|---|

FIG. 89

| POWER TRANSMISSION APPARATUS INFORMATION 9001 | POWER TRANSMISSION LOCATION INFORMATION/ POWER TRANSMISSION DIRECTION INFORMATION 9002 | POWER TRANSMISSION INFORMATION 9003 | POWER TRANSMISSION STATE INFORMATION 9004 |
|---|---|---|---|

FIG. 90

TRP
#1
3902_1
8601_1
NR−UE
3901

FIG. 91A

POWER TRANSMISSION APPARATUS
8610
8611
NR−UE
3901
TRP #1
3902_1

FIG. 91B

001
RADIO COMMUNICATION DEVICE
051
RADIO COMMUNICATION DEVICE

FIG. 92

**INTERNATIONAL SEARCH REPORT**

International application No.
**PCT/JP2022/008150**

**A. CLASSIFICATION OF SUBJECT MATTER**

***H04W 16/14***(2009.01)i; ***H04W 16/28***(2009.01)i; ***H04W 72/08***(2009.01)i; ***H04B 7/022***(2017.01)i; ***H04W 48/20***(2009.01)i; ***H04W 84/12***(2009.01)i
FI: H04W48/20; H04B7/022; H04W16/14; H04W72/08 110; H04W84/12; H04W16/28

According to International Patent Classification (IPC) or to both national classification and IPC

**B. FIELDS SEARCHED**

Minimum documentation searched (classification system followed by classification symbols)

H04W4/00-H04W99/00 H04B7/24-H04B7/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

3GPP TSG RAN WG1-4 SA WG1-4 CT WG1,4

**C. DOCUMENTS CONSIDERED TO BE RELEVANT**

| Category* | Citation of document, with indication, where appropriate, of the relevant passages | Relevant to claim No. |
|---|---|---|
| A | JP 2021-507624 A (QUALCOMM INCORPORATED) 22 February 2021 (2021-02-22) paragraphs [0042]-[0051] | 1-11 |
| A | NTT DOCOMO, INC. Enhancements on multi-TRP/panel transmission[online]. 3GPP TSG RAN WG1 #98b R1-1911184. 04 October 2019 2. | 1-11 |
| A | VIVO. Further discussion on MTRP multibeam enhancement[online]. 3GPP TSG RAN WG1 #104-e R1-2100424. 19 January 2021 1. | 1-11 |
| A | ITRI. Discussion on multi-beam operation[online]. 3GPP TSG RAN WG1 #105-e R1-2105755. 11 May 2021 2 | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/008150**

| Patent document cited in search report | Publication date (day/month/year) | Patent family member(s) | Publication date (day/month/year) |
|---|---|---|---|
| JP 2021-507624 A | 22 February 2021 | WO 2019/126247 A1<br>paragraphs [0060]-[0069]<br>US 2019/0239198 A1<br>KR 10-2020-0097723 A<br>CN 111543096 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018518855 W
- JP 2021097517 A